(19) Europäisches Patentamt
European Patent Office
Office européen des brevets

(11) EP 1 096 855 B1

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(21) Anmeldenummer: **99936516.6**

(22) Anmeldetag: **12.07.1999**

(51) Int Cl.7: **A01N 47/36**

(86) Internationale Anmeldenummer:
**PCT/EP1999/004881**

(87) Internationale Veröffentlichungsnummer:
**WO 2000/003597 (27.01.2000 Gazette 2000/04)**

(54) **HERBIZIDE MITTEL MIT SUBSTITUIERTEN PHENYLSULFONYLHARNSTOFFEN ZUR UNKRAUTBEKÄMPFUNG IN REIS**

HERBICIDES WITH SUBSTITUTED PHENYLSULFONYLUREAS FOR CONTROLLING WEEDS IN RICE

HERBICIDES A PHENYLSULFONYLUREES SUBSTITUEES POUR LUTTER CONTRE LES MAUVAISES HERBES CHEZ LE RIZ

(84) Benannte Vertragsstaaten:
**AT BE CH CY DE DK ES FI FR GB GR IE IT LI LU MC NL PT SE**

(30) Priorität: **16.07.1998 DE 19832017**

(43) Veröffentlichungstag der Anmeldung:
**09.05.2001 Patentblatt 2001/19**

(73) Patentinhaber: **Bayer CropScience GmbH**
**65929 Frankfurt/Main (DE)**

(72) Erfinder:
- **HACKER, Erwin**
  **D-65329 Hochheim (DE)**
- **BIERINGER, Hermann**
  **D-65817 Eppstein (DE)**

(74) Vertreter: **Luderschmidt, Schüler & Partner GbR**
**Patentanwälte,**
**John-F.-Kennedy-Strasse 4**
**65189 Wiesbaden (DE)**

(56) Entgegenhaltungen:

| | |
|---|---|
| **WO-A-92/13845** | **WO-A-95/08919** |
| **WO-A-95/10507** | **WO-A-96/41537** |
| **WO-A-97/10714** | **WO-A-98/24320** |
| **DE-A- 4 209 475** | **DE-A- 19 642 082** |
| **DE-A- 19 834 627** | **DE-A- 19 851 854** |
| **DE-A- 19 919 951** | |

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 096 855 B1

## Beschreibung

Die Erfindung bezieht sich auf das technische Gebiet der Pflanzenschutzmittel, insbesondere betrifft die Erfindung herbizide Mittel mit einem Gehalt an Verbindungen der Formel I

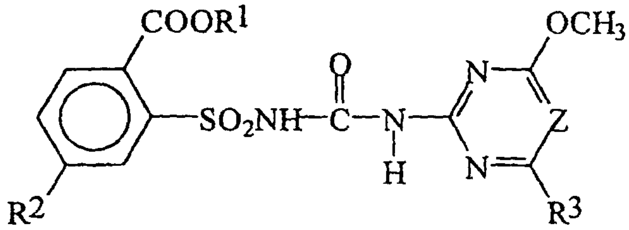

(I),

worin

- $R^1$ $(C_1-C_8)$-Alkyl, $(C_3-C_4)$-Alkenyl, $(C_3-C_4)$-Alkinyl oder $(C_1-C_4)$-Alkyl, das ein- bis vierfach durch Reste aus der Gruppe Halogen und/oder $(C_1-C_2)$-Alkoxy substituiert ist, bedeutet;
- $R^2$ I, oder $CH_2NHSO_2CH_3$ bedeutet;
- $R^3$ Methyl oder Methoxy ist; und
- Z N oder CH ist;

und/oder ihren Salzen, die sich hervorragend zur Bekämpfung von bislang nur schwer mit einzelnen Herbiziden kontrollierbaren Unkräutern in Reis, insbesondere grasartigen, dikotylen und/oder Cyperaceen-artigen Unkräutern in Reis oder transgenen Reiskulturen, eignen.

Zum speziellen Stand der Technik werden folgende Druckschriften genannt:

WO 92/13845 (PCT/EP92/00304) = D1,
WO 95/10507 (PCT/EP94/03369) = D2,
WO 96/41537 (PCT/EP96/02443) = D3 und
WO 98/24320 (PCT/EP97/06416) = D4.

Aus der D1 sind iodierte Arylsulfonylharnstoffe der allgemeinen Formel 1 und deren Salze bekannt,

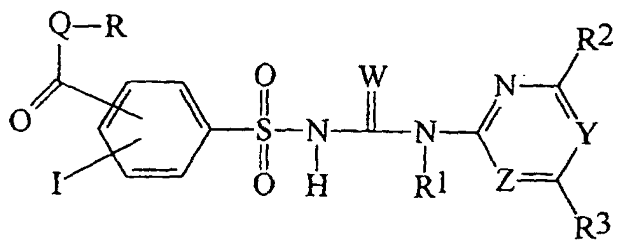

(1),

wobei von der allgemeinen Formel 1 durch die umfangreiche und breite Definition der Reste Q, W, Y, Z, R, $R^1$, $R^2$ und $R^3$ eine Vielzahl von möglichen Einzelverbindungen umfaßt werden.

In der D1 wird ein pauschaler Hinweis auf die Möglichkeit gegeben, daß die Verbindungen der Formel 1 mit weiteren Herbiziden angewendet werden können. Diesem Hinweis folgt eine beispielhafte Aufzählung von mehr als ca. 250 verschiedenen Standardwirkstoffen. Über die bloße Erwähnung der Substanzen hinausgehende Informationen hinsichtlich besonderem Sinn und Zweck einer gemeinsamenen Anwendung sind der D1 ebensowenig entnehmbar, wie etwa eine Motivation zur gezielten Auswahl und Kombination bestimmter Wirkstoffe.

Aus der D2 kennt man Phenylsulfonylharnstoffe der allgemeinen Formel 2 und deren Salze,

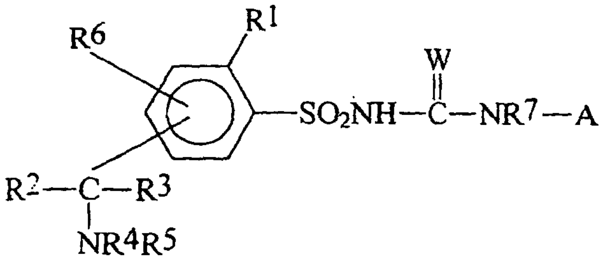

(2),

wobei von der allgemeinen Formel 2 wiederum durch die umfangreiche und breite Definition der Reste A, W, $R^1$, $R^2$, $R^3$, $R^4$, $R^5$, $R^6$ und $R^7$ eine sehr große Anzahl von möglichen Einzelverbindungen umfaßt wird.

In Tabelle 1 der D2 werden Verbindungen der Formel (2a) aufgezählt

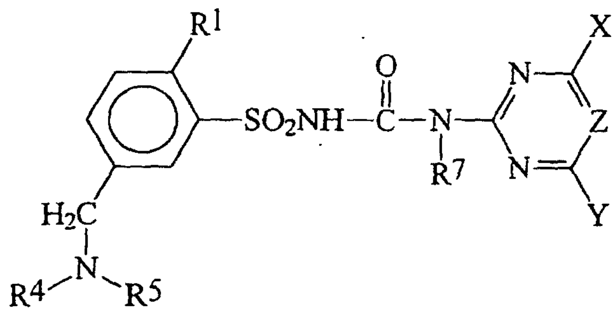

(2a),

wobei sich die Beispiele mit den Nummern 105, 209, 217, 395, 399, 403, 407, 497 und 536 auf solche Verbindungen der Formel 2a beziehen, worin Z. für CH, X und Y für Methoxy, $R^7$ für Wasserstoff, $R^1$ für Alkoxycarbonyl, $R^4$ für Wasserstoff und $R^5$ für einen eine Sulfonylgruppe enthaltenden Rest ($SO_2CH_3$, $SO_2NHCH_3$ $SO_2N(CH_3)_2$, $SO_2N(CH_3)_2$, $SO_2CH_2F$, $SO_2CF_3$, $SO_2C_2H5$, $SO_2$-n-$C_3H_7$, vorzugsweise $SO_2CH_3$) stehen.

Biologische Beispiele werden für die oben einzeln genannten Verbindungen in der D2 insofern aufgeführt, als pauschal angegeben wird, daß die Verbindungen der Beispiele 105, 217 und 536 - neben einer ganzen Reihe anderer Verbindungen - sehr gute Wirkung gegen Schadpflanzen wie Sinapis alba, Stellaria media, Chrysanthemum segetum und Lolium multiflorum im Vor- und im Nachauflaufverfahren bei einer Aufwandmenge von 0,3 kg bis 0,005 kg Aktivsubstanz pro Hektar aufweisen. Die Kulturpflanzenverträglichkeit der Verbindungen der Formel 2 oder 2a ist in der genannten Internationalen Offenlegungsschrifft nicht mit Beispielen belegt.

Weiters existiert in der D2 ein pauschaler Hinweis auf die Möglichkeit, die Verbindungen der Formel 2 mit weiteren Herbiziden anzuwenden. Diesem Hinweis folgt eine beispielhafte Aufzählung von mehr als ca. 250 verschiedenen Standardwirkstoffen. Die vorgeschlagenen Kombinationen erscheinen eher zufällig und geben keine Lehre, die über die Tatsache der prinzipiellen Kombinationsmöglichkeit von Herbiziden hinausgeht.

D3 offenbart herbizide Mittel, enthaltend

A) mindestens einen herbiziden Wirkstoff aus der Gruppe der substituierten Phenylsulfonylharnstoffe der allgemeinen Formel 3

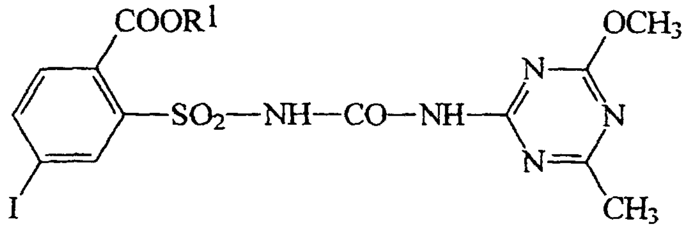

(3),

worin

$R^1$ ($C_1$-$C_8$)-Alkyl, ($C_3$-$C_4$)-Alkenyl, ($C_3$-$C_4$)-Alkinyl oder ($C_1$-$C_4$)-Alkyl, das ein- bis vierfach durch Reste aus der Gruppe Halogen und ($C_1$-$C_2$)-Alkoxy substituiert ist, bedeutet

und

B) mindestens eine herbizid wirksame Verbindung aus der Gruppe der Verbindungen, welche aus

Ba) selektiv in Getreide und/oder in Mais gegen Gräser wirksamen Herbiziden,
Bb) selektiv in Getreide und/oder Mais gegen Dikotyle wirksamen Herbiziden,
Bc) selektiv in Getreide und/oder Mais gegen Gräser und Dikotyle wirksamen Herbiziden und
Bd) nichtselektiv im Nichtkulturland und/oder selektiv in transgenen Kulturen gegen Ungräser und Unkräuter wirksamen Herbiziden

besteht.

Insbesonders sind aus der D3 Kombinationen des Sulfonylharnstoffs der Formel 3 mit Fenoxaprop, Fenoxaprop-P, Isoproturon, Diclofop, Clodinafop, Mischungen aus Clodinafop und Cloquintocet, Chlortoluron, Methabenzthiazuron, Imazamethabenz, Tralkoxydim, Difenzoquat, Flamprop, Flamprop-M, Pendimethalin, Nicosulfuron, Rimsulfuron, Primisulfuron, Mecoprop, Mecoprop-P, MCPA, Dichlorprop, Dichlorprop-P, 2,4-D, Dicamba, Fluroxypyr, Ioxynil, Bromoxynil, Bifenox, Fluoroglycofen, Acifluorfen, Lactofen, Fomesafen, Oxyfluorfen, ET-751, Azole gemäß WO 94/08999, Diflufenican, Bentazon, Metolachlor, Metribuzin, Atrazin, Terbuthylazin, Alachlor, Acetochlor, Dimethenamid, Amidosulfuron, Metsulfuron, Tribenuron, Thifensulfuron, Triasulfuron, Chlorsulfuron, Prosulfuron oder CGA-152005, Sulfonylharnstoffe gemäß WO 94/10154, Flupyrsulfuron (DPX-KE459), Sulfosulfuron (MON37500), KIH-2023, Glufosinate, Glufosinate-P oder Glyphosate bekannt.

Die im einzelnen genannten Kombinationen sind synergistisch, die Anwendungsgebiete beschränken sich auf Getreide und Mais.

Aus der D4 kennt man Kombinationen enthaltend:

A) mindestens eine Verbindung aus der Gruppe der substituierten Phenylsulfonylharnstoffe der allgemeinen Formel 4 und deren landwirtschaftlich akzeptierten Salze

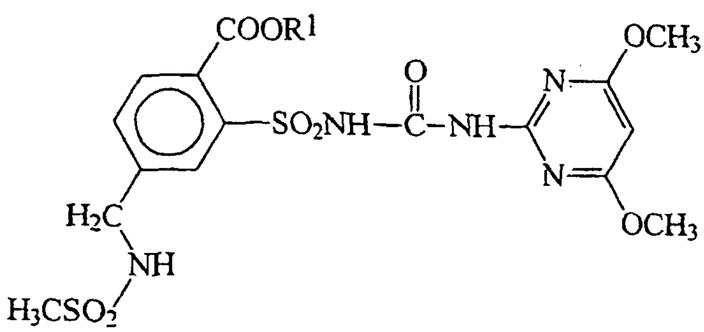

(4) ,

worin

$R^1$ ($C_1$-$C_8$)-Alkyl, ($C_3$-$C_9$)-Alkenyl, ($C_3$-$C_4$)-Alkinyl oder ($C_1$-$C_4$)-Alkyl, das ein- bis vierfach durch Reste aus der Gruppe Halogen und ($C_1$-$C_2$)-Alkoxy substituiert ist, bedeutet

und

B) mindestens eine herbizid wirksame Verbindung aus der Gruppe der Verbindungen, welche aus

Ba) selektiv in Getreide gegen Gräser wirksamen Herbiziden,
Bb) selektiv in Getreide gegen Dikotyle wirksamen Herbiziden,
Bc) selektiv in Getreide gegen Gräser und Dikotyle wirksamen Herbiziden und
Bd) nichtselektiv im Nichtkulturland oder in Dauerkulturen (Plantagen) und/oder selektiv in transgenen Kulturen gegen Ungräser und Unkräuter wirkenden Herbiziden

besteht.

Insbesonders sind Kombinationen bekannt mit Fenoxaprop, Fenoxa,prop-P, Isoproturon, Diclofop, Clodinafop, Mischungen aus Clodinafop und Cloquintocet, Chlortoluron, Methabenzthiazuron, Imazamethabenz, Tralkoxydim, Difenzoquat, Flamprop, Flamprop-M, Pendimethalin, Mecoprop, Mecoprop-P, MCPA, Dichlorprop, Dichlorprop-P, 2,4-D, Dicamba, Fluroxypyr, Ioxynil, Bromoxynil, Bifenox, Fluoroglycofen, Lactofen, Fomesafen, Oxyfluorfen, ET-751, Azolen gemäß der WO 94/08999, F 8426, Diflufenican, Bentazon, Metribuzin, Metosulam, Flupoxam, Prosulfocarb, Flurtamone, Amidosulfuron, Metsulfuron, Tribenuron, Thifensulfuron, Triasulfuron, Chlorsulfuron, Sulfonylharnstoffen gemäß der WO 94/10154, Sulfonylharnstoffen gemäß der WO 92/13845, Flupyrsulfuron (DPX-KE459), MON 48500, Sulfosulfuron (MON37500), Glufosinate, Glufosinate-P oder Glyphosate.

Weitere Dokumente zum Stand der Technik umfassen:

WO 97/10714 A = D5,
DE 196 42 082 A = D6,
WO 95/08919 A = D7,
DE 198 34 627 A = D8,
DE 198 51 854 A = D9,
DE 199 19 951 A = D10 und
DE 42 09 475 A = D11.

D5 offenbart synergistisch wirkende Herbizidmischungen aufweisend wenigstens einen Sulfonylharnstoff der allgemeinen Formel I

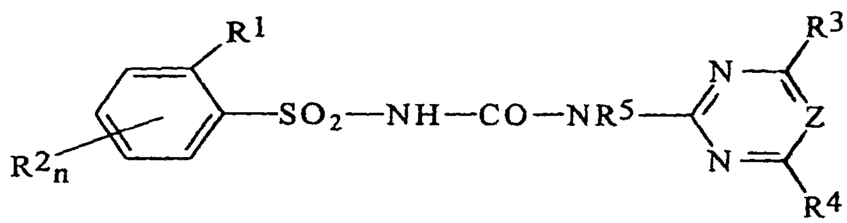

(I)

worin

$R^1$ u.a. $COOR^8$ ist, wobei $R^8$ eine $C_1$-$C_6$-Alkylgruppe sein kann,
$R^2$ u.a. Halogen ist,
$R^5$ u.a. Wasserstoff ist,
$R^3$ u.a. Fluor oder ein Fluor aufweisender Rest ist

oder

$R^3$ Methyl ist, falls $R^1$ ein Rest ist; der Fluor

aufweist,

Z N oder $CH_3$ ist und
n 0-3 ist;

Unter Beachtung der allgemeinen Offenbarung der Reste in D5 ist ersichtlich, dass die Substituenten $R^2$ gemäß D5 nicht I und auch nicht $CH_2NHSO_2CH_3$ sein können.

Ebenso offenbaren weder D6, D7 oder D11, welche sich auf Phenoxysulfonylharnstoffe bezieht, die speziellen Kombinationen der Erfindung. Die Dokumente D8, D9 oder D10 haben einen schlechteren Zeitrang im Vergleich mit der vorliegenden Erfindung.

Die aus der D1 und D2 gemäß allgemeinen Formeln 1 und 2 bekannten Sulfonylharnstoffe weisen zwar größtenteils eine brauchbare bis gute Wirksamkeit gegen ein breites Spektrum wirtschaftlich wichtiger mono- und dikotyler Schadpflanzen auf und auch unter den spezifischen Kulturbedingungen im Reis vorkommende Unkräuter, wie z. B. Sagittaria, Alisma, Eleocharis, Scirpus; Cyperus etc., werden mit Hilfe von Wirkstoffen der allgemeinen Formeln 1, 2 und 3 bekämpft, zur optimalen Bekämpfung des in der landwirtschaftlichen Praxis vor allem in Reis auftretenden Spektrums an monound dikotylen Unkräutern reichen die Einzelwirkstoffe jedoch oft nicht aus. Außerdem lassen sich die synergistischen Kombinationen der D3 oder der D4 im allgemeinen in Reis nicht mit überdurchschnittlichem Erfolg anwenden. Zumindest konnte dies nicht mit überwiegender Wahrscheinlichkeit erwartet werden. Insbesondere auch deshalb, weil die Nutzpflanze Reis in nicht unerheblichem Maße durch die meisten der aus der D3 oder D4 bekannten Kombinationen geschädigt wird, so daß diese nicht zur Anwendung in Reiskulturen geeignet sind.

Außerdem existieren insbesondere in Reis eine Reihe wirtschaftlich sehr wichtiger monokotyler Unkräuter, wie z. B. in erster Linie Echinochloa crus galli, Ischaemum ssp. oder Leptochloa, die mit bislang bekannten Reis-Herbiziden oder Mischungen davon alleine nicht in zufriedenstellender Weise zu bekämpfen sind. Vor allem aus den Reiskulturen in Japan und Südostasien sind Unkräuter bekannt, wie Sagittaria spp., Eleocharis spp., z.B. Eleocharis kuroguwai, Cyperus serotinus, Scirpus juncoides, aber auch andere Unkrautarten, die überwiegend aus Dauerorganen im Boden auskeimen und dadurch schwieriger bekämpft werden können als Unkräuter, die aus Samen auskeimen, und auch breitblättrige Arten, die in der ganzen Breite des Spektrums von Unkräutern nicht einfach in optimaler Weise kontrollierbar sind.

Ferner werden zunehmend resistente Arten (unter anderem von Cyperus ssp oder Echinochloa ssp) gefunden, die mit Einzelwirkstoffen aber auch mit herkömmlichen Kombinationen oft nicht mehr bekämpfbar sind.

Angesichts des hierin angegebenen und diskutierten Standes der Technik war es mithin Aufgabe der Erfindung Mischungen mit herbizider Wirksamkeit anzugeben, um den Praktiker in die Lage zu versetzen, mit einer Applikation bzw. wenigen Applikationen von Herbiziden das Unkrautspektrum oder einzelne schwer zu bekämpfende Unkrautspezies in Reis zu kontrollieren. Des weiteren sollen die Mischungen aus im wesentlichen bekannten herbiziden Wirkstoffen dazu beitragen, sogenannte "Wirkungslücken" zu schließen und nach Möglichkeit gleichzeitig die Aufwandmengen der Einzelwirkstoffe zu reduzieren. Außerdem sollen Kombinationen zur Verfügung gestellt werden, die es gestatten, eine möglichst lange Dauerwirkung zu erzielen. Schließlich sollen es die Kombinationen auch erlauben, resistente Arten wirkungsvoll zu kontrollieren.

Überraschend wurde gefunden, daß unter anderem diese Aufgaben durch herbizide Mittel mit den Merkmalen des Anspruchs 1 gelöst werden. So sind Gegenstand der Erfindung herbizide Mittel, enthaltend in einer synergistisch wirksamen Menge

A) mindestens einen herbiziden Wirkstoff aus der Gruppe der substituierten Phenylsulfonylharnstoffe der allgemeinen Formel I und deren landwirtschaftlich akzeptierten, d.h. annehmbaren und verträglichen, Salze

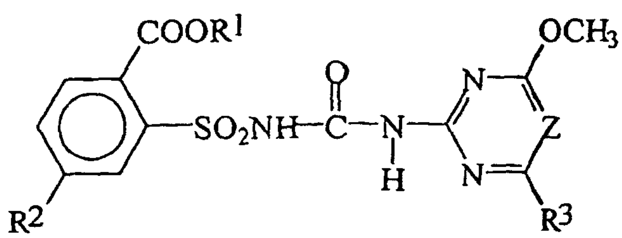

(I),

worin

- $R^1$ ($C_1$-$C_8$)-Alkyl, ($C_3$-$C_4$)-Alkenyl, ($C_3$-$C_4$)-Alkinyl oder ($C_1$-$C_4$)-Alkyl, das ein- bis vierfach durch Reste aus der Gruppe Halogen und/oder ($C_1$-$C_2$)-Alkoxy substituiert ist, bedeutet;
- $R^2$ I oder $CH_2NHSO_2CH_3$ bedeutet;
- $R^3$ Methyl oder Methoxy bedeutet; und
- Z N oder CH ist;

und

B) mindestens eine herbizid wirksame Verbindung aus der Gruppe der Verbindungen, welche aus

Ba) selektiv in Reis vorwiegend gegen Gräser wirksamen Herbiziden, ausgewählt aus der Gruppe bestehend aus

B1) Butachlor

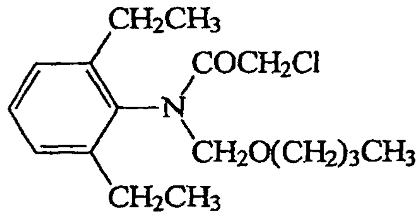

,

B2) Butenachlor

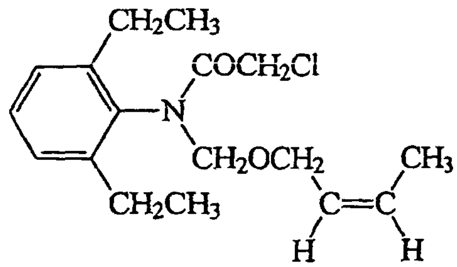

,

B3) Thenylchlor

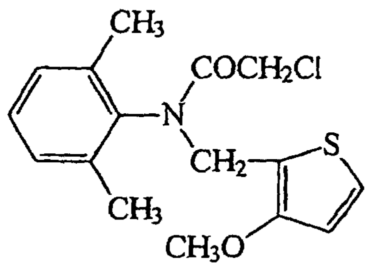

,

B4) Pretilachlor

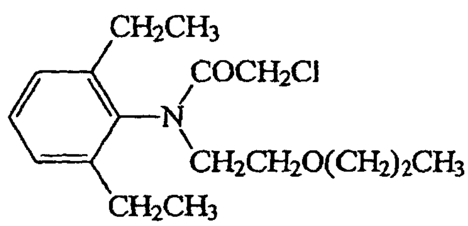

,

B5) Mefenacet

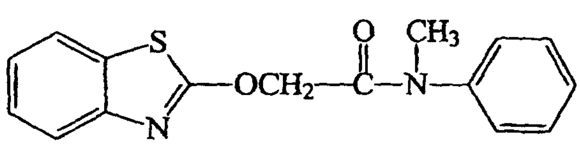

,

B5a) BAY FOE 5043

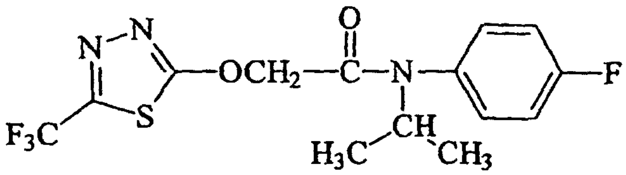

B6) Naproanilid

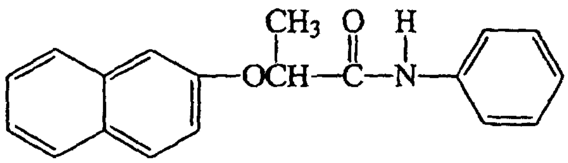

,

B7) Propanil

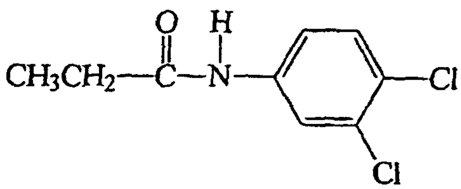

,

B8) Etobenzanid

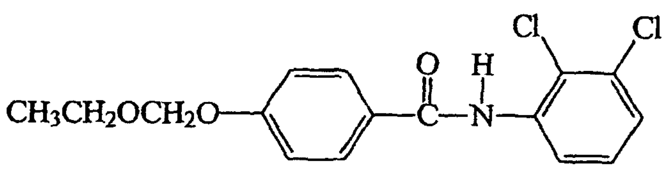

,

B9) Dimepiperate

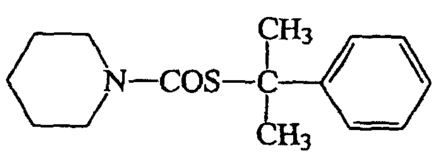

,

B10) Molinate

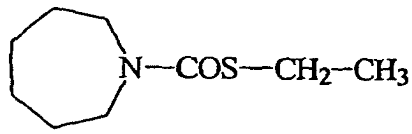

,

B11) Thiobencarb

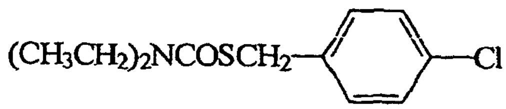

,

B12) Pyributicarb

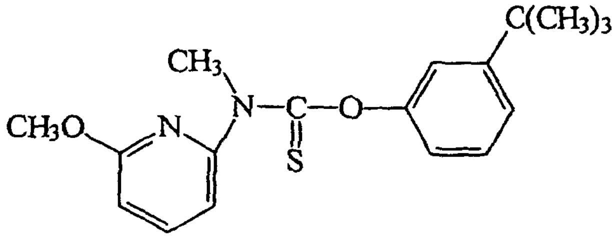

,

B13) Quinclorac

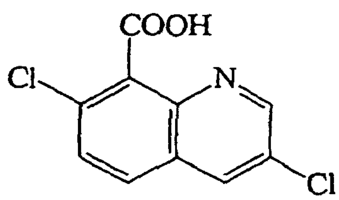

,

B14) Cyclohexandionen der allgemeinen Formel II

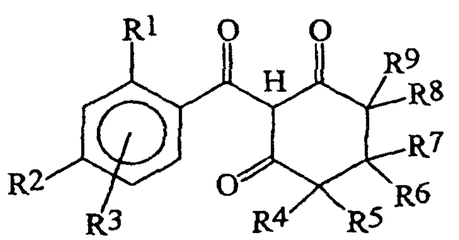

(II),

,

worin

$R^1$ Halogen, ($C_1$-$C_4$)-Alkoxy, ($C_1$-$C_4$)-Alkyl, ($C_1$-$C_4$)-Haloalkyl, -$NO_2$, -CN oder $S(O)_nR^{10}$;

$R^2$ und $R^3$ unabhängig voneinander Wasserstoff, Halogen, ($C_1$-$C_4$)-Alkyl, ($C_1$-$C_4$)-Alkoxy, ($C_1$-$C_4$)-Haloalkoxy, ($C_1$-$C_4$)-Haloalkyl, -$NO_2$, -CN oder $S(O)_mR^{11}$, -$NR^{12}R^{13}$, -$NR^{14}$-CO-$R^{15}$;

$R^4$ Wasserstoff, ($C_1$-$C_4$)-Alkyl oder -CO-O-($C_1$-$C_4$)-Alkyl;

$R^5$, $R^6$, $R^7$, $R^8$ $R^9$ unabhängig voneinander Wasserstoff oder ($C_1$-$C_4$)-Alkyl oder -CO-$R^{16}$;

$R^{10}$ ($C_1$-$C_4$)-Alkyl, ($C_1$-$C_4$)-Haloalkyl oder ($C_1$-$C_4$)-Alkoxy;

$R^{11}$ $(C_1-C_4)$-Alkyl, $(C_1-C_4)$-Haloalkyl, Phenyl, Benzyl oder $-NR^{17}R^{18}$;
$R^{12}$ und $R^{13}$ unabhängig voneinander Wasserstoff oder $(C_1-C_4)$-Alkyl;
$R^{14}$ Wasserstoff oder $(C_1-C_4)$-Alkyl;
$R^{15}$ $(C_1-C_4)$-Alkyl;
$R^{16}$ Wasserstoff, $(C_1-C_4)$-Alkyl, $(C_1-C_4)$-Haloalkyl oder $(C_1-C_4)$-Alkoxy;
$R^{17}$ und $R^{18}$ unabhängig voneinander Wasserstoff oder $(C_1-C_4)$-Alkyl; und
n und m unabhängig voneinander 0, 1 oder 2
bedeuten,
wobei besonders bevorzugt ist

B14a) ICIA0051 = Sulcotrione

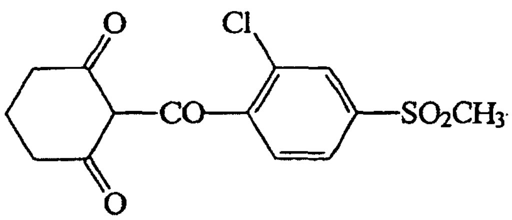

,

B15) Cycloxydim

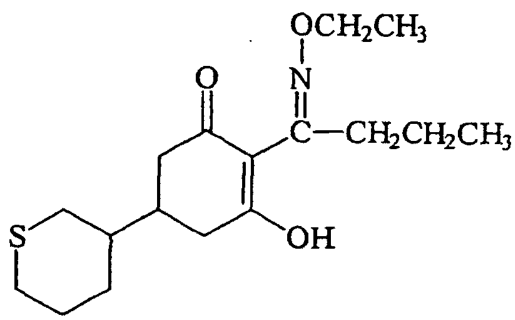

,

B16) Sethoxydim

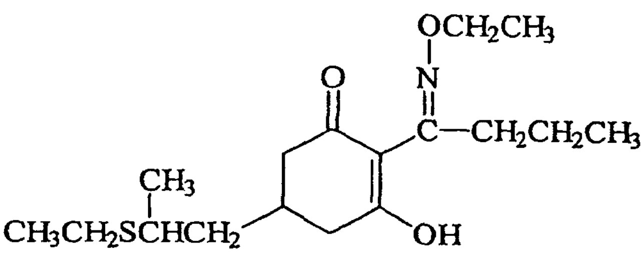

,

B17) Bayer NBA 061

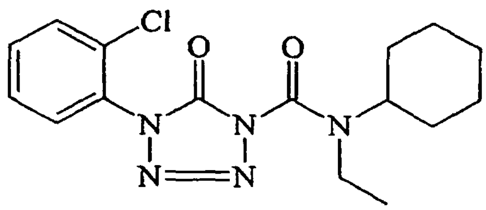

,

B18) Piperophos

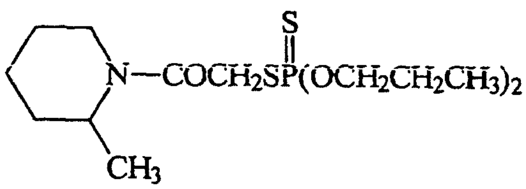

,

B19) Anilofos

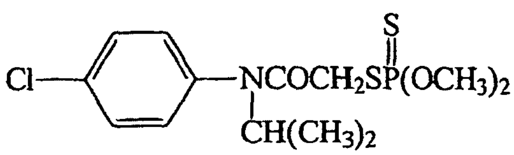

,

B20) Fenoxaprop, Fenoxaprop-P

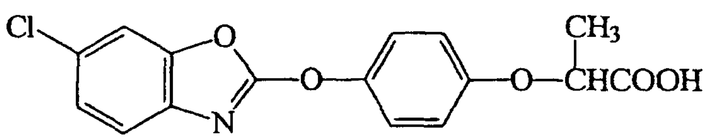

,

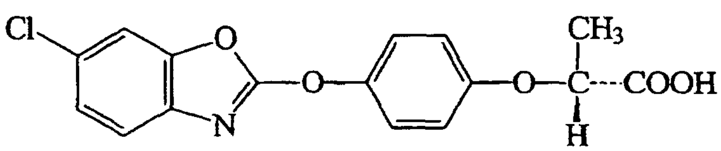

,

B21) Haloxyfop

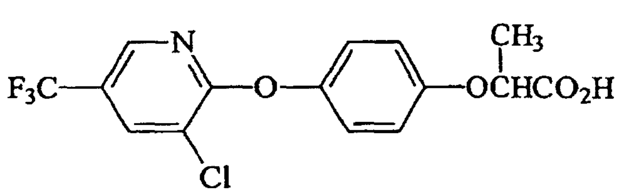

,

B22) Cyhalofop

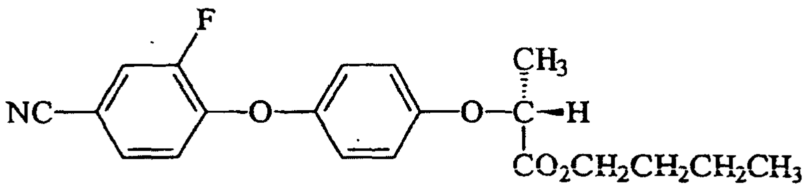

,

B23) JC-940

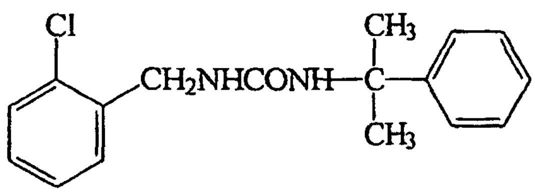

,

B24) Dithiopyr

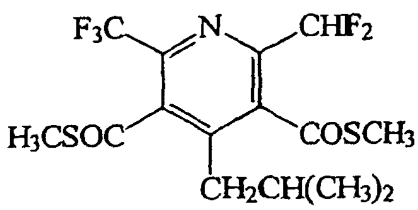

,

B25) Bromobutide

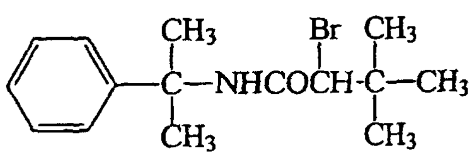

,

B26) Cinmethylin

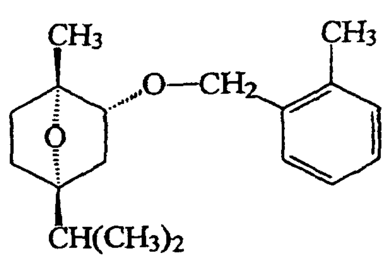

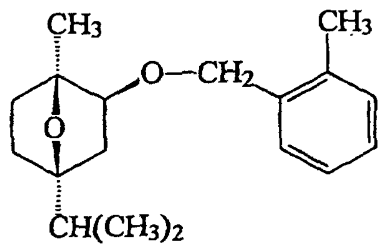

und

B27) CH-900

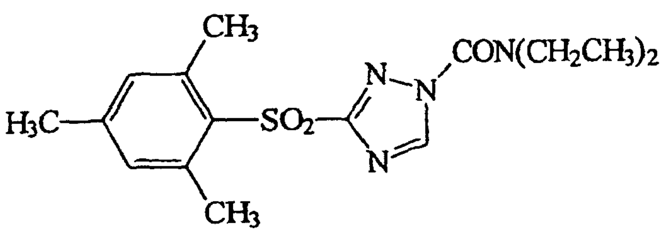

,

Bb) selektiv in Reis vorwiegend gegen dikotyle Schadpflanzen und Cyperaceen wirksamen Herbiziden aus der Gruppe bestehend aus

B28) 2,4-D

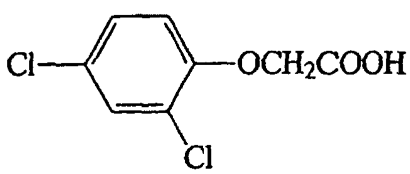

,

B29) Mecoprop, Mecoprop-P

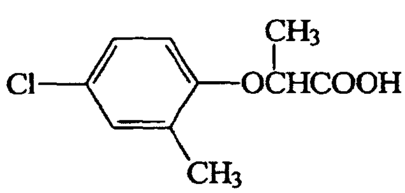

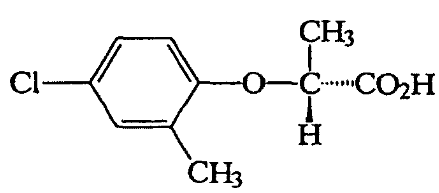

,

B30) MCPA

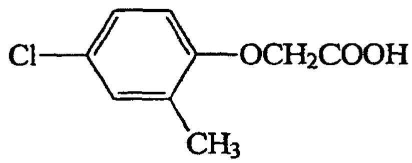

,

B31) Dicamba

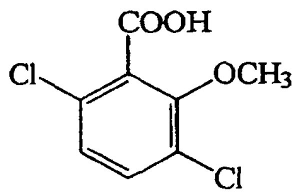

,

B32) Acifluorfen

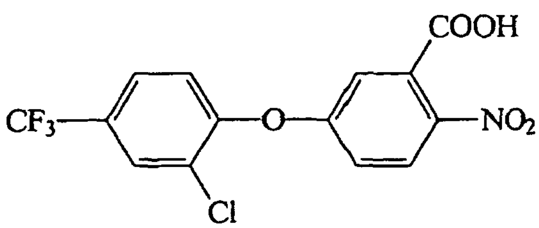

B33) Azolen der allgemeinen Formel III

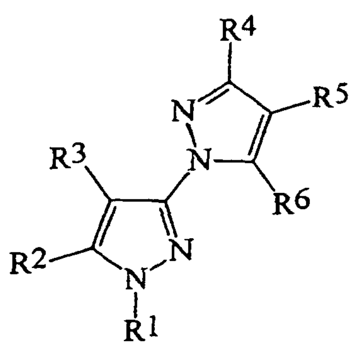

(III),

,

worin

| | |
|---|---|
| $R^1$ | $(C_1-C_4)$-Alkyl ist, |
| $R^2$ | $(C_1-C_4)$-Alkyl, $(C_1-C_4)$-Alkylthio oder $(C_1-C_4)$-Alkoxy ist, von denen jeder Rest durch ein oder mehrere Halogenatome substituiert sein kann, oder |
| $R^1$ und $R^2$ | zusammen die Gruppe $(CH_2)_m$ bilden mit m = 3 oder 4, |
| $R^3$ | Wasserstoff oder Halogen ist, |
| $R^4$ | Wasserstoff oder $(C_1-C_4)$-Alkyl ist, |
| $R^5$ | Wasserstoff, Nitro, Cyano oder eine der Gruppen $-COOR^7$, $-C(=X)NR^7R^8$ oder $-C(=X)R^{10}$ ist, |
| $R^6$ | Wasserstoff, Halogen, Cyano, $(C_1-C_4)$-Alkyl, $(C_1-C_4)$-Alkylthio oder $-NR^{11}R^{12}$ ist, |
| $R^7$ und $R^8$ | gleich oder verschieden Wasserstoff oder $(C_1-C_4)$-Alkyl sind, oder |

| | |
|---|---|
| $R^7$ und $R^8$ | zusammen mit dem Stickstoff, an den sie gebunden sind einen gesättigten 5 oder 6 gliedrigen carbozyklischen Ring bilden, |
| $R^{10}$ | Wasserstoff oder $(C_1-C_4)$-Alkyl ist, wobei letztere gegebenenfalls mit einem oder mehreren Halogenatomen substituiert sein können, und |
| $R^{11}$ u. $R^{12}$ | gleich oder verschieden Wasserstoff, $(C_1-C_4)$-Alkyl oder $(C_1-C_4)$-Alkoxycarbonyl sind, wobei |
| $R^{11}$ u. $R^{12}$ | zusammen mit dem Stickstoff, an den sie gebunden sind, einen 3, 5 oder 6 gliedrigen carbozyklischen oder aromatischen Ring bilden können, in welchem ein C-Atom optionell durch ein O-Atom ersetzt sein kann; |

wobei besonders bevorzugt sind

B33a) eine Verbindung der allgemeinen Formel III, worin $R^1$ und $R^2$ zusammen die Gruppe $(CH_2)_m$ bilden mit m = 4, $R^3$ Chlor ist, R4 Wasserstoff bedeutet, $R^5$ Cyano ist, $R^6$ die Bedeutung $-NR^{11}R^{12}$ annimmt, $R^{11}$ für Wasserstoff und $R^{12}$ für Isopropyl stehen,

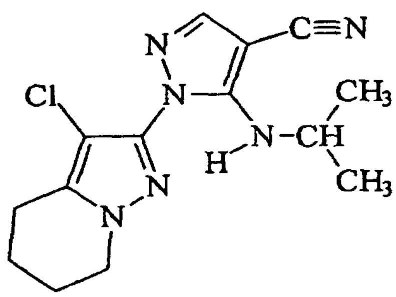

,

und

B33b) eine Verbindung der allgemeinen Formel III, worin $R^1$ und $R^2$ zusammen die Gruppe $(CH_2)_m$ bilden mit m = 4, $R^3$ Chlor ist, R4 Wasserstoff bedeutet, $R^5$ Cyano ist, $R^6$ die Bedeutung $-NR^{11}R^{12}$ annimmt, $R^{11}$ Methyl und $R^{12}$ $-CH_2-C\equiv CH$ ist,

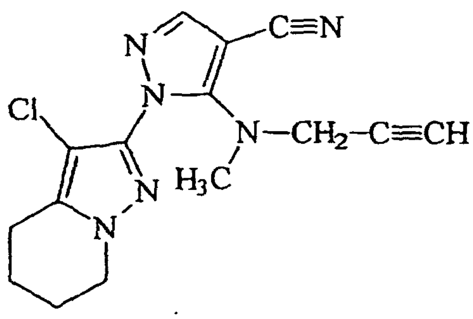

,

B34) Chlorimuron

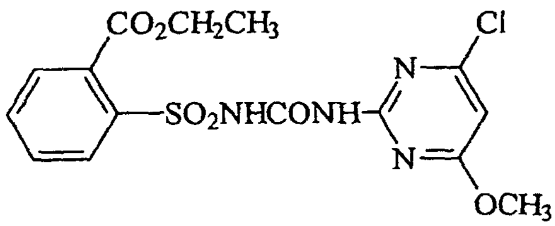

,

B35) Triasulfuron

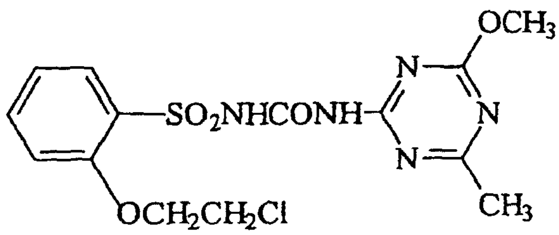

,

B36) Ioxynil

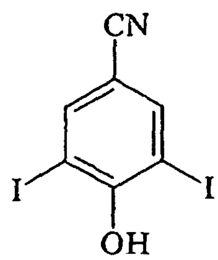

,

B37) Picloram

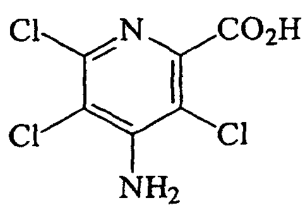

und

B38) Carfentrazon

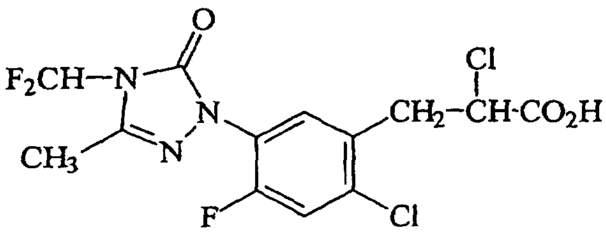

Bc) selektiv in Reis vornehmlich gegen Cyperaceen wirksamen Herbiziden aus der Gruppe bestehend aus,

B39) Bentazon

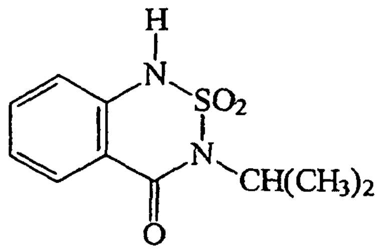

,

B40) Triclopyr

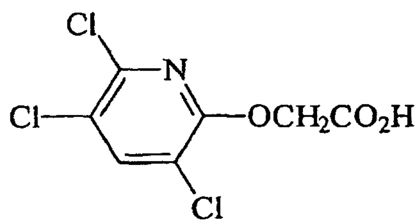

,

B41) Benfuresate

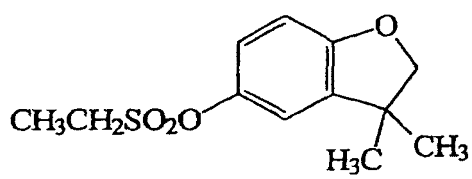

und

B42) Daimuron

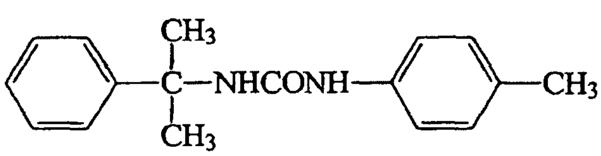

und

Bd) selektiv in Reis vorwiegend gegen Gräser und dikotyle sowie Cyperaceen- Schadpflanzen wirksamen Herbiziden aus der Gruppe bestehend aus

B43) Pendimethalin

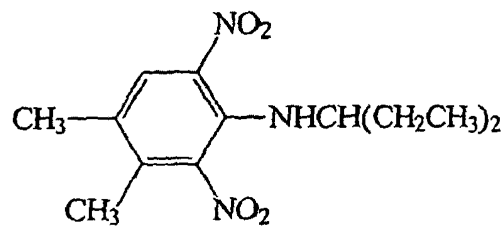

,

B44) Clomazon

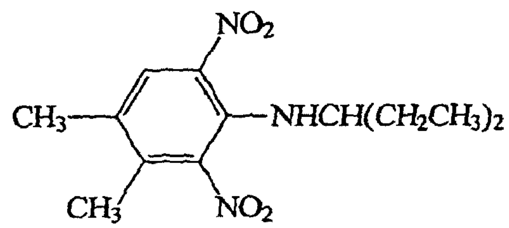

,

B45) Benzofenap

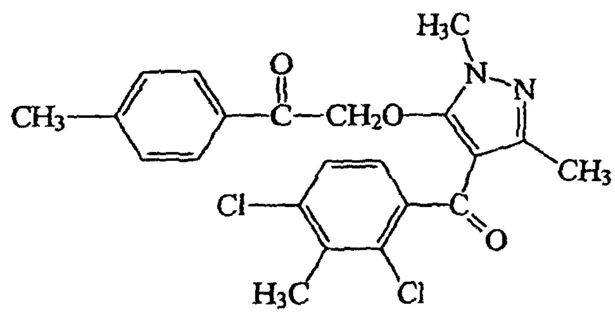

,

B46) Pyrazolynate

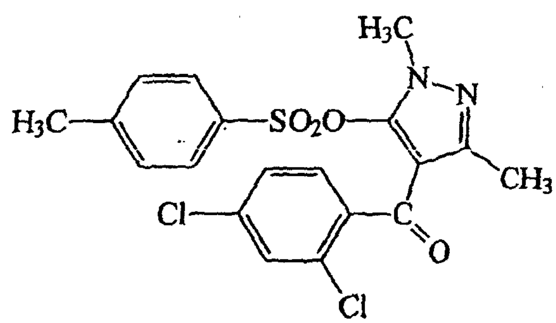

,

B47) Pyrazoxyfen

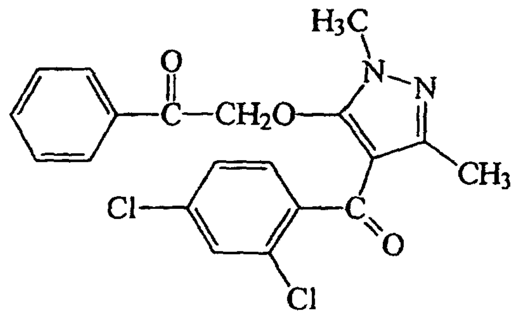

,

B48) KIH 2023

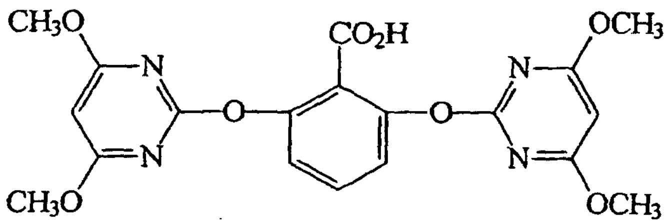

,

B49) KIH 6127

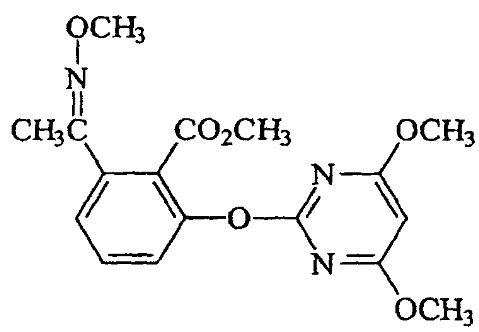

,

B50) Oxadiazon

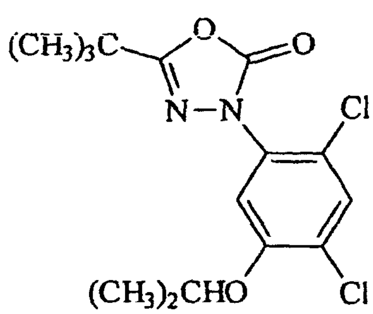

,

B51) Oxadiargyl

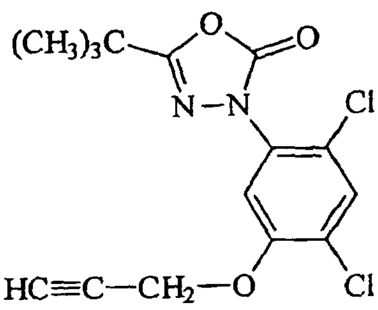

,

B52) Acetochlor

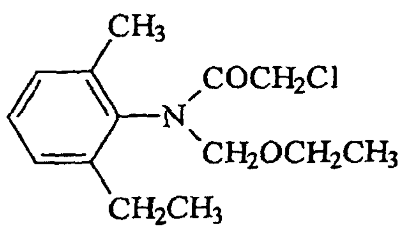

,

B53) Metolachlor

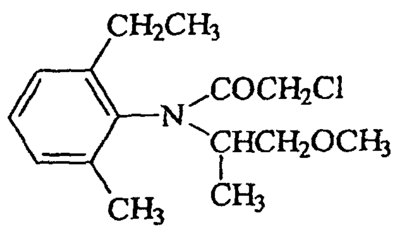

,

B54) Metosulam

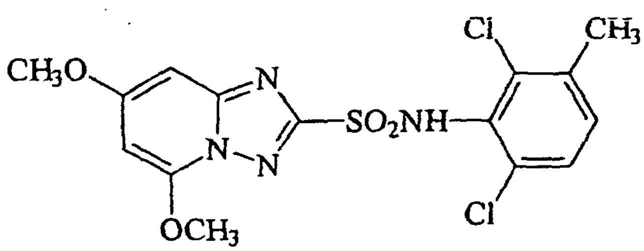

,

B55) Oxyfluorfen

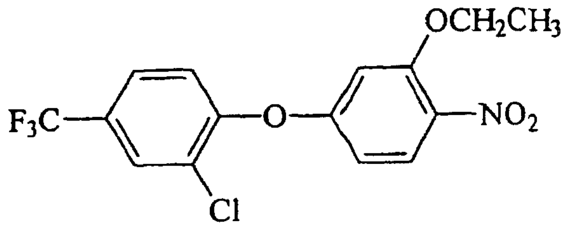

,

B56) Dalapon

$CH_3CCl_2CO_2H$,

B57) Metsulfuron

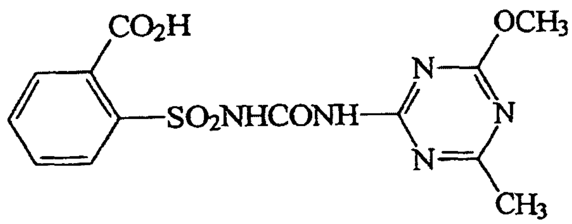

,

B58) Bensulfuron

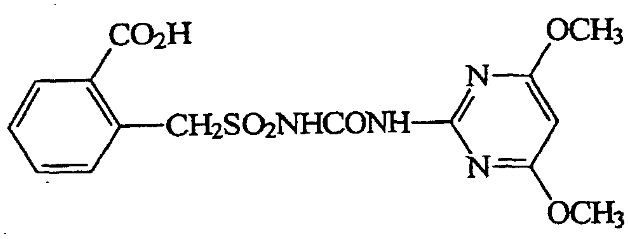

,

B59) Pyrazosulfuron

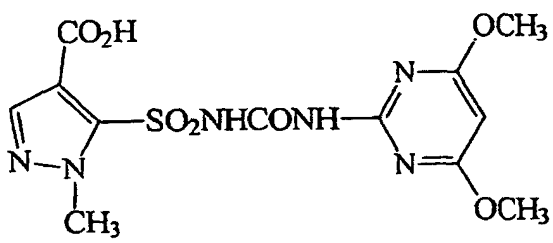

,

B60) Cinosulfuron

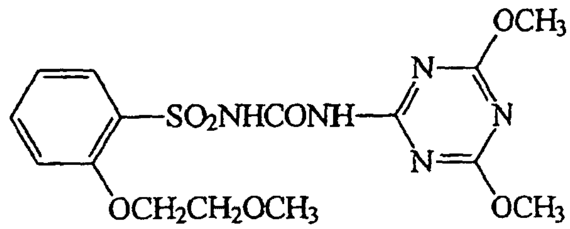

,

B61) Imazosulfuron

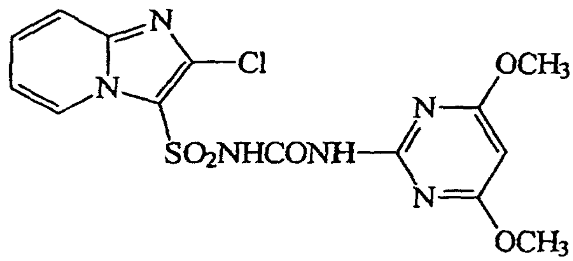

,

B62) AC 322,140 (Cyclosulfamuron)

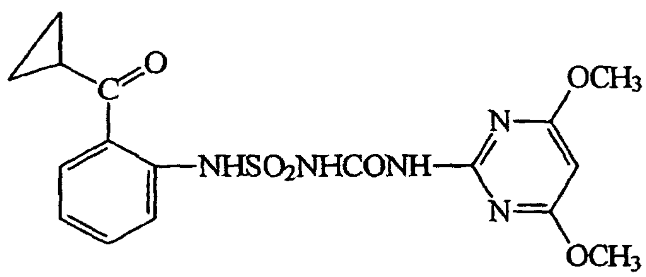

,

B63) Sulfonylharnstoffe der allgemeinen Formel IV

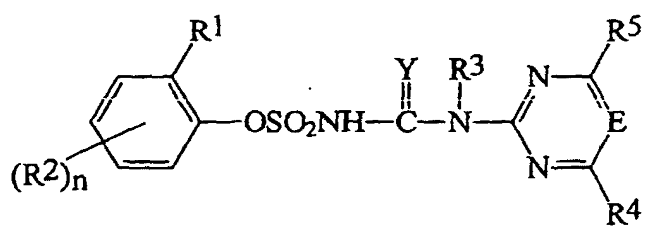

(IV),

,

worin

a) $R^1$ Ethoxy, Propoxy oder Isopropoxy und
$R^2$ Halogen, $NO_2$, $CF_3$, CN, $(C_1\text{-}C_4)$-Alkyl, $(C_1\text{-}C_4)$-Alkoxy, $(C_1\text{-}C_4)$-Alkylthio oder $((C_1\text{-}C_4)$-Alkoxy)-carbonyl und
n 0, 1, 2 oder 3 oder
b) $R^1$ gegebenenfalls ungesättigtes $(C_1\text{-}C_8)$-Alkoxy, das substituiert ist durch Halogen, gegebenenfalls ungesättigtes $(C_1\text{-}C_6)$-Alkoxy, einen Rest der Formel ( $(C_1\text{-}C_6)$-Alkyl)-S-, ( $(C_1\text{-}C_6)$-Alkyl)-SO-, $((C_1\text{-}C_6)$-Alkyl)-$SO_2$-, $((C_1\text{-}C_6)$-Alkyl)-O-CO-, $NO_2$, CN oder Phenyl; ferner $(C_2\text{-}C_8)$-Alkenyloxy oder -Alkinyloxy und

$R^2$ gesättigtes oder ungesättigtes ($C_1$-$C_8$)-Alkyl, Phenyl, Phenoxy, ($C_1$-$C_4$)-Alkoxy, ($C_1$-$C_4$)-Alkylthio, (($C_1$-$C_4$)-Alkoxy)-carbonyl, wobei alle vorstehenden Reste $R^2$ durch Halogen, ($C_1$-$C_4$)-Alkoxy oder ($C_1$-$C_4$)-Alkylthio substituiert sein können, oder Halogen, $NO_2$, ($C_1$-$C_4$)-Alkylsulfonyl oder -sulfinyl und
n 0, 1, 2 oder 3 oder
c) $R^1$ ($C_1$-$C_8$)-Alkoxy und
$R^2$ ($C_2$-$C_8$)-Alkenyl oder -Alkinyl, Phenyl, Phenoxy, wobei die genannten Reste für $R^2$ unsubstituiert oder durch Halogen, ($C_1$-$C_4$)-Alkoxy oder ($C_1$-$C_4$)-Alkylthio substituiert sind, oder ($C_1$-$C_4$)-Alkylsulfonyl oder -sulfinyl und
n 1, 2 oder 3 oder
d) $R^1$ jeweils in 2-Stellung am Phenylrest Halogen, Methoxy, Ethyl oder Propyl,
$R^2$ (($C_1$-$C_4$)-Alkoxy)-carbonyl in 6-Stellung am Phenylrest und
n = 1

sowie in allen Fällen a) bis d)

| | |
|---|---|
| $R^3$ | Wasserstoff, gesättigtes oder ungesättigtes ($C_1$-$C_8$)-Alkyl oder ($C_1$-$C_4$)-Alkoxy, |
| $R^{4'}$ $R^5$ | unabhängig voneinander Wasserstoff, Halogen, ($C_1$-$C_4$)-Alkyl, ($C_1$-$C_4$)-Alkoxy, ($C_1$-$C_4$)-Alkylthio ist, wobei die letztgenannten drei Reste unsubstituiert oder durch Halogen, ($C_1$-$C_4$)-Alkoxy oder ($C_1$-$C_4$)-Alkylthio substituiert sind, |
| Y | O oder S und |
| E | CH oder N |

bedeuten,
wobei besonders bevorzugt unter den Verbindungen der allgemeinen Formel IV

B63a) Ethoxysulfuron (HOE 095404)

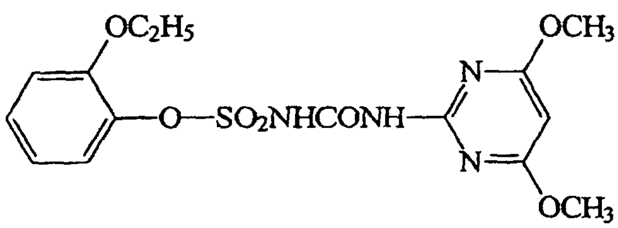

ist,

B64) Azimsulfuron (DPX-A8947)

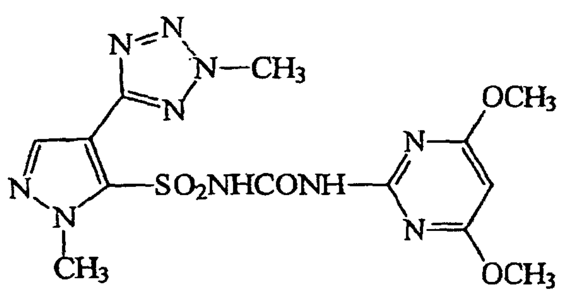

B65) Nicosulfuron

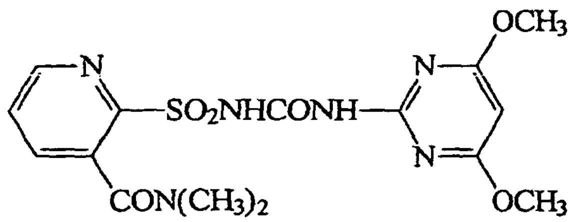

,

B66) Prometryn

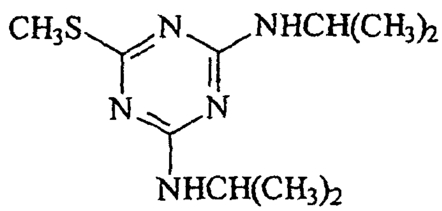

,

B67) Simetryn

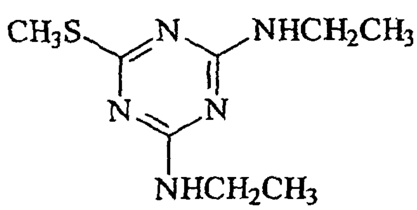

,

B68) Thiazopyr

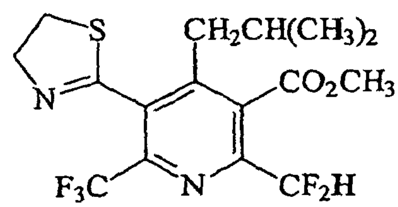

,

B69) Pyrazophos

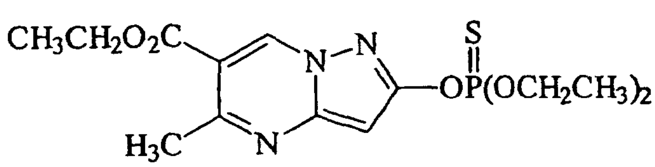

,

B70) Pentoxazone

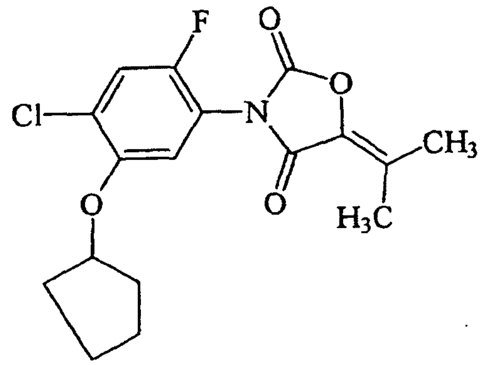

,

B71) Indanofan

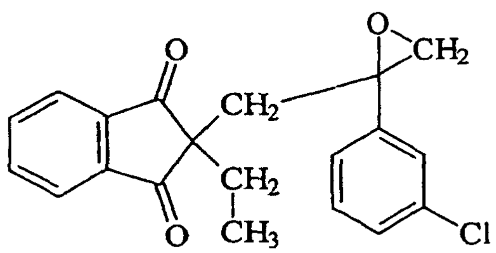

,

B72) LGC40863

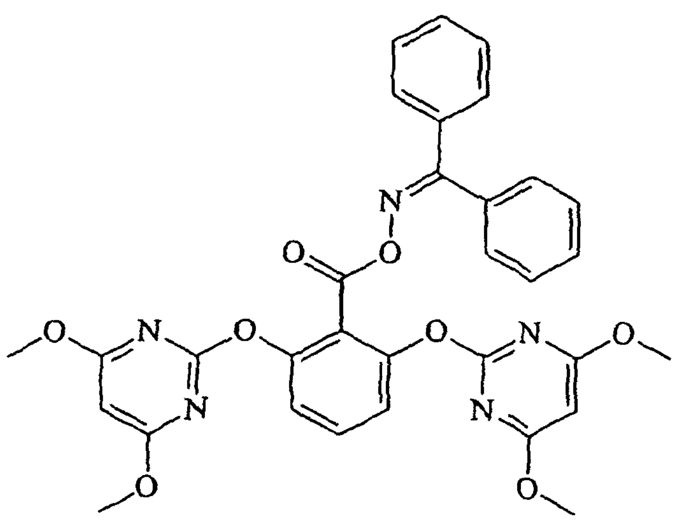

und

B73) MY 100

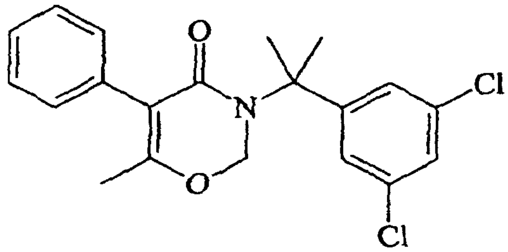

besteht,
mit den Bedingungen, daß

i) Mittel, die aus

A') mindestens einer Verbindung aus der Gruppe der substituierten Phenylsulfonylharnstoffe der allgemeinen Formel I' und deren landwirtschaftlich akzeptierten Salze

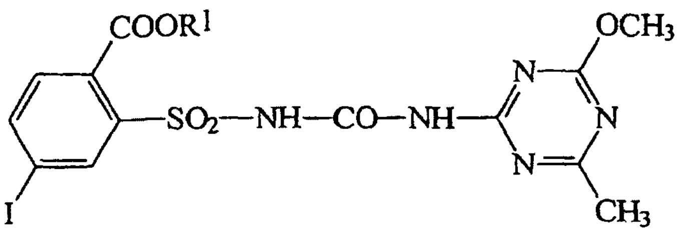

(I´),

worin

$R^1$ $(C_1-C_8)$-Alkyl, $(C_3-C_4)$-Alkenyl, $(C_3-C_4)$-Alkinyl oder $(C_1-C_4)$-Alkyl, das ein- bis vierfach durch Reste aus der Gruppe Halogen und $(C_1-C_2)$-Alkoxy substituiert ist, bedeutet,

in Kombination mit
B') Fenoxaprop, Pendimethalin, Nicosulfuron, Mecoprop, MCPA, 2.4-D, Dicamba, Acifluorfen, Azolen der allgemeinen Formel III

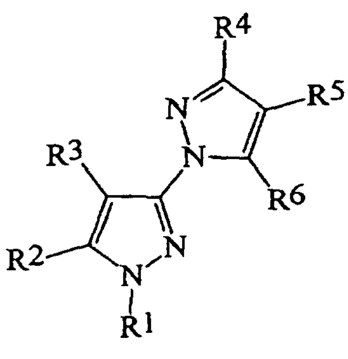

(III),

,

worin

$R^1$ $(C_1-C_4)$-Alkyl ist,
$R^2$ $(C_1-C_4)$-Alkyl, $(C_1-C_4)$-Alkylthio oder $(C_1-C_4)$-Alkoxy ist, von denen jeder Rest durch ein oder mehrere Halogenatome substituiert sein kann, oder
$R^1$ und $R^2$ zusammen die Gruppe $(CH_2)_m$ bilden mit m = 3 oder 4,

$R^3$ Wasserstoff oder Halogen ist,
$R^4$ Wasserstoff oder $(C_1-C_4)$-Alkyl ist,
$R^5$ Wasserstoff, Nitro, Cyano oder eine der Gruppen $-COOR^7$, $-C(=X)NR^7R^8$ oder $-C(=X)R^{10}$ ist,
$R^6$ Wasserstoff, Halogen, Cyano, $(C_1-C_4)$-Alkyl, $(C_1-C_4)$-Alkylthio oder $-NR^{11}R^{12}$ ist,
$R^7$und $R^8$ gleich oder verschieden Wasserstoff oder $(C_1-C_4)$-Alkyl sind, oder
$R^7$und $R^8$ zusammen mit dem Stickstoff, an den sie gebunden sind einen gesättigten 5 oder 6 gliedrigen carbozyklischen Ring bilden,
$R^{10}$ Wasserstoff oder $(C_1-C_4)$-Alkyl ist, wobei letztere gegebenenfalls mit einem oder mehreren Halogenatomen substituiert sein können, und
$R^{11}$ u. $R^{12}$ gleich oder verschieden Wasserstoff, $(C_1-C_4)$-Alkyl oder $(C_1-C_4)$-Alkoxycarbonyl sind, wobei
$R^{11}$ u. $R^{12}$ zusammen mit dem Stickstoff, an den sie gebunden sind, einen 3, 5 oder 6 gliedrigen carbozyklischen oder aromatischen Ring bilden können, in welchem ein C-Atom optionell durch ein O-Atom ersetzt sein kann,

Bentazon, Metsulfuron, Ioxynil, Acetochlor, Metolachlor, KIH-2023, Triasulfuron oder Oxyfluorfen als einzigen herbiziden Wirkstoffen bestehen
und
ii) Mittel, die aus

A") mindestens einer Verbindung aus der Gruppe der substituierten Phenylsulfonylharnstoffe der allgemeinen Formel I" und deren landwirtschaftlich akzeptierten Salze

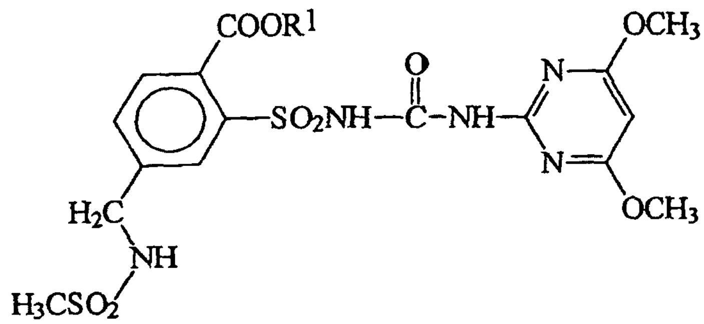

(I´´),

worin

$R^1$ $(C_1-C_8)$-Alkyl, $(C_3-C_4)$-Alkenyl, $(C_3-C_4)$-Alkinyl oder $(C_1-C_4)$-Alkyl, das ein- bis vierfach durch Reste aus der Gruppe Halogen und $(C_1-C_2)$-Alkoxy substituiert ist, bedeutet,

in Kombination mit
B") Fenoxaprop, Pendimethalin, Mecoprop, MCPA, 2.4-D, Dicamba, einer Verbindung der oben angegebenen Formel III, Bentazon, Ioxynil, Metosulam, Metsulfuron, Oxyfluorfen oder Triasulfuron
als einzigen herbiziden Wirkstoffen bestehen,
ausgenommen sind.

Durch die erfindungsgemäßen Kombinationen aus herbiziden Wirkstoffen der Typen A und B gelingt es besonders vorteilhaft, die vom Praktiker geforderte Kontrolle des Unkrautspektrums zu erreichen, wobei auch einzelne schwer zu bekämpfende Arten erfasst werden. Darüberhinaus läßt sich mit den erfindungsgemäßen Kombinationen der Aufwand an Wirkstoffmengen der einzelnen in der Kombination enthaltenen Kombinationspartner deutlich reduzieren, was ökonomischere Lösungsansätze seitens der Anwender erlaubt.
Schließlich konnten überraschenderweise Wirkungssteigerungen erzielt werden, die über das zu erwartende Maß hinausgehen, womit die herbiziden Mittel der Erfindung in breitem Umfang synergistische Aktivitäten zeigen.
Daneben lassen sich auch viele resistente Arten in hervorragender Weise kontrollieren.
Die Randbedingungen i) und ii) (Disclaimer bezüglich des Produktschutzes) berücksichtigen vorbekannte Kombinationen, wobei diese bereits veröffentlichten Kombinationen jedoch keinerlei Rückschlüsse auf die Tauglichkeit der kombinierten Präparate in Reisanwendungen zuließen.
Speziell vermeidet der Disclaimer i) die aus der D3 bereits vorbekannten Kombinationen aus ein oder mehreren Typ-A Verbindungenen und einer Typ-B-Verbindung, wobei deren Einsatzgebiet sich eindeutig von der Verwendung der Kombinationen gemäß der vorliegenden Erfindung unterscheidet und die Gegenstände der D3 sowie der Erfindung damit klar voneinander abgegrenzt sind. Während die D3 Kombinationen mit Herbiziden zur Verwendung in Getreide oder Mais beschreibt, betrifft die vorliegende Erfindung Kombinationen für die Verwendung in Reis.

Der Disclaimer ii) stellt die Neuheit gegenüber D4 dar, welche sich auf Kombinationen mit einer Typ-B Verbindung für die Anwendung in Getreide bezieht. Auch hier sind die Anwendungszwecke der Kombinationen somit deutlich von den beabsichtigten Verwendungen gemäß der Erfindung verschieden.

Die Verbindungen vom Typ A (allgemeine Formel I) können Salze bilden, bei denen.der Wasserstoff der -$SO_2$-NH-Gruppe durch ein für die Landwirtschaft geeignetes Kation ersetzt wird. Diese Salze sind beispielsweise Metall-, insbesondere Alkalisalze (z.B. Na- oder K-Salze) oder Erdalkalisalze, oder auch Ammoniumsalze oder Salze mit organischen Aminen. Ebenso kann Salzbildung durch Anlagerung einer starken Säure an den Heterocyclenteil der Verbindungen der Formel I erfolgen. Geeignet hierfür sind z. B. HCl, $HNO_3$, Trichloressigsäure, Essigsäure oder Palmitinsäure.

Besonders vorteilhafte Typ A Verbindungen sind solche, bei denen das Salz des Herbizids der Formel (I) durch Ersatz des Wasserstoffs der -$SO_2$-NH-Gruppe durch ein Kation aus der Gruppe der Alkalimetalle, Erdalkalimetalle und Ammonium, bevorzugt Natrium, gebildet wird.

Sofern die Verbindungen der Formel I ein oder mehrere asymetrische C-Atome oder auch Doppelbindungen enthalten, die in der allgemeinen Formel nicht gesondert angegeben sind, gehören diese doch zu den Typ-A Verbindungen. Die durch ihre spezifische Raumform definierten möglichen Stereoisomeren, wie Enantiomere, Diastereoisomere, Z- und E-Isomere sind alle von der Formel I umfaßt und können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden. Die genannten Stereoisomeren in reiner Form als auch ihre Gemische können somit erfindungsgemäß eingesetzt werden.

In einer ersten ausgezeichneten Variante der Erfindung sind als Kombinationspartner vom Typ A für die Kombinationen der Erfindung Verbindungen aus der Gruppe Aa) von besonderem Interesse, wobei es sich hierbei um Verbindungen der allgemeinen Formel I handelt, worin $R^1$ ($C_1$-$C_8$)-Alkyl, ($C_3$-$C_4$)-Alkenyl, ($C_3$-$C_4$)-Alkinyl oder ($C_1$-$C_4$) -Alkyl, das einbis vierfach durch Reste aus der Gruppe Halogen und ($C_1$-$C_2$)-Alkoxy substituiert ist, bedeutet, $R^2$ für Iod steht, $R^3$ Methyl ist und Z die Bedeutung N hat.

Die in 4-Stellung des Phenylringes Iodsubstitution tragenden Phenylsulfonylharnstoffe der allgemeinen Formel I sind zwar grundsätzlich z. B. von der allgemeinen Formel 1 aus der WO 92/13845 umfaßt und auch deren Eignung als Synergismuspartner für in Getreide oder Mais anzuwendende Herbizide ist bereits Stand der Technik (vgl. D3), deren herausragende Eignung als Kombinationspartner für synergistische Mischungen mit anderen Herbiziden, die in Reis angewendet werden, ist dem Stand der Technik allerdings nicht entnehmbar. Insbesondere gibt es keine Anhaltspunkte in der bekannt gewordenen Literatur, daß Kombinationen von Verbindungen der Gruppe Aa), das ist die relativ eng begrenzte und klar umrissene Gruppe der gegebenenfalls in Form ihrer Salze vorliegenden 4-Iodo-2-[3-(4-methoxy-6-methyl-1,3,5-triazin-2-yl)ureidosulfonyl]-benzoesäureester, mit Reisherbiziden eine solche Ausnahmestellung bei der Bekämpfung der wichtigsten Schadpflanzen in Reiskulturen zukommt. Dabei ist vor allem auch zu berücksichtigen, daß von der Anwendung einer Kombination in Mais- oder Getreidekulturen nicht auf die Wirkung in Reiskulturen extrapoliert werden kann. Selbst wenn die Verbindungen der Gruppe Aa) sich alleine zur Bekämpfung von Schadpflanzen in Reis eignen, kann nicht mit überwiegender oder auch nur einiger Aussicht auf Erfolg vorhergesagt werden, ob Kombinationen mit anderen Reisherbiziden über die additive Wirkung hinausgehende Wirkungssteigerungen bei der Schadpflanzenbekämpfung zulassen.

Von großem Interesse für die Kombinationen der Erfindung sind als Kombinationspartner vom Typ A Verbindungen oder deren Salze der Gruppe Aa), bei denen in der allgemeinen Formel I $R^1$ Methyl, Ethyl, n- oder Isopropyl, n-, tert.-, 2-Butyl oder Isobutyl, n-Pentyl, Isopentyl, n-Hexyl, Isohexyl, 1,3-Dimethylbutyl, n-Heptyl, 1-Methylhexyl oder 1,4-Dimethylpentyl bedeutet, $R^2$ für Iod steht, $R^3$ Methyl ist und Z die Bedeutung N hat.

In besonders bevorzugter Ausführungsform enthalten erfindungsgemäße herbizide Mittel eine Typ A-Verbindung aus der Gruppe Aa) von der allgemeinen Formel I oder deren Salz, worin $R^1$ Methyl bedeutet, $R^2$ für Iod steht, $R^3$ Methyl ist und Z die Bedeutung N annimmt.

Ein spezieller Kombinationspartner ist die Verbindung A1) 4-Iodo-2-[3-(4-methoxy-6-methyl-1,3,5-triazin-2-yl) ureidosulfonyl]-benzoesäuremethylester:

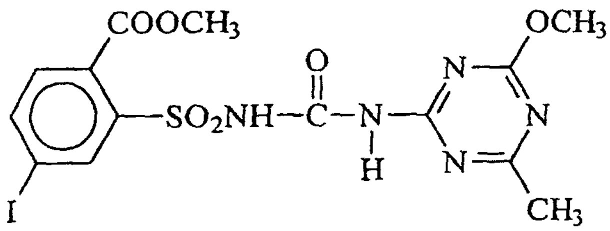

(A1)

Ein unter Umständen noch zweckmäßigerer Kombinationspartner ist das Natriumsalz der Verbindung A1), das als A1*) bezeichnet werden soll.

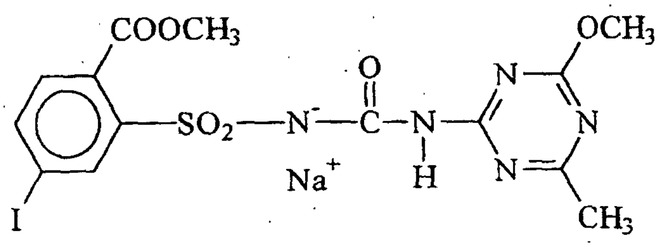

(A1*)

In einer weiteren Abwandlung der Erfindung kommen bevorzugt in 5-Stellung des Phenylringes einen Methylsulfonylamidomethyl-Substituenten tragende Sulfonylharnstoffe der allgemeinen Formel I als Verbindungen vom A)-Typ zum Einsatz. Verbindungen der Formel I, worin $R^1$ $(C_1-C_8)$-Alkyl, $(C_3-C_4)$-Alkenyl, $(C_3-C_4)$-Alkinyl oder $(C_1-C_4)$-Alkyl, das ein- bis vierfach durch Reste aus der Gruppe Halogen und/oder $(C_1-C_2)$-Alkoxy substituiert ist, bedeutet, $R^2$ $CH_2NHSO_2CH_3$ bedeutet, $R^3$ Methoxy ist und Z die bedeutung CH hat bilden die Gruppe Ab);

Die speziellen Sulfonylharnstoffe der Gruppe Ab) sind in Kombination mit anderen Herbiziden vom Typ B) hervorragend dazu geeignet, schwer zu bekämpfende Unkrautspezies in Reiskulturen wirkungsvoll zu kontrollieren. Insbesondere treten dabei unerwartete spezielle Wirkungseffekte gegen resistente Schadgräser auf.

Von besonderem Interesse für die Kombinationen der Erfindung sind als Kombinationspartner vom Typ A aus der Gruppe Ab) Verbindungen der allgemeinen Formel I oder deren Salze, worin $R^1$ Methyl, Ethyl, n- oder Isopropyl, n-, tert.-, 2-Butyl oder Isobutyl, n-Pentyl, Isopentyl, n-Hexyl, Isohexyl, 1,3-Dimethylbutyl, n-Heptyl, 1-Methylhexyl oder 1,4-Dimethylpentyl bedeutet, $R^2$ die Bedeutung $CH_2NHSO_2CH_3$ annimmt, $R^3$ für Methoxy steht und Z CH ist.

In ganz besonders bevorzugter Ausführungsform enthalten erfindungsgemäße herbizide Mittel eine Typ A-Verbindung aus der Gruppe Ab) der allgemeinen Formel I oder deren Salz, worin $R^1$ Methyl, $R^2$ $CH_2NHSO_2CH_3$, $R^3$ $OCH_3$ und Z CH bedeuten.

Zu besonderen Kombinationspartnern gehören die Verbindungen A2) :

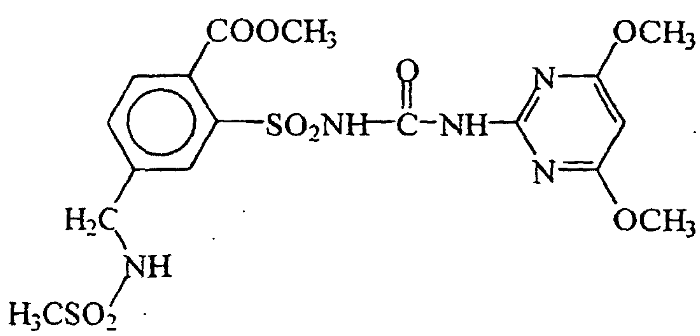

(A2)

und A3)

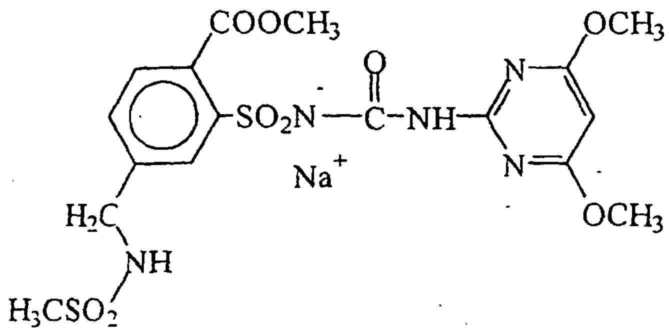

(A3)

Die Kombinationspartner vom Typ B sind in der Regel Standardherbizide, die jedoch unter bestimmten Kriterien ausgewählt sind. So handelt es sich ausnahmslos um selektiv in Reis gegen unerwünschte Pflanzen wirksame Herbizide. Zu den zu bekämpfenden Schadpflanzen gehören dabei vor allem Gräser und Dikotyle/Cyperaceen. Die Schreibweise "Dikotyle/Cyperaceen" soll dabei zum Ausdruck bringen, daß die Wirksamkeit gegen Dikotyle und Cyperaceen gegeben ist, die Wirksamkeit gegen Dikotyle jedoch im Vordergrund steht.

Hinsichtlich der Wirksamkeit der Standardherbizide vom Typ B wiederum kann man eine Abstufung in Bezug auf den Schwerpunkt der bekämpften Pflanzen vornehmen.

So ist ein Teil der Typ-B Herbizide vorwiegend, respektive annähernd ausschließlich, gegen Gräser wirksam (Untergruppe Ba)), ein anderer Teil vorwiegend gegen Dikotyle und Cyperaceen (Untergruppe Bb)), ein anderer Teil vorwiegend gegen Cyperaceen (Untergruppe Bc)), während eine weitere Gruppe sowohl gegen Gräser als auch Dikotylen/Cyperaceen (Untergruppe Bd)) Wirksamkeit entfaltet.

In jedem Falle ergibt sich jedoch für die erfindungsgemäßen Kombinationen ein optimiertes Wirkungsspektrum durch Ergänzung und Intensivierung der herbiziden Eigenschaften der Verbindungen vom Typ A.

Angesichts der obigen Ausführungen kennzeichnet sich das herbizide Mittel der Erfindung in einer besonderen Ausführungsform dadurch, daß es als Herbizide vom Typ B ein oder mehrere selektiv in Reis gegen Gräser wirksame Herbizide aus der Gruppe Ba) enthält, welche herbizid wirksame Anilide, insbesondere Chloracetanilide, Thiocarbamate, Chinolincarbonsäuren, Cyclohexandione und Cyclohexandionoxime, Tetrazole, Organophosphorverbindungen, 2-(4-Aryloxyphenoxy)propionsäuren, bevorzugt deren Ester, Harnstoffe, Pyridincarbothioate, Butyramide, Menthyl-Benzyl-Ether und Triazole umfaßt.

In weiters ganz besonders zweckmäßiger Ausgestaltung kennzeichnet sich die herbizid wirksame Mischung der Erfindung dadurch, daß sie als Herbizide vom Typ B ein oder mehrere selektiv in Reis gegen Gräser wirksame Herbizide aus der Gruppe enthält, die aus

B1) Butachlor,

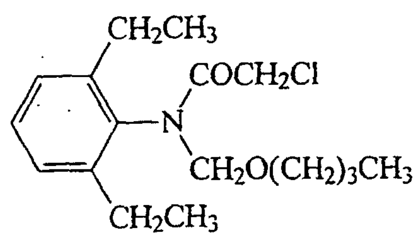

*N*-(Butoxymethyl)-2-chlor-*N*-(2,6-diethylphenyl)acetamid, Pesticide Manual, 10. Aufl. 1994, S.130-131;

B2) Butenachlor,

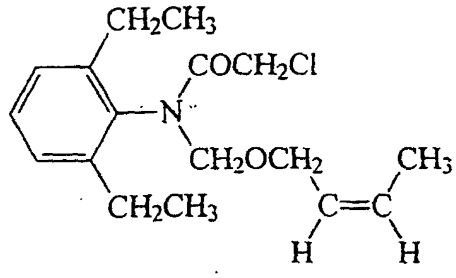

(*Z*)-2-Chlor-*N*-[(2-butenyloxy)methyl]-*N*-(2,6-diethylphenyl)acetamid, Pesticide Manual, 10. Aufl. 1994, S.132-133;

B3) Thenylchlor

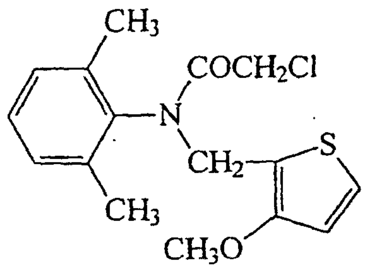

2-Chlor-*N*-(2,6-dimethylphenyl)-*N*-[(3-methoxy-2-thienyl)methyl]acetamid Pesticide Manual, 10. Aufl. 1994, S.971-972;

B4) Pretilachlor

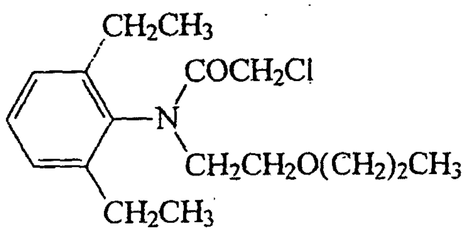

2-Chlor-*N*-(2,6-diethylphenyl)-*N*-(2-propoxyethyl)acetamid Pesticide Manual, 10. Aufl. 1994, S.828-829;

B5) Mefenacet

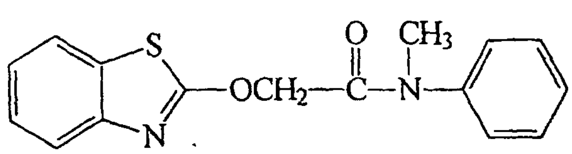

2-(2-Benzothiazolyloxy)-*N*-methyl-*N*-phenylacetamid Pesticide Manual, 10. Aufl. 1994, S.649-650;

B5a) BAY FOE 5043

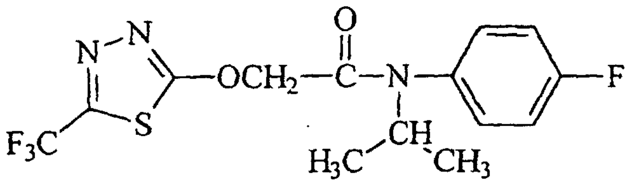

4'-fluoro-N.isoprpyl-2-(5-trifluoromethyl-1,3,4-thiadiazol-2-yloxy)acetanilide
Pesticide Manual, 11. Aufl. 1997, S.82-83;

B6) Naproanilid

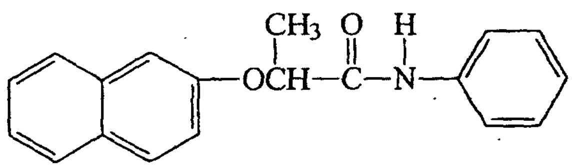

2-(2-Naphthalenyloxy)-*N*-phenylpropanamid
Pesticide Manual, 10. Aufl. 1994, S.722;

B7) Propanil

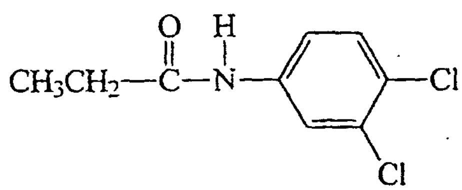

N- (3, 4-Dichlorophenyl)propanamid
Pesticide Manual, 10. Aufl. 1994, S.845-846;

B8) Etobenzanid

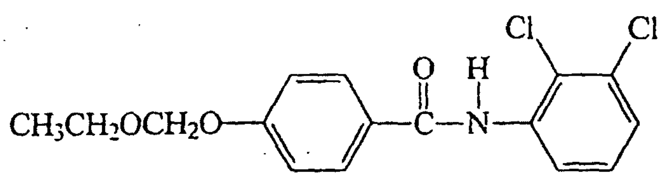

*N*-(2,3-Dichlorophenyl)-4-(ethoxymethoxy)benzamid
Pesticide Manual, 10. Aufl. 1994, S.417-418;

B9) Dimepiperate

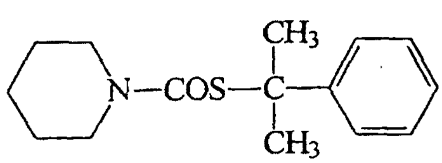

*S*-(1-Methyl-1-phenylethyl)1-piperidincarbothioat
Pesticide Manual, 10. Aufl. 1994, S.341-342;

B10) Molinate

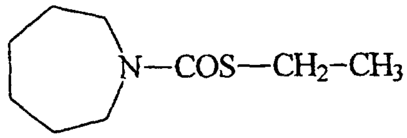

*S*-Ethyl hexahydro-1*H*-azepin-1-carbothioat
Pesticide Manual, 10. Aufl. 1994, S.706-707;

B11) Thiobencarb

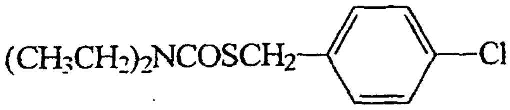

S-[(4-Chlorphenyl)methyl]diethylcarbamothioat
Pesticide Manual, 10. Aufl. 1994, S.979-980;

B12) Pyributicarb

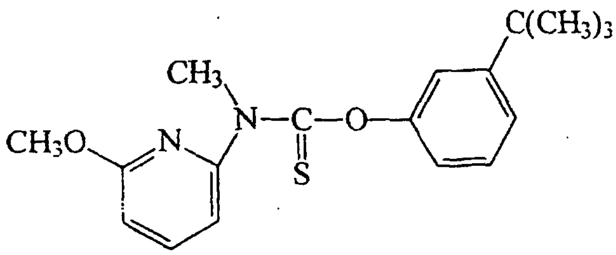

*O*-[3-(1,1-Dimethylethyl)phenyl] (6-methoxy-2-pyridinyl)methylcarbamothioat
Pesticide Manual, 10. Aufl. 1994, S.878-879;

B13) Quinclorac

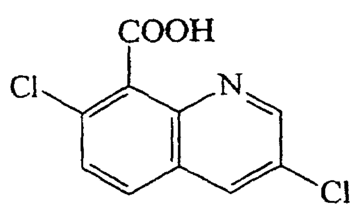

3,7-Dichlor-8-Chinolincarbonsäure
Pesticide Manual, 10. Aufl. 1994, S.892-893;

B14) Cyclohexandionen der allgemeinen Formel II

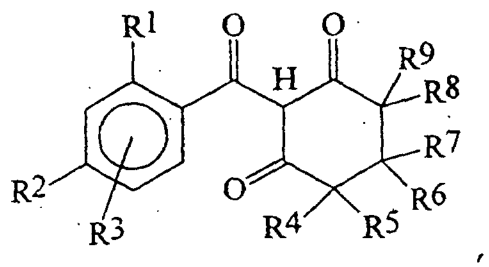

(II),

worin

$R^1$ Halogen, $(C_1-C_4)$-Alkoxy, $(C_1-C_4)$-Alkyl, $(C_1-C_4)$-Haloalkyl, $-NO_2$, -CN oder $S(O)_nR^{10}$;
$R^2$ und $R^3$ unabhängig voneinander Wasserstoff, Halogen, $(C_1-C_4)$-Alkyl, $(C_1-C_4)$-Alkoxy, $(C_1-C_4)$-Haloalkoxy, $(C_1-C_4)$-Haloalkyl, $-NO_2$, -CN oder $S(O)_mR^{11}$, $-NR^{12}R^{13}$, $-NR^{14}$-CO-$R^{15}$;
$R^4$ Wasserstoff, $(C_1-C_4)$-Alkyl oder -CO-O-$(C_1-C_4)$-Alkyl;
$R^5$, $R^6$, $R^7$, $R^8$ $R^9$ unabhängig voneinander Wasserstoff oder $(C_1-C_4)$-Alkyl oder -CO-$R^{16}$;
$R^{10}$ $(C_1-C_4)$-Alkyl, $(C_1-C_4)$-Haloalkyl oder $(C_1-C_4)$-Alkoxy;
$R^{11}$ $(C_1-C_4)$-Alkyl, $(C_1-C_4)$-Haloalkyl, Phenyl, Benzyl oder $-NR^{17}R^{18}$;
$R^{12}$ und $R^{13}$ unabhängig voneinander Wasserstoff oder $(C_1-C_4)$-Alkyl;
$R^{14}$ Wasserstoff oder $(C_1-C_4)$-Alkyl;
$R^{15}$ $(C_1-C_4)$-Alkyl;
$R^{16}$ Wasserstoff, $(C_1-C_4)$-Alkyl, $(C_1-C_4)$-Haloalkyl oder $(C_1-C_4)$-Alkoxy;
$R^{17}$ und $R^{18}$ unabhängig voneinander Wasserstoff oder $(C_1-C_4)$-Alkyl; und
n und m unabhängig voneinander 0, 1 oder 2 bedeuten,
wobei besonders bevorzugt ist

B14a) ICIA0051 = Sulcotrione

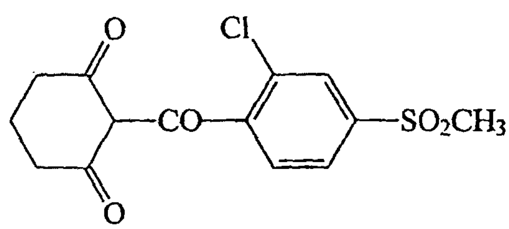

2-[2-Chlor-4-(methylsulfonyl)benzoyl]-1,3-cyclohexandion
Pesticide Manual, 10. Aufl. 1994, S.577-578;

B15) Cycloxydim

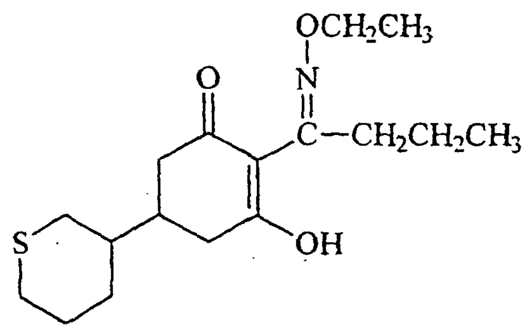

(±)-2-[1-(ethoxyimino)butyl]-3-hydroxy-5-thian-3-ylcyclohex-2-enone
Pesticide Manual, 11. Aufl. 1997, S.290-291;

B16) Sethoxydim

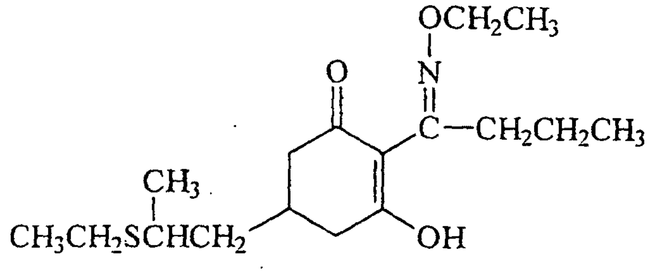

(±)-(*EZ*)-2-(1-ethoxyiminobutyl)-5-[2-(ethylthio)propyl]-3-hydroxycyclohex-2-enone
Pesticide Manual, 11. Aufl. 1997, S.1001-1003;

B17) NBA 061 = fentrazamide oder BAY YRC 2388

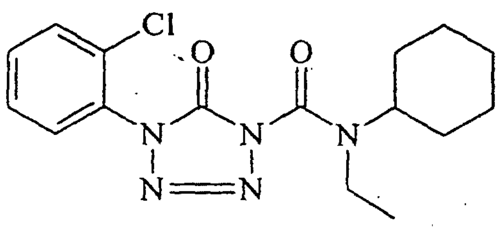

4-(2-chlorophenyl)-5-oxo-4,5-dihydro-tetrazole-1-carboxylic acid cyclohexyl-ethyl-amide

B18) Piperophos

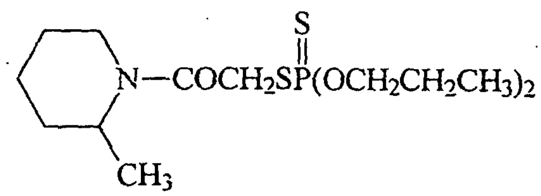

*S*-[2-(2-Methyl-1-piperidinyl)(2-oxoethyl]*O*,*O*-dipropyl phosphordithioat
Pesticide Manual, 10. Aufl. 1994, S.818-819;

B19) Anilofos

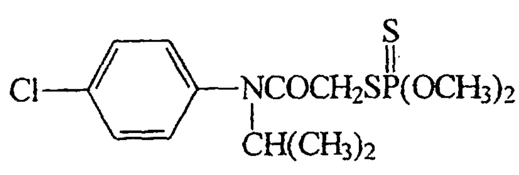

*S*-[2-[(4-Chlorphenyl)(1-methylethyl)amino)-2-oxoethyl*]O*,*O*-dimethylphosphordithioat
Pesticide Manual, 10. Aufl. 1994, S.44-45;

B20) Fenoxaorop, Fenoxaprop-P

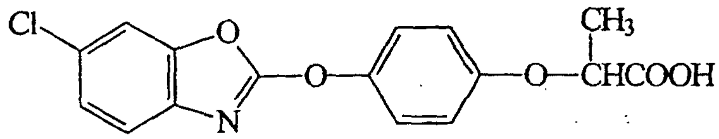

(±)-2-[4-(6-Chlor-1,3-benzoxazol-2-yloxy)phenoxy)propionsäure,
umfassend u. a. die Anwendungsform als Fenoxaprop-ethyl,

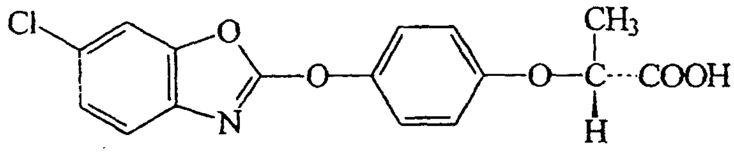

(*R*)-2-[4-(6-Chlor-1,3-benzoxazol-2-yloxy)phenoxy]propionsäure,
umfassend u.a. die häufigste Anwendungsform Fenoxaprop-P-ethyl,
wobei die vorgenannten Verbindungen B20) aus Pesticide Manual, 10. Aufl. 1994, S.439-441 u. 441-442 bekannt sind;

B21) Haloxyfop

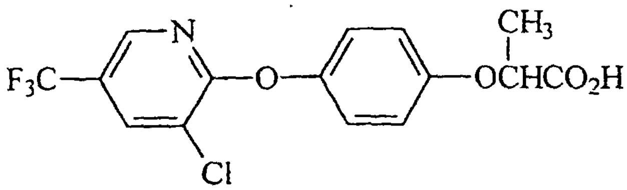

(±)-2-[4-[[3-Chlor-5-(trifluoromethyl)-2-pyridinyl]oxy]phenoxy]propionsäure,
umfassend u. a. die Anwendungsform als Haloxyfopetotyl, haloxyfop-methyl, haloxyfop-methyl [(R)-Isomer),
wobei die vorgenannten Verbindungen B21) aus Pesticide Manual, 10. Aufl. 1994, S.551-554 bekannt sind;

B22) Cyhalofop-butyl = DEH 112

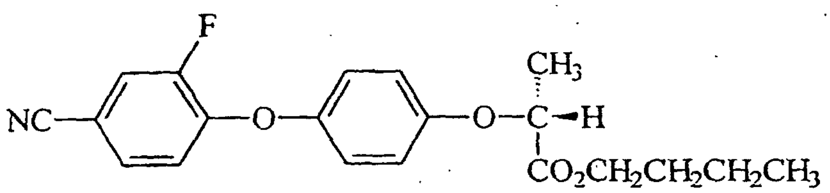

butyl(R)-2-[4-(4-cyano-2-fluorophenoxy)phenoxy]propionate,
wobei die vorgenannte Verbindung B22) aus Pesticide Manual, 11. Aufl. 1997, S.297-298 bekannt ist,

B23) JC-940

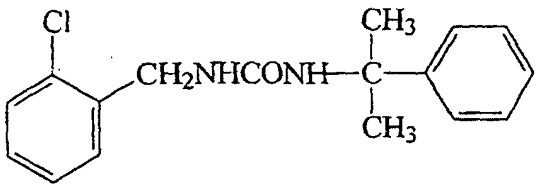

3-(2-Chlorphenylmethyl)-1-(1-methyl-1-phenylethyl)harnstoff
Japanische Offenlegungsschrift J-6 0087 254;

B24) Dithiopyr

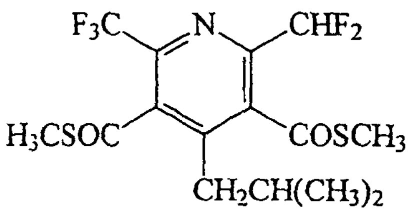

*S,S'*-Dimethyl-2-(difluoromethyl)-4-(2-methylpropyl)-6-(trifluoromethyl)-3,5-pyridindicarbothioat
Pesticide Manual, 10. Aufl. 1994, S.375-376;

B25) Bromobutide

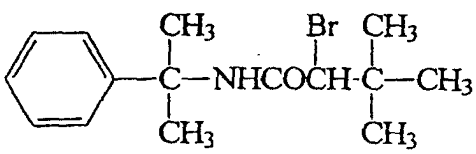

2-Brom-3,3-dimethyl-*N*-(1-methyl-1-phenylethyl)butyramid
Pesticide Manual, 10. Aufl. 1994, S.117-118;

B26) Cinmethylin

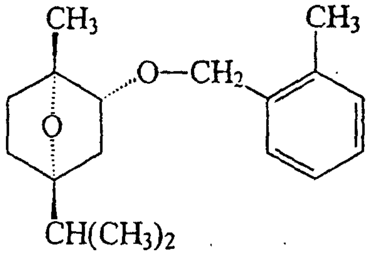

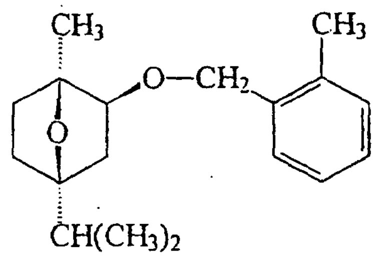

Exo-(±)-1-methyl-4-(1-methylethyl)-2-[(2-methylphenyl)methoxy]-7-oxabicyclo[2.2.1]heptan
Pesticide Manual, 10. Aufl. 1994, S.210-211;
und

B27) CH-900

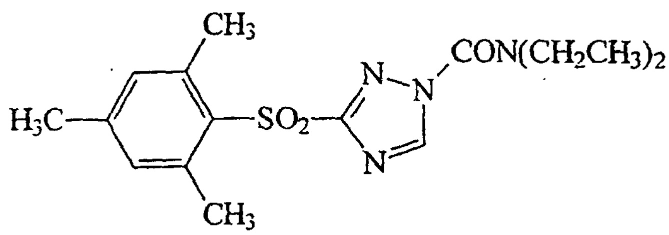

*N*,*N*-Diethyl-3-mesitylsulfonyl-1*H*-,1, 2, 4-triazol-1-carboxamid
Pesticide Manual, 10. Aufl. 1994, S.162-163;

besteht.

Bei den vorgenannten Verbindungen B1) bis B8) handelt es sich um Anilide, die teilweise der Untergruppe der Chloracetanilide (Verbindungen B1) bis B4)) zuzuordnen sind. Die Verbindungen B1) bis B8) der Untergruppe Ba) sind vorwiegend gegen Schadgräser wirksam.

Im einzelnen richten sich die genannten Herbizide B1) bis B8) gegen Gräser, z. B. annuelle Gräser. Daneben deckt Butachlor auch noch breitblättrige Unkräuter in Reis ab, ebenso wie Butenachlor, das zusätzlich gegen aquatische Unkräuter in Reis angewendet werden kann; Thenylchlor bekämpft insbesondere Echinochloa spp; während Pretilachlor gegen vielerlei Saaten wirksam ist;

Mefenacet wirkt besonders gegen Echinochloa crus galli; Naproanilide, Propanil und Etobenzanid haben als Wirkungsspektrum vor allem : Breitblättrige und grassartige Unkräuter wie Amaranthus retroflexus, Digitaria spp., Echinochloa spp., Panicum spp., Setaria spp.; Bay Foe 5043 wirkt gegen ein großes Gräserspektrum.

Bei den Verbindungen B9) bis B12) handelt es sich um Thiocarbamate, deren Wirkung sich am besten bei der Bekämpfung von Gräsern in Reis, vorwiegend von Echinochloa crus galli in Reis (B9)), breitblättrigen und grasartigen Unkräutern in Reis, insb. Echinochloa spp. (B10)), monokotylen und annuellen breitblättrigen Unkräutern in Reis, insb. Echinochloa, Leptochloa, Cyperus spp (B11)), annuellen und perennierenden Gräsern in Reis, insb. Echinochloa oryzicol, Cyperus difformis, Monochoria vaginalis, Digitaria ciliaris, Setaria viridis (B12)) entfaltet.

B13) ist ein Vertreter der Chinolincarbonsäuren und wird vorzugsweise zur Bekämpfung von grasartigen Unkräutern (Echinochloa spp., Aeschynomene spp., Sesbania spp.) und anderer Unkräuter in Reis eingesetzt.

B14) sowie B14a) sind Cyclohexandione, die im Rahmen der erfindungsgemäßen Kombinationen überraschenderweise auch in Reis gegen breitblättrige Unkräuter und Gräser eingesetzt werden können.

B15) und B16) gehören im weiteren Sinne ebenfalls zur Gruppe der Cyclohexandione. Insbesondere handelt es sich um Cyclohexandionoxime, welche vorzugsweise zur Kontrolle von annuellen und perennierenden Gräsern im Nachauflaufverfahren Verwendung finden. Dabei ist gerade für B15) und B16) besonders erstaunlich, daß in Kombination mit Typ A)-Verbindung eine hervorragende Toleranz in Reisanwendungen erreicht wird, welche bei alleiniger Ausbringung von B15) und B16) im allgemeinen nicht gegeben ist.

Auch die.Tetrazole gehören zur Gruppe Ba) und wirken besonders gegen Gräser in Reis. Ein wichtiger Vertreter mit der genannten chemischen Struktur ist die Verbindung B17).

Eine weitere interessante Untergruppe der Untergruppe Ba) sind die Organophosphor-Verbindungen. B18) wird vorzugsweise bei der Bekämpfung von annuellen Gräsern und Saaten in Reis verwendet. B19) verfügt über ein vergleichbares Wirkungsspektrum, nämlich: Annuelle Gräser und Saaten in Reis.

Weiters gehört zur Gruppe Ba) die Familie der herbizid wirksamen 2-(4-Aryloxyphenoxy)propionsäuren. Ein wichtiger Vertreter ist B20) mit bevorzugtem Einsatzgebiet gegen Gräser in Reis. Auch B21) wird in den Kombinationen der Erfindung üblicherweise zur Kontrolle von annuellen und perennierenden Gräser eingesetzt. Besonders günstig kann sich im erfindungsgemäßen Zusammenhang auch die gemeinsame Anwendung von B20) und/oder B21) mit einer auch als Safener wirksamen Verbindung, wie etwa B22) auswirken. Von besonders großem Interesse sind erfindungsgemäße Kombinationen mit B22). B22) wirkt als Acetyl-CoA-Carboxylase-Hemmstoff vorwiegend gegen Gräser und ist aufgrund des unterschiedlichen Metabolismus von Reis und Unkraut besonders gut verträglich in Reisanwendungen.

Weiters umfaßt die Gruppe Ba) die Familie der herbizid wirksamen Harnstoffe. Ein wichtiger Vertreter dieser chemischen Familie ist die Verbindung B23). Diese wirkt vorzugsweise gegen annuelle und perennierende Gräser.

Weiterhin von Interesse sind die Pyridindicarbothioate, beispielsweise die Verbindung B23) mit hauptsächlicher Wirkung gegen annuelle Gräser und breitblättrige Unkräuter in Reis.

Noch eine chemische Untergruppe der Gruppe Ba) betrifft Butyramide; besonders hervorzuheben ist die Verbindung B25). Kombinationen mit B25) bewähren sich hervorragend bei der Kontrolle von Riedgräsern (sedges), insb. Echinochloa spp., Eleocharis acicularis und Scirpus juncoides und einigen breitblättrigen Unkräutern in paddyfield-Reis und upland-Reis.

Auch zur Gruppe Ba) ist die chemische Gruppierung der Menthyl-Benzyl-Ether zu rechnen. Ein wichtiges Element dieser Gruppe ist die Verbindung B26). Sie wirkt hervorragend gegen Unkräuter in Reis wie Echinochloa spp., Monochoria vaginalis, Cyperus difformis;

Auch Triazole haben sich als Glieder der Untergruppe Ba) zusammen mit Verbindungen vom A-Typ ganz ausgezeichnet zur Unterdrückung unerwünschten Pflanzenwuchses, vor allem von annuellen und perennierenden Unkräuter in Paddy-Reis, wie Echinochloa oryzicola und Cyperus difformis, bewährt.

Obwohl die Vertreter der Gruppe Ba) also durchaus relativ unterschiedliche chemische Strukturen aufweisen, bilden sie dennoch aufgrund ihres Wirkungsspektrums sowie der Tatsache, daß sie Synergisten für die Verbindungen der Formel I darstellen, eine zusammengehörige Untergruppe.

Weitere zur Erfindung gehörende Mittel sind solche, die Herbizide vom Typ B aus der Untergruppe Bb) enthalten. Hierbei finden besonders vorteilhaft ein oder mehrere selektiv in Reis vorwiegend gegen Dikotyle und teilweise auch gegen Cyperaceen wirksame Herbizide aus derjenigen Gruppe Anwendung, welche Herbizide vom Typ der Aryloxyalkylcarbonsäuren und Dicamba, Nitrodiphenylether, Azole und Pyrazole, Sulfonylharnstoffe, Benzonitrile, Pyridincarbonsäuren und Triazole umfaßt.

Von besonderem Interesse sind hierbei herbizide Mittel, die als Verbindung vom Typ B ein oder mehrere selektiv in Reis gegen Dikotyle und teilweise auch Cyperaceen wirksame Verbindungen enthalten, welche aus der Gruppe ausgewählt sind, die aus den Herbiziden

B28) 2,4-D

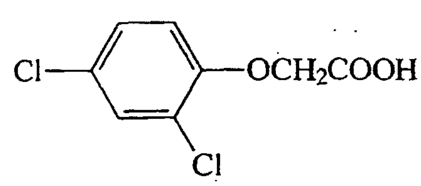

(2,9-Dichlorphenoxy)essigsäure häufig eingesetzte Formen: 2,4-D-butotyl, 2,4-D-butyl, 2,4-D-dimethylammonium, 2,4-D-diolamin, 2,4-D-isooctyl, 2,4-D-isopropyl, 2,4-D-trolamin,
Pesticide Manual, 10. Aufl. 1994, S.271-273,

B29) MCPA

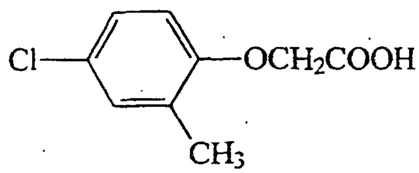

(4-Chlor-2-methylphenoxy)essigsäure,
vorwiegend eingesetzte Formen sind u. a. MCPA-butotyl, MCPA-dimethylammonium, MCPA-isoctyl, MCPA-Kalium, MCPA-Natrium,
Pesticide Manual, 10. Aufl. 1994, S.638-640,

B30) Mecoprop, Mecoprop-P

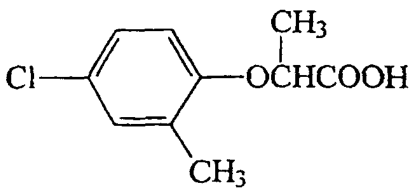 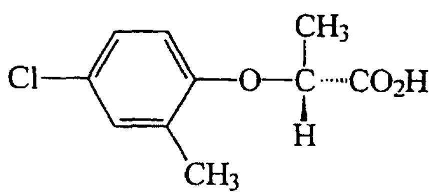

(*RS*)-2-(4-Chlor-*o*-tolyloxy)propionsäure
(*R*)-2-(4-Chlor-*o*-tolyloxy)propionsäure
Pesticide Manual, 10. Aufl. 1994, S.646-647 und 647-648,

B31) Dicamba

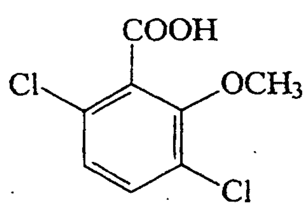

3,6-Dichlor-*o*-anissäure
angewendet u.a. als Dicamba-dimethylammonium, Dicamba-Kalium, Dicamba-Natrium, Dicamba-trolamin,
Pesticide Manual, 10. Aufl. 1994, S.298-300,

B32) Acifluorfen

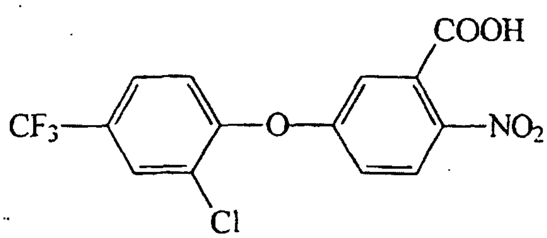

5-(2-Chlor-α,α,α-trifluor-*p*-tolyloxy)-2-nitrobenzoesäure,
auch verwendet als Acifluorfen-Natrium,
Pesticide Manual, 10. Aufl. 1994, S.12-13,

B33) Azolen der allgemeinen Formel III

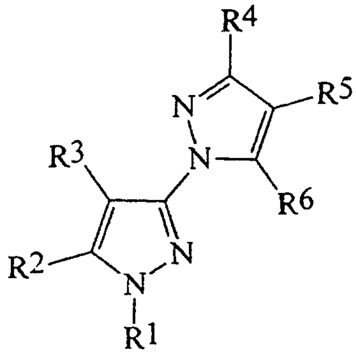

(III),

,

worin

| | |
|---|---|
| $R^1$ | $(C_1-C_4)$-Alkyl ist, |
| $R^2$ | $(C_1-C_4)$-Alkyl, $(C_1-C_4)$-Alkylthio oder $(C_1-C_4)$-Alkoxy ist, von denen jeder Rest durch ein oder mehrere Halogenatome substituiert sein kann, oder |
| $R^1$ und $R^2$ | zusammen die Gruppe $(CH_2)_m$ bilden mit m = 3 oder 4, |
| $R^3$ | Wasserstoff oder Halogen ist, |
| $R^4$ | Wasserstoff oder $(C_1-C_4)$-Alkyl ist, |
| $R^5$ | Wasserstoff, Nitro, Cyano oder eine der Gruppen $-COOR^7$, $-C(=X)NR^7R^8$ oder $-C(=X)R^{10}$ ist, |
| $R^6$ | Wasserstoff, Halogen, Cyano, $(C_1-C_4)$-Alkyl, $(C_1-C_4)$-Alkylthio oder $-NR^{11}R^{12}$ ist, |
| $R^7$ und $R^8$ | gleich oder verschieden Wasserstoff oder $(C_1-C_4)$-Alkyl sind, oder |
| $R^7$ und $R^8$ | zusammen mit dem Stickstoff, an den sie gebunden sind einen gesättigten 5 oder 6 gliedrigen carbozyklischen Ring bilden, |
| $R^{10}$ | Wasserstoff oder $(C_1-C_4)$-Alkyl ist, wobei letztere gegebenenfalls mit einem oder mehreren Halogenatomen substituiert sein können, und |
| $R^{11}$ u. $R^{12}$ | gleich oder verschieden Wasserstoff, $(C_1-C_4)$-Alkyl oder $(C_1-C_4)$-Alkoxycarbonyl sind, wobei |
| $R^{11}$ u. $R^{12}$ | zusammen mit dem Stickstoff, an den sie gebunden sind, einen 3, 5 oder 6 gliedrigen carbozyklischen oder aromatischen Ring bilden können, in welchem ein C-Atom optionell durch ein O-Atom ersetzt sein kann; |

wobei besonders bevorzugt sind

B33a) eine Verbindung der allgemeinen Formel III, worin $R^1$ und $R^2$ zusammen die Gruppe $(CH_2)_m$ bilden mit m = 4, $R^3$ Chlor ist, R4 Wasserstoff bedeutet, $R^5$ Cyano ist, $R^6$ die Bedeutung $-NR^{11}R^{12}$ annimmt, $R^{11}$ für Wasserstoff und $R^{12}$ für Isopropyl stehen,

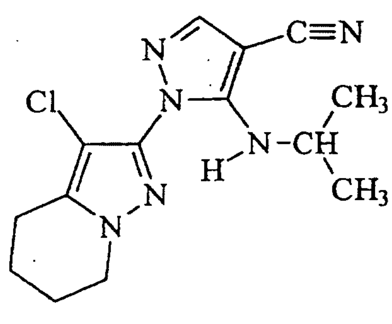

,

und

B33b) eine Verbindung der allgemeinen Formel III, worin $R^1$ und $R^2$ zusammen die Gruppe $(CH_2)_m$ bilden mit m = 4, $R^3$ Chlor ist, R4 Wasserstoff bedeutet, $R^5$ Cyano ist, $R^6$ die Bedeutung $-NR^{11}R^{12}$ annimmt, $R^{11}$ Methyl und $R^{12}$ $-CH_2-C{\equiv}CH$ ist,

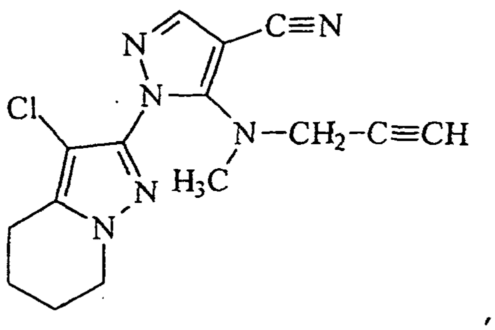

wobei die Azole der allgemeinen Formel II u. a. aus der WO 94/08999 bekannt sind,

B34) Chlorimuron

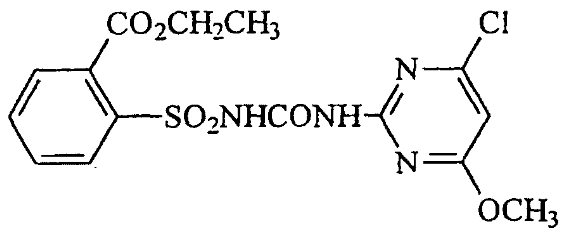

2-(4-chloro-6-methoxypyrimidin-2-ylcarbamoylsulfamoyl)benzoic acid angewendet u.a. als Chlorimuron-ethyl, i.e. der Ethylester des Chlorimurons,
Pesticide Manual, 11. Aufl. 1997, S.217-218,

B35) Triasulfuron

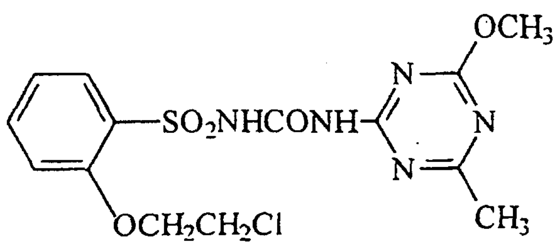

1-[2-(2-chloroethoxy)phenylsulfonyl)-3-(9-methoxy-6-methyl-1,3,5-triazin-2-yl)urea
Pesticide Manual, 11. Aufl. 1997, S.1222-1223,

B36) Ioxynil

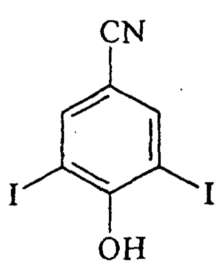

4-hydroxy-3,5-di-iodobenzonitrile
angewendet u.a. als Ioxynil, Ioxynil-octanoat, Ioxynil-Natrium
Pesticide Manual, 11. Aufl. 1997, S.718-721,

B37) Picloram

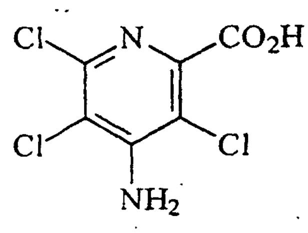

4-Amino-3,5,6-trichlorpyridin-2-carbonsäure
angewendet u.a. als Picloram, Picloram-Kalium, Mischung von Picloram und Picloram-Kalium,
Pesticide Manual, 11. Aufl. 1997, S.977-979,
und

B38) Carfentrazon

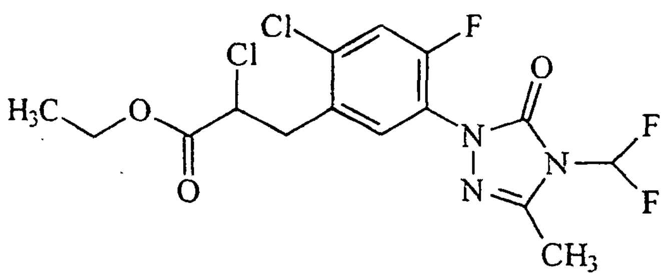

ethyl (RS)-2-chloro-3-(2-chloro-5-(4-difluoromethyl-4,5-dihydro-3-methyl-5-oxo-1H-1,2,4-triazol-1-yl)-4-fluorophenyl]propionate
angewendet u.a. als Carfentrazone-ethyl (wie dargestellt) oder auch als Säure,
Pesticide Manual, 11. Aufl. 1997, S.191-193,

besteht.

Von den Typ B Verbindungen mit Selektivität in Reis und Wirksamkeit gegen Dikotyle und teilweise gegen Cyperaceen (Untergruppe Bb) mit den herbiziden Wirkstoffen B28) - B38) sowie deren gebräuchlichen Abbkömmlingen) eignen sich die Kombinationspartner.B28) bis B33) jeweils allein oder auch in Kombination von mehreren außerordentlich gut als Bestandteil eines erfindungsgemäßen herbiziden Mittels.

So haben unter anderem die Aryloxyalkylcarbonsäuren B28) bis B31) eine sehr gute Verträglichkeit ebenso wie sie eine hervorragende Abdeckung von Lücken in dem zu bekämpfenden Unkrautspektrum zur Verfügung stellen können.

Hervorzuheben sind desweiteren auch die Verbindungen B34) und B35), die als Sulfonylharnstoffverbindungen außerordentlich wirksam bei der Bekämpfung von durch Verbindungen des Typs A schwer zu bekämpfenden Dikotylen/Cyperaceen sind.

Eine dritte Untergruppe von Verbindungen, deren Zumischung zu Verbindungen des Typs A die Erzielung von herbiziden Mitteln mit herausragenden Eigenschaften gestattet, ist die Untergruppe Bc) der selektiv in Reis vornehmlich gegen Cyperaceen wirksamen Herbizide. Typ-B-Substanzen mit diesem Wirkungsprofil finden sich bevorzugt in den chemischen Substanzklassen der Harnstoffe und Benzofuranyl-Verbindungen oder liegen in Form des Triclopyr oder Bentanzon vor.

Insofern kennzeichnet sich eine weitere vorteilhafte Ausführungsform der Erfindung dadurch, daß sie als Herbizid vom Typ B

B39) Bentazon

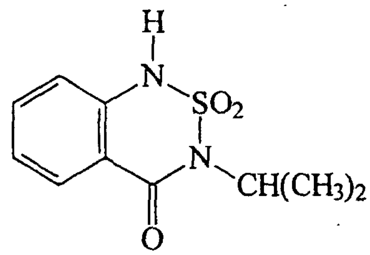

3-Isopropyl-1*H*-2,1,3-benzothiadiazin-4(3*H*)-on-2,2-dioxid
Pesticide Manual, 10. Aufl. 1994, S.90-91,
B40) Triclopyr

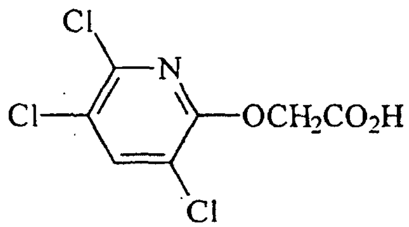

[(3,5,6-trichloro-2-pyridinyl)oxy]essigsäure,
bevorzugt als Triclopyr, Triclopyr-butotyl, Triclopyrtriethylammonium,
Pesticide Manual, 10. Aufl. 1994, S.1015-1017,
B41) Benfuresate

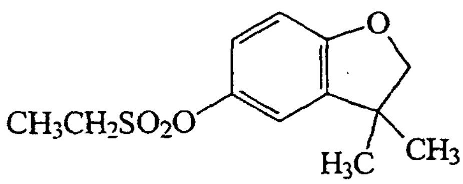

2,3-Dihydro-3,3-dimethylbenzofuran-5-yl ethansulfonat
Pesticide Manual, 10. Aufl. 1994, S.81-82
und/oder
B42) Daimuron

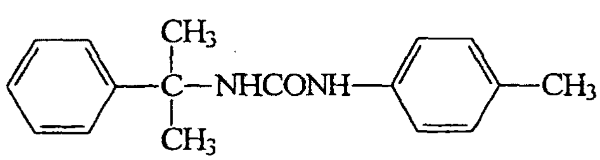

*N*-(4-Methylphenyl)-*N*'-(1-methyl-1-phenylethyl)harnstoff
Pesticide Manual, 10. Aufl. 1994, S.275-276

enthält.

Dabei handelt es sich bei allen Verbindungen B39) bis B42) um in Reis selektive Herbizide, die im Hinblick auf das Spektrum der zu bekämpfenden Schadpflanzen dem geschilderten Anforderungsprofil entsprechen. Im besonderen ist B41) eine Benzofuranyl-Verbindung mit betonter Wirkung gegen Gräser und breitblättrige Unkräuter in Reis, während es sich bei B42) um einen Harnstoff mit besonders ausgeprägter Wirkung gegen Cyperaceen und annuelle Gräser in Reis aber auch gegen Dikotyle handelt.

Vorzüglich wirkende Mittel werden erhalten, wenn als Kombinationspartner vom Typ Bc) B39) und/oder B40)

im erfindungsgemäßen Mittel enthalten sind, wobei auch besonders hartnäckige Schadpflanzen und auch gegen herkömmliche Mittel resistente unerwünschte Pflanzen hervorragend kontrollierbar sind.

Eine vierte Untergruppe von Verbindungen, deren Zumischung zu Verbindungen des Typs A die Erzielung von herbiziden Mitteln mit herausragenden Eigenschaften gestattet, ist die Untergruppe Bd) der selektiv in Reis gegen Gräser und Dikotyle/Cyperaceen wirksamen Herbizide. Typ-B-Substanzen mit diesem Wirkungsprofil finden sich bevorzugt in den chemischen Substanzklassen der 2,6-Dinitroaniline, Pyrazole, Pyrimidinyloxobenzoesäuren, Oxadiazole, Anilide, Diphenylether, Alkylcarbonsäuren, der Sulfonylharnstoffe, die von den in Formel I angegebenen Sulfonylharnstoffen verschieden sind, der 1,3,5-Triazine, Pyridine sowie überraschenderweise auch in der Gruppe der Organophosphorverbindungen.

In weiterhin bevorzugter Ausführungsform der Erfindung enthalten die herbizid wirksamen Kombinationen als Herbizide vom Typ B ein oder mehrere selektiv in Reis vorwiegend gegen Gräser und Dikotyle/Cyperaceen wirksame Herbizide aus der Gruppe, die aus

B43) Pendimethalin

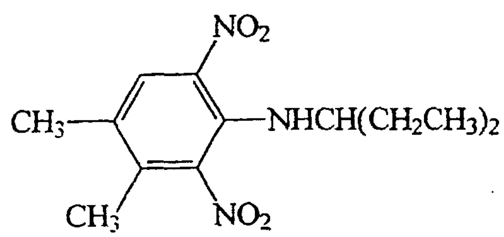

*N*-(1-Ethylpropyl)-2,6-dinitro-3,4-xylidin
Pesticide Manual, 10. Aufl. 1994, S.779-780

B44) Clomazon

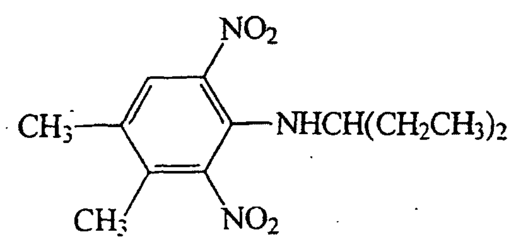

2-[(2-Chlorphenyl)-9,4-dimethyl-3-isoxazolidinon;
Pesticide Manual, 10. Aufl. 1994, S.220-221

B45) Benzofenap

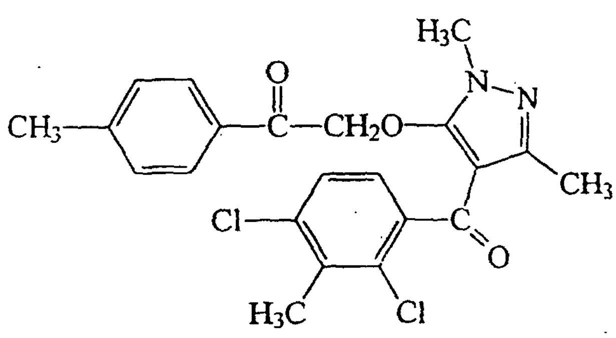

2-[[4-(2,4-Dichloro-3-methylbenzoyl]-1,3-dimethyl-1*H*pyrazol-5-yl]oxy]-1-(4-methylphenyl)acetophenon
Pesticide Manual, 10. Aufl. 1994, S.92-93,

B46) Pyrazolynate,

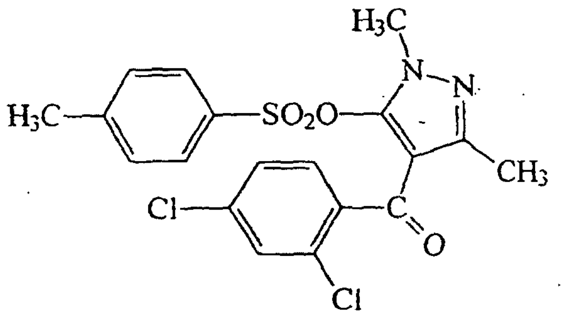

(2,4-Dichlophenyl)(1,3-dimethyl-5-[[(4-methylphenyl)sulfonyl]oxy]-1*H*-pyrazol-4-yl]methanon
Pesticide Manual, 10. Aufl. 1994, S.870-871,

B47) Pyrazoxyfen,

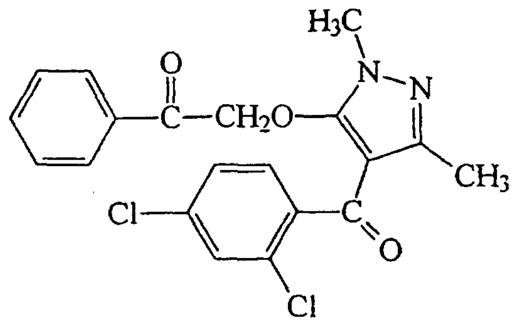

2-[[4-(2,4-Dichlorobenzoyl)-1,3-dimethyl-1*H*-pyrazol-5-yl]oxy]-1-phenylethanon
Pesticide Manual, 10. Aufl. 1994, S.874-875,

B48) KIH 2023

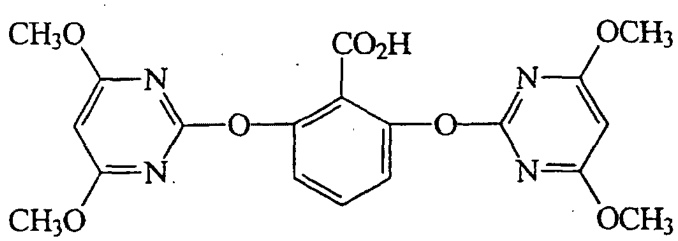

Natrium 2,6-bis[(4,6-dimethoxypyrimidin-2-yl)oxy]benzoat,
bevorzugt ist die Form als Natriumsalz
Pesticide Manual, 10. Aufl. 1994, S.620,

B49) KIH 6127 = Pyriminobac-methyl

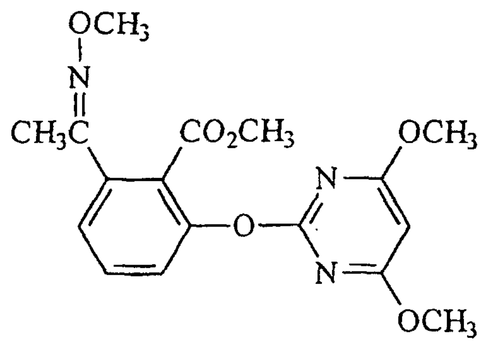

2-(4,6-Dimethoxy-2-pyrimidinyloxy)-6-(1-methoxyiminoethyl)benzoesäuremethylester, auch als Säure oder Natriumsalz
Pesticide Manual, 11. Aufl. 1997, S.1071-1072,

B50) Oxadiazon

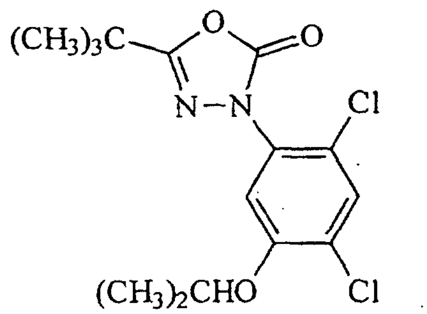

5-*tert*-Butyl-3-(2,4-dichloro-5-isopropoxyphenyl)-1,3,4-oxadiazol-2(3*H*)-one,
Pesticide Manual, 11. Aufl. 1997, S.905-907,

B51) Oxadiargyl

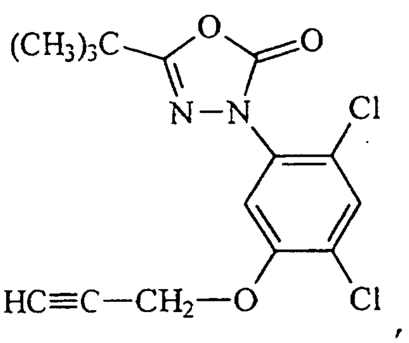

5-*tert*-Butyl-3-[2,4-dichloro-5-(prop-2-ynyloxy)phenyl]-1,3,4-oxadiazol-2(3*H*)-one,
Pesticide Manual, 11. Aufl. 1997, S.904-905,

B52) Acetochlor

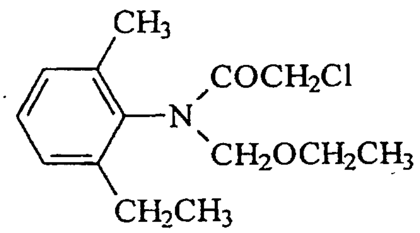

2-Chloro-N-ethoxymethyl-6'-ethylaceto-o-toluidid, Pesticide Manual, 11. Aufl. 1997, S.10-12,

B53) Metolachlor

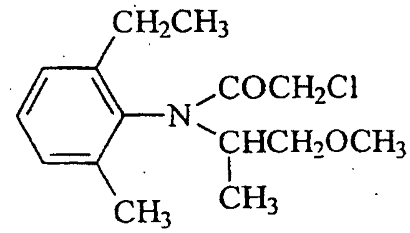

2-Chloro-6'-ethyl-N-(2-methoxy-1-methylethyl)aceto-otoluidid, Pesticide Manual, 11. Aufl. 1997, S.833-834,

B54) Metosulam

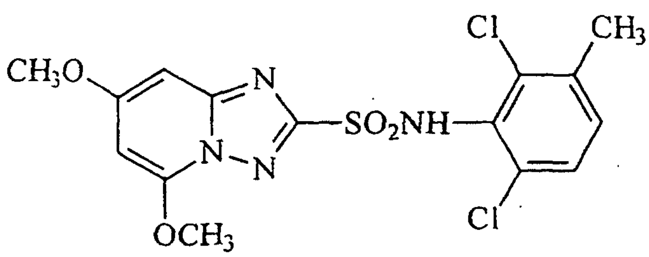

2',6'-Dichloro-5,7-dimethoxy-3'methyl-[1,2,4]triazolo[1,5-a]pyrimidin-2-sulfoanilid Pesticide Manual, 11. Aufl. 1997, S.836-838,

B55) Oxyfluorfen

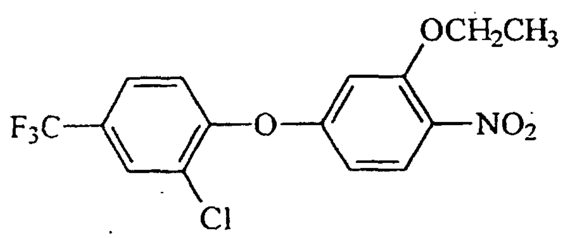

2-Chloro-α,α,α-trifluoro-p-tolyl 3-ethoxy-4-nitrophenylether, Pesticide Manual, 11. Aufl. 1997, S.919-921, und

B56) Dalapon

$CH_3CCl_2CO_2H$

2,2-Dichlorpropionsäure,
bevorzugt auch in seiner Anwendungsform als Natriumsalz, nämlich als Dalapon-Natrium
Pesticide Manual, 11. Aufl. 1997, S.331-333;

besteht.

Von besonderer Bedeutung in der Gruppe Bd) sind unter anderem die 2,6-Dinitroaniline wie Pendimethalin (B43)) und Clomazon (B44)).

Bemerkenswert hierbei sind aber auch die Pyrazole (B45)-B47)) sowie die Pyrimidinyloxobenzoesäuren, beispielsweise B48) oder B49).

Die Pyrazole B45) bis B47) ermöglichen Kombinationen mit einem hervorragenden Wirkungsspektrum. B45) betont die Kontrolle von perennierenden bleitblättrigen Unkräutern in Reis, Kombinationen mit B46) haben sich insbesondere gegen Gräser und Saaten in Reis wie Potamogeton distinctus, Sagittaria trifolium, Alisma canaliculatum usw bewährt und Kombinationen, die neben wenigstens einer Typ-A-Verbindung, die Verbindung B47) aufweisen, erlauben eine nahezu vollständige Unterdrückung annueller und perennierender Unkräuter in Reis, sowohl auf der Cyperaceenseite wie auch bei den Dikotylen oder Gräsern.

Besonders zweckmäßig sind auch Kombinationen mit B48) bei der Bekämpfung von Echinochloa spp. in "direct-seeded" Reis, während sich die Wirksamkeit von Kombinationen, welche B49) als einen Bestandteil aufweisen, unter anderem besonders günstig gegen Echinochloa spp. in Paddy Reis bemerkbar macht.

Von speziellem Interesse sind auch Kombinationen aus der Gruppe Bd) mit Oxadiazolen, Aniliden, Diphenylethern oder Alkylcarbonsäuren.

Die Kombinationen mit Oxadiazolen, wie etwa B50) oder B51) haben sich im Einsatz vor allem gegen annuelle breitblättrige Unkräuter und Ungräser im Vorauflaufverfahren und von ebensolchen Unkräutern im Nachauflaufverfahren im Rahmen der Erfindung bestens bewährt. Speziell Kombinationen mit Oxadiargyl (B51)) kontrollieren hervorragend Amaranthus, Bidens, Chenopodium, Malva, Monochoria, Polygonum, Portulaca, Potamogeton, Raphanus, Solanum, Sonchus und Rotala auf der Seite der breitblättrigen Unkräuter und Echinochloa, Leptochloa, Brachiaria, Cenchrus, Digitaria, Eleusine, Panicum und wilden Reis auf der Seite der Ungräser, ebenso wie annuelle Saaten ausgezeichnet bekämpft werden, und zwar sowohl im Vorauflauf als auch fallweise im Nachauflaufverfahren.

Auch Anilide, wie die Chloracetanilide B52) oder B53) sowie die Sulfoanilide, beispielweise B54) sind als Kombinationspartner für die Typ-A-verbindungen hervorzuheben. Die Anilide zeigen hierbei ergänzende Wirkung auf Seiten der annuellen Gräser und breitblättrigen Unkräuter, vor allem gegen Gallium aparine, Stellaria media, alle Arten von Brassicaceae sowie Chenopodium spp., Amaranthus retroflexus, Solanum nigrum und Polygonum persicaria, jeweils insbesondere auch im Nachauflaufverfahren.'

Schließlich sind auch Diphenylether oder Alkylcarbonsäuren interessante Partner für die Typ-A-Sulfonylharnstoffe. Der Diphenylether B55) trägt zur Schließung von Wirkungslücken bei, die auf Seiten der Gräser und breitblättrigen Unkräuter vorhanden sein können. B56) wirkt verstärkend vor allem bei der Bekämpfung von halophytischen und semiaquatischen Ungräsern.

Besonders vorteilhafte Mischungen ergeben sich im Rahmen der Erfindung, wenn als Typ-B-Verbindungen die experimentell belegten Kombinationspartner aus der Gruppe Bd) in der erfindungsgemäßen Kombination enthalten sind.

In weiterhin bevorzugter Ausführungsform der Erfindung enthalten die herbizid wirksamen Kombinationen als Herbizide vom Typ B ein oder mehrere selektiv in Reis gegen Gräser und Dikotyle und Cyperaceen wirksame Herbizide aus der Gruppe, die aus

B57) Metsulfuron

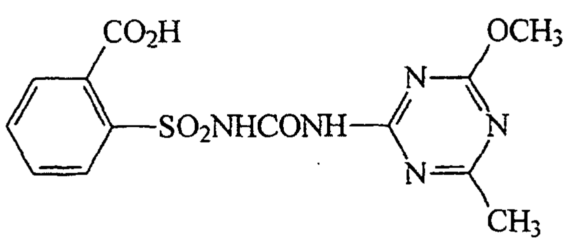

2-(4-Methoxy-6-methyl-1,3,5-triazin-2-ylcarbamoylsulfamoyl)benzoesäure,

üblicherweise eingesetzt als Metsulfuron-methyl,
Pesticide Manual, 10. Aufl. 1994, S.701-702,

B58) Bensulfuron

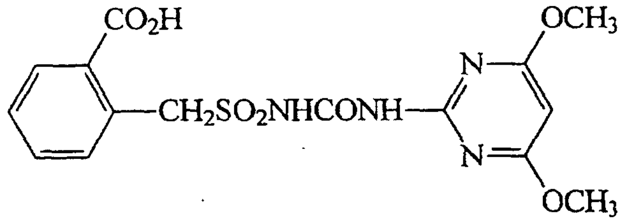

2-[[[[[(4,6-Dimethoxy-2-pyrimidinyl)amino]carbonyl]= amino)sulfonyl]methyl]benzoesäure,
umfassend insbesondere die Anwendung als Bensulfuron-Methyl, d.h. als Methylester des Bensulfurons,
wobei die Verbindungen B58) bekannt sind u.a. aus
Pesticide Manual, 10. Aufl. 1994, S.85-87,

B59) Pyrazosulfuron

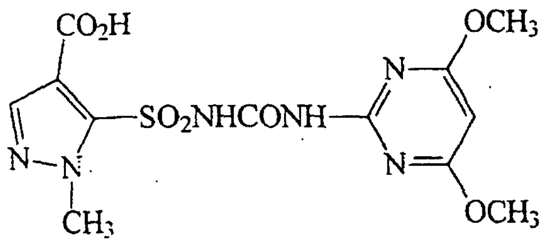

5-[[[[(4,6-Dimethoxy-2-pyrimidinyl)amino]carbonyl]= amino]sulfonyl]1-methyl]-1-*H*-pyrazol-4-carbonsäure
umfassend u.a. als wichtigste Anwendungsform den Ethylester, das Pyrazosulfuron-ethyl
wobei die Verbindungen B59) bekannt sind u.a. aus
Pesticide Manual, 10. Aufl. 1994, S.873-874;

B60) Cinosulfuron

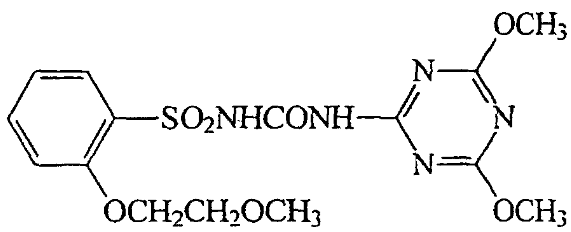

*N*-[[(4,6-Dimethoxy-1,3,5-triazin-2-yl)amino]carbonyl]-2-(2-methoxyethoxy)benzolsulfonamid,
wobei die Verbindung B60) bekannt ist u.a. aus
Pesticide Manual, 10. Aufl. 1994, S.211-212,

B61) Imazosulfuron

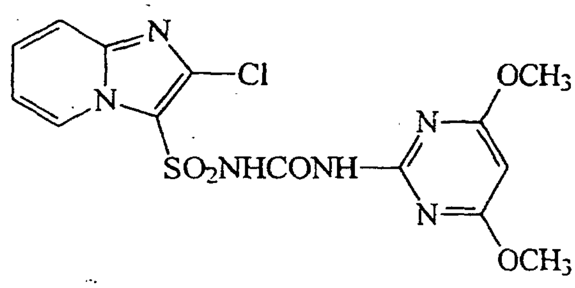

2-Chlor-*N*[[(4,6-dimethoxy-2-pyrimidinyl)amino]= carbonyl]imidazo[1,2-a]pyridn-3-sulfonamid, wobei die Verbindungen B61) bekannt ist u.a. aus Pesticide Manual, 10. Aufl. 1994, S.589-599,

B62) AC 322,140 oder Cyclosulfamuron

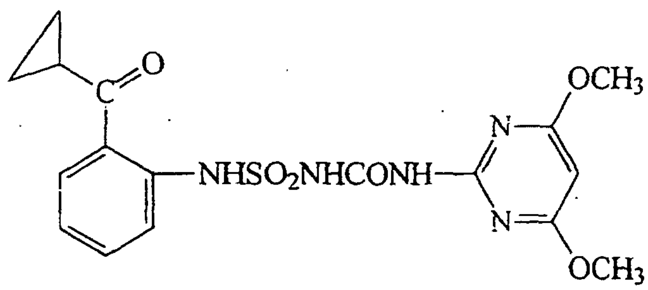

*N*-[[[2-(cyclopropylcarbonyl)phenyl]amino]sulfonyl]-*N*[1]-(4,6-dimethoxypyrimidin-2-yl)harnstoff, wobei die Verbindungen B62) bekannt ist u.a. aus Pesticide Manual, 10. Aufl. 1994, S.8-9,

B63)Phenoxysulfonylharnstoffen der allgemeinen Formel IV

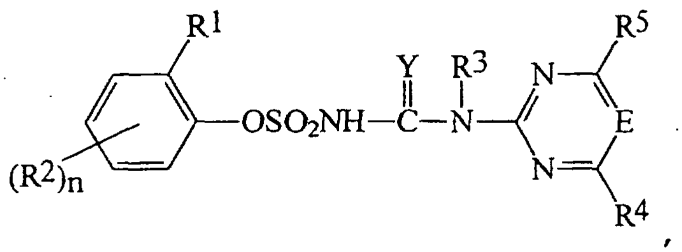

(IV),

worin

a) $R^1$ Ethoxy, Propoxy oder Isopropoxy und
$R^2$ Halogen, $NO_2$, $CF_3$, CN, $(C_1-C_4)$-Alkyl, $(C_1-C_4)$-Alkoxy, $(C_1-C_4)$-Alkylthio oder $((C_1-C_4)$-Alkoxy)-carbonyl und
n 0, 1, 2 oder 3 oder
b) $R^1$ gegebenenfalls ungesättigtes $(C_1-C_8)$-Alkoxy, das substituiert ist durch Halogen, gegebenenfalls ungesättigtes $(C_1-C_6)$-Alkoxy, einen Rest der Formel $((C_1-C_6)$-Alkyl)-S-, $((C_1-C_6)$-Alkyl)-SO-, $((C_1-C_6)$-Alkyl) $-SO_2$-, $((C_1-C_6)$-Alkyl)-O-CO-, $NO_2$ CN oder Phenyl; ferner $(C_2-C_8)$-Alkenyloxy oder -Alkinyloxy und
$R^2$ gesättigtes oder ungesättigtes $(C_1-C_8)$-Alkyl, Phenyl, Phenoxy, $(C_1-C_4)$-Alkoxy, $(C_1-C_4)$-Alkylthio, $((C_2-C_4)$ -Alkoxy)-carbonyl, wobei alle vorstehenden Reste $R^2$ durch Halogen, $(C_1-C_4)$-Alkoxy oder $(C_1-C_4)$-Alkylthio substituiert sein können, oder Halogen, $NO_2$, $(C_1-C_4)$-Alkylsulfonyl oder -sulfinyl und
n 0, 1, 2 oder 3 oder
c) $R^2$ $(C_1-C_8)$-Alkoxy und

$R^2$ ($C_2$-$C_8$)-Alkenyl oder -Alkinyl, Phenyl, Phenoxy,
wobei die genannten Reste für $R^2$ unsubstituiert oder durch Halogen, ($C_1$-$C_4$)-Alkoxy oder ($C_1$-$C_4$)-Alkylthio substituiert sind, oder ($C_1$-$C_4$)-Alkylsulfonyl oder - sulfinyl und
n 1, 2 oder 3 oder
d) $R^1$ jeweils in 2-Stellung am Phenylrest Halogen, Methoxy, Ethyl oder Propyl,
$R^2$ (($C_1$-$C_4$)-Alkoxy)-carbonyl in 6-Stellung am Phenylrest und
n = 1

sowie in allen Fällen a) bis d)

| | |
|---|---|
| $R^3$ | Wasserstoff, gesättigtes oder ungesättigtes ($C_1$-$C_8$)-Alkyl oder ($C_1$-$C_4$)-Alkoxy, |
| $R^4$, $R^5$ | unabhängig voneinander Wasserstoff, Halogen, ($C_{1.}$-$C_4$)-Alkyl, ($C_1$-$C_4$)-Alkoxy, ($C_1$-$C_4$)-Alkylthio ist, wobei die letztgenannten drei Reste unsubstituiert oder durch Halogen, ($C_1$-$C_4$)-Alkoxy oder ($C_1$-$C_4$)-Alkylthio substituiert sind, |
| Y | O oder 5 und |
| E | CH oder N |

bedeuten,
wobei die Sulfonylharnstoffe der allgemeinen Formel IV u. a. aus DE-A-38 16 704.2 (EP-A-0 342 569), DE-A-38 16 703.4 (EP-A-0 342 568) und DE-A-39 09 053.1 (EP-A-0 388 771) bekannt sind, und wobei besonders bevorzugt unter den Verbindungen der allgemeinen Formel IV

B63a) Ethoxysulfuron (HOE 095404)

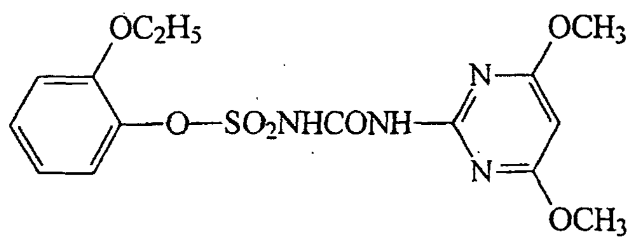

ist,

B64) Azimsulfuron (DPX-A8947),

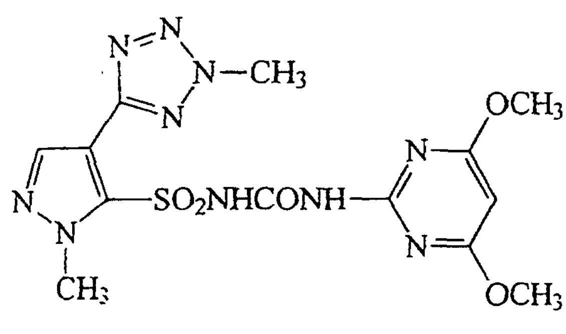

vorgestellt auf der Brighton Crop Protection Conference Weeds 1995,
und

B65) Nicosulfuron

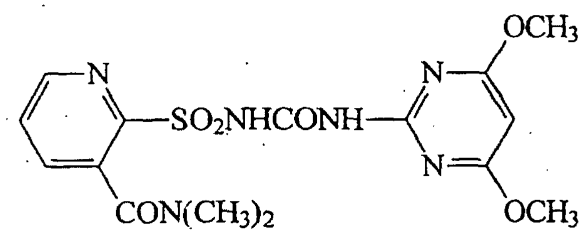

1-(4,6-Dimethoxypyrimidin-2-yl)-3-(3-dimethylcarbamoyl-2-pyridylsulfonyl)harnstoff
Pestizide Manual, 10. Aufl. 1994, S.734-735,

besteht.

Bei den Verbindungen B57) bis B65) handelt es sich um bestimmte Sulfonylharnstoffe, deren Auswahl und Eignung kritisch für erfindungsgemäße Kombinationen ist. Sie sind von den Sulfonylharnstoffen der allgemeinen Formel I strukturell verschieden. Sie ergeben allesamt mit Partnern vom Typ-A hervorragende Kombinationen mit hoher Selektivität in Reis und Wirksamkeit gegen Gräser, Cyperaceen und dikotyle Schadpflanzen. Dabei gelingt es häufig durch geeignete Wahl der Typ-B Verbindung den Schwerpunkt des durch die erfindungsgemäßen Kombinationen kontrollierten Schadpflanzenspektrums gezielt zu . beeinflussen.

So ergeben Sulfonylharnstoffe B57) oder B58) Kombinationen mit hoher Selektivität gegen annuelle und perennierende Unkräuter in Reis wie : Butomus umbellatus, Scirpus maritimus, Scirpus mucronatus, Alisma plantago-aquatica, Alisma lanceolatum, Sparganium erectum, Cyperus spp., Typha spp.

Das Wirkungsspektrum von Kombinationen mit Sulfonylharnstoff B59) umfaßt vorwiegend die selektive Kontrolle annueller und perennierender broad-leaved weeds, Saaten und Gräser (barnyard grass) in Reis, während B60) schwerpunktmäßig gegen Alisma, annuelle Cyperus, Elocharia, Marsilea, Potamogeton und Sagittaria spp., Monochoria vaginalis und Sphenoclea zeylanica Wirksamkeit entfaltet.

Kombinationen gemäß der Erfindung mit Sulfonylharnstoff B61) haben sich mit hoher Selektivität gegen annuelle und perennierende bleitblättrige Unkräuter und Saaten in Reis bewährt, während B62) selektiv gegen Cyperus serotinus, Eleocharis kuroguwai, Sagittaria pygmaea und ähnliche in Reis ist.

Erfindungsgemäße Kombinationen mit Phenoxysulfonylharnstoffen B63) können Wirkungslücken im Bereich mono- und dikotyler Unkräuter in Reis schließen, ähnlich wie Mischungen mit B64) und/oder B65).

Von besonderem Interesse sind vor allem auch herbizide Mittel mit selektiv in Reis gegen Dikotyle, Cyperaceen und Gräser wirksamen Sulfonylharnstoffen, für die im Beispielteil biologische Daten gegeben sind.

Weiters sind aus der Gruppe Bd) auch die 1,3,5-Triazine, Pyridine, Organophosphorverbindungen, sowie weitere einzelne Vertreter bestimmter chemischer Substanzklasse von gesteigerter Bedeutung beim Einsatz in Kombinationen gemäß der Erfindung.

In weiterhin bevorzugter Ausführungsform der Erfindung enthalten die herbizid wirksamen Kombinationen als Herbizide vom Typ B ein oder mehrere selektiv in Reis gegen Gräser und Dikotyle und Cyperaceen wirksame Herbizide aus der Gruppe, die aus

B66) Prometryn

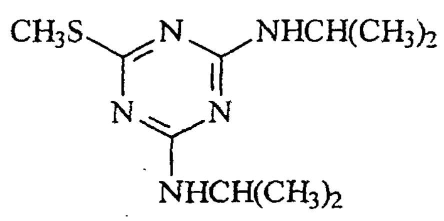

*$N^2$*,*$N^4$*-Di-isopropyl-6-methylthio-1,3,5-triazin-2,4-diamin,
Pesticide Manual, 11. Aufl. 1997, S.1011-1013,

B67) Simetryn

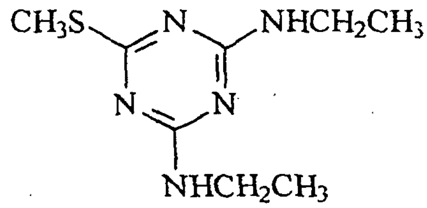

$N^2$,$N^4$-diethyl-6-methylthio-1,3,5-triazin-2,4-diamin, wobei die Verbindung B67) bekannt ist u.a. aus Pesticide Manual, 11. Aufl. 1997, S.1108-1109,

B68) Thiazopyr

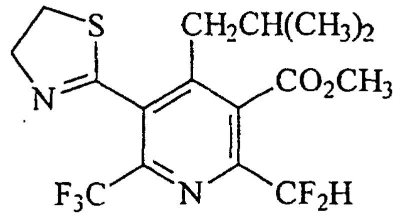

2-Difluoromethyl-5-(4,5-dihydro-1,3-thiazolyl)-6-trifluoromethylnicotinsäuremethylester, wobei die Verbindung B68) bekannt ist u.a. aus Pesticide Manual, 11. Aufl. 1997, S.1185-1187;

B69) Pyrazophos

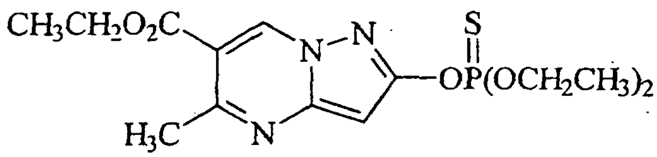

2-Diethoxyphosphinothioyloxy-5-methylpyrazolo[1,5-a]pyrimidin-6-carbonsäureethylester, wobei die Verbindung B69) bekannt ist u.a. aus Pesticide Manual, 11. Aufl. 1997, S.1050-1052,

B70) Pentoxazone

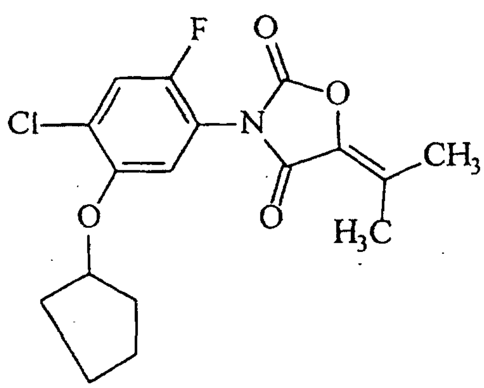

3-(4-Chloro-5-cyclopentyloxy-2-fluorophenyl)-5-isoprpyliden-1,3-oxazolidin-2,4-dion, wobei die Verbindung B70) bekannt ist u.a. aus

Pesticide Manual, 11. Aufl. 1997, S.942-943,

B71) Indanofan

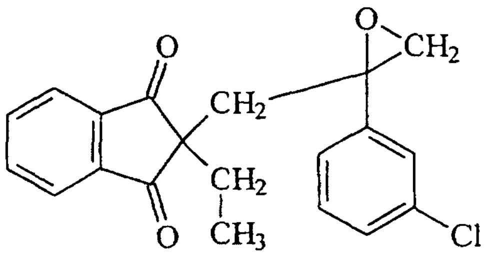

(RS)-2-[2-(3-Chlorophenyl)-2,3-epoxypropyl]-2-ethylindan-1,3-dion, wobei die Verbindung B71) bekannt ist u.a. aus Pesticide Manual, 11. Aufl. 1997, S.715,

B72) LGC-40863 = Pyribenzoxim

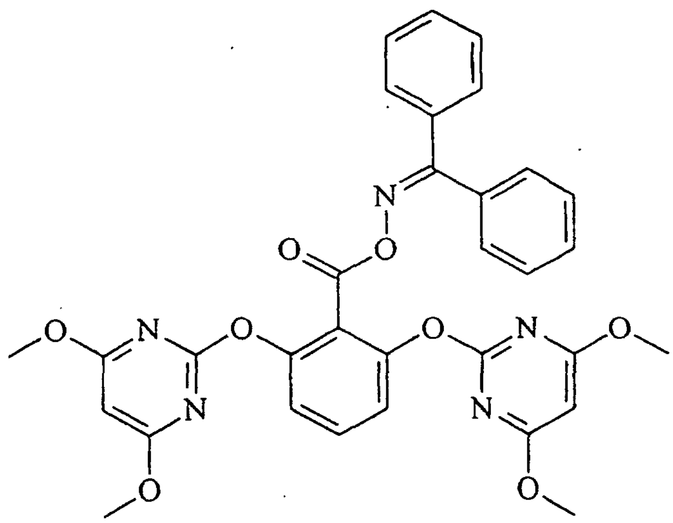

vorgestellt auf der Brighton Crop Protection Conference Weeds 1997, und

B73) MY100 = Oxaziclomefone

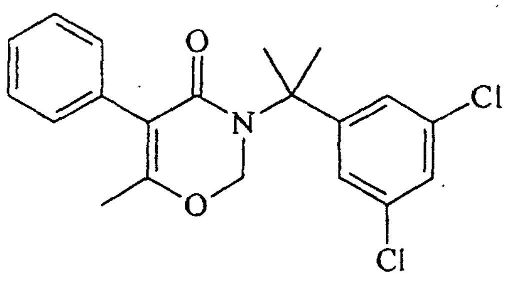

besteht.

Bei den Verbindungen B1) bis B73) handelt es sich um beispielsweise aus der bei der jeweiligen Verbindung

angegebenen Quelle bekannte, speziell mit den A-Verbindungen der Erfindung in Kombination angewandte, in Reis und in transgenem Reis selektive Herbizide. Neben der Grundsubstanz, deren Formel regelmäßig zur Verdeutlichung mit angegeben ist, wird in einigen Fällen auch auf üblicherweise eingesetzte Abwandlungen der Grundsubstanzen hingewiesen. Insbesondere gehören alle üblicherweise eingesetzten Abwandlungen der B-Verbindungen zur vorliegenden Erfindung, auch wenn sie nicht ausdrücklich einzeln genannt sind. Sofern optische aktive Formen der Typ-B-Verbindungen üblich sind, gehören diese ebenfalls zur Erfindung, teilweise wurde auch auf diese Formen Bezug genommen (z.B. Fenoxaprop-ethyl und Fenoxaprop-P-ethyl etc.).

Kombinationen aus den Wirkstoffen A + B zeigen überadditive Effekte, d. h. bei gleicher Kontrolle der Schadpflanzen wird es durch die erfindungsgemäßen herbiziden Mittel möglich, die Aufwandmenge zu senken und/oder die Sicherheitsmarge in Reis-Kulturen zu erhöhen. Beides ist sowohl ökonomisch als auch ökolgisch sinnvoll. Die Wahl der von den Komponenten A + B einzusetzenden Mengen, das Verhältnis der Komponenten A : B und die zeitliche Reihenfolge der Ausbringung sind dabei ebenso wie beispielsweise die zu wählende Formulierung von einer ganzen Reihe von Faktoren abhängig.

In diesem Zusammenhang nicht unbedeutend sind u. a. die Art der Mischungspartner, das Entwicklungsstadium der Unkräuter oder Ungräser, das zu bekämpfende Unkrautspektrum, Umweltfaktoren, Klimabedingungen, Bodenverhältnisse etc.

In ganz besonders bevorzugter erfindungsgemäßer Ausführungsform kennzeichnen sich erfindungsgemäße herbizide Mittel dadurch, daß sie einen synergistisch wirksamen Gehalt einer Kombination der Verbindungen der Formel I oder deren Salze (Typ-A-Verbindungen) mit Verbindungen aus der Gruppe B aufweisen. Dabei ist vor allem hervorzuheben, daß selbst in Kombinationen mit Aufwandmengen oder Gewichtsverhältnissen von A:B, bei denen ein Synergismus nicht in jedem Falle ohne weiteres nachzuweisen ist - etwa weil die Einzelverbindungen üblicherweise in der Kombination in sehr unterschiedlichen Aufwandmengen eingesetzt werden oder auch weil die Kontrolle der Schadpflanzen bereits durch die Einzelverbindungen sehr gut ist - den herbiziden Mitteln der Erfindung in der Regel eine synergistische Wirkung inhärent ist.

Die Aufwandmengen des Herbizids A liegen im allgemeinen zwischen 0,1 und 100 g ai/ha (ai = active ingredients, d.h. Aufwandmenge bezogen auf den aktiven Wirkstoff), bevorzugt zwischen C,5 und 60 g ai/ha, ganz besonders bevorzugt zwischen 2 und 40 g ai/ha.

In Bezug auf die speziellen Untergruppen Aa) und Ab) betragen die Aufwandmengen von Verbindungen des Typs A in der Regel:

| Typ-A-Verbindungen | Aufwandmengen g ai/ha Standard | bevorzugt |
|---|---|---|
| Aa) Sulfonylharnstoffe der Formel I in Reis {z.B. A1) oder A1*)} | 0,1 bis 10 | 0,5 bis 5 |
| Ab) Sulfonylharnstoffe der Formel I in Reis {z.B. A2) oder A3)} | 2 bis 40 | 5 bis 25 |

Dabei ist insbesondere die äußerst geringe Aufwandmenge der Sulfonylharnstoffe der allgemeinen Formel I aus der Untergruppe Aa) überraschend. Die Aufwandmenge, beispielsweise der Verbindung A1) oder A1*), ist nochmals drastisch reduziert, verglichen mit der Aufwandmenge, wie sie für Anwendung von A1) oder A1*) zur Bekämpfung von Schadpflanzen in Getreide oder Mais bekannt ist. Diese besonders geringe Aufwandmenge bei unveränderter oder besserer Schadpflanzenkontrolle bei der Bekämpfung von Schadpflanzen in Reis war aufgrund des Standes der Technik nicht absehbar.

Die Aufwandmengen von Verbindungen des Typs B betragen in der Regel:

| Typ-B-Verbindungen | Aufwandmengen g ai/ha Standard | bevorzugt |
|---|---|---|
| Ba) Gräserherbizide in Reis (z.B. B1) - B27)) | 10 bis 4000 | 50 bis 1000 |
| Bb) Dikotylen-/Cyperaceen-herbizide in Reis (z.B. B28) - B30)) | 100 bis 3000 | 200 bis 2000 |
| Bb) Dikotylen-/Cyperaceen-herbizide in Reis (z.B. B31)) | 50 bis 1000 | 100 bis 500 |
| Bb) Dikotylen-/Cyperaceen-herbizide in Reis (z.B. B32)) | 5 bis 1000 | 10 bis 500 |
| Bb) Dikotylen-/Cyperaceen-herbizide in Reis (z.B. B33a), B33b)) | 10 bis 400 | 20 bis 200 |
| Bb) Dikotylen-/Cyperaceen-herbizide in Reis (z.B. B34) - B35)) | 1 bis 50 | 4 bis 20 |
| Bb) Dikotylen-/Cyperaceen-herbizide in Reis (z.B. B36)) | 1 bis 2000 | 5 bis 1000 |

| Typ-B-Verbindungen | Aufwandmengen g ai/ha Standard | bevorzugt |
|---|---|---|
| Bb) Dikotylen-/Cyperaceen-herbizide in Reis {z.B. B37)} | 1 bis 2000 | 5 bis 1000 |
| Bb) Dikotylen-/Cyperaceen-herbizide in Reis {z.B. B38)} | 1 bis 2000 | 5 bis 1000 |
| Bc) Cyperaceenherbizide in Reis {z.B. B39) bis B42)} | 50 bis 2500 | 100 bis 1000 |
| Bd) Gräser und Dikotylen-/Cyperaceenherbizide in Reis {z.B. B43) bis B49)} | 50 bis 5000 | 100 bis 2500 |
| Bd) Gräser und Dikotylen-/Cyperaceenherbizide in Reis {z.B. B50 bis B51)} | 15 bis 2000 | 30 bis 1000 |
| Bd) Gräser und Dikotylen-/Cyperaceenherbizide in Reis {z.B. B52) bis B56)} | 15 bis 2000 | 30 bis 1000 |
| Bd) Gräser und Dikotylen-/Cyperaceenherbizide in Reis {z.B. B57 bis B65)} | 2 bis 80 | 4 bis 40 |

| Typ-B-Verbindungen | Aufwandmengen g ai/ha | |
|---|---|---|
| | Standard | bevorzugt |
| Bd) Gräser und Dikotylen-/Cyperaceenherbizide in Reis {z.B. B66) bis B67)} | 15 bis 2000 | 30 bis 1000 |
| Bd) Gräser und Dikotylen-/Cyperaceenherbizide in Reis {z.B. B68)} | 15 bis 2000 | 30 bis 1000 |
| Bd) Gräser und Dikotylen-/Cyperaceenherbizide in Reis {z.B. B69)} | 15 bis 2000 | 30 bis 1000 |
| Bd) Gräser und Dikotylen-/Cyperaceenherbizide in Reis {z.B. B70)} | 15 bis 2000 | 30 bis 1000 |
| Bd) Gräser und Dikotylen-/Cyperaceenherbizide in Reis {z.B. B71)} | 15 bis 2000 | 30 bis 1000 |
| Bd) Gräser und Dikotylen-/Cyperaceenherbizide in Reis {z.B. B72)} | 15 bis 2000 | 30 bis 1000 |

| Typ-B-Verbindungen | Aufwandmengen g ai/ha | |
|---|---|---|
| | Standard | bevorzugt |
| Bd) Gräser und Dikotylen-/Cyperaceenherbizide in Reis (z.B. B73)) | 15 bis 2000 | 30 bis 1000 |

In den Kombinationen der Erfindung betragen die Aufwandmengen von Verbindungen des Typs A + Verbindungen des Typs B in der Regel:

| Typ-B-Verbindungen | Aufwandmengen g ai/ha | |
|---|---|---|
| | A + | B |
| Ba) Gräserherbizide in Reis (z.B. B1) - B27)) | A) 0,5 bis 60<br>Aa) 0,5 bis 5<br>Ab) 5 bis 25 | 10 bis 4000 |
| Bb) Dikotylen-/Cyperaceenherbizide in Reis (z.B. B28) - B30)) | A) 0,5 bis 60<br>Aa) 0,5 bis 5<br>Ab) 5 bis 25 | 100 bis 3000 |
| Bb) Dikotylen-/Cyperaceenherbizide in Reis (z.B. B31)) | A) 0,5 bis 60<br>Aa) 0,5 bis 5<br>Ab) 5 bis 25 | 50 bis 1000 |
| Bb) Dikotylen-/Cyperaceenherbizide in Reis (z.B. B32)) | A) 0,5 bis 60<br>Aa) 0,5 bis 5<br>Ab) 5 bis 25 | 5 bis 1000 |

| Typ-B-Verbindungen | Aufwandmengen g ai/ha A | + B |
|---|---|---|
| Bb) Dikotylen-/Cyperaceen-herbizide in Reis {z.B. B33a), B33b)} | A) 0,5 bis 60<br>Aa) 0,5 bis 5<br>Ab) 5 bis 25 | 10 bis 400 |
| Bb) Dikotylen-/Cyperaceen-herbizide in Reis {z.B. B34) - B35)} | A) 0,5 bis 60<br>Aa) 0,5 bis 5<br>Ab) 5 bis 25 | 1 bis 2000 |
| Bb) Dikotylen-/Cyperaceen-herbizide in Reis {z.B. B36)} | A) 0,5 bis 60<br>Aa) 0,5 bis 5<br>Ab) 5 bis 25 | 1 bis 2000 |
| Bb) Dikotylen-/Cyperaceen-herbizide in Reis {z.B. B37)} | A) 0,5 bis 60<br>Aa) 0,5 bis 5<br>Ab) 5 bis 25 | 1 bis 2000 |
| Bb) Dikotylen-/Cyperaceen-herbizide in Reis {z.B. B38)} | A) 0,5 bis 60<br>Aa) 0,5 bis 5<br>Ab) 5 bis 25 | 1 bis 2000 |
| Bc) Cyperaceenherbizide in Reis {z.B. B39) bis B42)} | A) 0,5 bis 60<br>Aa) 0,5 bis 5<br>Ab) 5 bis 25 | 50 bis 2500 |
| Bd) Gräser und Dikotylen-/Cyperaceenherbizide in Reis {z.B. B43) bis B49)} | A) 0,5 bis 60<br>Aa) 0,5 bis 5<br>Ab) 5 bis 25 | 50 bis 5000 |
| Bd) Gräser und Dikotylen-/Cyperaceenherbizide in Reis {z.B. B50 bis B51)} | A) 0,5 bis 60<br>Aa) 0,5 bis 5<br>Ab) 5 bis 25 | 15 bis 2000 |

| Typ-B-Verbindungen | Aufwandmengen g ai/ha A | + B |
|---|---|---|
| Bd) Gräser und Dikotylen-/Cyperaceenherbizide in Reis (z.B. B52 bis B54)) | A) 0,5 bis 60<br>Aa) 0,5 bis 5<br>Ab) 5 bis 25 | 15 bis 2000 |
| Bd) Gräser und Dikotylen-/Cyperaceenherbizide in Reis (z.B. B55)) | A) 0,5 bis 60<br>Aa) 0,5 bis 5<br>Ab) 5 bis 25 | 15 bis 2000 |
| Bd) Gräser und Dikotylen-/Cyperaceenherbizide in Reis (z.B. B56)) | A) 0,5 bis 60<br>Aa) 0,5 bis 5<br>Ab) 5 bis 25 | 15 bis 2000 |
| Bd) Gräser und Dikotylen-/Cyperaceenherbizide in Reis (z.B. B57 bis B65)) | A) 0,5 bis 60<br>Aa) 0,5 bis 5<br>Ab) 5 bis 25 | 2 bis 80 |
| Bd) Gräser und Dikotylen-/Cyperaceenherbizide in Reis (z.B. B66) bis B67)) | A) 0,5 bis 60<br>Aa) 0,5 bis 5<br>Ab) 5 bis 25 | 15 bis 2000 |
| Bd) Gräser und Dikotylen-/Cyperaceenherbizide in Reis (z.B. B68)) | A) 0,5 bis 60<br>Aa) 0,5 bis 5<br>Ab) 5 bis 25 | 15 bis 2000 |

| Typ-B-Verbindungen | Aufwandmengen g ai/ha A | + B |
|---|---|---|
| Bd) Gräser und Dikotylen-/Cyperaceenherbizide in Reis {z.B. B69)} | A) 0,5 bis 60<br>Aa) 0,5 bis 5<br>Ab) 5 bis 25 | 15 bis 2000 |
| Bd) Gräser und Dikotylen-/Cyperaceenherbizide in Reis {z.B. B70)} | A) 0,5 bis 60<br>Aa) 0,5 bis 5<br>Ab) 5 bis 25 | 15 bis 2000 |
| Bd) Gräser und Dikotylen-/Cyperaceenherbizide in Reis {z.B. B71)} | A) 0,5 bis 60<br>Aa) 0,5 bis 5<br>Ab) 5 bis 25 | 15 bis 2000 |
| Bd) Gräser und Dikotylen-/Cyperaceenherbizide in Reis {z.B. B72)} | A) 0,5 bis 60<br>Aa) 0,5 bis 5<br>Ab) 5 bis 25 | 15 bis 2000 |
| Bd) Gräser und Dikotylen-/Cyperaceenherbizide in Reis {z.B. B73)} | A) 0,5 bis 60<br>Aa) 0,5 bis 5<br>Ab) 5 bis 25 | 15 bis 2000 |

Die Gewichtsverhältnisse A:B der kombinierten Herbizide können wie erwähnt ebenso wie deren Aufwandmengen innerhalb weiter Grenzen schwanken. Ein erfindungsgemäßer Bereich der Aufwandmengenverhältnisse (wt/wt) umfaßt etwa A : B wie 1 : 20000 bis etwa 200 : 1. Im Rahmen der Erfindung sind Mittel bevorzugt, welche Verbindungen der Formel I oder deren Salze (Typ-A-Verbindungen) und Verbindungen aus der Gruppe B in einem Gewichtsverhältnis von etwa 1: 8000 bis 100 : 1 enthalten. Ganz besonders zweckmäßig sind Mittel mit Aufwandmengenverhältnissen A : B, die zwischen 1:4000 und 50:1 liegen. Im einzelnen ergibt sich für die verschiedenen Untergruppen das folgende Bild, d. h. folgende Gewichtsverhältnisse gelangen vorzugsweise zum Einsatz:

| Typ-B-Verbindungen | Mischungsverhältnisse A : B | |
|---|---|---|
| | Standard | bevorzugt |
| Ba) Gräserherbizide in Reis {z.B. B1) - B27)} | 1:8000 bis 20:1 | 1:4000 bis 10:1 |
| Bb) Dikotylen-/Cyperaceen-herbizide in Reis {z.B. B28) - B30)} | 1:6000 bis 200:1 | 1:3000 bis 100:1 |
| Bb) Dikotylen-/Cyperaceen-herbizide in Reis {z.B. B31)} | 1:4000 bis 100:1 | 1:1000 bis 50:1 |
| Bb) Dikotylen-/Cyperaceen-herbizide in Reis {z.B. B32)} | 1:4000 bis 10:1 | 1:1000 bis 5:1 |
| Bb) Dikotylen-/Cyperaceen-herbizide in Reis {z.B. B33a), B33b)} | 1:2000 bis 20:1 | 1:400 bis 10:1 |

| Typ-B-Verbindungen | Mischungsverhältnisse A :B | |
|---|---|---|
| | Standard | bevorzugt |
| Bb) Dikotylen-/Cyperaceen-herbizide in Reis {z.B. B34) - B35)} | 1: bis :1 | 1: bis :1 |
| Bb) Dikotylen-/Cyperaceen-herbizide in Reis {z.B. B36)} | 1: bis :1 | 1: bis :1 |
| Bb) Dikotylen-/Cyperaceen-herbizide in Reis {z.B. B37)} | 1: bis :1 | 1: bis :1 |
| Bb) Dikotylen-/Cyperaceen-herbizide in Reis {z.B. B38)} | 1: bis :1 | 1: bis :1 |
| Bc) Cyperaceenherbizide in Reis {z.B. B39) bis B42)} | 1:10000 bis 100:1 | 1:2500 bis 50:1 |
| Bd) Gräser und Dikotylen-/Cyperaceenherbizide in Reis {z.B. B43) bis B49)} | 1:20000 bis 100:1 | 1:5000 bis 50:1 |
| Bd) Gräser und Dikotylen-/Cyperaceenherbizide in Reis {z.B. B50) bis B51)} | 1: bis :1 | 1: bis :1 |

| Typ-B-Verbindungen | Mischungsverhältnisse A :B Standard | bevorzugt |
|---|---|---|
| Bd) Gräser und Dikotylen-/Cyperaceenherbizide in Reis {z.B. B52 bis B54)} | 1: bis :1 | 1: bis :1 |
| Bd) Gräser und Dikotylen-/Cyperaceenherbizide in Reis {z.B. B55 } | 1: bis :1 | 1: bis :1 |
| Bd) Gräser und Dikotylen-/Cyperaceenherbizide in Reis {z.B. B56)} | 1: bis :1 | 1: bis :1 |
| Bd) Gräser und Dikotylen-/Cyperaceenherbizide in Reis {z.B. B57 bis B65)} | 1:320 bis 4:1 | 1:80 bis 2:1 |

| Typ-B-Verbindungen | Mischungsverhältnisse A :B Standard | bevorzugt |
|---|---|---|
| Bd) Gräser und Dikotylen-/Cyperaceenherbizide in Reis {z.B. B66) bis B67)} | 1: bis :1 | 1: bis :1 |
| Bd) Gräser und Dikotylen-/Cyperaceenherbizide in Reis {z.B. B68)} | 1: bis :1 | 1: bis :1 |
| Bd) Gräser und Dikotylen-/Cyperaceenherbizide in Reis {z.B. B69)} | 1: bis :1 | 1: bis :1 |
| Bd) Gräser und Dikotylen-/Cyperaceenherbizide in Reis {z.B. B70)} | 1: bis :1 | 1: bis :1 |
| Bd) Gräser und Dikotylen-/Cyperaceenherbizide in Reis {z.B. B71) bis B73)} | 1: bis :1 | 1: bis :1 |

Im Hinblick auf die verschiedenen Untergruppen Aa) bis Ac) ergeben sich im einzelnen folgende bevorzugt eingesetzte Aufwandmengenverhältnisse (Gewichtsverhältnisse) :

Verbindungen der Untergruppe Aa), vorzugsweise Verbindung A1) oder A1*):

| Typ-B-Verbindungen | Mischungsverhältnisse Aa) : B Standard | bevorzugt |
|---|---|---|
| Ba) Gräserherbizide in Reis {z.B. B1) - B27)} | 1:20000 bis 2:1 | 1:8000 bis 1:2 |
| Bb) Dikotylen-/Cyperaceen-herbizide in Reis {z.B. B28) - B30)} | 1:10000 bis 20:1 | 1:5000 bis 10:1 |
| Bb) Dikotylen-/Cyperaceen-herbizide in Reis {z.B. B31)} | 1:4000 bis 10:1 | 1:2000 bis 5:1 |
| Bb) Dikotylen-/Cyperaceen-herbizide in Reis {z.B. B32)} | 1:4000 bis 1:1 | 1:2000 bis 1:2 |
| Bb) Dikotylen-/Cyperaceen-herbizide in Reis {z.B. B33a), B33b)} | 1:2000 bis 2:1 | 1:800 bis 1:1 |

| Typ-B-Verbindungen | Mischungsverhältnisse Aa) :B Standard | bevorzugt |
|---|---|---|
| Bb) Dikotylen-/Cyperaceen-herbizide in Reis {z.B. B34), B35)} | 1:5000 bis 40:1 | 1:5000 bis 20:1 |
| Bb) Dikotylen-/Cyperaceen-herbizide in Reis {z.B. B36)} | 1:5000 bis 40:1 | 1:5000 bis 20:1 |
| Bb) Dikotylen-/Cyperaceen-herbizide in Reis {z.B. B37)} | 1:5000 bis 40:1 | 1:5000 bis 20:1 |
| Bb) Dikotylen-/Cyperaceen-herbizide in Reis {z.B. B38)} | 1:5000 bis 40:1 | 1:5000 bis 20:1 |
| Bc) Cyperaceenherbizide in Reis {z.B. B39) bis B42)} | 1:10000 bis 10:1 | 1:5000 bis 5:1 |
| Bd) Gräser und Dikotylen-/Cyperaceenherbizide in Reis {z.B. B43) bis B49)} | 1:20000 bis 10:1 | 1:10000 bis 5:1 |

| Typ-B-Verbindungen | Mischungsverhältnisse Aa) :B | |
|---|---|---|
| | Standard | bevorzugt |
| Bd) Gräser und Dikotylen-/Cyperaceenherbizide in Reis {z.B. B50) bis B51)} | 1:5000 bis 40:1 | 1:5000 bis 20:1 |
| Bd) Gräser und Dikotylen-/Cyperaceenherbizide in Reis {z.B. B52) bis B54)} | 1:5000 bis 40:1 | 1:5000 bis 20:1 |
| Bd) Gräser und Dikotylen-/Cyperaceenherbizide in Reis {z.B. B55)} | 1:5000 bis 40:1 | 1:5000 bis 20:1 |
| Bd) Gräser und Dikotylen-/Cyperaceenherbizide in Reis {z.B. B56)} | 1:5000 bis 40:1 | 1:5000 bis 20:1 |
| Bd) Gräser und Dikotylen-/Cyperaceenherbizide in Reis {z.B. B57 bis B65)} | 1:320 bis 1:2 | 1:160 bis 1:5 |
| Bd) Gräser und Dikotylen-/Cyperaceenherbizide in Reis {z.B. B66 bis B67)} | 1:5000 bis 40:1 | 1:5000 bis 20:1 |

| Typ-B-Verbindungen | Mischungsverhältnisse Aa) :B Standard | bevorzugt |
|---|---|---|
| Bd) Gräser und Dikotylen-/Cyperaceenherbizide in Reis (z.B. B68)) | 1:5000 bis 40:1 | 1:5000 bis 20:1 |
| Bd) Gräser und Dikotylen-/Cyperaceenherbizide in Reis (z.B. B69)) | 1:5000 bis 40:1 | 1:5000 bis 20:1 |
| Bd) Gräser und Dikotylen-/Cyperaceenherbizide in Reis (z.B. B70)) | 1:5000 bis 40:1 | 1:5000 bis 20:1 |
| Bd) Gräser und Dikotylen-/Cyperaceenherbizide in Reis (z.B. B71 bis B73)) | 1:5000 bis 40:1 | 1:5000 bis 20:1 |

Verbindungen der Untergruppe Ab), vorzugsweise Verbindungen A2) oder A3):

| Typ-B-Verbindungen | Mischungsverhältnisse Ab) : B Standard | bevorzugt |
|---|---|---|
| Ba) Gräserherbizide in Reis (z.B. B1) - B27)) | 1:2000 bis 10:1 | 1:4000 bis 5:1 |

| Typ-B-Verbindungen | Mischungsverhältnisse Ab) : B Standard | bevorzugt |
|---|---|---|
| Bb) Dikotylen-/Cyperaceen-herbizide in Reis {z.B. B28) - B30)} | 1:1500 bis 10:1 | 1:750 bis 5:1 |
| Bb) Dikotylen-/Cyperaceen-herbizide in Reis {z.B. B31)} | 1:500 bis 50:1 | 1:250 bis 25:1 |
| Bb) Dikotylen-/Cyperaceen-herbizide in Reis {z.B. B32)} | 1:500 bis 2,5:1 | 1:250 bis 1:1 |
| Bb) Dikotylen-/Cyperaceen-herbizide in Reis {z.B. B33a), B33b)} | 1:200 bis 10:1 | 1:100 bis 5:1 |
| Bb) Dikotylen-/Cyperaceen-herbizide in Reis {z.B. B34) - B35)} | 1: bis :1 | 1: bis :1 |
| Bb) Dikotylen-/Cyperaceen-herbizide in Reis {z.B. B36)} | 1: bis :1 | 1: bis :1 |
| Bb) Dikotylen-/Cyperaceen-herbizide in Reis {z.B. B37)} | 1: bis :1 | 1: bis :1 |

| Typ-B-Verbindungen | Mischungsverhältnisse Ab) :B Standard | bevorzugt |
|---|---|---|
| Bb) Dikotylen-/Cyperaceen-herbizide in Reis (z.B. B38)) | 1: bis :1 | 1: bis :1 |
| Bc) Cyperaceenherbizide in Reis (z.B. B39) bis B42)) | 1:1250 bis 50:1 | 1:725 bis 25:1 |
| Bd) Gräser und Dikotylen-/Cyperaceenherbizide in Reis (z.B. B43) bis B49)) | 1:2500 bis 50:1 | 1:1250 bis 25:1 |
| Bd) Gräser und Dikotylen-/Cyperaceenherbizide in Reis (z.B. B50 bis B51)) | 1: bis :1 | 1: bis 1: |
| Bd) Gräser und Dikotylen-/Cyperaceenherbizide in Reis (z.B. B52 bis B54)) | 1: bis :1 | 1: bis 1: |
| Bd) Gräser und Dikotylen-/Cyperaceenherbizide in Reis (z.B. B55)) | 1: bis 1: | 1: bis 1: |
| Bd) Gräser und Dikotylen-/Cyperaceenherbizide in Reis (z.B. B56 ) | 1: bis 1: | 1: bis 1: |

| Typ-B-Verbindungen | Mischungsverhältnisse Ab) : B Standard | bevorzugt |
|---|---|---|
| Bd) Gräser und Dikotylen-/Cyperaceenherbizide in Reis (z.B. B57 bis B65)) | 1:40 bis 1:1 | 1:20 bis 1:2 |
| Bd) Gräser und Dikotylen-/Cyperaceenherbizide in Reis (z.B. B66 bis B67)) | 1: bis :1 | 1: bis :2 |
| Bd) Gräser und Dikotylen-/Cyperaceenherbizide in Reis (z.B. B68)) | 1: bis :1 | 1: bis :2 |
| Bd) Gräser und Dikotylen-/Cyperaceenherbizide in Reis (z.B. B69)) | 1: bis :1 | 1: bis :2 |
| Bd) Gräser und Dikotylen-/Cyperaceenherbizide in Reis (z.B. B70)) | 1: bis :1 | 1: bis :2 |
| Bd) Gräser und Dikotylen-/Cyperaceenherbizide in Reis (z.B. B71)) | 1: bis :1 | 1: bis :2 |

| Typ-B-Verbindungen | Mischungsverhältnisse Ab) : B Standard | bevorzugt |
|---|---|---|
| Bd) Gräser und Dikotylen-/Cyperaceenherbizide in Reis {z.B. B72)} | 1: bis :1 | 1: bis :2 |
| Bd) Gräser und Dikotylen-/Cyperaceenherbizide in Reis {z.B. B73)} | 1: bis :1 | 1: bis :2 |

Bevorzugte herbizide Mittel der Erfindung weisen in einer synergistisch wirksamen Menge auf

A) mindestens einen herbiziden Wirkstoff aus der Gruppe der substituierten Phenylsulfonylharnstoffe der allgemeinen Formel I und deren landwirtschaftlich akzeptierten, d.h. annehmbaren und verträglichen, Salze

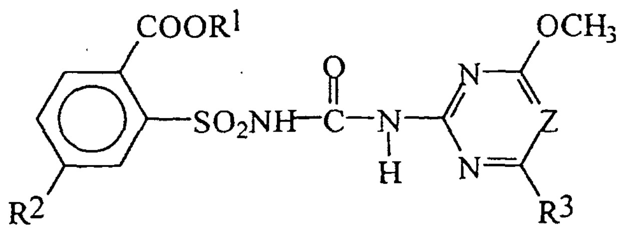

(I),

worin
$R^1$ ($C_1$-$C_8$)-Alkyl, (C3-1-$C_4$)-Alkenyl, (C3-1-$C_4$)-Alkinyl oder ($C_1$-$C_4$)-Alkyl, das ein- bis vierfach durch Reste aus der Gruppe Halogen und/oder ($C_1$-$C_2$)-Alkoxy substituiert ist, bedeutet;
$R^2$ I oder $CH_2NHSO_2CH_3$ bedeutet;
$R^3$ Methyl oder Methoxy bedeutet; und
Z N oder CH ist;
in Kombination mit
mindestens einer herbizid wirksamen Verbindung aus der Gruppe der Verbindungen B', welche aus

B1) Butachlor,
B2) Butenachlor,
B3) Thenylchlor,
B4) Pretilachlor,
B5) Mefenacet,
B5a) Bay FOE 5043,
B6) Naproanilid,
B7) Propanil,
B8) Etobenzanid,
B9) Dimepiperate,
B10) Molinate,
B11) Thiobencarb,

B12) Pyributicarb,
B13) Quinclorac,
B14a) Sulcotrione,
B15) Cycloxydim
B16) Sethoxydim
B17) NBA 061,
B18) Piperophos,
B19) Anilofos,
B21) Haloxyfop,
B22) Cyhalofop,
B23) JC-940,
B24) Dithiopyr,
B25) Bromobutide,
B26) Cinmethylin,
B27) CH-900,
B32) Acifluorfen,
B34) Chlorimuron,
B37) Picloram,
B38) Carfentrazon
B40) Triclopyr,
B41) Benfuresate,
B42) Daimuron,
B44) Clomazon,
B45) Benzofenap,
B46) Pyrazolynate,
B47) Pyrazoxyfen,
B49) KIH 6127,
B50) Oxadiazon,
B51) Oxadiargyl,
B56) Dalapon,
B58) Bensulfuron,
B59) Pyrazosulfuron,
B60) Cinosulfuron,
B61) Imazosulfuron,
B62) AC 322,140 (Cyclosulfamuron),
B63a) Ethoxysulfuron (HOE 095404),
B64) Azimsuifuron (DPX-A8947),
B66) Prometryn,
B67) Simetryn,
B68) Thiazopyr,
B69) Pyrazophos,
B70) Pentoxazone,
B71) Indanofan,
B72) LGC 40863
und
B73) MY 100

besteht
oder in Kombination mit
zwei oder mehr herbizid wirksamen Verbindungen aus der Gruppe der Verbindungen B", welche aus

B1) Butachlor,
B2) Butenachlor,
B3) Thenylchlor,
B4) Pretilachlor,
B5) Mefenacet,
B5a) Bay FOE 5043,
B6) Naproanilid,

B7) Propanil,
B8) Etobenzanid,
B9) Dimepiperate,
B10) Molinate,
B11) Thiobencarb,
B12) Pyributicarb,
B13) Quinclorac,
B14a) Sulcotrione,
B15) Cycloxydim
B16) Sethoxydim
B17) NBA 061,
B18) Piperophos,
B19) Anilofos,
B20) Fenoxaprop, Fenoxaprop-P,
B21) Haloxyfop,
B22) Cyhalofop,
B23) JC-940,
B24) Dithiopyr,
B25) Bromobutide,
B26) Cinmethylin,
B27) CH-900,
B28) 2,4-D,
B29) Mecoprop, Mecoprop-P,
B30) MCPA,
B31) Dicamba,
B32) Acifluorfen,
B33a)

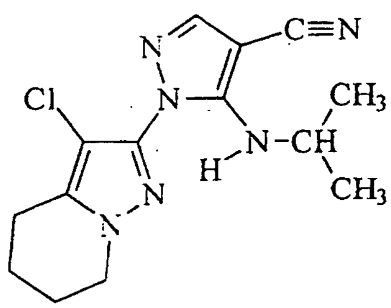

,

und
B33b)

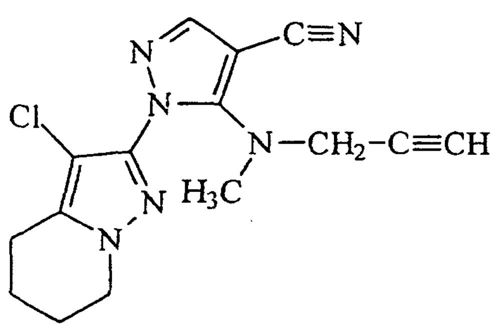

,

B34) Chlorimuron,
B35) Triasulfuron,

B36) Ioxynil,
B37) Picloram,
B38) Carfentrazon,
B39) Bentazon;
B40) Triclopyr,
B41) Benfuresate,
B42) Daimuron,
B43) Pendimethalin,
B44) Clomazon,
B45) Benzofenap,
B46) Pyrazolynate,
B47) Pyrazoxyfen,
B48) KIH 2023,
B49) KIH 6127,
B50) Oxadiazon,
B51) Oxadiargyl,
B52) Acetochlor,
B53) Metolachlor,
B54) Metosulam,
B55) Oxyfluorfen
B56) Dalapon,
B57) Metsulfuron,
B58) Bensulfuron,
B59) Pyrazosulfuron,
B60) Cinosulfuron,
B61) Imazosulfuron,
B62) AC 322,140 (Cyclosulfamuron),
B63a) Ethoxysulfuron (HOE 095404),
B64) Azimsulfuron (DPX-A8947),
B65) Nicosulfuron,
B66) Prometryn,
B67) Simetryn,
B68) Thiazopyr,
B69) Pyrazophos,
B70) Pentoxazone,
B71) Indanofan,
B72) LGC 40863 und
B73) MY 100

besteht, wobei im Falle B'' wenigstens eine der Verbindungen aus der Gruppe B'' auch zu Gruppe B' gehören muß.

Die erfindungsgemäßen Wirkstoffkombinationen können sowohl als Mischformulierungen der beiden Komponenten vorliegen, die dann in üblicher Weise mit Wasser verdünnt zur Anwendung gebracht werden, oder auch als sogenannte Tankmischungen durch gemeinsame Verdünnung der getrennt formulierten Komponenten mit Wasser hergestellt werden.
Die Wirkstoffe der Typen A und B können auf verschiedene Art formuliert werden, je nachdem welche biologischen und/oder chemisch-physikalischen Parameter vorgegeben sind.
Als Formulierungsmöglichkeiten kommen beispielsweise in Frage:
Spritzpulver (WP), emulgierbare Konzentrate (EC), wasserlösliche Pulver (SP), wasserlösliche Konzentrate (SL), konzentrierte Emulsionen (EW) wie Öl-in-Wasser und Wasser-in-Öl-Emulsionen, versprühbare Lösungen oder Emulsionen, Kapselsuspensionen (CS), Dispersionen auf Öloder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- oder Streuapplikation, wasserlösliche Granulate (SG), wasserdispergierbare Granulate (WG), ULV-Formulierungen, Mikrokapseln und Wachse.
Bevorzugt sind hiervon wasserlösliche Spritzpulver (WP), wasserdispergierbare Granulate (WG), wasseremulgierbare Granulate (EC), Suspoemulsionen (SE) und Öl-Suspensionskonzentrate (SC).
Diese einzelnen Formulierungstypen sind im Prinzip bekannt und werden beispielsweise beschrieben in: Winnacker-Küchler, "Chemische Technologie" Band 7, C. Hauser Verlag München, 4. Aufl. 1986; Wade van Valkenburg,

"Pesticide Formulations", Marcel Dekker N. Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N. J.; H. v. Olphen "Introduction to Clay Colloid Chemistry", 2nd Ed., J. Wiley & Sons, N. Y.; Marsden "Solvents Guide, 2nd Ed., Interscience, N. Y. 1963 McCutcheon's "Detergents and Emulsifiers Annual", MC Publ. Corp., Ridgewood N. J.; Sisley and Wood, "Encyclopedia of Surface Active Agents", Chem. Publ. Co. Inc., N. Y. 1964; Schönfelt, "Grenzflächenaktive Äthylenoxidaddukte", Wiss. Verlagsgesellschaft, Stuttgart 1976; Winnacker-Küchler "Chemische Technologie", Band 7, C. Hauser Verlag München, 4. Aufl. 1986.

Auf der Basis dieser Formulierungen lassen sich auch Kombinationen mit anderen pestizid wirksamen Stoffen, Herbiziden, Insektiziden, Fungiziden, sowie Antidots, Safenern, Düngemitteln und/oder Wachstumsregulatoren herstellen, z. B. in Form einer Fertigformulierung oder als Tankmix.

Besonders vorteilhaft werden die Herbizid-Kombinationen der Erfindung hergestellt, indem man die Verbindungen der Formel 1 oder deren Salze (Typ-A-Verbindungen) mit einer oder mehreren Verbindungen des Typs B analog einer üblichen Pflanzenschutzformulierung aus der Gruppe enthaltend wasserlösliche Spritzpulver (WP), wasserdispergierbare Granulate (WDG), wasseremulgierbare Granulate (WEG), Suspoemulsionen (SE) und Öl-Suspensionskonzentrate (SC) formuliert.

Spritzpulver sind in Wasser gleichmäßig dispergierbare Präparate, die neben den Wirkstoffen außer einem Verdünnungs- oder Inertstoff noch Tenside ionischer und/oder nichtionischer Art (Netzmittel, Dispergiermittel), z. B. polyoxyethylierte Alkylphenole, polyoxyethylierte Fettalkohole.und Fettamine, Fettalkoholpolyglykolethersulfate, Alkansulfonate oder Alkylarylsulfonate, ligninsulfonsaures Natrium, 2,2'dinaphthylmethan-6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes oder der Wirkstoffe in einem organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte (z. B. Blockcopolymere) , Alkylpolyether, Sorbitanfettsäureester, Polyoxyethylensorbitanfettsäureester oder andere Polyoxyethylensorbitanester.

Stäubemittel erhält man durch Vermahlen des Wirkstoffes oder der Wirkstoffe mit fein verteilten Stoffen, z. B. Talkum, natürlichen Tonen, wie Kaolin, Bentonit und Pyrophyllit, oder Diatomeenerde.

Granulate können entweder durch Verdüsen des Wirkstoffes oder der Wirkstoffe auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen, auf die Oberfläche von Trägerstoffen wie Sand, Kaolinite oder von granuliertem Inertmaterial. Wasserdispergierbare Granulate werden in der Regel nach den üblichen Verfahren wie Sprühtrocknung, Wirbeibettgranulierung, Tellergranulierung, Mischung mit Hochgeschwindigkeitsmischern und Extrusion ohne festes Inertmaterial hergestellt. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen gemäß der Erfindung enthalten in der Regel 0,1 bis 99 Gew.-%, insbesondere 2 bis 95 Gew.-%, ganz besonders bevorzugt 3 bis 92 Gew.-% Wirkstoffe der Typen A und B, neben üblichen Formulierungshilfsmitteln.

Die Konzentrationen der Wirkstoffe A + B können in den Formulierungen verschieden sein. In Spritzpulvern beträgt die Wirkstoffkonzentration z. B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85.Gew.-%, vorzugsweise 5 bis 80 Gew.-% betragen. Staubförmige Formulierungen enthalten etwa 1 bis 25 Gew.-%, meistens 5 bis 20 Gew.-% Wirkstoffe, versprühbare Lösungen etwa 0,2 bis 25 Gew.-%, vorzugsweise 2 bis 20 Gew.-% Wirkstoffe. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Farb- und Trägerstoffe, Entschäumer, Verdunstungshemmer und den pH-Wert und die Viskosität beeinflussende Mittel.

Aufgrund der relativ geringen Aufwandmenge der erfindungsgemäßen Kombinationen A + B ist deren Verträglichkeit in aller Regel schon sehr gut. Insbesondere wird durch die erfindungsgemäßen Kombinationen eine Senkung der absoluten Aufwandmenge erreicht, verglichen mit der Einzelanwendung eines herbiziden Wirkstoffs. Um die Verträglichkeit und/oder Selektivität der erfindungsgemäßen Herbizidkombinationen gewünschtenfalls noch zu steigern ist es allerdings von Vorteil, diese gemeinsam in Mischung oder zeitlich getrennt nacheinander zusammen mit Safenern oder Antidots anzuwenden. Als Safener oder Antidots für die erfindungsgemäßen Kombinationen in Frage

kommenden Verbindungen sind z. B. aus EP-A-333 131 (ZA-89/1960), EP-A-269 806 (US-A-4,891,057), EP-A-346 620 (AU-A-89/34951) und den internationalen Patentanmeldungen PCT/EP 90/01966 (WO-91/08202) und PCT/EP 90/02020 (WO-91/078474) und dort zitierter Literatur bekannt oder können nach den dort beschriebenen Verfahren hergestellt werden. Weitere geeignete Safener kennt man aus EP-A-94 349 (US-A-4,902,304), EP-A-191 736 (US-A-4,881,966) und EP-A-0 492 366 und der dort zitierten Literatur.

Günstigenfalls kennzeichnen sich die herbiziden Mischungen oder Anwendungskombinationen der Erfindung durch einen zusätzlichen Gehalt an

C) einer oder mehrerer Verbindungen der Formeln C1 und/oder C2,

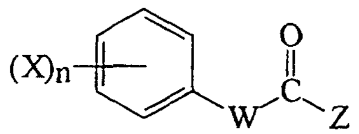

(C1)

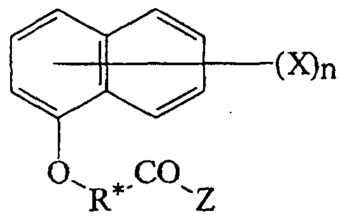

(C2)

worin

X Wasserstoff, Halogen, $(C_1-C_4)$-Alkyl, $(C_1-C_4)$-Alkoxy, Nitro oder $(C_1-C_4)$-Halogenalkyl bedeutet,

Z $OR^1$, $SR^1$, $NR^1R$, wobei R Wasserstoff, $(C_1-C_6)$-Alkyl, $(C_1-C_6)$-Alkoxy oder gegebenenfalls substituiertes Phenyl bedeutet, oder für einen gesättigten oder ungesättigten 3- bis 7-gliedrigen Heterozyklus mit mindestens einem N-Atom und bis zu drei Heteroatomen steht, der über das N-Atom mit der Carbonylgruppe verbunden ist und unsubstituiert oder durch Reste aus der Gruppe $(C_1-C_4)$-Alkyl, $(C_1-C_4)$-Alkoxy oder gegebenenfalls substituiertes Phenyl substituiert ist, vorzugsweise einen Rest der Formel $OR^1$, $NHR^1$ oder $N(CH_3)_2$, insbesondere $OR^1$,

R* eine$(C_1-C_2)$-Alkylenkette ( = $(C_1-C_2)$-Alkandiylkette), die noch mit ein oder zwei $(C_1-C_4)$-Alkylresten oder mit $[(C_1-C_3)$-Alkoxy]carbonyl substituiert sein kann, vorzugsweise $-CH_2-$,

$R^1$ Wasserstoff, $(C_1-C_{18})$-Alkyl, $(C_3-C_{12})$-Cycloalkyl, $(C_2-C_8)$-Alkenyl oder $(C_2-C_8)$-Alkinyl, wobei die vorstehenden C-haltigen Reste unsubstituiert oder ein- oder mehrfach, vorzgsweise bis zu dreifach, durch gleiche oder verschiedene Reste aus der Gruppe enthaltend Halogen, Hydroxy, $(C_1-C_8)$-Alkoxy, $(C_1-C_8)$-Alkylthio, $(C_2-C_8)$-Alkenylthio, $(C_2-C_8)$-Alkinylthio, $(C_2-C_8)$-Alkenyloxy, $(C_2-C_8)$-Alkinyloxy, $(C_3-C_7)$-Cycloalkyl, $(C_3-C_7)$-Cycloalkoxy, Cyano, Mono- und Di-$(C_1-C_8)$-alkyl-amino, Carboxy, $(C_1-C_8)$-Alkoxycarbonyl, $(C_2-C_8)$-Alkenyloxy-carbonyl, $(C_1-C_8)$-Alkylthio-carbonyl, $(C_2-C_8)$-Alkinyloxycarbonyl, $(C_1-C_8)$-Alkyl-carbonyl, $(C_2-C_8)$-Alkenyl-carbonyl, $(C_2-C_8)$-Alkinyl-carbonyl, 1-(Hydroxyimino)-$(C_1-C_6)$-alkyl, 1-$[(C_1-C_4)$-Alkylimino]-$(C_1-C_4)$-alkyl, 1-$[(C_1-C_4)$-Alkoxyimino]-$(C_1-C_6)$-alkyl, $(C_1-C_8)$-Alkylcarbonylamino, $(C_2-C_8)$-Alkenylcarbonylamino, $(C_2-C_8)$-Alkinyl-carbonylamino, Aminocarbonyl, $(C_1-C_8)$-Alkyl-aminocarbonyl, Di-$(C_1-C_6)$-alkylaminocarbonyl, $(C_2-C_6)$-Alkenyl-aminocarbonyl, $(C_2-C_6)$-Alkinyl-aminocarbonyl, $(C_1-C_8)$-Alkoxycarbonylamino, $(C_1-C_8)$-Alkyl-aminocarbonylamino, $(C_1-C_6)$-Alkylcarbonylbxy, das unsubstituiert oder durch Halogen, $NO_2$, $(C_1-C_4)$-Alkoxy oder gegebenenfalls substituiertes Phenyl substituiert ist, $(C_2-C_6)$-Alkenylcarbonyloxy, $(C_2-C_6)$-Alkinyl-carbonyloxy, $(C_1-C_8)$-Alkyl-sulfonyl, Phenyl, Phenyl-$(C_1-C_6)$-alkoxy, Phenyl-$(C_1-C_6)$-alkoxy-carbonyl, Phenoxy, Phenoxy-$(C_1-C_6)$-alkoxy, Phenoxy-$(C_1-C_6)$-alkoxy-carbonyl, Phenylcarbonyloxy, Phenylcarbonylamino, Phenyl-$(C_1-C_6)$-alkylcarbonylamino, wobei die letztgenannten neun Reste im Phenylring unsubstituiert oder ein- oder mehrfach, vorzugsweise bis zu dreifach durch gleiche oder verschiedene Reste aus der Gruppe Halogen, $(C_1-C_4)$-Alkyl, $(C_1-C_4)$-Alkoxy, $(C_1-C_4)$-Halogenalkyl, $(C_1-C_4)$-Halogenalkoxy und Nitro substituiert sind, und Reste der Formeln $SiR'_3$, $-O-SiR'_3$, $R'_3Si-(C_1-C_8)$-alkoxy, $-CO-O-NR'_2$, $-O-N=CR'_2$, $-N=CR'_2$, $-O-NR'_2$, $CH(OR')_2$ und $-O-(CH_2)_m-CH(OR'_2)_2$,

worin die R' in den genannten Formeln unabhängig voneinander Wasserstoff, $(C_1-C_4)$-Alkyl, Phenyl, das unsubstituiert oder ein- oder mehrfach, vorzugsweise bis zu dreifach durch gleiche oder verschiedene Reste aus der Gruppe Halogen, $(C_1-C_4)$-Alkyl, $(C_1-C_4)$-Alkoxy, $(C_1-C_4)$-Halogenalkyl, $(C_1-C_4)$-Halogenalkoxy und Nitro substituiert ist, oder paarweise eine $(C_2-C_6)$-Alkylenkette und m= 0 bis 6 bedeuten, und ein Rest der Formel R"O-CHR"'(OR")-$(C_1-C_6)$-alkoxy,

worin die Reste R" unabhängig voneinander $(C_1-C_4)$-Alkyl oder zusammen einen $(C_1-C_6)$-Alkylenrest und R"' Wasserstoff oder $(C_1-C_4)$-Alkyl bedeuten, substituiert sind,

R Wasserstoff, $(C_1-C_6)$-Alkyl, $(C_1-C_6)$-Alkoxy oder gegebenenfalls substituiertes Phenyl bedeutet,

n eine ganze Zahl von 1 bis 5, vorzugsweise 1 bis 3,

W ein divalenter heterozyklischer Rest mit 5 Ringatomen der Formeln W1 bis W4,

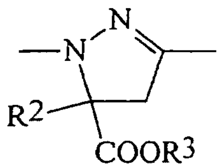

(W1)

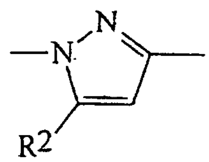

(W2)

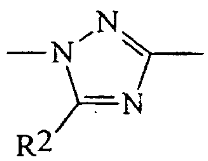

(W3)

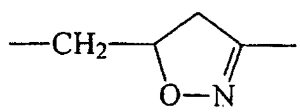

(W4),

worin

$R^2$ Wasserstoff, $(C_1-C_8)$-Alkyl, $(C_1-C_8)$-Halogenalkyl, $(C_3-C_{12})$-Cycloalkyl oder gegebenenfalls substituiertes Phenyl und

$R^3$ Wasserstoff, $(C_1-C_8)$-Alkyl, $(C_1-C_8)$-Halogenalkyl, $(C_1-C_4)$-Alkoxy-$(C_1-C_4)$-alkyl, $(C_1-C_6)$-Hydroxyalkyl, $(C_3-C_{12})$-Cycloalkyl oder Tri-($(C_1-C_4)$-alkyl)-silyl sind,

bedeuten, oder die Salze der genannten Verbindungen.

Sofern es im einzelnen nicht anders definiert wird, gelten für die Reste sowohl in den für die Safener genannten Formeln als auch den sonst, und insbesondere auch bei Verbindungen der Formeln I, II, III und IV, in der Beschreibung angegebenen Formeln die folgenden Definitionen:

Alkyl, Alkenyl und Alkinyl sind geradkettig oder verzweigt und haben bis zu 8, vorzugsweise bis zu 4 C-Atome;

entsprechendes gilt für den aliphatischen Teil substituierter Älkyl-, Alkenyl- und Alkinylreste oder davon abgeleitete Reste wie Haloalkyl (= Halogenalkyl), Hydroxyalkyl, Alkoxycarbonyl, Alkoxy, Alkanoyl, Halogenalkoxy etc.;

Alkyl bedeutet zum Beispiel Methyl, Ethyl, n-Propyl, Isopropyl, n-Butyl, i-Butyl, t-Butyl und 2-Butyl, Pentyle, insbesondere n-Pentyl und neo-Pentyl, Hexyle, wie n-Hexyl und i-Hexyl und 1,3-Dimethylbutyl, Heptyle, wie n-Heptyl, 1-Methylhexyl und 1,4-Dimethylpentyl; Alkenyl bedeutet beispielsweise unter anderem Allyl, 1-Methylprop-2-en-1-yl, But-2-en-1-yl, But-3-en-1-yl, .1-Methyl-but-3-en und 1-Methyl-but-2-en; Alkinyl bedeutet unter anderem Propargyl, But-2-in-1-yl, But-3-in-1-yl, 1-Methyl-but-3-in;

Cycloalkyl hat vorzugsweise 3 bis 8 C-Atome und steht z. B. für Cyclobutyl, Cyclopentyl, Cyclohexyl oder Cycloheptyl. Cycloalkyl kann gegebenenfalls bis zu zwei $(C_1-C_4)$-Alkylreste als Substituenten tragen.

Halogen bedeutet Fluor, Chlor, Brom oder Jod, vorzugsweise Fluor, Chlor oder Brom, insbesondere Fluor oder Chlor; Halogenalkyl ( = Haloalkyl), -alkenyl und -alkinyl bedeuten durch Halogen mono-, di- oder polysubstituiertes Alkyl, Alkenyl beziehungsweise Alkinyl, zum Beispiel wie $CF_3$, $CHF_2$, $CH_2F$, $CF_3CF_2$, $CH_2FCHCl$, $CCl_3$, $CHCl_2$, $CH_2CH_2Cl$; Halogenalkoxy (= Haloalkoxy) ist zum Beispiel unter anderem $OCF_3$, $OCHF_2$, $OCH_2F$, $CF_3CF_2O$, $CF_3CH_2O$;

Aryl weist vorzugsweise 6 bis 12 C-Atome auf und ist z. B. Phenyl, Naphthyl oder Biphenyl, vorzugsweise Phenyl. Entsprechendes gilt für davon abgeleitete Reste wie Aryloxy, Aroyl, oder Aroylalkyl;

gegebenenfalls substituiertes Phenyl steht beispielsweise für Phenyl, das unsubstituiert ist oder ein oder mehrfach, vorzugsweise ein-, zwei- oder dreifach, durch gleiche oder verschiedene Reste aus der Gruppe Halogen, ($C_1$-$C_4$)-Alkyl, ($C_1$-$C_4$)-Alkoxy, ($C_1$-$C_4$)-Halogenalkyl, ($C_1$-$C_4$)-Halogenalkoxy, ($C_1$-$C_4$)-Alkylthio, ($C_2$-$C_5$)-Alkoxycarbonyl, ($C_2$-$C_5$)-Alkylcarbonyloxy, Carbonamid, ($C_2$-$C_5$)-Alkylcarbonylamino, Di[($C_1$-$C_4$-Alkyl]aminocarbonyl und Nitro substituiert ist, zum Beispiel o-, m- und p-Tolyl, Dimethylphenyle, 2-, 3-und 4-Chlorphenyl, 2-, 3- und 4-Trifluor- und -Trichlorphenyl, 2,4-, 3,5-, 2,5- und 2,3-Dichlorphenyl oder o-, m- und p-Methoxyphenyl. Entsprechendes gilt für gegebenenfalls substituiertes Aryl.

Von besonderem Interesse sind erfindungsgemäße herbizide Mittel, wobei in den Verbindungen der Formel C1 und C2,

$R^1$ Wasserstoff, ($C_1$-$C_8$)-Alkyl, ($C_3$-$C_7$)-Cycloalkyl, ($C_2$-$C_8$)-Alkenyl oder ($C_2$-$C_8$)-Alkinyl, wobei die vorstehenden C-haltigen Reste unsubstituiert oder ein- oder mehrfach durch Halogen oder ein- oder zweifach, vorzugsweise einfach Reste aus der Gruppe Hydroxy, ($C_1$-$C_4$)-Alkoxy, ($C_1$-$C_4$)-Alkylthio, ($C_2$-$C_4$)-Alkenyloxy, ($C_2$-$C_6$)-Alkinyloxy, Mono- und Di-(($C_1$-$C_2$)-alkyl)-amino, ($C_1$-$C_4$)-Alkoxycarbonyl, ($C_2$-$C_4$)-Alkenyloxycarbonyl, ($C_2$-$C_4$)-Alkinyloxy-carbonyl, ($C_1$-$C_4$)-Alkylcarbonyl, ($C_2$-$C_4$)-Alkenyl-carbonyl, ($C_2$-$C_4$)-Alkinyl-carbonyl, ($C_1$-$C_4$)-Alkylsulfonyl, Phenyl, Phenyl-($C_1$-$C_4$)-alkoxy-carbonyl, Phenoxy, Phenoxy-($C_1$-$C_4$)-alkoxy, Phenoxy-($C_1$-$C_4$)-alkoxy-carbonyl, wobei die letztgenannten sechs Reste im Phenylring unsubstituiert oder ein- oder mehrfach durch Reste aus der Gruppe Halogen, ($C_1$-$C_2$)-Alkyl, ($C_1$-$C_2$)-Alkoxy, ($C_1$-$C_2$)-Halogenalkyl, ($C_1$-$C_2$) -Halogenalkoxy und Nitro substituiert sind, und Reste der Formeln $SiR'_3$, $-O-N=CR'_2$, $-N=CR'_2$ und $-O-NR'_2-CH(OR')_2$, worin die R' in den genannten Formeln unabhängig voneinander Wasserstoff, ($C_1$-$C_2$)-Alkyl, Phenyl, das unsubstituiert oder ein- oder mehrfach durch Reste aus der Gruppe Halogen, ($C_1$-$C_2$)-Alkyl, ($C_1$-$C_2$)-Alkoxy, ($C_1$-$C_2$)-Halogenalkyl, ($C_1$-$C_2$)-Halogenalkoxy und Nitro substituiert ist, oder paarweise eine ($C_4$-$C_5$)-Alkandiylkette bedeuten, substituiert sind,

$R^2$ Wasserstoff, ($C_1$-$C_8$)-Alkyl, ($C_1$-$C_6$)-Haloalkyl, ($C_3$-$C_{-7}$)-Cycloalkyl oder Phenyl und

$R^3$ Wasserstoff, ($C_1$-$C_8$)-Alkyl, ($C_1$-$C_8$)-Haloalkyl, (($C_1$-$C_4$)-Alkoxy)-($C_1$-$C_4$)-alkyl, ($C_1$-$C_6$)-Hydroxyalkyl, ($C_3$-$C_7$)-Cycloalkyl oder Tri-($C_1$-$C_4$)-alkyl)-silyl

bedeutet.

Von besonderem Interesse sind auch erfindungsgemäße herbizide Mittel, wobei in den Verbindungen der Formeln C1 und C2,

X Wasserstoff, Halogen, Methyl, Ethyl, Methoxy, Ethoxy, ($C_1$-$C_2$)-Halogenalkyl, vorzugsweise Wasserstoff, Halogen oder ($C_1$-$C_2$)-Halogenalkyl

bedeutet.

Bevorzugt sind erfindungsgemäße herbizide Mittel, wobei in den Verbindungen der Formel C1,

X Wasserstoff, Halogen, Nitro oder ($C_1$-$C_4$)-Halogenalkyl,

Z ein Rest der Formel $OR^1$,

n eine ganze Zahl von 1 bis 3,

$R^1$ Wasserstoff, ($C_1$-$C_8$)-Alkyl, ($C_3$-$C_7$)-Cycloalkyl, wobei die vorstehenden C-haltigen Reste unsubstituiert sind oder ein- oder mehrfach durch Reste aus der Gruppe Halogen oder ein- oder zweifach, vorzugsweise unsubstituiert oder einfach, durch Reste aus der Gruppe Hydroxy, ($C_1$-$C_4$)-Alkoxy, (($C_1$-$C_4$)-Alkoxy)-carbonyl, ($C_2$-$C_6$)-Alkenyloxy-carbonyl, (($C_2$-$C_6$)-Alkinyloxy)-carbonyl und Reste der Formeln $SiR'_3$, $-O-N=CR'_2$, $-N=CR'_2$, $-O-NR'_2$, worin die Reste R' in den genannten Formeln unabhängig voneinander Wasserstoff oder ($C_1$-$C_4$)-Alkyl oder paarweise eine ($C_4$-$C_5$)-Alkylenkette bedeuten, substituiert sind,

$R^2$ Wasserstoff, ($C_1$-$C_8$)-Alkyl, ($C_1$-$C_6$)-Haloalkyl, ($C_3$-$C_7$)-Cycloalkyl oder Phenyl und

$R^3$ Wasserstoff, ($C_1$-$C_8$)-Alkyl, ($C_1$-$C_8$)-Haloalkyl, (($C_1$-$C_4$)-Alkoxy)-($C_1$-$C_4$)-alkyl, ($C_1$-$C_6$)-Hydroxyalkyl, ($C_3$-$C_7$)-Cy-

cloalkyl oder Tri-(($C_1$-$C_4$)-alkyl)-silyl

bedeuten.

Bevorzugt sind auch erfindungsgemäße herbizide Mittel, wobei in den Verbindungen der Formel C2,

X Wasserstoff, Halogen oder ($C_1$-$C_4$)-Halogenalkyl und n eine gänze Zahl von 1 bis 3, vorzugsweise $(X)_n$ = 5-Cl,
Z ein Rest der Formel $OR^1$,
R* $CH_2$ und
$R^1$ Wasserstoff, ($C_1$-$C_8$)-Alkyl, ($C_1$-$C_8$)-Haloalkyl, (($C_1$-$C_4$)-Alkoxy)-($C_1$-$C_4$)-alkyl oder (($C_1$-$C_4$)-Alkenyloxy)-($C_1$-$C_4$)-alkyl, vorzugsweise ($C_1$-$C_8$)-Alkyl,

bedeuten.

Besonders bevorzugt sind erfindungsgemäße herbizide Mittel mit Verbindungen der Formel C1, worin

W W1
X Wasserstoff, Halogen oder ($C_1$-$C_2$)-Halogenalkyl und n = 1 - 3, insbesondere $(X)_n$= 2,4-$Cl_2$,
Z ein Rest der Formel $OR^1$,
$R^1$ Wasserstoff, ($C_1$-$C_8$)-Alkyl, ($C_1$-$C_9$)-Haloalkyl, ($C_1$-$C_4$)-Hydroxyalkyl, ($C_3$-$C_7$)-Cycloalkyl, (($C_1$-$C_4$)-Alkoxy)-($C_1$-$C_4$)-alkyl, Tri-(($C_1$-$C_2$)-alkyl)-silyl, vorzugsweise ($C_1$-$C_4$)-Alkyl,
$R^2$ Wasserstoff, ($C_1$-$C_8$)-Alkyl, ($C_1$-$C_4$)-Haloalkyl oder ($C_3$-$C_7$)-Cycloalkyl, vorzugsweise Wasserstoff oder ($C_1$-$C_4$)-Alkyl und
$R^3$ Wasserstoff, ($C_1$-$C_8$)-Alkyl, ($C_1$-$C_4$)-Haloalkyl, ($C_1$-$C_4$)-Hydroxyalkyl, ($C_3$-$C_7$)-Cycloalkyl, (($C_1$-$C_4$)-Alkoxy)-($C_1$-$C_4$)-alkyl oder Tri-(($C_1$-$C_2$)-alkyl)-silyl, vorzugsweise H oder ($C_1$-$C_4$)-Alkyl,

bedeuten.

Besonders bevorzugt.sind auch erfindungsgemäße herbizide Mittel mit Verbindungen der Formel C1, worin

W W2
X Wasserstoff, Halogen oder ($C_1$-$C_2$)-Halogenalkyl und n= 1 - 3, insbesondere $(X)_n$ = 2,4-$Cl_2$,
Z ein Rest der Formel $OR^1$,
$R^1$ Wasserstoff, ($C_1$-$C_8$)-Alkyl, ($C_1$-$C_4$)-Haloalkyl, ($C_1$-$C_4$)-Hydroxyalkyl, ($C_3$-$C_7$)-Cycloalkyl, (($C_1$-$C_4$)-Alkoxy)-($C_1$-$C_4$)-alkyl, Tri-(($C_1$-$C_2$)-alkyl)-silyl, vorzugsweise ($C_1$-$C_4$)-Alkyl, und
$R^2$ Wasserstoff, ($C_1$-$C_8$)-Alkyl, ($C_1$-$C_4$)-Haloalkyl, ($C_3$-$C_7$)-Cycloalkyl oder Phenyl, vorzugsweise Wasserstoff oder ($C_1$-$C_4$)-Alkyl,

bedeuten.

Besonders bevorzugt sind auch erfindungsgemäße herbizide Mittel mit Verbindungen der Formel C1, worin

W W3
X Wasserstoff, Halogen oder ($C_1$-$C_2$)-Halogenalkyl und n= 1 - 3, insbesondere $(X)_n$= 2,4-$Cl_2$,
Z ein Rest der Formel $OR^1$,
$R^1$ Wasserstoff, ($C_1$-$C_8$)-Alkyl, ($C_1$-$C_4$)-Haloalkyl, ($C_1$-$C_4$)-Hydroxyalkyl, ($C_3$-$C_7$)-Cycloalkyl, (($C_1$-$C_4$)-Alkoxy)-($C_1$-$C_4$)-alkyl, Tri-(($C_1$-$C_2$)-alkyl)-silyl, vorzugsweise ($C_1$-$C_4$)-Alkyl, und
$R^2$ ($C_1$-$C_8$)-Alkyl oder ($C_1$-$C_4$)-Haloalkyl, vorzugsweise, $C_1$-Haloalkyl,

bedeuten.

Besonders bevorzugt sind auch erfindungsgemäße herbizide Mittel mit Verbindungen der Formel C1, worin

W W4
X Wasserstoff, Halogen, Nitro, ($C_1$-$C_4$)-Alkyl, ($C_1$-$C_4$)-Alkoxy oder ($C_1$-$C_2$)-Halogenalkyl und n= 1 - 3, vorzugsweise $CF_3$ oder ($C_1$-$C_4$)-Alkoxy,
Z ein Rest der Formel $OR^1$ und
$R^1$ Wasserstoff, ($C_1$-$C_4$)-Alkyl oder (($C_1$-$C_4$)-Alkoxy)-carbonyl-($C_1$-$C_4$)-alkyl, vorzugsweise (($C_1$-$C_4$)-Alkoxy)-CO-$CH_2$-, (($C_1$-$C_4$)-Alkoxy)-CO-C($CH_3$)H-, HO-CO-$CH_2$- oder HO-CO-C($CH_3$)H-,

bedeuten.

Die Verbindungen der Formeln C1 sind aus EP-A-0 333 131, EP-A-0 269 806, EP-A-0 346 620, Internationale

Patentanmeldung PCT/EP 90/01966 und Internationale Patentanmeldung PCT/EP 90/02020 und dort zitierter Literatur bekannt oder können nach oder analog den dort beschriebenen Verfahren hergestellt werden. Die Verbindungen der Formel C2 sind aus EP-A-0 086 750, EP-A-0 094 349 und EP-A-0 191 736 und dort zitierter Literatur bekannt oder können nach oder analog den dort beschriebenen Verfahren hergestellt werden. Sie werden ferner in der DE-A-40 41 121.4 vorgeschlagen.

Besonders bevorzugte Antidots oder Safener oder Gruppen von Verbindungen die sich als Safener oder Antidots für die vorbeschriebenen Produktkombinationen der Erfindung bewährt haben sind unter anderem:

a) Verbindungen vom Typ der Dichlorphenylpyrazolin-3-carbonsäure (d.h. der Formel C1, worin W = W1 und $(X)_n$ = 2,4-$Cl_2$), vorzugsweise Verbindungen wie 1-(2,4-Dichlorphenyl)-5-(ethoxycarbonyl)-5-methyl-2-pyrazolin-3-carbonsäureethylester (Verbindung C1-1) und verwandte Verbindungen, wie sie in der internationalen Anmeldung WO 91/07874 (PCT/EP 90/02020) beschrieben sind;

b) Derivate der Dichlorphenylpyrazolcarbonsäure (d. h. der Formel C1, worin W = W2 und und $(X)_n$ = 2,4-$Cl_2$), vorzugsweise Verbindungen wie 1-(2,4-Dichlorphenyl)-5-methyl-pyrazol-3-carbonsäureethylester (Verbindung C1-2), 1-(2,4-Dichlorphenyl)-5-isopropyl-pyrazol-3-carbonsäureethylester (Verbindung C1-3), 1-(2,4-Dichlorphenyl)-5-(1,1-dimethyl-ethyl)pyrazol-3-carbonsäureethylester (Verbindung C1-4), 1-(2,4-Dichlorphenyl)-5-phenyl-pyrazol-3-carbonsäureethylester (Verbindung C1-5) und verwandte Verbindungen, wie sie in EP-A-0 333 131 und EP-A-0 269 806 beschrieben sind;

c) Verbindungen vom Typ der Triazolcarbonsäuren (d. h. der Formel C1, worin W = W3 und $(X)_n$ = 2,4-$Cl_2$), vorzugsweise Verbindungen wie 1-(2,9-Dichlorphenyl)-5-trichlormethyl-(1H)-1,2,4-triazol-3-carbonsäureethylester (Verbindung C1-6, Fenchlorazol) und verwandte Verbindungen (siehe EP-A-0 174 562 und EP-A-0 346 620);

d) Verbindungen vom Typ der Dichlorbenzyl-2-isoxazolin-3-carbonsäure (d. h. der Formel C1, worin W = W4 und $(X)_n$ = 2,4-$Cl_2$), Verbindungen vom Typ der 5-Benzyl- oder 5-Phenyl-2-isoxazolin-3-carbonsäure, vorzugsweise Verbindungen wie 5-(2,4-Dichlorbenzyl)-2-isoxazolin-3-carbonsäureethylester (Verbindung C1-7) oder 5-Phenyl-2-isoxazolin-3-carbonsäureethylester (Verbindung C1-8) und verwandte Verbindungen wie sie in der internationalen Patentanmeldung WO 91/08202 (PCT/EP 90/01966) beschrieben sind;

e) Verbindungen vom Typ der 8-Chinolinoxyessigsäure (d. h. der Formel C2, worin $(X)_n$ = 5-Cl, Wasserstoff, Z = $OR^1$, R* = $CH_2$),
vorzugsweise Verbindungen wie (5-Chlor-8-chinolinoxy)-essigsäure-(1-methyl-hex-1-yl)-ester (C2-1),
(5-Chlor-8-chinolinoxy)-essigsäure-(1,3-dimethyl-but-1-yl)-ester (C2-2),
(5-Chlor-8-chinolinoxy)-essigsäure-4-allyl-oxybutylester (C2-3),
(5-Chlor-8-chinolinoxy)-essigsäure-1-ällyl-oxy-prop-2-ylester (C2-4),
(5-Chlor-8-chinolinoxy)-essigsäureethylester (C2-5),
(5-Chlor-8-chinolinoxy)-essigsäuremethylester (C2-6),
(5-Chlor-8-chinolinoxy)-essigsäureallylester (C2-7),
(5-Chlor-8-chinolinoxy)-essigsäure-2-(2-prpylideniminoxy)-1-ethylester (C2-8),
(5-Chlor-8-chinolinoxy)-essigsäure-2-oxo-prop-1-ylester (C2-9)
und verwandte Verbindungen wie sie in EP-A-0 086 750, EP-A-0 094 349 und EP-A-0 191 736 oder EP-A-0 492 366 beschrieben sind;

f) Verbindungen vom Typ der (5-Chlor-8-chinolinoxy)-malonsäure, d. h. der Formel C2, worin $(X)_n$ = 5-Cl, Wasserstoff, Z = $OR^1$, R* = -CH(COO-Alkyl)-, vorzugsweise Verbindungen wie (5=Chlor-8-chinolinoxy)-malonsäurediethylester, (5-Chlor-8-chinolinoxy)-malonsäurediallyester, (5-Chlor-8-chinolinoxy)-malonsäuremethylethylester und verwandte Verbindungen wie sie in der deutschen Patentanmeldung P 40 41 121.4 oder der europäischen Patentanmeldung EP-A-0 582 198 beschrieben und vorgeschlagen worden sind;

g) Wirkstoffe vom Typ der Phenoxyessig- bzw. - propionsäurederivate bzw. der aromatischen Carbonsäuren, wie z. B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba);

h) Verbindungen vom Typ der 5,5-Diphenyl-2-isoxazolin-3-carbonsäure, vorzugsweise 5,5-Diphenyl-2-isoxazolin-3-carbonsäureethylester (C3-1);

i) Verbindungen, die als Safener für Reis bekannt sind, wie beispielsweise

Fenchlorim (=4,6-Dichlor-2-phenylpyrimidin, Pesticide Manual, 11.Aufl., 1997, S.511-512),
Dimepiperate (=Piperidin-1-thiocarbonsäure-5-1-methyl-1-phenylethylester, Pesticide Manual, 11. Aufl., 1997, S. 404-405),
Daimuron (=1-(1-Methyl-1-phenylethyl)-3-p-tolylharnstoff, Pesticide Manual, 11. Auflage, 1997, S.330),
Cumyluron (=3-(2-Chlorphenylmethyl)-1-(1-methyl-1-phenyl-ethyl)-harnstoff, JP-A-60/087254),
Methoxyphenon (=3,3'-Dimethyl-4-methoxybenzophenon,
CSB (=1-Brom-4-(chlormethylsulfonyl)-benzol, CAS-Reg. Nr.54091-06-4);
wobei die unter a) bis i) genannten Verbindungen außerdem zumindest teilweise in der EP-A-0 640 587 beschrieben sind, auf die hiermit zu Offenbarungszwecken Bezug genommen wird;

j) Safener und Antidote, die aus der WO 95/07897 bekannt sind.

In einer ganz besonders bevorzugten erfindungsgemäßen Ausführungsform kennzeichnen sich die herbiziden Mittel der Erfindung durch einen zusätzlichen Gehalt an

C) einem oder mehreren Isoxazolin(en) der allgemeinen Formel C3 und deren Salze,

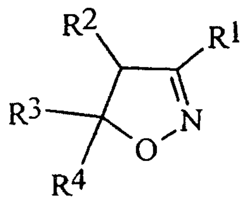

(C3),

worin

| | |
|---|---|
| $R^1$ | Carboxy, Formyl oder einen anderen Acylrest oder ein Derivat der letztgenannten 3 Gruppen, |
| $R^2$ | Wasserstoff, Halogen, $C_1$-$C_{18}$-Alkyl, $C_3$-$C_8$-Cycloalkyl, $C_2$-$C_8$-Alkenly, $C_2$-$C_8$-Alkinyl, $C_1$-$C_{18}$-Alkenyloxy, $C_2$-$C_8$-Alkinyloxy, $C_1$-$C_{18}$-Alkylthio, $C_2$-$C_8$-Alkenylthio, wobei jeder der letztgenannten 9 Reste jeweils unsubstituiert oder durch einen oder mehrere Rest aus der Gruppe Halogen, Nitro, Cyano, $C_1$-$C_4$-Alkoxy oder ($C_1$-$C_8$-Alkoxy)-carbonyl substituiert ist, oder ($C_1$-$C_8$-Alkoxy)carbonyl, |
| $R^3$ und $R^4$ | unabhängig voneinander einen aliphatischen, araliphatischen oder heteroaraliphatischen Rest mit 1 bis 30 C-Atomen, der unsubstituiert oder mit einer oder mehreren funktionellen Gruppen substituiert ist, oder einen aromatischen oder heteroaromatischen Rest, der unsubstituiert oder substituiert ist, |

bedeuten.

Hiervon sind von besonderem Interesse Mittel, die neben A-und B-Verbindung(en) eine Verbindung vom Typ C3 aufweisen, worin in der allgemeinen Formel C3

$R^1$ einen Rest der Formel

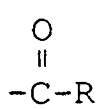 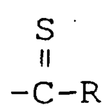 $-CN$

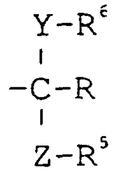
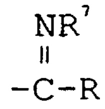
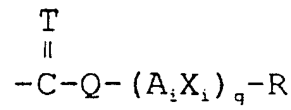

oder

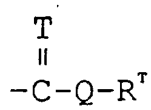

worin R, $R^T$, $R^5$, $R^6$, $R^7$, Y, T, Z, Q, $A_i$, $X_i$ und q wie weiter unten definiert sind,

R Wasserstoff oder einen aliphatischen, aromatischen, heteroaromatischen, araliphatischen oder heteroaraliphatischen Rest mit 1 bis 30 C-Atomen, der unsubstituiert oder mit einer oder mehreren funktionellen Gruppen substituiert ist,

$R^T$ einen Rest der Formel -CO-R, -CS-R, $-NR^fR^g$, $-N=CR^hR^i$ oder $SiR^aR^bR^c$, wobei R die genannte Bedeutung hat und $R^f$, $R^g$, $R^h$ und $R^i$ unabhängig voneinander Wasserstoff, $C_1$-$C_4$-Alkyl, $C_2$-$C_4$-Alkenyl, $C_2$-$C_4$-Alkinyl, Benzyl, Phenyl oder substituiertes Phenyl sind oder $R^f$ und $R^g$ gemeinsam mit dem N-Atom einen 5- oder 6-gliedrigen Heterocyclus, der noch bis zu 2 weitere Heteroatome aus der Gruppe N, O und S enthalten und durch $C_1$-$C_4$-Alkyl substituiert sein kann, bedeuten und

$R^a$, $R^b$ und $R^c$ unabhängig voneinander $C_1$-$C_4$-alkyl, $C_2$-$C_4$-Alkenyl, $C_2$-$C_4$-Alkinyl, Phenyl oder substituiertes Phenly sind,

Y,Z unabhängig voneinander Sauerstoff, Schwefel in seinen verschiedenen Oxidationsstufen, oder $-NR^e$, wobei $R^e$ analog $R^5$ oder $R^6$ definiert ist,

$R^5$, $R^6$ gleich oder verschieden sind und unabhängig voneinander Wasserstoff, $C_1$-$C_6$-Alkyl, $C_2$-$C_6$-Alkenyl, $C_2$-$C_6$-Alkinyl, ($C_1$-$C_4$-Alkyl)-carbonyl, wobei jeder der 4 letztgenannten Rest unsubstituiert oder durch einen oder mehrere Substituenten aus der Gruppe enthaltend Halogen, $C_1$-$C_8$-Haloalkoxy, Nitro, Cyano, Hydroxy, $C_1$-$C_8$-Alkoxy und eine $C_1$-$C_8$-Alkoxygruppe, worin eine oder mehrere $CH_2$-Gruppen durch Sauerstoff ersetzt sind, und $C_1$-$C_8$-Alkylthio, $C_1$-$C_6$-Alkylsulfonyl, $C_2$-$C_8$-Alkenylthio, $C_2$-$C_8$-Alkinylthio, $C_2$-$C_8$-Alkenyloxy, $C_2$-$C_8$-Alkinyloxy, $C_3$-$C_7$-Cycloalkyl, $C_3$-$C_7$-Cycloalkoxy sowie Amino, Mono- und Di-($C_1$-$C_4$-alkyl)-amino substituiert ist, oder

Formyl oder $SiR^aR^bR^c$,
worin $R^a$, $R^b$ und $R^c$ unabhängig voneinander $C_1$-$C_4$-Alkyl, $C_2$-$C_4$-Alkenyl, $C_2$-$C_4$-Alkinyl oder unsubstituiertes oder substituiertes Phenyl bedeuten,
oder $C_3$-$C_8$-Cycloalkyl, $C_3$-$C_8$-Cycloalkenyl, Heterocyclyl mit 3 bis 7 Ringatomen, Aryl, Heteroarly oder Arylcarbonyl,
wobei jeder der letztgenannten 6 Reste unsubstituiert oder durch einen oder mehrere Reste aus der Gruppe $C_1$-$C_8$-Alykl, Halogen, $C_1$-$C_8$-Haloalkoxy, Nitro, Cyano, Hydroxy, $C_1$-$C_8$-Alkoxy und eine $C_1$-$C_8$-Alkoxygruppe, worin eine oder mehrere nicht direkt aneinander gebundene $CH_2$-Gruppen durch Sauerstoff ersetzt sind, und $C_1$-$C_8$-Alkylthio, $C_1$-$C_6$-Alkylsulfonyl, $C_2$-$C_8$-Alkenylthio, $C_2$-$C_8$-Alkinylthio, $C_2$-$C_8$-Alkenyloxy, $C_2$-$C_8$-Alkinyloxy, $C_3$-$C_7$-Cycloalkyl, $C_3$-$C_7$-Cycloalkoxy sowie Amino, Mono- und Di-($C_1$-$C_4$-alkyl)-amino substituiert ist, oder

$R^5$, $R^6$ gemeinsam eine $C_2$-$C_4$-Alkylen-kette oder $C_2$-$C_4$-Alkenylen-kette, welche unsubstituiert oder durch 1 oder 2 Reste aus der Gruppe Methyl, Ethyl, Methoxy, Ethoxy und Halogen substituiert ist, sowie

$R^7$ Wasserstoff, $C_1$-$C_4$-Alkyl, $C_2$-$C_4$-Alkenyl, $C_2$-$C_4$-Alkinyl, unsubstituiertes oder substituiertes $C_6$-$C_{12}$-Aryl oder Heteroaryl, Benzyl, $C_1$-$C_4$-Alkoxy, Acyloxy, Hydroxy, $-NH-CO-NH_2$, $-NH-CS-NH_2$, Mono- und

Di-($C_1$-$C_4$-alkyl)-amino, Acylamino, ($C_1$-$C_4$-Alkyl)-sulfonylamino, $C_6$-$C_{12}$-Aryloxy, Heteroaryloxy, Arylsulfonylamino oder Arylamino, worin Aryl bzw. Heteroaryl in den letztgenannten 4 Resten unsubstituiert oder durch einen oder mehrere Reste aus der Gruppe Halogen, Nitro, ($C_1$-$C_4$)-Alkyl, ($C_1$-$C_4$)-Alkoxy, ($C_1$-$C_4$)-Haloalkyl, und ($C_1$-$C_4$)-Haloalkoxy substituiert ist,

T O, S, $NR^8$, N-$OR^8$ oder N-O-Acyl,

Q O oder S,

q eine ganze Zahl von 0 bis 4,

i eine Laufziffer, welche bei q ungleich 0 alle ganzen Zahlen von 1 bis q annimmt, wobei q die oben angegebene Bedeutung hat,

$X_i$ unabhängig voneinander O, S, $NR^9$, N-$(A_iX_i)_q$-R

$A_i$ unabhängig voneinander unsubstituiertes oder substituiertes $C_1$-$C_6$-Alkylen, $C_2$-$C_6$-Alkenylen, $C_2$-$C_6$-Alkinyl, $C_3$-$C_6$-Cycloalkenylen, Heterocyclylen, Arylen oder Heteroarylen und

$R^8$, $R^9$ unabhängig voneinander H, $C_1$-$C_4$-Alkyl, $C_2$-$C_4$-Alkenyl, $C_2$-$C_4$-Alkinyl, $C_3$-$C_6$-Cycloalkyl, $C_3$-$C_6$-Cycloalkenyl, Heterocyclyl, Aryl oder Heteroaryl bedeuten.

Weiterhin sind von allerhöchstem Interesse erfindungsgemäße Mittel, die eine oder mehrere Verbindungen vom Typ C3 aufweisen, wobei in der allgemeinen Formel C3 mindestens einer der Reste $R^3$ und $R^4$ unabhängig voneinander einen Rest der Formel

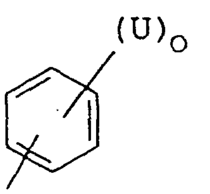

oder

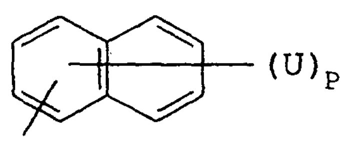

worin

(U) für gleiche oder verschiedene Reste stehen, welche unabhängig voneinander Wasserstoff, Cyano, Nitro, Amino oder $C_1$-$C_8$-Haloalkyl, $C_1$-$C_8$-Haloalkoxy, $C_1$-$C_8$-Alkyl, $C_1$-$C_8$-Alkoxy, Mono-($C_1$-$C_4$-alkyl)-amino, Di-($C_1$-$C_4$-alkyl)-amino, $C_2$-$C_8$-Alkylthio oder $C_1$-$C_8$-Alkylsulfonyl, wobei jeder der letztgenannten 8 Reste unsubstituiert oder durch einen oder mehrere gleiche oder verschiedene Substituenten aus der Gruppe enthaltend Halogen, $C_1$-$C_8$-Haloalkoxy, Nitro, Cyano, Hydroxy, $C_1$-$C_8$-Alkoxy und eine $C_1$-$C_8$-Alkoxygruppe, worin eine oder mehrere $CH_2$-Gruppen durch Sauerstoff ersetzt sind, $C_1$-$C_8$-Alkylthio, $C_1$-$C_6$-Alkylsulfinyl, $C_1$-$C_6$-Alkylsulfonyl, $C_2$-$C_8$-Alkenylthio, $C_2$-$C_8$-Alkinylthio, $C_2$-$C_8$-Alkenyloxy, $C_2$-$C_8$-Alkinyloxy, $C_3$-$C_7$-Cycloalkyl, $C_3$-$C_7$-Cycloalkoxy, Mono- und Di-($C_1$-$C_4$-alkyl)-amino und ($C_1$-$C_8$-Alkoxy)-carbonyl substituiert ist, bedeuten und

o eine ganze Zahl von 1 bis 5 ist und

p eine ganze Zahl von 1 bis 7 ist,

oder einen monocylischen oder bicyclischen Heteroarylrest aus der Gruppe Furyl, Thienyl, Pyrrolyl, Pyrazolyl, Thiazolyl, Oxazolyl, Pyridinyl, Pyrimidinyl, Pyrazinyl, Pyradizinyl und Chinolinyl, der jeweils unsubstituiert oder durch einen oder mehrere der genannten Reste U substituiert ist und

R H, $C_1$-$C_{18}$-Alkyl, $C_3$-$C_{12}$-Cycloalkyl, $C_2$-$C_8$-Alkenyl oder $C_2$-$C_8$-Alkinyl, Heterocyclyl, Phenyl oder Heteroarly, wobei jeder der letztgenannten 7 Reste unabhängig voneinander unsubstituiert oder durch einen oder mehrere Reste aus der Gruppe enthaltend Halogen, Cyano, Thio, Nitro, Hydroxy, $C_1$-$C_8$-Alkyl, letzteres nur für den Fall cyclischer Reste, $C_1$-$C_8$-Haloalkyl, $C_1$-$C_8$-Alkoxy, $C_2$-$C_8$-Alkenyloxy, $C_2$-$C_8$-Alkinyloxy, $C_1$-$C_8$-Haloalkoxy, $C_2$-$C_8$-

Alkenylthio, $C_2$-$C_8$-Alkinylthio, $C_3$-$C_7$-Cycloalkyl, $C_3$-$C_7$-Cycloalkoxy, Reste der Formeln -NR*R** und -CO-NR*R** und -O-CO-NR*R** wobei R* und R** in den letztgenannten Resten unabhängig voneinander Wasserstoff, $C_1$-$C_8$-Alkyl, $C_2$-$C_8$-Alkenyl, $C_2$-$C_8$-Alkinyl, Benzyl, Phenyl oder substituiertes Phenyl sind oder gemeinsam mit dem N-Atom einen 3- bis 8-gliedrigen Heterocylcus, der noch bis zu 2 weitere Heteroatome aus der Gruppe N, O und S enthalten und durch $C_1$-$C_4$-Alkyl substituier sein kann, bedeuten, sowie ($C_1$-$C_8$-Alkoxy)-carbonyl, ($C_1$-$C_8$-Akoxy)-thiocarbonyl, ($C_2$-$C_8$-Alkenyl)-carbonyl, ($C_1$-$C_8$-Alkoxy)-thiocarbonyl, ($C_2$-$C_8$-Alkenyloxy)-carbonyl, ($C_1$-$C_8$-Alkylthio)-carbonly, ($C_2$-$C_8$-Alkenylthio)-carbonyl), ($C_2$-$C_8$-Alkinylthio)-carbonyl, ($C_2$-$C_8$-Alkinyloxy)-carbonyl), Formyl, ($C_1$-$C_8$-Alkyl)-carbonyl, ($C_2$-$C_8$-Alkenyl)-carbonyl, ($C_2$-$C_8$-Alkinyl)-carbonyl, $C_1$-$C_4$-Alkylimino, $C_1$-$C_4$-Alkoxyimino, ($C_1$-$C_8$-Alkyl)-carbonylamino, ($C_2$-$C_8$-Alkenyl)-carbonylamino, ($C_2$-$C_8$-Alkinyl)-carbonylamino, ($C_1$-$C_8$-Alkoxy)-carbonylamino, ($C_2$-$C_8$-Alkenyloxy)-carbonylamino, ($C_2$-$C_8$-Alkinyloxy)-carbonylamino, ($C_1$-$C_8$-Alkyl)-aminocarbonylamino, ($C_1$-$C_6$-Alkyl)-carbonyloxy, das unsubstituiert oder durch Halogen, $NO_2$, $C_1$-$C_4$-Alkoxy oder gegebenenfalls substituiertes Phenyl substituiert ist, und ($C_2$-$C_6$-Alkenyl)-carbonyloxy, ($C_2$-$C_6$-Alkinyl)-carbonyloxy, ($C_1$-$C_8$-Alkoxy)-carbonyloxy, ($C_2$-$C_8$-Alkenyloxy)-carbonyloxy, ($C_2$-$C_8$-Alkinyloxy)-carbonyloxy, $C_1$-$C_8$-Alkylsulfonyl, Phenyl, Phenyl-$C_1$-$C_6$-alkoxy, Phenyl-($C_1$-$C_6$-alkyoxy)-carbonyl, Phenoxy, Phenoxy-$C_1$-$C_6$-alkoxy, Phenoxy-($C_1$-$C_6$-alkoxy)-carbonyl, Phenoxycarbonyl, Phenylcarbonyloxy, Phenylcarbonylamino, Phenyl-($C_1$-$C_6$-alkyl)-carbonylamino und Phenyl-($C_1$-$C_6$-alkyl)-carbonyloxy,
wobei die letztgenannten 11 Reste im Phenylring unsubstituiert oder durch einen oder mehrere Reste aus der Gruppe Halogen, $C_1$-$C_4$-Alkyl, $C_1$-$C_4$-Alkoxy, $C_1$-$C_4$-Haloalkyl, $C_1$-$C_4$-Haloalkoxy substituiert sind, und Reste der Formeln -SiR'$_3$, -O-SiR'$_3$, (R')$_3$Si-$C_1$-$C_6$-alkoxy, -CO-ONR'$_2$, -N=CR'$_2$, -O-NR'$_2$(-CH(OR')$_2$ und -O-($CH_2$)$_m$-CH (OR')$_2$, worin die R' in den genannten Formeln unabhängig voneinander Wasserstoff, $C_1$-$C_4$-Alkyl oder Phenyl, das unsubstituiert oder ein- oder mehrfach durch Reste aus der Gruppe Halogen, $C_1$-$C_4$-Alkyl, $C_1$-$C_4$-Alkoxy, $C_1$-$C_5$-Haloalkyl, $C_1$-$C_4$-Haloalkoxy und Nitro substituiert ist, oder paarweise eine $C_2$-$C_6$-Alkylenkette und m = 0 bis 6 bedeuten,
und einen substituierten Alkoxyrest der R''O-CHR'''CH(OR)-$C_1$-$C_6$-alkoxy, worin die R'' unabhängig voneinander $C_1$-$C_4$-Alkyl oder zusammen eine $C_1$-$C_6$-Alkylengruppe und R''' Wasserstoff oder $C_1$-$C_4$-Alkyl bedeuten, substituiert ist, bedeuten.

Wichtig und interessant sind auch Mittel, die eine Verbindung C3 enthalten, wobei in der allgemeinen Formel C3 $R^2$ Wasserstoff, $C_1$-$C_4$-Alkyl, $C_1$-$C_4$-Alkoxy oder $C_5$-$C_6$-Cycloalkyl und mindestens einer der Reste $R^3$, $R^4$ einen Rest der Formel

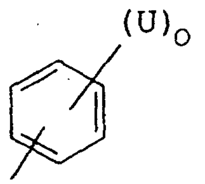

oder

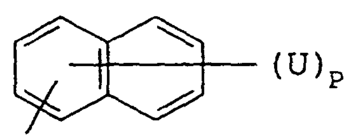

worin

(U) für gleiche oder verschiedene Reste stehen, welche unabhängig voneinander Wasserstoff, Halogen, wie Fluor, Chlor, Brom und Iod, Cyano, Nitro, Amino, $C_1$-$C_4$-Alkoxy, Mono-($C_1$-$C_4$-alkyl)-amino, Di-($C_1$-$C_4$-alkyl)-amino, $C_1$-$C_4$-Alkylthio oder $C_1$-$C_4$-Alkylsulfonyl bedeuten und
o eine ganze Zahl von 1 bis 3 ist und
p eine ganze Zahl von 1 bis 3 ist, oder einer der Reste

$R^3$, $R^4$ unabhängig voneinander einen monocyclischen oder bicyclischen Heteroarylrest aus der Gruppe Furyl, Thienyl, Pyrrolyl, Pyrazolyl, Thiazoyl, Oxazolyl, Pyridinyl, Pyrimidinyl, Pyrazinyl, Pyridazinyl und Chinolinyl, der unsubstituiert oder durch einen bis drei der vorstehend genannten Reste U substituiert ist,

bedeuten.

Äußerst interessant sind Mittel, die eine oder mehrere C3-artige Verbindungen der allgemeinen Formel C3 aufweisen, worin $R^3$, $R^4$ unabhängig voneinander gleiche oder verschiedene Reste der Formel

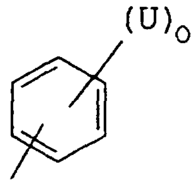

bedeuten, und

R Wasserstoff, $C_1$-$C_8$-Alkyl, $C_4$-$C_7$-Cycloalkyl, $C_2$-$C_8$-Alkinyl, Hetereocyclyl, Phenyl oder Heteroaryl ist, wobei jeder der letztgenannten 7 Reste unabhängig voneinander unsubstituiert oder-durch einen oder mehrere Reste aus der Gruppe enthaltend Halogen, Cyano, Thio, Nitro, Hydroxy, $C_1$-$C_4$-Alkyl, letzteres nur für den Fall cyclischer Reste, $C_1$-$C_4$-Haloalkyl, $C_1$-$C_4$-Alkoxy, $C_2$-$C_4$-Alkenyloxy, $C_2$-$C_4$-Alkinyloxy, $C_1$-$C_4$-Haloalkoxy, $C_1$-$C_4$-Alkylthio, $C_2$-$C_4$-Alkenylthio, $C_2$-$C_4$-Alkinylthio, $C_5$-$C_6$-Cycloalkyl, $C_5$-$C_6$-Cycloalkoxy, Amino, Mono- und Di-($C_1$-$C_4$alkyl)-amino, ($C_1$-$C_6$-Alkoxy)-carbonyl, Reste der Formeln -SiR'$_3$, -O-NR'$_2$, -O-N=CR'$_2$, -N=CR'$_2$, worin R' in den genannten Formeln unabhängig voneinander Wasserstoff, $C_1$-$C_2$-Alkyl oder Phenyl oder paarweise eine $C_2$-$C_5$-Alkylenkette bedeuten, substituiert ist, bedeutet und

$R^T$ einer. Rest der Formel -CO-R, -$NR^fR^g$ oder -N=$CR^hR^i$ bedeutet.

Als besondere Vertreter von Typ C3 sind zu nennen Verbindungen der Formel C3, worin

| | | | |
|---|---|---|---|
| $R^1$ = -$COOCH_3$, | $R^2$ = H, | $R^3$ = $R^4$ = $C_6H_5$ | (C3-1); |
| $R^1$ = -COO-n-$C_3H_7$, | $R^2$ = H, | $R^3$ = $R^4$ = $C_6H_5$ | (C3-2); |
| $R^1$ = -COO-n-$C_4H_9$, | $R^2$ = H, | $R^3$ = $R^4$ = $C_6H_5$ | (C3-3); |
| $R^1$ = -COO-n-$C_5H_{11}$, | $R^2$ = H, | $R^3$ = $R^4$ = $C_6H_5$ | (C3-4); |
| $R^1$ = -$COO^-Na^+$, | $R^2$ = H, | $R^3$ = $R^4$ = $C_6H_5$ | (C3-5); |
| $R^1$ = -COO-$N(CH_3)_4^+$, | $R^2$ = H, | $R^3$ = $R^4$ | (C3-6); |
| $R^1$ = -$COOCH_2CH_2Cl$, | $R^2$ = H, | $R^3$ = $R^4$ | (C3-7); |
| $R^1$ = -$COOCH_2CH_2OCH_3$, | $R^2$ = H, | $R^3$ = $R^4$ | (C3-8) ; |
| $R^1$ = -$COOCH_2SCH_3$, | $R^2$ = H, | $R^3$ = $R^4$ | (C3-9); |
| $R^1$ = -$COOCH_2$-CH = $CH_2$, | $R^2$ = H, | $R^3$ = $R^4$ | (C3-10); |
| $R^1$ = -COOH, | $R^2$ = H, | $R^3$ = $R^4$ | (C3-11). |

$R^5$, $R^6$ gemeinsam eine $C_2$-$C_4$-Alkylen-kette oder $C_2$-$C_4$-Alkenylkette, welche unsubstituiert oder durch 1 oder 2 Reste aus der Gruppe Methyl, Ethyl, Methoxy, Ethoxy und Halogen substituiert ist, sowie

Die Safener (Antidote) der vorstehenden Gruppen a) bis j) (insbesondere Verbindungen der Formeln C1, C2 und C3) reduzieren oder unterbinden phytotoxische Effekte, die beim Einsatz der Produktkombinationen gemäß der Erfindung in Nutzpflanzenkulturen auftreten können, ohne die Wirksamkeit der Herbizide gegen Schadpflanzen zu beeinträchtigen. Hierdurch kann das Einsatzgebiet der erfindungsgemäßen Mischungen von Herbiziden ganz erheblich erweitert werden und insbesondere ist durch die Verwendung von Safenern der Einsatz von Kombinationen möglich, die bislang nur beschränkt oder mit nicht ausreichendem Erfolg eingesetzt werden konnten, d. h. von Kombinationen, die ohne Safener in niedrigen Dosierungen mit wenig Breitenwirkung zu nicht ausreichender Kontrolle der Schadpflanzen führten.

Die herbiziden Mischungen gemäß der Erfindung und die erwähnten Safener können zusammen ( als fertige Formulierung oder im Tank-mix-Verfahren) oder in beliebiger Reihenfolge nacheinander ausgebracht werden. Das Gewichtsverhältnis Safener:Herbizid (Gruppe A, i.e. Verbindungen der Formel I) kann innerhalb weiter Grenzen variieren und ist vorzugsweise im Bereich von 1 : 100 bis 100 : 1, insbesondere von 1 : 100 bis 50 : 1. Die jeweils optimalen Mengen an Herbiziden (Typ-A- und Typ-B-Verbindungen) und Safener sind üblicherweise vom Typ der verwendeten Herbizidmischung und/oder vom verwendeten Safener sowie von der Art des zu behandelnden Pflanzenbestandes abhängig.

Die Safener vom Typ C) können je nach ihren Eigenschaften zur Vorbehandlung des Saatgutes der Kulturpflanze (Beizung der Samen) verwendet werden oder vor der Saat in die Saatfurchen eingebracht oder zusammen mit der Herbizidmischung vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit der Herbizidmischung. Hierzu können Tankmischungen oder Fertigformulierungen eingesetzt werden.

Die benötigten Aufwandmengen der Safener können je nach Indikation und verwendetem Herbizid innerhalb weiter Grenzen schwanken und sind in der Regel im Bereich von 0,001 bis 1 kg, vorzugsweise 0,005 bis 0,2 kg Wirkstoff je Hektar.

Besonders günstige und in Reis hervorragend einsatztaugliche herbizide Mittel ergeben sich im Rahmen der Erfindung, wenn Herbizide aus der Gruppe Aa) in Kombination mit Typ-B-Verbindungen und dem Safener 5,5-Diphenyl-2-isoxazolin-3-carbonsäureethylester (= Verbindung C3-1)) eingesetzt werden.

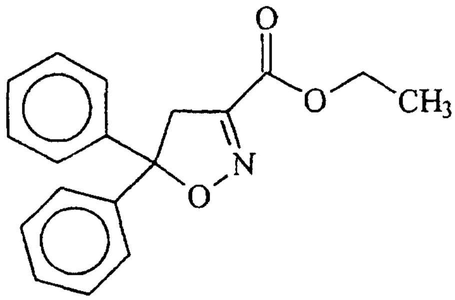

(C3-1)

Für diesen Fall hat sich überraschenderweise herausgestellt, daß Kombinationen aus Typ-A-Verbindungen und dem Safener C3-1) in Reis bereits ohne Zumischung eines weiteren Standardherbizids aus der Gruppe B eine überadditive, quasi-synergistische Wirksamkeit entfalten. Dieser überaus günstig Effekt läßt eine nochmalige Absenkung der Aufwandmengen zu, bei unverändert hoher und breitenwirksamer Kontrolle. Vorzugsweise trifft dies auf Kombinationen aus Verbindungen der Gruppe Aa) zu.

Eine besonders günstige Kombination ist in der gemeinsamen Anwendung von A1) oder A1*) und C3-1, zumindest mit einer Typ B-Verbindung zu sehen.

In diesem Fall wirkt der Safener C3), insbesondere C3-1 auf zweierlei Weise besonders vorteilhaft. Sowohl durch den Schutz der Reiskulturen vor unerwünschten Schädigungen durch die Typ-A-Herbizide als auch durch die synergistische Verstärkung der Wirkung der Einzelherbizide aus der Gruppe A.

Von besonderem Interesse für die Erfindung sind herbizide Mittel, die Typ-A-Verbindungen in einer Menge von 0,5 bis 60 g ai/ha in Kombinationen mit dem Safener C3) in einer Menge von 10 bis 200 g ai/ha enthalten.

Günstig sind auch herbizide Mittel, die sich durch ein Gewichtsverhältnis von Typ-A-Verbindungen : C3) im Bereich von 1 : 40C bis 20 : 1, vorzugsweise 1 : 200 bis 10 : 1 auszeichnen.

Eine besondere Ausführungsform der Erfindung betrifft auch herbizide Mittel, die eine Typ-A-Verbindung, vorzugsweise die Verbindung A1) oder A1*) in einer Menge von 0,1 bis 10 g ai/ha in Kombination mit C3) in einer Menge von 10 - 100 g ai/ha enthalten.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Gegenstand der Erfindung ist auch ein Verfahren zur Bekämpfung von unerwünschten Pflanzen, das dadurch gekennzeichnet ist, daß man auf diese oder die Anbaufläche eine herbizid wirksame Menge einer erfindungsgemäßen Kombination von Wirkstoffen A + B appliziert. Die Wirkstoffe können auf die Pflanzen, Pflanzenteile, Pflanzensamen oder die Anbaufläche ausgebracht werden.

In bevorzugter Verfahrensvariante werden die Verbindungen der Formel (I) oder deren Salze (Typ-A-Verbindungen) in Aufwandmengen von 0,1 bis 100 g ai/ha, bevorzugt von 0,5 bis 60 g ai/ha, ganz besonders bevorzugt zwischen 2 und 40 g ai/ha, angebracht, während die Aufwandmengen für die Verbindungen vom Typ B von 1 bis 5000 g ai/ha betragen. Bevorzugt ist die Ausbringung der Wirkstoffe der Typen A und B gleichzeitig oder zeitlich getrennt im Gewichtsverhältnis 1:20000 bis 200:1. Weiterhin besonders bevorzugt ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Da die Kulturverträglichkeit der erfindungsgemäßen Kombinationen bei gleichzeitig sehr hoher Kontrolle der Schadpflanzen ausgesprochen gut ist, können diese als selektiv angesehen werden. In bevorzugter Verfahrensabwandlung werden herbizide Mittel mit den erfindungsgemäßen Wirkstoffkombinationen daher zur selektiven Bekämpfung unerwünschter Pflanzen eingesetzt.

Besonders günstig gestaltet sich das Verfahren zur selektiven Bekämpfung von Schadpflanzen bei Einsatz der Kombinationspartner vom Typ B) aus den Untergruppen Ba) bis Bd), wenn die herbiziden Mittel der Erfindung in Reis eingesetzt werden.

Die Kombinationspartner vom Typ A bekämpfen alleine angewendet in Reis bereits ein recht breites Spektrum an annuellen und perennierenden Unkräutern, Ungräsern und Cyperaceen.

Das Wirkungsspektrum der Typ A Verbindungen wird durch die Kombination mit den in der Erfindung genannten Typ-B-Partnern jedoch noch deutlich weiter verbessert.

So ergänzen und verstärken die Verbindungen B1) bis B27) aus der Gruppe Ba) u. a. die Wirkung bei der Bekämpfung von Ungräsern in Reis.

Die Kombinationspartner B28) bis B33) aus der Gruppe Bb) gehören meist zu den Wuchsstoffherbiziden, die die Wirkung der Typ-A Verbindungen in Reis vor allem bei der Bekämpfung von Unkräutern aus dem Spektrum der Dikotylen aber auch erheblich gegen Cyperaceen ergänzen und verbessern.

Die Verbindungen aus der Untergruppe Bc) (z.B. B39) bis B42)) sind weitverbreitete Wirkstoffe, die zur Steigerung der Wirksamkeit der Typ-A-Verbindungen bei der Bekämpfung von vornehmlich Cyperaceen vor allem in Reis eingesetzt werden können.

Die Azole und Pyrazole aus der Untergruppe Bd) (z. B. B46) und B47)) können besonders vorteilhaft mit vergleichsweise niedrigen Aufwandmengen zur Bekämpfung von dikotylen Unkräutern in Reis eingesetzt werden. Sie wirken jedoch ebenfalls besonders gut gegen ein breites Spektrum von Schadgräsern, ebenso wie sie Cyperaceen kontrollieren.

Ein vergleichbares Spektrum an Schadpflanzen wird durch die Verbindungen aus der Gruppe der Sulfonylharnstoffe (Verbindungen B57) bis B65) bekämpft, allerdings sind die Aufwandmengen nochmals um ca. eine Größenordnung niedriger.

Je nach Natur des Kombinationspartners B können die erfindungsgemäßen herbiziden Kombinationen vorteilhaft zur Bekämpfung von unerwünschten Pflanzen auch in transgenen Reis-Kulturen eingesetzt werden.

Transgene Kulturen sind solche, in denen die Pflanzen durch genetische Manipulation gegen Herbizide oder Pestizide resistent gemacht werden. Dergestalt veränderte Reis-Kulturpflanzen lassen dann einen selektiven Einsatz zu.

Insgesamt betrifft die Erfindung damit auch die Verwendung von herbiziden Mitteln, enthaltend

A) mindestens einen herbiziden Wirkstoff aus der Gruppe der substituierten Phenylsulfonylharnstoffe der allgemeinen Formel I und deren landwirtschaftlich akzeptierten, d.h. annehmbaren und verträglichen, Salze

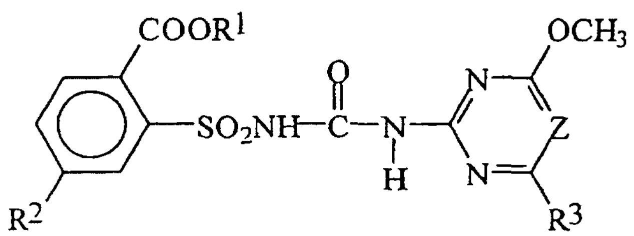

(I),

worin

$R^1$ ($C_1$-$C_8$)-Alkyl, ($C_3$-$C_4$)-Alkenyl, ($C_3$-$C_4$)-Alkinyl oder ($C_1$-$C_4$)-Alkyl, das ein- bis vierfach durch Reste aus der Gruppe Halogen und/oder ($C_1$-$C_2$)-Alkoxy substituiert ist, bedeutet;
$R^2$ I oder $CH_2NHSO_2CH_3$ bedeutet;
$R^3$ Methyl oder Methoxy bedeutet; und
Z N oder CH ist;

und

B) mindestens eine herbizid wirksame Verbindung aus der Gruppe der Verbindungen, welche aus

Ba) selektiv in Reis vorwiegend gegen Gräser wirksamen Herbiziden ausgewählt aus der Gruppe, welche aus B1) Butachlor, B2) Butenachlor, B3) Thenylchlor, B4) Pretilachlor, B5) Mefenacet, B5a) Bay Foe 5043, B6) Naproanilid, B7) Propanil, B8) Etobenzanid, B9) Dimepiperate, B10) Molinate, B11) Thiobencarb, B12) Pyributicarb, B13) Quinclorac, B14a) Sulcotrione, B15) . Cycloxydim, B16) Sethoxydim, B17) NBA 061 = Fentrazamid, B18) Piperophos, B19) Anilofos, B20) Fenoxaprop, Fenoxaprop-P, B21) Haloxyfop, B22) Cyhaolfop, B23) JC-940, B24) Dithiopyr, B25) Bromobutide, B26) Cinmethylin und B27) CH-900 besteht,
Bb) selektiv in Reis vorwiegend gegen dikotyle Schadpflanzen und Cyperaceen wirksamen Herbiziden ausgewählt aus der Gruppe, welche aus B28) 2,4-D, B29) Mecoprop, Mecoprop-P, B30) MCPA, B31) Dicamba, B32) Acifluorfen,
B33a)

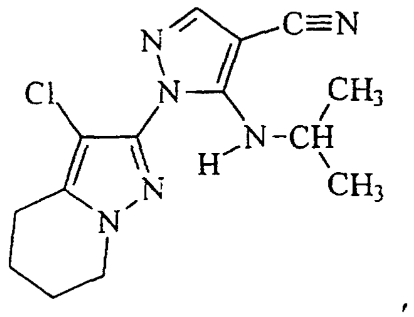

B33b)

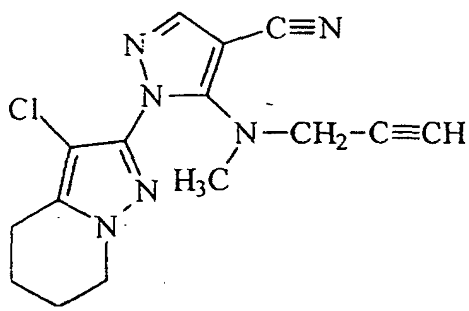

B34) Chlorimuron, B35) Triasulfuron, B36) Ioxynil,
B37) Picloram und B38) Carfentrazon
besteht,
Bc) selektiv in Reis vornehmlich gegen Cyperaceen wirksamen Herbiziden ausgewählt aus der Gruppe, welche aus
B39) Bentazon, B40) Triclopyr, B41) Benfuresate, und B42) Daimuron besteht,
und
Bd) selektiv in Reis vorwiegend gegen Gräser und dikotyle sowie Cyperaceen- Schadpflanzen wirksamen Herbiziden ausgewählt aus der Gruppe, welche aus B43) Pendimethalin, B44) Clomazon, B45) Benzofenap, B46) Pyrazolynate, B47) Pyrazoxyfen, B48) KIH 2023, B49) KIH 6127, B50) Oxadiazon, B51) Oxadiargyl, B52) Acetochlor, B53) Metolachlor, B54) Metosulam, B55) Oxyfluorfen, B56) Dalapon, B57) Metsulfuron, B58) Bensulfuron, B59) Pyrazosulfuron, B60) Cinosulfuron, B61) Imazosulfuron, B62) AC 322,140 (Cyclosulfamuron), B63a) Ethoxysulfuron (HOE 095404), B64) Azimsulfuron (DPX-A8947), B65) Nicosulfuron, B66) Prometryn, B67)Simetryn, B68) Thiazopyr, B69) Pyrazophos, B70) Pentoxazone, B71) Indanofan, B72) LGC40863 und B73) MY100 besteht,

in einem Gewichtsverhältnis von Verbindungen der Formel I oder deren Salze (Typ-A-Verbindungen) und Verbindungen aus der Gruppe B im Bereich von 1:20000 bis 200:1, bevorzugt 1:8000 bis 100:1, besonders bevorzugt 1:4000 bis 50:1, zur Bekämpfung unerwünschter Schadpflanzen in Reiskulturen.

Eine bevorzugte Verwendung betrifft den Einsatz von Kombinationen, die Gehalte von A- und B-Verbindungen in einer synergistisch wirksamen Menge aufweisen.

Außerdem bevorzugt ist die Verwendung von Mischungen mit Kombinationen aus A) und Ba) zur selektiven Bekämpfung von Gräsern in Reis.

Bevorzugt ist auch die Verwendung von Mischungen mit. Kombinationen aus A) und Bb) zur selektiven Bekämpfung von Dikotylen und Cyperaceen in Reis.

Auch bevorzugt ist die Verwendung von Mischungen mit Kombinationen aus A) und Bc) zur selektiven Bekämpfung von Cyperaceen in Reis.

Weiters zweckmäßig ist die Verwendung von Mischungen mit Kombinationen aus A) und Bd) zur selektiven

Bekämpfung von Gräsern, Dikotylen und Cyperaceen in Reis.

Zur Erfindung gehören insbesondere auch Mischungen mit mehr als einem Kombinationspartner A) und/oder mehr als einem Kombinationspartner B)..

Als spezielle Beispiele für die beanspruchten Wirkstoffmischungen mit mehr als zwei Wirkstoffen aus den Gruppen A und B seien folgende genannt, ohne daß dadurch eine Einschränkung nur auf die explizit genannten Kombinationen erfolgen soll:

A1 u./o. A1* + B19 (Anilofos) + B1 (Butachlor);
A1 u./o. A1* + B19 (Anilofos) + B2 (Butenachlor);
A1 u./o. A1* + B19 (Anilofos) + B3 (Thenylchlor);
A1 u./o. A1* + B19 (Anilofos) + B4 (Pretilachlor);
A1 u./o. A1* + B19 (Anilofos) + B5 (Mefenacet);
A1 u./o. A1* + B19 (Anilofos) + B6 (Naproanilid);
A1 u./o. A1* + B19 (Anilofos) + B7 (Propanil);
A1 u./o. A1* + B19 (Anilofos) + B8 (Etobenzanid);
A1 u./o. A1* + B19 (Anilofos) + B9 (Dimepiperate);
A1 u./o. A1* + B19 (Anilofos) + B10 (Molinate);
A1 u./o. A1* + B19 (Anilofos) + B11 (Thiobencarb);
A1 u./o. A1* + B19 (Anilofos) + B12 (Pyributicarb);
A1 u./o. A1* + B19 (Anilofos) + B13 (Quinclorac);
A1 u./o. A1* + B19 (Anilofos) + B14a (Sulcotrione);
A1 u./o. A1* + B19 (Anilofos) + B17 (Bayer NBA 061);
A1 u./o. A1* + B19 (Anilofos) + B18 (Piperophos);
A1 u./o. A1* + B19 (Anilofos) + B20 (Fenoxaprop u./o. Fenoxaprop-P);
A1 u./o. A1* + B19 (Anilofos) + B21 (Haloxyfop);
A1 u./o. A1* + B19 (Anilofos) + B22 (DEH-112);
A1 u./o. A1* + B19 (Anilofos) + B23 (JC-940);
A1 u./o. A1* + B19 (Anilofos) + B24 (Dithiopyr);
A1 u./o. A1* + B19 (Anilofos) + B25 (Bromobutide);
A1 u./o. A1* + B19 (Anilofos) + B26 (Cinmethylin);
A1 u./o. A1* + B19 (Anilofos) + B27 (CH-900);
A1 u./o. A1*.+ B19 (Anilofos) + B28 (2,4-D);
A1 u./o. A1* + B19 (Anilofos) + B29 (Mecoprop und/oder Mecoprop-P);
A1 u./o. A1* + B19 (Anilofos) + B30 (MCPA);
A1 u./o. A1* + B19 (Anilofos) + B31 (Dicamba);
A1 u./o. A1* + B19 (Anilofos) + B32 (Acifluorfen);
A1 u./o. A1* + B19 (Anilofos) + B33a und/oder B33b;
A1 u./o. A1* + B19 (Anilofos) + B39 (Bentazon);
A1 u./o. A1* + B19 (Anilofos) + B40 (Triclopyr);
A1 u./o. A1* + B19 (Anilofos) + B41 (Benfuresate);
A1 u./o. A1* + B19 (Anilofos) + B42 (Daimuron);
A1 u./o. A1* + B19 (Anilofos) + B43 (Pendimethalin);
A1 u./o. A1* + B19 (Anilofos) + B44 (Clomazon);
A1 u./o. A1* + B19 (Anilofos) + B45 (Benzofenap);
A1 u./o. A1* + B19 (Anilofos) + B46 (Pyrazolynate);
A1 u.'/o. A1* + B19 (Anilofos) + B47 (Pyrazoxyfen);
A1 u./o. A1* + B19 (Anilofos) + B48 (KIH 2023);
A1 u./o. A1* + B19 (Anilofos) + B57 (Metsulfuron);
A1 u./o. A1* + B19 (Anilofos) + B58 (Bensulfuron);
A1 u./o. A1* + B19 (Anilofos) + B59 (Pyrazosulfuron);
A1 u./o. A1* + B19 (Anilofos) + B60 (Cinosulfuron);
A1 u./o. A1* + B19 (Anilofos) + B61 (Imazosulfuron);
A1 u./o. A1* + B19 (Anilofos) + B62 (AC 322,140 (Cyclosulfamuron));
A1 u./o. A1* + B19 (Anilofos) + B63a (Ethoxysulfuron (HOE 095404));
A1 u./o. A1* + B19 (Anilofos) + B64 (Azimsulfuron (DPX-A8947));
A1 u./o. A1* + B19 (Anilofos) + B65 (Nicosulfuron);

A2 u./o. A3 + B19 (Anilofos) + B1 (Butachlor);

A2 u./o. A3 + B19 (Anilofos) + B2 (Butenachlor);
A2 u./o. A3 + B19 (Anilofos) + B3 (Thenylchlor);
A2 u./o. A3 + B19 (Anilofos) + B4 (Pretilachlor);
A2 u./o. A3 + B19 (Anilofos) + B5 (Mefenacet);
A2 u./o. A3 + B19 (Anilofos) + B6 (Naproanilid);
A2 u./o. A3 + B19 (Anilofos) + B7 (Propanil);
A2 u./o. A3 + B19 (Anilofos) + B8 (Etobenzanid);
A2 u./o. A3+ B19 (Anilofos) + B9 (Dimepiperate);
A2 u./o. A3 + B19 (Anilofos) + B10 (Molinate);
A2 u./o. A3 + B19 (Anilofos) + B11 (Thiobencarb);
A2 u./o. A3 + B19 (Anilofos) + B12 (Pyributicarb);
A2 u./o. A3 + B19 (Anilofos) + B13 (Quinclorac);
A2 u./o. A3 + B19 (Anilofos) + B14a(Sulcotrione);
A2 u./o. A3 + B19 (Anilofos) + B17 (Bayer NBA 061);
A2 u./o. A3 + B19 (Anilofos) + B18 (Piperophos);
A2 u./o. A3 + B19 (Anilofos) + B20 (Fenoxaprop u./o. Fenoxaprop-P);
A2 u./o. A3 + B19 (Anilofos) + B21 (Haloxyfop);
A2 u./c. A3 + B19 (Anilofos) + B22 (DEH-112);
A2 u./o. A3 + B19 (Anilofos) + B23 (JC-940);
A2 u./o. A3 + B19 (Anilofos) + B24 (Dithiopyr);
A2 u./o. A3 + 819 (Anilofos) + B25 (Bromobutide);
A2 u./o. A3 + B19 (Anilofos) + B26 (Cinmethylin);
A2 u./o. A3 + B19 (Anilofos) + B27 (CH-900);
A2 u./o. A3 + B19 (Anilofos) + B28 (2,4-D);
A2 u./o. A3 + 819 (Anilofos) + B29 (Mecoprop und/oder Mecoprop-P);
A2 u./o. A3 + B19 (Anilofos) + B30 (MCPA);
A2 u./o. A3 + B19 (Anilofos) + B31 (Dicamba);
A2 u./o. A3 + B19 (Anilofos) + B32 (Acifluorfen);
A2 u./o. A3 + B19 (Anilofos) + B33a und/oder B33b;
A2 u./o. A3 + B19 (Anilofos) + B39 (Bentazon);
A2 u./o. A3 + B19 (Anilofos) + B40 (Triclopyr);
A2 u./o. A3 + B19 (Anilofos) + B41 (Benfuresate);
A2 u./o. A3 + B19 (Anilofos) + B42 (Daimuron);
A2 u./o. A3 + B19 (Anilofos) + B43 (Pendimethalin);
A2 u./o. A3 + B19 (Anilofos) + B44 (Clomazon);
A2 u./o. A3 + B19 (Anilofos) + B45 (Benzofenap);
A2 u./o. A3 + B19 (Anilofos) + B46 (Pyrazolynate);
A2 u./o. A3 + B19 (Anilofos) + B47 (Pyrazoxyfen);
A2 u./o. A3 + B19 (Anilofos) + B48 (KIH 2023);
A2 u./o. A3 + B19 (Anilofos) + B57 (Metsulfuron);
A2 u./o. A3 + B19 (Anilofos) + B58 (Bensulfuron);
A2 u./o. A3 + B19 (Anilofos) + B59 (Pyrazosulfuron);
A2 u./o. A3 + B19 (Anilofos) + B60 (Cinosulfuron);
A2 u./o. A3 + B19 (Anilofos) + B61 (Imazosulfuron);
A2 u./o. A3 + B19 (Anilofos) + B62 (AC 322,140 (Cyclosulfamuron));
A2 u./o. A3 + B19 (Anilofos) + B63a (Ethoxysulfuron (HOE 095404));
A2 u./o. A3 + B19 (Anilofos) + B64 (Azimsulfuron (DPX-A8947));
A2 u./o. A3 + B19 (Anilofos) + B65 (Nicosulfuron);

A1 u./o. A1* u./o. A2 u./o. A3 + B63a (Ethoxysulfuron) + B1 (Butachlor);
A1 u./o. A1* u./o. A2 u./o. A3 + B63a (Ethoxysulfuron) + B2 (Butenachlor);
A1 u./o. A1* u./o. A2 u./o. A3 + B63a (Ethoxysulfuron) + B3 (Thenylchlor);
A1 u./o. A1* u./o. A2 u./o. A3 + B63a (Ethoxysulfuron) + B4 (Pretilachlor);
A1 u./o. A1* u./o. A2 u./o. A3 + B63a (Ethoxysulfuron) + B5 (Mefenacet);
A1 u./o. A1* u./o. A2 u./o. A3 + B63a (Ethoxysulfuron) + B6 (Naproanilid);
A1 u./o. A1* u./o. A2 u./o. A3 + B63a (Ethoxysulfuron) + B7 (Propanil);
A1 u./o. A1* u./o. A2 u./o. A3 + B63a (Ethoxysulfuron) + B8 (Etobenzanid);
A1 u./o. A1* u./o. A2 u./o. A3 + B63a (Ethoxysulfuron) + B9 (Dimepiperate);

A1 u-/o. A1* u./o. A2 u./o. A3 + B63a (Ethoxysulfuron) + B10 (Molinate);
A1 u./o. A1* u./o. A2 u./o. A3 + B63a (Ethoxysulfuron) + B11 (Thiobencarb);
A1 u./o. A1* u./o. A2 u./o. A3 + B63a (Ethoxysulfuron) + B12 (Pyributicarb);
A1 u./o. A1* u./o. A2 u./o. A3 + B63a (Ethoxysulfuron) + B13 (Quinclorac);
A1 u./o. A1* u./o. A2 u./o. A3 + B63a (Ethoxysulfuron) + B14a(Sulcotrione);
A1 u./o. A1* u./o. A2 u./o. A3 + B63a (Ethoxysulfuron) + B17 (Bayer NBA 061);
A1 u./o. A1* u./o. A2 u./o. A3 + B63a (Ethoxysulfuron) + B18 (Piperophos);
A1 u./o. A1* u./o. A2 u./o. A3 + B63a (Ethoxysulfuron) + B20 (Fenoxaprop u./o. Fenoxaprop-P);
A1 u./o. A1* u./o. A2 u./o. A3 + B63a (Ethoxysulfuron) + B21 (Haloxyfop);
A1 u./o. A1* u./o. A2 u./o. A3 + B63a (Ethoxysulfuron) + B22 (DEH-112);
A1 u./o. A1* u./o. A2 u./o. A3 + B63a (Ethoxysulfuron) + B23 (JC-940);
A1 u./o. A1* u./o. A2 u./o. A3 + B63a (Ethoxysulfuron) + B24 (Dithiopyr);
A1 u./o. A1* u./o. A2 u./o. A3 + B63a (Ethoxysulfuron) + B25 (Bromobutide);
A1 u./o. A1* u./o. A2 u./o. A3 + B63a (Ethoxysulfuron) + B26 (Cinmethylin);
A1 u./o. A1* u./o. A2 u./o. A3 + B63a (Ethoxysulfuron) + B27 (CH-900);
A1 u./o. A1* u./o. A2 u./o. A3 + B63a (Ethoxysulfuron) + B28 (2,4-D);
A1 u./o. A1* u./o. A2 u./o. A3 + B63a (Ethoxysulfuron) + B29 (Mecoprop und/oder Mecoprop-P);
A1 u./o. A1* u./o. A2 u./o. A3 + B63a (Ethoxysulfuron) + B30 (MCPA);
A1 u./o. A1* u./o. A2 u./o. A3 + B63a (Ethoxysulfuron) + B31 (Dicamba);
A1 u./o. A1* u./o. A2 u./o. A3 + B63a (Ethoxysulfuron) + B32 (Acifluorfen);
A1 u./o. A1* u./o. A2 u./o. A3 + B63a (Ethoxysulfuron) + B33a und/oder B33b;
A1 u./o. A1* u./o. A2 u./o. A3 + B63a (Ethoxysulfuron) + B39 (Bentazon);
A1 u./o. A1* u./o. A2 u./o. A3 + B63a (Ethoxysulfuron) + B40 (Triclopyr);
A1 u./o. A1* u./o. A2 u./o. A3 + B63a (Ethoxysulfuron) + B41 (Benfuresate);
A1 u./o. A1* u./o. A2 u./o. A3 + B63a (Ethoxysulfuron) + B42 (Daimuron);
A1 u./o. A1* u./o. A2 u./o. A3 + B63a (Ethoxysulfuron) + B43 (Pendimethalin);
A1 u./o. A1* u./o. A2 u./o. A3 + B63a (Ethoxysulfuron) + B44 (Clomazon);
A1 u./o. A1* u./o. A2 u./o. A3 + B63a (Ethoxysulfuron) + B45 (Benzofenap);
A1 u./o. A1* u./o. A2 u./o. A3 + B63a (Ethoxysulfuron) + B46 (Pyrazolynate);
A1 u./o. A1* u./o. A2 u./o. A3 + B63a (Ethoxysulfuron) + B47 (Pyrazoxyfen);
A1 u./o. A1* u./o. A2 u./o. A3 + B63a (Ethoxysulfuron) + B48 (KIH 2023);
A1 u./o. A1* u./o. A2 u./o. A3 + B63a (Ethoxysulfuron) + B57 (Metsulfuron);
A1 u./o. A1* u./o. A2 u./o. A3 + B63a (Ethoxysulfuron) + B58 (Bensulfuron);
A1 u./o. A1* u./o. A2 u./o. A3 + B63a (Ethoxysulfuron) + B59 (Pyrazosulfuron);
A1 u./o. A1* u./o. A2 u./o. A3 + B63a (Ethoxysulfuron) + B60 (Cinosulfuron);
A1 u./o. A1* u./o. A2 u./o. A3 + B63a (Ethoxysulfuron) + B61 (Imazosulfuron);
A1 u./o. A1* u./o. A2 u./o. A3 + B63a (Ethoxysulfuron) + B62 (AC 322,140 (Cyclosulfamuron));
A1 u./o. A1* u./o. A2 u./o. A3 + B63a (Ethoxysulfuron) + B64 (Azimsulfuron (DPX-A8947));
A1 u./o. A1* u./o. A2 u./o. A3 + B63a (Ethoxysulfuron) + B65 (Nicosulfuron);

A1 u./o. A1* u./o. A2 u./o. A3 + B20 (Fenoxaprop u./o. Fenoxaprop-P) + B1 (Butachlor);
A1 u./o. A1* u./o. A2 u./o. A3 + B20 (Fenoxaprop u./o. Fenoxaprop-P) + 32 (Butenachlor);
A1 u./o. A1* u./o. A2 u./o. A3 + B20 (Fenoxaprop u./o. Fenoxaprop-P) + B3 (Thenylchlor);
A1 u./o. A1* u./o. A2 u./o. A3 + B20 (Fenoxaprop u./o. Fenoxaprop-P) + B4 (Pretilachlor);
A1 u./o. A1* u./o. A2 u./o. A3 + B20 (Fenoxaprop u./o. Fenoxaprop-P) + B5 (Mefenacet);
A1 u./o. A1* u./o. A2 u./o. A3 + B20 (Fenoxaprop u./o. Fenoxaprop-P) + B6 (Naproanilid);
A1 u./o. A1* u./o. A2 u./o. A3 + B20 (Fenoxaprop u./o. Fenoxaprop-P) + B7 (Propanil);
A1 u./o. A1* u./o. A2 u./o. A3 + B20 (Fenoxaprop u./o. Fenoxaprop-P) + B8 (Etobenzanid);
A1 u./o. A1* u./o. A2 u./o. A3 + B20 (Fenoxaprop u./o. Fenoxaprop-P) + B9 (Dimepiperate);
A1 u./o. A1* u./o. A2 u./o. A3 + B20 (Fenoxaprop u./o. Fenoxaprop-P) + B10 (Molinate);
A1 u./o. A1* u./o. A2 u./o. A3 + B20 (Fenoxaprop u./o. Fenoxaprop-P) + B11 (Thiobencarb);
A1 u./o. A1* u./o. A2 u./o. A3 + B20 (Fenoxaprop u./o. Fenoxaprop-P) + B12 (Pyributicarb);
A1 u./o. A1* u./o. A2 u./o. A3 + B20 (Fenoxaprop u./o. Fenoxaprop-P) + B13 (Quinclorac);
A1 u./o. A1* u./o. A2 u./o. A3 + B20 (Fenoxaprop u./o. Fenoxaprop-P) + B14a (Sulcotrione);
A1 u./o. A1* u./o. A2 u./o. A3 + B20 (Fenoxaprop u./o. Fenoxaprop-P) + B17 (Bayer NBA 061);
A1 u./o. A1* u./o. A2 u./o. A3 + B20 (Fenoxaprop u./o. Fenoxaprop-P) + B18 (Piperophos);
A1 u./c. A1* u./o. A2 u./o. A3 + B20 (Fenoxaprop u./o. Fenoxaprcp-P) + B21 (Haloxyfop);
A1 u./o. A1* u./o. A2 u./o. A3 + B20 (Fenoxaprop u./o. Fenoxaprop-P) + B22 (DEH-112);

A1 u./o. A1* u./o. A2 u./o. A3 + B20 (Fenoxaprop u./o. Fenoxaprop-P) + B23 (JC-940);
A1 u./o. A1* u./o. A2 u./o. A3 + B20 (Fenoxaprop u./o. Fenoxaprop-P) + B24 (Dithiopyr);
A1 u./o. A1* u./o. A2 u./o. A3 + B20 (Fenoxaprop u./o. Fenoxaprcp-P) + B25 (Bromobutide);
A1 u./o. A1* u./o. A2 u./o. A3 + B20 (Fenoxaprop u./o. Fenoxaprop-P) + B26 (Cinmethylin);
A1 u./o. A1* u./o. A2 u./o. A3 + B20 (Fenoxaprop u./o. Fenoxaprop-P) + B27 (CH-900);
A1 u./o. A1* u./o. A2 u./o. A3 + B20 (Fenoxaprop u./o. Fenoxaprop-P) + B28 (2,4-D);
A1 u./o. A1* u./o. A2 u./o. A3 + B20 (Fenoxaprop u./o. Fenoxaprop-P) + B29 (Mecoprop und/oder Mecoprop-P);
A1 u./o. A1* u./o. A2 u./o. A3 + B20 (Fenoxaprop u./o. Fenoxaprop-P) + B30 (MCPA);
A1 u./o. A1* u./o. A2 u./o. A3 + B20 (Fenoxaprop u./o. Fenoxaprop-P) + B31 (Dicamba);
A1 u./o. A1* u./o. A2 u./o. A3 + B20 (Fenoxaprop u./o. Fenoxaprop-P) + B32 (Acifluorfen);
A1 u./o. A1* u./o. A2 u./o. A3 + B20 (Fenoxaprop u./o. Fenoxaprop-P) + B33a und/oder B33b;
A1 u./o. A1* u./o. A2 u./o. A3 + B20 (Fenoxaprop u./o. Fenoxaprop-P) + B39 (Bentazon);
A1 u./o. A1* u./o. A2 u./o. A3 + B20 (Fenoxaprop u./o. Fenoxaprop-P) + B40 (Triclopyr);
A1 u./o. A1* u./o. A2 u./o. A3 + B20 (Fenoxaprop u./o. Fenoxaprop-P) + B41 (Benfuresate);
A1 u./o. A1* u./o. A2 u./o. A3 + B20 (Fenoxaprop u./o. Fenoxaprop-P) + B42 (Daimuron);
A1 u./o. A1* u./o. A2 u./o. A3 + B20 (Fenoxaprop u./o. Fenoxaprop-P) + B43 (Pendimethalin);
A1 u./o. A1* u./o. A2 u./o. A3 + B20 (Fenoxaprop u./o. Fenoxaprop-P) + B44 (Clomazon);
A1 u./o. A1* u./o. A2 u./o. A3 + B20 (Fenoxaprop u./o. Fenoxaprop-P) + B45 (Benzofenap);
A1 u./o. A1* u./o. A2 u./o. A3 + B20 (Fenoxaprop u./o. Fenoxaprop-P) + B46 (Pyrazolynate);
A1 u./o. A1* u./o. A2 u./o. A3 + B20 (Fenoxaprop u./o. Fenoxaprop-P) + B47 (Pyrazoxyfen);
A1 u./o. A1* u./o. A2 u./o. A3 + B20 (Fenoxaprop u./o. Fenoxaorop-P) + B48 (KIH 2023);
A1 u./o. A1* u./o. A2 u./o. A3 + B20 (Fenoxaprop u./o. Fenoxaprop-P) + 857 (Metsulfuron);
A1 u./o. A1* u./o. A2 u./o. A3 + B20 (Fenoxaprop u./o. Fenoxaprop-P) + B58 (Bensulfuron);
A1 u./o. A1* u./o. A2 u./o. A3 + B20 (Fenoxaprop u./o. Fenoxaprop-P) + B59 (Pyrazosulfuron);
A1 u./o. A1* u./o. A2 u./o. A3 + B20 (Fenoxaprop u./o. Fenoxaprop-P) + B60 (Cinosulfuron);
A1 u./o. A1* u./o. A2 u./o. A3 + B20 (Fenoxaprop u./o. Fenoxaprop-P) + B61 (Imazosulfuron);
A1 u./o. A1* u./o. A2 u./o. A3 + B20 (Fenoxaprop u./o. Fenoxaprop-P) + B62 (AC 322,140 (Cyclosulfamuron));
A1 u./o. A1* u./o. A2 u./o. A3 + B20 (Fenoxaprop u./o. Fenoxaprop-P) + B64 (Azimsulfuron (DPX-A8947));
A1 u./o. A1* u./o. A2 u./o. A3 + B20 (Fenoxaprop u./o. Fenoxaprop-P) + B65 (Nicosulfuron);

Die vorbeschriebenen Mischungen mit mehr als zwei Komponenten können zweckmäßig zusammen mit einem oder mehreren Safenern eingesetzt werden. Ein Beispiel für einen bevorzugten Safener ist (5-Chlor-8-chinolinoxy)-essigsäure-(1-methyl-hex-1-yl)-ester (C2-1); es resultieren beispielsweise folgende Mischungen:

A1 u./o. A1* u./.o. A2 u./o. A3 + B19 (Anilofos) + B1 (Butachlor) + (C2-1);
A1 u./o. A1* u./o. A2 u./o. A3 + B19 (Anilofos) + B2 (Butenachlor) + (C2-1);
A1 u./o. A1* u./o. A2 u./o. A3 + B19 (Anilofos) + B3 (Thenylchlor) + (C2-1);
A1 u./o. A1* u./o. A2 u./o. A3 + B19 (Anilofos) + B4 (Pretilachlor) + (C2-1);
A1 u./o. A1* u./o. A2 u./o. A3 + B19 (Anilofos) + B5 (Mefenacet) + (C2-1);
A1 u./o. A1* u./o. A2 u./o. A3 + B19 (Anilofos) + B6 (Naproanilid) + (C2-1);
A1 u./o. A1* u./o. A2 u./o. A3 + B19 (Anilofos) + B7 (Propanil) + (C2-1);
A1 u./o. A1* u./o. A2 u./o. A3 + B19 (Anilofos) + B8 (Etobenzanid) + (C2-1);
A1 u./o. A1* u./o. A2 u./o. A3 + B19 (Anilofos) + B9 (Dimepiperate) + (C2-1);
A1 u./o. A1* u./o. A2 u./o. A3 + B19 (Anilofos) + B10 (Molinate) + (C2-1);
A1 u./o. A1* u./o. A2 u./o. A3 + B19 (Anilofos) + B11 (Thiobencarb) + (C2-1);
A1 u./o. A1* u./o. A2 u./o. A3 + B19 (Anilofos) + B12 (Pyributicarb) + (C2-1);
A1 u./o. A1* u./o. A2 u./o. A3 + B19 (Anilofos) + B13 (Quinclorac) + (C2-1);
A1 u./o. A1* u./o. A2 u./o. A3 + B19 (Anilofos) + B14a(Sulcotrione) + (C2-1);
A1 u./o. A1* u./o. A2 u./o. A3 + B19 (Anilofos) + B17 (Bayer NBA 061) + (C2-1);
A1 u./o. A1* u./o. A2 u./o. A3 + B19 (Anilofos) + B18 (Piperophos) + (C2-1);
A1 u./o. A1* u./o. A2 u./o. A3 + B19 (Anilofos) + B20 (Fenoxaprop u./c. Fenoxaprop-P) + (C2-1);
A1 u./o. A1* u./o. A2 u./o. A3 + B19 (Anilofos) + B21 (Haloxyfop) + (C2-1);
A1 u./o. A1* u./o. A2 u./o. A3 + B19 (Anilofos) + B22 (DEH-112) + (C2-1);
A1 u./o. A1* u./o. A2 u./o. A3 + B19 (Anilofos) + B23 (JC-940) + (C2-1);
A1 u./o. A1* u./o. A2 u./o. A3 + B19 (Anilofos) + B24 (Dithiopyr) + (C2-1);
A1 u./o. A1* u./o. A2 u./o. A3 + B19 (Anilofos) + B25 (Bromobutide) + (C2-1);
A1 u./o. A1* u./o. A2 u./o. A3 + B19 (Anilofos) + B26 (Cinmethylin) + (C2-1);
A1 u./o. A1* u./o. A2 u./o. A3 + B19 (Anilofos) + B27 (CH-900) + (C2-1);

A1 u./o. A1* u./o. A2 u./o. A3 + B19 (Anilofos) + B28 (2,4-D) + (C2-1);
A1 u./o. A1* u./o. A2 u./o. A3 + B19 (Anilofos) + B29 (Mecoprop und/oder Mecoprop-P) + (C2-1);
A1 u./o. A1* u./o. A2 u./o. A3 + B19 (Anilofos) + B30 (MCPA) + (C2-1);
A1 u./o. A1* u./o. A2 u./o. A3 + B19 (Anilofos) + B31 (Dicamba) + (C2-1);
A1 u./o. A1* u./o. A2 u./o. A3 + B19 (Anilofos) + B32 (Acifluorfen) + (C2-1);
A1 u./o. A1* u./o. A2 u./o. A3 + B19 (Anilofos) + B33a und/oder 333b + (C2-1);
A1 u./o. A1* u./o. A2 u./o. A3 + B19 (Anilofos) + B39 (Bentazon) + (C2-1);
A1 u./o. A1* u./o. A2 u./o. A3 + B19 (Anilofos) + B40 (Triclopyr) + (C2-1);
A1 u./o. A1* u./o. A2 u./o. A3 + B19 (Anilofos) + B41 (Benfuresate) + (C2-1);
A1 u./o. A1* u./o. A2 u./o. A3 + B19 (Anilofos) + B42 (Daimuron) + (C2-1);
A1 u./o. A1* u./o. A2 u./o. A3 + B19 (Anilofos) + B43 (Pendimethalin) + (C2-1);
A1 u./o. A1* u./o. A2 u./o. A3 + B19 (Anilofos) + B44 (Clomazon) + (C2-1);
A1 u./o. A1* u./o. A2 u./o. A3 + B19 (Anilofos) + B45 (Benzofenap) + (C2-1);
A1 u./o. A1* u./o. A2 u./o. A3 + B19 (Anilofos) + B46 (Pyrazolynate) + (C2-1);
A1 u./o. A1* u./o. A2 u./o. A3 + B19 (Anilofos) + B47 (Pyrazoxyfen) + (C2-1);
A1 u./o. A1* u./o. A2 u./o. A3 + B19 (Anilofos) + B48 (KIH 2023) - (C2-1);
A1 u./o. A1* u./o. A2 u./o. A3 + B19 (Anilofos) + B57 (Metsulfuron) + (C2-1);
A1 u./o. A1* u./o. A2 u./o. A3 + B19 (Anilofos) + B58 (Bensulfuron) + (C2-1);
A1 u./o. A1* u./o. A2 u./o. A3 + B19 (Anilofos) + B59, (Pyrazosulfuron) + (C2-1);
A1 u./o. A1* u./o. A2 u./o. A3 + B19 (Anilofos) + B60 (Cinosulfuron) + (C2-1);
A1 u./o. A1* u./o. A2 u./o. A3 + B19 (Anilofos) + B61 (Imazosulfuron) + (C2-1);
A1 u./o. A1* u./o. A2 u./o. A3 + B19 (Anilofos) + B62 (AC 322,140 (Cyclosulfamuron)) + (C2-1);
A1 u./o. A1* u./o. A2 u./o. A3 + B19 (Anilofos) + B63a (Ethoxysulfuron (HOE 095404)) + (C2-1);
A1 u./o. A1* u./o. A2 u./o. A3 + B19 (Anilofos) + B64 (Azimsulfuron (DPX-A8947)) + (C2-1);
A1 u./o. A1* u./o. A2 u./o. A3 + B19 (Anilofos) + B65 (Nicosulfuron) + (C2-1);

A1 u./o. A1* u./o. A2 u./o. A3 + B63a (Ethoxysulfuron) + B1 (Butachlor) + (C2-1);
A1 u./o. A1* u./o. A2 u./o. A3 + B63a (Ethoxysulfuron) + B2 (Butenachlor) + (C2-1);
A1 u./o. A1* u./o. A2 u./o. A3 + B63a (Ethoxysulfuron) + B3 (Thenylchlor) + (C2-1);
A1 u./o. A1* u./o. A2 u./o. A3 + B63a (Ethoxysulfuron) + B4 (Pretilachlor) + (C2-1);
A1 u./o. A1* u./o. A2 u./o. A3 + B63a (Ethoxysulfuron) + B5 (Mefenacet) + (C2-1);
A1 u./c. A1* u./o. A2 u./o. A3 + B63a (Ethoxysulfuron) + B6 (Naproanilid) + (C2-1);
A1 u./o. A1* u./o. A2 u./o. A3 + B63a (Ethoxysulfuron) + B7 (Propanil) + (C2-1);
A1 u./o. A1* u./o. A2 u./o. A3 + B63a (Ethoxysulfuron) + B8 (Etobenzanid) + (C2-1);
A1 u./o. A1* u./o. A2 u./o. A3 + B63a (Ethoxysulfuron) + B9 (Dimepiperate) + (C2-1);
A1 u./c. A1* u./o. A2 u./o. A3 + B63a (Ethoxysulfuron) + B10 (Molinate) + (C2-1);
A1 u./c. A1* u./o. A2 u./o. A3 + B63a (Ethoxysulfuron) + B11 (Thiobencarb) + (C2-1);
A1 u./o. A1* u./o. A2 u./o. A3 + B63a (Ethoxysulfuron) + B12 (Pyributicarb) + (C2-1);
A1 u./o. A1* u./o. A2 u./o. A3 + B63a (Ethoxysulfuron) + B13 (Quinclorac) + (C2-1);
A1 u./o. A1* u./o. A2 u./o. A3 + B63a (Ethoxysulfuron) + B14a(Sulcotrione) + (C2-1);
A1 u./o. A1* u./o. A2 u./o. A3 + B63a (Ethoxysulfuron) + B17 (Bayer NBA 061) + (C2-1);
A1 u./o. A1* u./o. A2 u./o. A3 + B63a (Ethoxysulfuron) + B18 (Piperophos) + (C2-1);
A1 u./o. A1* u./o. A2 u./o. A3 + B63a (Ethoxysulfuron) + B20 (Fenoxaprop u./o. Fenoxaprop-P) + (C2-1);
A1 u./o. A1* u./o. A2 u./o. A3 + B63a (Ethoxysulfuron) + B21 (Haloxyfop) + (C2-1);
A1 u./o. A1* u./o. A2 u./o. A3 + B63a (Ethoxysulfuron) + B22 (DEH-112) + (C2-1);
A1 u./o. A1* u./o. A2 u./o. A3 + B63a (Ethoxysulfuron) + B23 (JC-940) + (C2-1);
A1 u./o. A1* u./o. A2 u./o. A3 + B63a (Ethoxysulfuron) + B24 (Dithiopyr) + (C2-1);
A1 u./o. A1* u./o. A2 u./o. A3 + B63a (Ethoxysulfuron) + B25 (Bromobutide) + (C2-1);
A1 u./o. A1* u./o. A2 u./o. A3 + B63a (Ethoxysulfuron) + B26 (Cinmethylin) + (C2-1);
A1 u./o. A1* u./o. A2 u./o. A3 + B63a (Ethoxysulfuron) + B27 (CH-900) + (C2-1);
A1 u./o. A1* u./o. A2 u./o. A3 + B63a (Ethoxysulfuron) + B28 (2,4-D) + (C2-1);
A1 u./o. A1* u./o. A2 u./o. A3 + B63a (Ethoxysulfuron) + B29 (Mecoprop und/oder Mecoprop-P) + (C2-1);
A1 u./o. A1* u./o. A2 u./o. A3 + B63a (Ethoxysulfuron) + B30 (MCPA) + (C2-1);
A1 u./o. A1* u./o. A2 u./o. A3 + B63a (Ethoxysulfuron) + B31 (Dicamba) + (C2-1);
A1 u./o. A1* u./o. A2 u./o. A3 + B63a (Ethoxysulfuron) + B32 (Acifluorfen) + (C2-1);
A1 u./o. A1* u./o. A2 u./o. A3 + B63a (Ethoxysulfuron) + B33a und/oder B33b + (C2-1);
A1 u./o. A1* u./o. A2 u./o. A3 + B63a (Ethoxysulfuron) + B39 (Bentazon) + (C2-1);
A1 u./o. A1* u./o. A2 u./o. A3 + B63a (Ethoxysulfuron) + B40 (Triciopyr) + (C2-1);

A1 u../o. A1* u./o. A2 u./o. A3 + B63a (Ethoxysulfuron) + B41 (Benfuresate) + (C2-1);
A1 u./o. A1* u./o. A2 u./o. A3 + B63a (Ethoxysulfuron) + B42 (Daimuron) + (C2-1);
A1 u./o. A1* u./o. A2 u./o. A3 + B63a (Ethoxysulfuron) + B43 (Pendimethalin) + (C2-1);
A1 u./o. A1* u./o. A2 u./o. A3 + B63a (Ethoxysulfuron) + B44 (Clomazon) + (C2-1);
A1 u./o. A1* u./o. A2 u./o. A3 + B63a (Ethoxysulfuron) + B45 (Benzofenap) + (C2-1);
A1 u./o. A1* u./o. A2 u./o. A3 + B63a (Ethoxysulfuron) + B46 (Pyrazolynate) + (C2-1);
A1 u./o. A1* u./o. A2 u./o. A3 + B63a (Ethoxysulfuron) + B47 (Pyrazoxyfen) + (C2-1);
A1 u./o. A1* u./o. A2 u./o. A3 + B63a (Ethoxysulfuron) + B48 (KIH 2023) + (C2-1);
A1 u./o. A1* u./o. A2 u./o. A3 + B63a (Ethoxysulfuron) + B57 (Metsulfuron) + (C2-1);
A1 u./o. A1* u./o. A2 u./o. A3 + B63a (Ethoxysulfuron) + B58 (Bensulfuron) + (C2-1);
A1 u./o. A1* u./o. A2 u./o. A3 + B63a (Ethoxysulfuron) + B59 (Pyrazosulfuron) + (C2-1);
A1 u./o. A1* u./o. A2 u./o. A3 + B63a (Ethoxysulfuron) + B60 (Cinosulfuron) + (C2-1);
A1 u./o. A1* u./o. A2 u./o. A3 + B63a (Ethoxysulfuron) + B61 (Imazosulfuron) + (C2-1);
A1 u./o. A1* u./o. A2 u./o. A3 + B63a (Ethoxysulfuron) + B62 (AC 322,140 (Cyclosulfamuron)) + (C2-1);
A1 u./o. A1* u./o: A2 u./o. A3 + B63a (Ethoxysulfuron) + B64 (Azimsulfuron (DPX-A8947)) + (C2-1);
A1 u./o. A1* u./o. A2 u./o. A3 + B63a (Ethoxysulfuron) + B65 (Nicosulfuron) + (C2-1);

A1 u./o. A1* u./o. A2 u./o. A3 + B20 (Fenoxaprop u./o. Fenoxaprop-P) + B1 (Butachlor) + (C2-1);
A1 u./o. A1* u./o. A2 u./o. A3 + B20 (Fenoxaprop u./o. Fenoxaprop-P) + B2 (Butenachlor) + (C2-1);
A1 u./o. A1* u./o. A2 u./o. A3 + 820 (Fenoxaprop u./o. Fenoxaprop-P) + B3 (Thenylchlor) + (C2-1);
A1 u./o. A1* u./o. A2 u./o. A3 + B20 (Fenoxaprop u./o. Fenoxaprop-P) + B4 (Pretilachlor) + (C2-1);
A1 u../o. A1* u./o. A2 u./o. A3 + B20 (Fenoxaprop u./o. Fenoxaprop-P) + B5 (Mefenacet) + (C2-1);
A1 u./o. A1* u./o. A2 u./o. A3 + B20 (Fenoxaprop u./o. Fenoxaprop-P) + B6 (Naproanilid) + (C2-1);
A1 u./o. A1* u./o. A2 u./o. A3 + B20 (Fenoxaprop u./o. Fenoxaprop-P) + B7 (Propanil) + (C2-1);
A1 u./o. A1* u./o. A2 u./o. A3 + B20 (Fenoxaprop u./o. Fenoxaprop-P) + B8 (Etobenzanid) + (C2-1);
A1 u./o. A1* u./o. A2 u./o. A3 + B20 (Fenoxaprop u./o. Fenoxaprop-P) + B9 (Dimepiperate) + (C2-1);
A1 u./o. A1* u:/o. A2 u./o. A3 + B20 (Fenoxaprop u./o. Fenoxaprop-P) + B10 (Molinate) + (C2-1);
A1 u./o. A1* u./o. A2 u./o. A3 + B20 (Fenoxaprop u./o. Fenoxaprop-P) + B11 (Thiobencarb) + (C2-1);
A1 u./o. A1* u./o. A2 u./o. A3 + B20 (Fenoxaprop u./o. Fenoxaprop-P) + B12 (Pyributicarb) + (C2-1);
A1 u./o. A1* u./o. A2 u./o. A3 + B20 (Fenoxaprop u./o. Fenoxaprop-P) + B13 (Quinclorac) + (C2-1);
A1 u./o. A1* u./o. A2 u./o. A3 + B20 (Fenoxaprop u./o. Fenoxaprop-P) + B14a(Sulcotrione) + (C2-1);
A1 u./o. A1* u./o. A2 u./o. A3 + B20 (Fenoxaprop u./o. Fenoxaprop-P) + B17 (Bayer NBA 061) + (C2-1);
A1 u./o. A1* u./o. A2 u./o. A3 + B20 (Fenoxaprop u./o. Fenoxaprop-P) + B18 (Piperophos) + (C2-1);
A1 u./o. A1* u./o. A2 u./o. A3 + B20 (Fenoxaprop u./o. Fenoxaprop-P) + B21 (Haloxyfop) + (C2-1);
A1 u./o. A1* u./o. A2 u./o. A3 + B20 (Fenoxaprop u./o. Fenoxaprop-P) + B22 (DEH-112) + (C2-1);
A1 u./o. A1* u./o. A2 u./o. A3 + B20 (Fenoxaprop u./o. Fenoxaprop-P) + B23 (JC-940) + (C2-1);
A1 u./o. A1* u./o. A2 u./o. A3 + B20 (Fenoxaprop u./o. Fenoxaprop-P) + B24 (Dithiopyr) + (C2-1);
A1 u./o. A1* u./o. A2 u./o. A3 + B20 (Fenoxaprop u./o. Fenoxaprop-P) + B25 (Bromobutide) + (C2-1);
A1 u./o. A1* u./o. A2 u./o. A3 + B20 (Fenoxaprop u./o. Fenoxaprop-P) + B26 (Cinmethylin) + (C2-1);
A1 u./o. A1* u./o. A2 u./o. A3 + B20 (Fenoxaprop u./o. Fenoxaprop-P) + B27 (CH-900) + (C2-1);
A1 u./o. A1* u./o. A2 u./o. A3 + B20 (Fenoxaprop u./o. Fenoxaprop-P) + B28 (2,4-D) + (C2-1);
A1 u./o. A1* u./o. A2 u./o. A3 + B20 (Fenoxaprop u./o. Fenoxaprop-P) + B29 (Mecoprop und/oder Mecoprop-P) + (C2-1);
A1 u./o. A1* u./o. A2 u./o. A3 + B20 (Fenoxaprop u./o. Fenoxaprop-P) + B30 (MCPA) + (C2-1);
A1 u./o. A1* u./o. A2 u./o. A3 + B20 (Fenoxaprop u./o. Fenoxaprop-P) + B31 (Dicamba) + (C2-1);
A1 u./o. A1* u./o. A2 u./o. A3 + B20 (Fenoxaprop u./o. Fenoxaprop-P) + B32 (Acifluorfen) + (C2-1);
A1 u./o. A1* u./o. A2 u./o. A3 - B20 (Fenoxaprop u./o. Fenoxaprop-P) + B33a und/oder B33b + (C2-1);
A1 u./o. A1* u./o. A2 u./o. A3 + B20 (Fenoxaprop u./o. Fenoxaprop-P) + B39 (Bentazon) + (C2-1);
A1 u./o. A1* u./o. A2 u./o. A3 + B20 (Fenoxaprop u./o. Fenoxaprop-P) + B40 (Triclopyr) + (C2-1);
A1 u./o. A1* u./o. A2 u./o. A3 + B20 (Fenoxaprop u./o. Fenoxaprop-P) + B41 (Benfuresate) + (C2-1);
A1 u./o. A1* u./o. A2 u./o. A3 + B20 (Fenoxaprop u./o. Fenoxaprop-P) + B42 (Daimuron) + (C2-1);
A1 u./o. A1* u./o. A2 u./o. A3 + B20 (Fenoxaprop u./o. Fenoxaprop-P) + B43 (Pendimethalin) + (C2-1);
A1 u./o. A1* u./o. A2 u./o. A3 + B20 (Fenoxaprop u./o. Fenoxaprop-P) + B44 (Clomazon) + (C2-1);
A1 u./o. A1* u./o. A2 u./o. A3 + B20 (Fenoxaprop u./o. Fenoxaprop-P) + 845 (Benzofenap) + (C2-1);
A1 u./o. A1* u./o. A2 u./o. A3 + 820 (Fenoxaprop u./o. Fenoxaprop-P) + 846 (Pyrazolynate) + (C2-1);
A1 u./o. A1* u./o. A2 u./o. A3 + B20 (Fenoxaprop u./o. Fenoxaprop-P) + B47 (Pyrazoxyfen) + (C2-1);
A1 u./o. A1* u./o. A2 u./o. A3 + B20 (Fenoxaprop u./o. Fenoxaprop-P) + B48 (KIH 2023) + (C2-1);
A1 u./o. A1* u./o. A2 u./o. A3 + B20 (Fenoxaprop u./o. Fenoxaprop-P) + B57 (Metsulfuron) + (C2-1);

A1 u./o. A1* u./o. A2 u./o. A3 + B20 (Fenoxaprop u./o. Fenoxaprop-P) + B58 (Bensulfuron) + (C2-1);
A1 u./o. A1* u./o. A2 u./o. A3 + B20 (Fenoxaprop u./o. Fenoxaprop-P) + B59 (Pyrazosulfuron) + (C2-1);
A1 u./o. A1* u./o. A2 u./o. A3 + B20 (Fenoxaprop u./o. Fenoxaprop-P) + B60 (Cinosulfuron) + (C2-1);
A1 u./o. A1* u./o. A2 u./o. A3 + B20 (Fenoxaprop u./o. Fenoxaprop-P) + B61 (Imazosulfuron) + (C2-1);
A1 u./o. A1* u./o. A2 u./o. A3 + 82'0 (Fenoxaprop u./o. Fenoxaprop-P) + B62 (AC 322,140 (Cyclosulfamuron)) + (C2-1);
A1 u./o. A1* u./o. A2 u./o. A3 + B20 (Fenoxaprop u./o. Fenoxaprop-P) + B64 (Azimsulfuron (DPX-A8947)) + (C2-1); ,41 u./o. A1* u./o. A2 u./o. A3 + B20 (Fenoxaprop u./o. Fenoxaprop-P) + B65 (Nicosulfuron) + (C2-1);

Auch Mischungen mit dem Safener (C3-1) sind äußerst bevorzugt:

A1 u./o. A1* u./o. A2 u./o. A3 + B19 (Anilofos) + B1 (Butachlor) + (C3-1);
A1 u./o. A1* u./o. A2 u./o. A3 + B19 (Anilofos) + B2 (Butenachlor) + (C3-1);
A1 u./o. A1* u./o. A2 u./o. A3 + B19 (Anilofos) + B3 (Thenylchlor) + (C3-1);
A1 u./o. A1* u./o. A2 u./o. A3 + B19 (Anilofos) + B4 (Pretilachlor) + (C3-1);
A1 u./o. A1* u./o. A2 u./o. A3 + B19 (Anilofos) + B5 (Mefenacet) + (C3-1);
A1 u./o. A1* u./o. A2 u./o. A3 + B19 (Anilofos) + B6 (Naproanilid) + (C3-1);
A1 u./o. A1* u./o. A2 u./o. A3 + B19 (Anilofos) + B7 (Propanil) + (C3-1);
A1 u./o. A1* u./o. A2 u./o. A3 + B19 (Anilofos) + B8 (Etobenzanid) + (C3-1);
A1 u./o. A1* u. /o. A2 u./o. A3 + B19 (Anilofos) + B9 (Dimepiperate) + (C3-1);
A1 u./o. A1* u./o. A2 u./o. A3 + B19 (Anilofos) + B10 (Molinate) + (C3-1);
A1 u./o. A1* u./o. A2 u./o. A3 + B19 (Anilofos) + B11 (Thiobencarb) + (C3-1);
A1 u./o. A1* u./o. A2 u./o. A3 + B19 (Anilofos) + B12 (Pyributicarb) + (C3-1);
A1 u./o. A1* u./o. A2 u./o. A3 + B19 (Anilofos) + B13 (Quinclorac) + (C3-1);
A1 u./o. A1* u./o. A2 u./o. A3 + B19 (Anilofos) + B14a(Sulcotrione) + (C3-1);
A1 u./o. A1* u./o. A2 u./o. A3 + B19 (Anilofos) + B17 (Bayer NBA 061) + (C3-1);
A1 u./o. A1* u./o. A2 u./o. A3 + B19 (Anilofos) + B18 (Piperophos) + (C3-1);
A1 u./o. A1* u./o. A2 u./o. A3 + B19 (Anilofos) + B20 (Fenoxaprop u./o. Fenoxaprop-P) + (C3-1);
A1 u./o. A1* u./o. A2 u./o. A3 + B19 (Anilofos) + B21 (Haloxyfop) + (C3-1);
A1 u./o. A1* u./o. A2 u./o. A3 + B19 (Anilofos) + B22 (DEH-112) + (C3-1);
A1 u./o. A1* u./o. A2 u./o. A3 + B19 (Anilofos) + B23 (JC-940) + (C3-1);
A1 u./o. A1* u./o. A2 u./o. A3 + 819 (Anilofos) + B24 (Dithiopyr) + (C3-1);
A1 u./o. A1* u./o. A2 u./o. A3 + B19 (Anilofos) + B25 (Bromobutide) + (C3-1);
A1 u./o. A1* u./o. A2 u./o. A3 + B19 (Anilofos) + B26 (Cinmethylin) + (C3-1);
A1 u./o. A1* u./o. A2 u./o. A3 + B19 (Anilofos) + B27 (CH-900) + (C3-1);
A1 u./o. A1* u./o. A2 u./o. A3 + B19 (Anilofos) + B28 (2,4-D) + (C3-1);
A1 u./o. A1* u./o. A2 u./o. A3 + B19 (Anilofos) + B29 (Mecoprop und/oder Mecoprop-P) + (C3-1);
A1 u./o. A1* u./o. A2 u./o. A3 + B19 (Anilofos) + B30 (MCPA) + (C3-1);
A1 u./o. A1* u./o. A2 u./o. A3 + B19 (Anilofos) + B31 (Dicamba) + (C3-1);
A1 u./o. A1* u./o. A2 u./o. A3 + B19 (Anilofos) + B32 (Acifluorfen) + (C3-1);
A1 u./o. A1* u./o. A2 u./o. A3 + B19 (Anilofos) + B33a und/oder B33b + (C3-1);
A1 u./o. A1* u./o. A2 u./o. A3 + B19 (Anilofos) + B39 (Bentazon) + (C3-1);
A1 u./o. A1* u./o. A2 u./o. A3 + B19 (Anilofos) + B40 (Triclopyr) + (C3-1);
A1 u./o. A1* u./o. A2 u./o. A3 + B19 (Anilofos) + B41 (Benfuresate) + (C3-1);
A1 u./o. A1* u./o. A2 u./o. A3 + B19 (Anilofos) + B42 (Daimuron) + (C3-1);
A1 u./o. A1* u./o. A2 u./o. A3 + B19 (Anilofos) + B43 (Pendimethalin) + (C3-1);
A1 u./o. A1* u./o. A2 u./o. A3 + B19 (Anilofos) + B44 (Clomazon) + (C3-1);
A1 u./o. A1* u./o. A2 u./o. A3 + B19 (Anilofos) + B45 (Benzofenap) + (C3-1);
A1 u./o. A1* u./o. A2 u./o. A3 + B19 (Anilofos) + B46 (Pyrazolynate) + (C3-1);
A1 u./o. A1* u./o. A2 u./o. A3 + B19 (Anilofos) + B47 (Pyrazoxyfen) + (C3-1);
A1 u./o. A1* u./o. A2 u./o. A3 + B19 (Anilofos) + B48 (KIH 2023) + (C3-1);
A1 u./o. A1* u./o. A2 u./o. A3 + B19 (Anilofos) + B57 (Metsulfuron) + (C3-1);
A1 u./o. A1* u./o. A2 u./o. A3 + B19 (Anilofos) + B58 (Bensulfuron) + (C3-1);
A1 u./o. A1* u./o. A2 u./o. A3 + B19 (Anilofos) + B59 (Pyrazosulfuron) + (C3-1);
A1 u./o. A1* u./o. A2 u./o. A3 + B19 (Anilofos) + B60 (Cinosulfuron) + (C3-1);
A1 u./o. A1* u./o. A2 u./o. A3 + B19 (Anilofos) + B61 (Imazosulfuron) + (C3-1);
A1 u./o. A1* u./o. A2 u./o. A3 + B19 (Anilofos) + B62 (AC 322,140 (Cyclosulfamuron)) + (C3-1);
A1 u./o. A1* u./o. A2 u./o. A3 + B19 (Anilofos) + B63a (Ethoxysulfuron (HOE 095404)) + (C3-1);

A1 u./o. A1* u./o. A2 u./o. A3 + B19 (Anilofos) + B64 (Azimsulfuron (DPX-A8947)) + (C3-1);
A1 u./o. A1* u./o. A2 u./o. A3 + B19 (Anilofos) + 865 (Nicosulfuron) + (C3-1);

A1 u./o. A1* u./o. A2 u./o. A3 + B63a (Ethoxysulfuron) + B1 (Butachlor) + (C3-1);
A1 u./o. A1* u./o. A2 u./o. A3 + B63a (Ethoxysulfuron) + B2 (Butenachlor) + (C3-1);
A1 u./o. A1* u./o. A2 u./o. A3 + B63a (Ethoxysulfuron) + B3 (Thenylchlor) + (C3-1);
A1 u./o. A1* u./o. A2 u./o. A3 + B63a (Ethoxysulfuron) + B4 (Pretilachlor) + (C3-1);
A1 u./o. A1* u./o. A2 u./o. A3 + B63a (Ethoxysulfuron) + B5 (Mefenacet) + (C3-1);
A1 u./o. A1* u./o. A2 u./o. A3 + B63a (Ethoxysulfuron) + B6 (Naproanilid) + (C3-1);
A1 u./o. A1* u./o. A2 u./o. A3 + B63a (Ethoxysulfuron) + B7 (Propanil) + (C3-1);
A1 u./o. A1* u./o. A2 u./o. A3 + B63a (Ethoxysulfuron) + B8 (Etobenzanid) + (C3-1);
A1 u./o. A1* u./o. A2 u./o. A3 + B63a (Ethoxysulfuron) + B9 (Dimepiperate) + (C3-1);
A1 u./o. A1* u./o. A2 u./o. A3 + B63a (Ethoxysulfuron) + B10 (Molinate) + (C3-1);
A1 u./o. A1* u./o. A2 u./o. A3 + B63a (Ethoxysulfuron) + 811 (Thiobencarb) + (C3-1);
A1 u./o. A1* u./o. A2 u./o. A3 + B63a (Ethoxysulfuron) + B12 (Pyributicarb) + (C3-1);
A1 u./o. A1* u./o. A2 u./o. A3 + B63a (Ethoxysulfuron) + B13 (Quinclorac) + (C3-1);
A1 u./o. A1* u./o. A2 u./o. A3 + B63a (Ethoxysulfuron) + B14a(Sulcotrione) + (C3-1);
A1 u./o. A1* u./o. A2 u./o. A3 + B63a (Ethoxysulfuron) + B17 (Bayer NBA 061) + (C3-1);
A1 u./o. A1* u./o. A2 u./o. A3 + B63a (Ethoxysulfuron) + B18 (Piperophos) + (C3-1);
A1 u./o. A1* u./o. A2 u./o. A3 + B63a (Ethoxysulfuron) + B20 (Fenoxaprop u./o. Fenoxaprop-P) + (C3-1);
A1 u./o. A1* u./o. A2 u./o. A3 + B63a (Ethoxysulfuron) + B21 (Haloxyfop) + (C3-1);
A1 u./o. A1* u./o. A2 u./o. A3 + B63a (Ethoxysulfuron) + B22 (DEH-112) + (C3-1);
A1 u./o. A1* u./o. A2 u./o. A3 + B63a (Ethoxysulfuron) + B23 (JC-940) + (C3-1);
A1 u./o. A1* u./o. A2 u./o. A3 + B63a (Ethoxysulfuron) + B24 (Dithiopyr) + (C3-1);
A1 u./o. A1* u./o. A2 u./o. A3 + B63a (Ethoxysulfuron) + B25 (Bromobutide) + (C3-1);
A1 u./o. A1* u./o. A2 u./o. A3 + B63a (Ethoxysulfuron) + B26 (Cinmethylin) + (C3-1);
A1 u./c. A1* u./o. A2 u./o. A3 + B63a (Ethoxysulfuron) + B27 (CH-900) + (C3-1);
A1 u./o. A1* u./o. A2 u./o. A3 + B63a (Ethoxysulfuron) + B28 (2, 4-D) + (C3-1);
A1 u./o. A1* u./o. A2 u./o. A3 + B63a (Ethoxysulfuron) + B29 (Mecoprop und/oder Mecoprop-P) + (C3-1);
A1 u./o. A1* u./o. A2 u./o. A3 + B63a (Ethoxysulfuron) + B30 (MCPA + (C3-1);
A1 u./o. A1* u./o. A2 u./o. A3 + B63a (Ethoxysulfuron) + B31 (Dicamba) + (C3-1);
A1 u./o. A1* u./o. A2 u./o. A3 + B63a (Ethoxysulfuron) + B32 (Acifluorfen) + (C3-1);
A1 u./o. A1* u./o. A2 u./o. A3 + B63a (Ethoxysulfuron) + B33a und/oder B33b + (C3-1);
A1 u./o. A1* u./o. A2 u./o. A3 + B63a (Ethoxysulfuron) + B39 (Bentazon) + (C3-1);
A1 u./o. A1* u./o. A2 u./o. A3 + B63a (Ethoxysulfuron) + B40 (Triclopyr) + (C3-1);
A1 u./o. A1* u./o. A2 u./o. A3 + B63a (Ethoxysulfuron) + B41 (Benfuresate) + (C3-1);
A1 u./o. A1* u./o. A2 u./o. A3 + B63a (Ethoxysulfuron) + B42 (Daimuron) + (C3-1);
A1 u./o. A1* u./o. A2 u./o. A3 + B63a (Ethoxysulfuron) + B43 (Pendimethalin) + (C3-1);
A1 u./o. A1* u./o. A2 u./o. A3 + B63a (Ethoxysulfuron) + B44 (Clomazon) + (C3-1);
A1 u./o. A1* u./o. A2 u./o. A3 + B63a (Ethoxysulfuron) + B45 (Benzofenap) + (C3-1);
A1 u./o. A1* u./o. A2 u./o. A3 + B63a (Ethoxysulfuron) + B46 (Pyrazolynate) + (C3-1);
A1 u./o. A1* u./o. A2 u./o. A3 + B63a (Ethoxysulfuron) + B47 (Pyrazoxyfen) + (C3-1);
A1 u./o. A1* u./o. A2 u./o. A3 + B63a (Ethoxysulfuron) + B48 (KIH 2023) + (C3-1);
A1 u./o. A1* u./o. A2 u./o. A3 + B63a (Ethoxysulfuron) + B57 (Metsulfuron) + (C3-1);
A1 u./o. A1* u./o. A2 u./o. A3 + B63a (Ethoxysulfuron) + B58 (Bensulfuron) + (C3-1);
A1 u./o. A1* u./o. A2 u./o. A3 + B63a (Ethoxysulfuron) + B59 (Pyrazosulfuron) + (C3-1);
A1 u./o. A1* u./o. A2 u./o. A3 + B63a (Ethoxysulfuron) + B60 (Cinosulfuron) + (C3-1);
A1 u./o. A1* u./o. A2 u./o. A3 + B63a (Ethoxysulfuron) + B61 (Imazosulfuron) + (C3-1);
A1 u./o. A1* u./o. A2 u./o. A3 + B63a (Ethoxysulfuron) + B62 (AC 322,140 (Cyclosulfamuron)) + (C3-1);
A1 u./o. A1* u./o. A2 u./o. A3 + B63a (Ethoxysulfuron) + B64 (Azimsulfuron (DPX-A8947)) + (C3-1);
A1 u./o. A1* u./o. A2 u./o. A3 + B63a (Ethoxysulfuron) + B65 (Nicosulfuron) + (C3-1);

A1 u./o. A1* u./o. A2 u./o. A3 + B20 (Fenoxaprop u./o. Fenoxaprop-P) + B1 (Butachlor) + (C3-1);
A1 u./o. A1* u./o. A2 u./o. A3 + B20 (Fenoxaprop u./o. Fenoxaprop-P) + B2 (Butenachlor) + (C3-1);
A1 u./o. A1* u./o. A2 u./o. A3 + B20 (Fenoxaprop u./o. Fenoxaprop-P) + B3 (Thenylchlor) + (C3-1);
A1 u./o. A1* u./o. A2 u./o. A3 + B20 (Fenoxaprop u./o. Fenoxaprop-P) + B4 (Pretilachlor) + (C3-1);
- A1 u./o. A1* u./o. A2 u./o. A3 + B20 (Fenoxaprop u./o. Fenoxaprop-P) + B5 (Mefenacet) + (C3-1);
A1 u./o. A1* u./o. A2 u./o. A3 + 820 (Fenoxaprop u./o. Fenoxaprop-P) + B6 (Naproanilid) + (C3-1);

A1 u./o. A1* u./o. A2 u./o. A3 + B20 (Fenoxaprop u./o. Fenoxaprop-P) + B7 (Propanil) + (C3-1);
A1 u./o. A1* u./o. A2 u./o. A3 + B20 (Fenoxaprop u./o. Fenoxaprop-P) + B8 (Etobenzanid) + (C3-1);
A1 u./o. A1* u./o. A2 u./o. A3 + 820 (Fenoxaprop u./o. Fenoxaprop-P) + B9 (Dimepiperate) + (C3-1);
A1 u./o. A1* u./o. A2 u./o. A3 + B20 (Fenoxaprop u./o. Fenoxaprop-P) + B10 (Molinate) + (C3-1);
A1 u./o. A1* u./o. A2 u./o. A3 + B20 (Fenoxaprop u./o. Fenoxaprop-P) + B11 (Thiobencarb) + (C3-1);
A1 u./o. A1* u./o. A2 u./o. A3 + B20 (Fenoxaprop u./o. Fenoxaprop-P) + B12 (Pyributicarb) + (C3-1);
A1 u./o. A1* u./o. A2 u./o. A3 + B20 (Fenoxaprop u./o. Fenoxaprop-P) + B13 (Quinclorac) + (C3-1);
A1 u./o. A1* u./o. A2 u./o. A3 + B20 (Fenoxaprop u./o. Fenoxaprop-P) + B14a(Sulcotrione) + (C3-1);
A1 u./o. A1* u./o. A2 u./o. A3 + B20 (Fenoxaprop u./o. Fenoxaprop-P) + B17 (Bayer NBA 061) + (C3-1);
A1 u./o. A1* u./o. A2 u./o. A3 + B20 (Fenoxaprop u./o. Fenoxaprop-P) + B18 (Piperophos) + (C3-1);
A1 u./o. A1* u./o. A2 u./o. A3 + B20 (Fenoxaprop u./o. Fenoxaprop-P) + B21 (Haloxyfop) + (C3-1);
A1 u./o. A1* u./o. A2 u./o. A3 + B20 (Fenoxaprop u./o. Fenoxaprop-P) + B22 (DEH-112) + (C3-1);
A1 u./o. A1* u./o. A2 u./o. A3 + B20 (Fenoxaprop u./o. Fenoxaprop-P) + B23 (JC-940) + (C3-1);
A1 u./o. A1* u./o. A2 u./o. A3 + B20 (Fenoxaprop u./o. Fenoxaprop-P) + B24 (Dithiopyr) + (C3-1);
A1 u./o. A1* u./o. A2 u./o. A3 + B20 (Fenoxaprop u./o. Fenoxaprop-P) + 825 (Bromobutide) + (C3-1);
A1 u./o. A1* u./o. A2 u./o. A3 + B20 (Fenoxaprop u./o. Fenoxaprop-P) + B26 (Cinmethylin) + (C3-1);
A1 u./o. A1* u./o. A2 u./o. A3 + B20 (Fenoxaprop u./o. Fenoxaprop-P) + B27 (CH-900) + (C3-1);
A1 u./o. A1* u./o. A2 u./o. A3 + B20 (Fenoxaprop u./o. Fenoxaprop-P) + B28 (2,4-D) + (C3-1);
A1 u./o. A1*, u./o. A2 u./o. A3 + B20 (Fenoxaprop u./o. Fenoxaprop-P) + B29 (Mecoprop und/oder Mecoprop-P) + (C3-1);
A1 u./o. A1* u./o. A2 u./o. A3 + B20 (Fenoxaprop u./o. Fenoxaprop-P) + B30 (MCPA) + (C3-1);
A1 u./o. A1* u./o. A2 u./o. A3 + B20 (Fenoxaprop u./o. Fenoxaprop-P) + B31 (Dicamba) + (C3-1);
A1 u./o. A1* u./o. A2 u./o. A3 + B20 (Fenoxaprop u./o. Fenoxaprop-P) + B32 (Acifluorfen) + (C3-1);
A1 u./o. A1* u./o. A2 u./o. A3 + B20 (Fenoxaprop u./o. Fenoxaprop-P) + B33a und/oder B33b + (C3-1);
A1 u./o. A1* u./o. A2 u./o. A3 + B20 (Fenoxaprop u./o. Fenoxaprop-P) + 839 (Bentazon) + (C3-1);
A1 u./o. A1* u./o. A2 u./o. A3 + B20 (Fenoxaprop u./o. Fenoxaprop-P) + B40 (Triclopyr) + (C3-1);
A1 u./o. A1* u./c. A2 u./o. A3 + B20 (Fenoxaprop u./o. Fenoxaprop-P) + B41 (Benfuresate) + (C3-1);
A1 u./o. A1* u./o. A2 u./o. A3 + B20 (Fenoxaprop u./o. Fenoxaprop-P) + B42 (Daimuron) + (C3-1);
A1 u./o. A1* u./o. A2 u./o. A3 + B20 (Fenoxaprop u./o. Fenoxaprop-P) + B43 (Pendimethalin) + (C3-1);
A1 u./o. A1* u./o. A2 u./o. A3 + B20 (Fenoxaprop u./o. Fenoxaprop-P) + B44 (Clomazon) + (C3-1);
A1 u./o. A1* u./o. A2 u./o. A3 + B20 (Fenoxaprop u./o. Fenoxaprop-P) + B45 (Benzofenap) + (C3-1);
A1 u./o. A1* u./o. A2 u./o. A3 + B20 (Fenoxaprop u./o. Fenoxaprop-P) + B46 (Pyrazolynate) + (C3-1);
A1 u./o. A1* u./o. A2 u./o. A3 + B20 (Fenoxaprop u./o. Fenoxaprop-P) + B47 (Pyrazoxyfen) + (C3-1);
A1 u./o. A1* u./o. A2 u./o. A3 + B20 (Fenoxaprop u./o. Fenoxaprop-P) + B48 (KIH 2023) + (C3-1);
A1 u./o. A1* u./o. A2 u./o. A3 + B20 (Fenoxaprop u./o. Fenoxaprop-P) + B57 (Metsulfuron) + (C3-1);
A1 u./o. A1* u./o. A2 u./o. A3 + B20 (Fenoxaprop u./o. Fenoxaprop-P) + B58 (Bensulfuron) + (C3-1);
A1 u./o. A1* u./o. A2 u./o. A3 + B20 (Fenoxaprop u./o. Fenoxaprop-P) + B59 (Pyrazosulfuron) + (C3-1);
A1 u./o. A1* u./o. A2 u./o. A3 + B20 (Fenoxaprop u./o. Fenoxaprop-P) + B60 (Cinosulfuron) + (C3-1);
A1 u./o. A1* u./o. A2 u./o. A3 + B20 (Fenoxaprop u./o. Fenoxaprop-P) + B61 (Imazosulfuron) + (C3-1);
A1 u./o. A1* u./o. A2 u./o. A3 + B20 (Fenoxaprop u./o. Fenoxaprop-P) + B62 (AC 322,140 (Cyclosulfamuron)) + (C3-1);
A1 u./o. A1* u./o. A2 u./o. A3 + B20 (Fenoxaprop u./o. Fenoxaprop-P) + B64 (Azimsulfuron (DPX-A8947)) + (C3-1);
A1 u./o. A1* u./o. A2 u./o. A3 + B20 (Fenoxaprop u./o. Fenoxaprop-P) + B65 (Nicosulfuron) + (C3-1);

In den aufgeführten Kombinationen bietet der Einsatz eines Safeners erhebliche Vorteile, da hierdurch mögliche Schäden an der Kulturpflanze Reis, wie sie durch Sulfonylharnstoffderivate oder andere herbizid wirksame Wirkstoffe entstehen können, verringert werden.

Die oben angegebenen Wirkstoffkombinationen können leicht variiert werden.

Zum einen können die Verbindungen der Formeln A1 u./o. A1*, A2 oder A3 durch andere Verbindungen der allgemeinen Formel I ersetzt werden, ohne daß nennenswert schlechter wirkende Kombinationen in Kauf genommen werden müßten. Vielmehr liegt immer noch ein im wesentlichen synergistisch wirkendes Stoffgemisch vor.

Zum anderen kann in gleicher Weise in den aufgelisteten Kombinationen der Sulfonylharnstoff B63a (Ethoxysulfuron) durch einen oder mehrere der folgenden Sulfonylharnstoffe ersetzt werden:

B57) Metsulfuron;
B58) Bensulfuron;
B59) Pyrazosulfuron;
B60) Cinosulfuron;

B61) Imazosulfuron;
B62) Cyclosulfamuron;
B64) Azimsulfuron;
B65) Nicosulfuron.

Besonders bevorzugte Mehrkomponenten-Kombinationen enthalten 2 oder mehrere der Sulfonylharnstoffe vom Typ B. Hierzu sind unter anderem zu zählen:

A1 u./o. A1* u./o. A2 u./o. A3 + B34 (Chlorimuron) + B35 (Triasulfuron);
A1 u./o. A1* u./o. A2 u./o. A3 - B34 (Chlorimuron) + B57 (Metsulfuron);
A1 u./o. A1* u./o. A2 u./o. A3 + B34 (Chlorimuron) + B58 (Bensulfuron);
A1 u./o. A1* u./o. A2 u./o. A3 + B34 (Chlorimuron) + B59 (Pyrazosulfuron);
A1 u./o. A1* u./o. A2 u./o. A3 + B34 (Chlorimuron) + B60 (Cinosulfuron);
A1 u./o. A1* u./o. A2 u./o. A3 + B34 (Chlorimuron) + B61 (Imazosulfuron);
A1 u./o. A1* u./o. A2 u./o. A3 + B34 (Chlorimuron) + B62 (AC 322,140 (Cyclosulfamuron));
A1 u./o. A1* u./o. A2 u./o. A3 + B34 (Chlorimuron) + B64 (Azimsulfuron (DPX-A8947));
A1 u./o. A1* u./o. A2 u./o. A3 + B34 (Chlorimuron) + B65 (Nicosulfuron);
A1 u./o. A1* u./o. A2 u./o. A3 + B34 (Chlorimuron) + B35 (Triasulfuron) + (C3-1);
A1 u./o. A1* u./o. A2 u./o. A3 + B34 (Chlorimuron) + B57 (Metsulfuron) + (C3-1);
A1 u./o. A1* u./o. A2 u./o. A3 + B34 (Chlorimuron) + B58 (Bensulfuron) + (C3-1);
A1 u./o. A1* u./o. A2 u./o. A3 + B34 (Chlorimuron) + B59 (Pyrazosulfuron) + (C3-1);
A1 u./o. A1* u./o.. A2 u./o. A3 + B34 (Chlorimuron) + B60 (Cinosulfuron) + (C3-1);
A1 u./o. A1* u./o. A2 u./o. A3 + B34 (Chlorimuron) + B61 (Imazosulfuron) + (C3-1);
A1 u./o. A1* u./o. A2 u./o. A3 + B34 (Chlorimuron) + B62 (AC 322,140 (Cyclosulfamuron)) + (C3-1);
A1 u./o. A1* u./o. A2 u./o. A3 + B34 (Chlorimuron) + B64 (Azimsulfuron (DPX-A8947)) + (C3-1);
A1 u./o. A1* u./o. A2 u./o. A3 + B34 (Chlorimuron) + B65 (Nicosulfuron) + (C3-1);
A1 u./o. A1* u./o. A2 u./o. A3 + B35 (Triasulfuron) + B57 (Metsulfuron);
A1 u./o. A1* u./o. A2 u./o. A3 + B35 (Triasulfuron) + B58 (Bensulfuron);
A1 u./o. A1* u./o. A2 u./o. A3 + B35 (Triasulfuron) + B59 (Pyrazosulfuron);
A1 u./o. A1* u./o. A2 u./o. A3 + B35 (Triasulfuron) + B60 (Cinosulfuron);
A1 u./o. A1* u./o. A2 u./o. A3 + B35 (Triasulfuron) + B61 (Imazosulfuron);
A1 u./o. A1* u./o. A2 u./o. A3 + B35 (Triasulfuron) + B62 (AC 322,140 (Cyclosulfamuron));
A1 u./o. A1* u./o. A2 u./o. A3 + B35 (Triasulfuron) + B64 (Azimsulfuron (DPX-A8947));
A1 u./o. A1* u./o. A2 u./o. A3 + B35 (Triasulfuron) + B65 (Nicosulfuron);
A1 u./o. A1* u./o. A2 u./o. A3 + B35 (Triasulfuron) + B57 (Metsulfuron) + (C3-1);
A1 u./o. A1* u./o. A2.u./o. A3 + B35 (Triasulfuron) + B58 (Bensulfuron) + (C3-1);
A1 u./o. A1* u./o. A2 u./o. A3 + B35 (Triasulfuron) + B59 (Pyrazosulfuron) + (C3-1);
A1 u./o. A1* u./o. A2 u./o. A3 + B35 (Triasulfuron) + B60 (Cinosulfuron) + (C3-1);
A1 u./o. A1* u./o. A2 u./o. A3 + B35 (Triasulfuron) + B61 (Imazosulfuron) + (C3-1);
A1 u./o. A1* u./o. A2 u./o. A3 + B35 (Triasulfuron) + B62 (AC 322,140 (Cyclosulfamuron)) + (C3-1);
A1 u./o. A1* u./o. A2 u./o. A3 + B35 (Triasulfuron) + B64 (Azimsulfuron (DPX-A8947)) + (C3-1);
A1 u./o. A1* u./o. A2 u./o. A3 + B35 (Triasulfuron) + BE5 (Nicosulfuron) + (C3-1);
A1 u./o. A1* u./o. A2 u./o. A3 + B57 (Metsulfuron) + B58 (Bensulfuron);
A1 u./o. A1* u./o. A2 u./o. A3 + B57 (Metsulfuron) + B59 (Pyrazosulfuron);
A1 u./o. A1* u./o. A2 u./o. A3 + B57 (Metsulfuron) + B60 (Cinosulfuron);
A1 u./o. A1* u./o. A2 u./o. A3 + B57 (Metsulfuron) + B61 (Imazosulfuron);
A1 u./o. A1* u./o. A2 u./o. A3 + B57 (Metsulfuron) + B62 (AC 322,140 (Cyclosulfamuron));
A1 u./o. A1* u./o. A2 u./o. A3 + B57 (Metsulfuron) + B64 (Azimsulfuron (DPX-A8947));
A1 u./o. A1* u./o. A2 u./o. A3 + B57 (Metsulfuron) + B65 (Nicosulfuron);
A1 u./o. A1* u./o. A2 u./o. A3 + B57 (Metsulfuron) + B58 (Bensulfuron) + (C3-1);
A1 u./o. A1* u./o. A2 u./o. A3 + B57 (Metsulfuron) + B59 (Pyrazosulfuron) + (C3-1);
A1 u./o. A1* u./o. A2 u./o. A3 + B57 (Metsulfuron) + B60 (Cinosulfuron) + (C3-1);
A1 u./o. A1* u./o. A2 u./o. A3 + B57 (Metsulfuron) + B61 (Imazosulfuron) + (C3-1);
A1 u./o. A1* u./o. A2 u./o. A3 + B57 (Metsulfuron) + B62 (AC 322,140 (Cyclosulfamuron)) + (C3-1);
A1 u./o. A1* u./o. A2 u./o. A3 + B57 (Metsulfuron) + B64 (Azimsulfuron (DPX-A8947)) + (C3-1);
A1 u./o. A1* u./o. A2 u./o. A3 + B57 (Metsulfuron) + B65 (Nicosulfuron) + (C3-1);

A1 u./o. A1* u./o. A2 u./o. A3 + B58 (Bensulfuron) + B59 (Pyrazosulfuron);

A1 u./o. A1* u./o. A2 u./o. A3 + B58 (Bensulfuron) + B60 (Cinosulfuron);
A1 u./o. A1* u./o. A2 u./o. A3 + B58 (Bensulfuron) + B61 (Imazosulfuron);
A1 u./o. A1* u./o. A2 u./o. A3 + B58 (Bensulfuron) + B62 (AC 322,140 (Cyclosulfamuron));
A1 u./o. A1* u./o. A2 u./o. A3 + B58 (Bensulfuron) + B64 (Azimsulfuron (DPX-A8947));
A1 u./o. A1* u./o. A2 u./o. A3 + B58 (Bensulfuron) + B65 (Nicosulfuron);
A1 u./o. A1* u./o. A2 u./o. A3 + B58 (Bensulfuron) + B59 (Pyrazosulfuron) + (C3-1);
A1 u./o. A1* u./o. A2 u./o. A3 + B58 (Bensulfuron) + B60 (Cinosulfuron) + (C3-1);
A1 u./o. A1* u./o. A2 u./o. A3 + B58 (Bensulfuron) + B61 (Imazosulfuron) + (C3-1);
A1 u./o. A1* u./o. A2 u./o. A3 + B58 (Bensulfuron) + B62 (AC 322,140 (Cyclosulfamuron)) + (C3-1);
A1 u./o. A1* u./o. A2 u./o. A3 + B58 (Bensulfuron) + B64 (Azimsulfuron (DPX-A8947)) + (C3-1);
A1 u./o. A1* u./o. A2 u./o. A3 + B58 (Bensulfuron) + B65 (Nicosulfuron) + (C3-1);

A1 u./o. A1* u./o. A2 u./o. A3 + B59 (Pyrazosulfuron + B60 (Cinosulfuron);
A1 u./o. A1* u./o. A2 u./o. A3 + B59 (Pyrazosulfuron + B61 (Imazosulfuron);
A1 u./o. A1* u./o. A2 u./o. A3 + B59 (Pyrazosulfuron; + B62 (AC 322,140 (Cyclosulfamuron));
A1 u./o. A1* u./o. A2 u./o. A3 + B59 (Pyrazosulfuron; + B64 (Azimsulfuron (DPX-A8947));
A1 u./o. A1* u./o. A2 u./o. A3 + B59 (Pyrazosulfuron + B65 (Nicosulfuron);
A1 u./o. A1* u./o. A2 u./o. A3 + B59 (Pyrazosulfuron) + B60 (Cinosulfuron) + (C3-1);
A1 u./o. A1* u./o. A2 u./o. A3 + B59 (Pyrazosulfuron) + B61 (Imazosulfuron) + (C3-1);
A1 u./o. A1* u./o. A2 u./o. A3 + B59 (Pyrazosulfuron) + B62 (AC 322,140 (Cyclosulfamuron)) + (C3-1);
A1 u./o. A1* u./o. A2 u./o. A3 + B59 (Pyrazosulfuron) + B64 (Azimsulfuron (DPX-A8947)) + (C3-1);
A1 u./o. A1* u./o. A2 u./o. A3 + B59 (Pyrazosulfuron + B65 (Nicosulfuron) + (C3-1);

A1 u./o. A1* u./o. A2 u./o. A3 + B60 (Cinosulfuron) + B61 (Imazosulfuron);
A1 u./o. A1* u./o. A2 u./o. A3 + . B60 (Cinosulfuron) + B62 (AC 322,140 (Cyclosulfamuron));
A1 u./o. A1* u./o. A2 u./o. A3 + B60 (Cinosulfuron) + B64 (Azimsulfuron (DPX-A8947));
A1 u./o. A1* u./o. A2 u./o. A3 + B60 (Cinosulfuron) + B65 (Nicosulfuron);
A1 u./o. A1* u./o. A2 u./o. A3 + B60 (Cinosulfuron) + B61 (Imazosulfuron) + (C3-1);
A1 u./o. A1* u./o. A2 u./o. A3 + B60 (Cinosulfuror) + B62 (AC 322, 140 (Cyclosulfamuron)) + (C3-1);
A1 u./o. A1* u./o. A2 u./o. A3 + B60 (Cinosulfuron) + B64 (Azimsulfuron (DPX-A8947)) + (C3-1);
A1 u./o. A1* u./o. A2 u./o. A3 + B60 (Cinosulfuron) + B65 (Nicosulfuron) + (C3-1);

A1 u./o. A1* u./o. A2 u./o. A3 + B61 (Imazosulfuron) + B62 (AC 322,140 (Cyclosulfamuron));
A1 u./o. A1* u./o. A2 u./o. A3 + B61 (Imazosulfuron) + B64 (Azimsulfuron (DPX-A8947));
A1 u./o. A1* u./o. A2 u./o. A3 + B61 (Imazosulfuron) + B65 (Nicosulfuron);
A1 u./o. A1* u./o. A2 u./o. A3 + B61 (Imazosulfuron) + B62 (AC 322,140 (Cyclosulfamuron)) + (C3-1);
A1 u./o. A1* u./o. A2 u./o. A3 + B61 (Imazosulfuron) + B64 (Azimsulfuron (DPX-A8947)) + (C3-1);
A1 u./o. A1* u./o. A2 u./o. A3 + B61 (Imazosulfuron) + B65 (Nicosulfuron) + (C3-1);

A1 u./o. A1* u./o. A2 u./o. A3 + B62 (Cyclosulfamuron) .+ B64 (Azimsulfuron (DPX-A8947));
A1 u./o. A1* u./o. A2 u./o. A3 + B62 (Cyclosulfamuron) + B65 (Nicosulfuron);
A1 u./o. A1* u./o. A2 u./o. A3 + B62 (Cyclosulfamuron) + B64 (Azimsulfuron (DPX-A8947)) + (C3-1);
A1 u./o. A1* u./o. A2 u./o. A3 + B62 (Cyclosulfamuron) + B65 (Nicosulfuron) + (C3-1);

A1 u./o. A1* u./o. A2 u./o. A3 + B64 (Azimsulfuron) + B65 (Nicosulfuron);
A1 u./o. A1* u./o. A2 u./o. A3 + B64 (Azimsulfuron) + B65 (Nicosulfuron) + (C3-1);

Von besonderem Interesse für die Erfindung sind auch Mischungen von einer oder mehreren Typ-A-Verbindungen mit wenigstens zwei Gruppe B-Verbindungen, wobei wenigstens eine der Typ-B-Verbindungen eine Sulfonylharnstoff-Verbindung und wenigstens eine der Typ-B-Verbindungen ein Gräserherbizid ist. Zu solchen Mischungen gehören beispielhaft unter anderem:

A1 u./o. A1* u./o. A2 u./o. A3 + B57 (Metsulfuron) + B1 (Butachlor);
A1 u./o. A1* u./o. A2 u./o. A3 + B57 (Metsulfuron) + B2 (Butenachlor);
A1 u./o. A1* u./o. A2 u./o. A3 + B57 (Metsulfuron) + B3 (Thenylchlor);
A1 u./o. A1* u./o. A2 u./o. A3 + B57 (Metsulfuron) + B4 (Pretilachlor);
A1 u./o. A1* u./o. A2 u./o. A3 + B57 (Metsulfuron) + B5 (Mefenacet);
A1 u./o. A1* u./o. A2 u./o. A3 + B57 (Metsulfuron) + B6 (Naproanilid);

A1 u./o. A1* u./o. A2 u./o. A3 + B57 (Metsulfuron) + B7 (Propanil);
A1 u./o. A1* u./o. A2 u./o. A3 + B57 (Metsulfuron) + B8 (Etobenzanid);
A1 u./o. A1* u./o. A2 u./o. A3 + B57 (Metsulfuron) + B9 (Dimepiperate);
A1 u./o. A1* u./o. A2 u./o. A3 + B57 (Metsulfuron) + B10 (Molinate);
A1 u./o. A1* u./o. A2 u./o. A3 + B57 (Metsulfuron) + B11 (Thiobencarb);
A1 u./o. A1* u./o. A2 u./o. A3 + B57 (Metsulfuron) + B12 (Pyributicarb);
A1 u./o. A1* u./o. A2 u./o. A3 + B57 (Metsulfuron) + B13 (Quinclorac);
A1 u./o. A1* u./o. A2 u./o. A3 + B57 (Metsulfuron) + B14a (Sulcotrione);
A1 u./o. A1* u./o. A2 u./o. A3 + B57 (Metsulfuron) + B15 (Cycloxydim);
A1 u./o. A1* u./o. A2 u./o. A3 + B57 (Metsulfuron) + B16 (Sethoxydim);
A1 u./o. A1* u./o. A2 u./o. A3 + B57 (Metsulfuron) + B17 (NBA 061);
A1 u./o. A1* u./o. A2 u./o. A3 + B57 (Metsulfuron) + B18 (Piperophos);
A1 u./o. A1* u./o. A2 u./o. A3 + B57 (Metsulfuron) + B19 (Anilofos);
A1 u./o. A1* u./o. A2 u./o. A3 + B57 (Metsulfuron) + B20 (Fenoxaprop u./o. Fenoxaprop-P);
A1 u./o. A1* u./o. A2 u./o. A3 + B57 (Metsulfuron) + B21 (Haloxyfop);
A1 u./o. A1* u./o. A2 u./o. A3 + B57 (Metsulfuron) + B22 (DEH-112);
A1 u./o. A1* u./o. A2 u./o. A3 + B57 (Metsulfuron) + B23 (JC-940);
A1 u./o. A1* u./o. A2 u./o. A3 + B57 (Metsulfuron) + B24 (Dithiopyr);
A1 u./o. A1* u./o. A2 u./o. A3 + B57 (Metsulfuron) + B25 (Bromobutide);
A1 u./o. A1* u./o. A2 u./o. A3 + B57 (Metsulfuron) + B26 (Cinmethylin);
A1 u./o. A1* u./o. A2 u./o. A3 + B57 (Metsulfuron) + B27 (CH-900);

A1 u./o. A1* u./o. A2 u./o. A3 + B58 (Bensulfuron) + B1 (Butachlor);
A1 u./o. A1* u./o. A2 u./o. A3 + B58 (Bensulfuron) + B2 (Butenachlor);
A1 u./o. A1* u./o. A2 u./o. A3 + B58 (Bensulfuron) + B3 (Thenylchlor);
A1 u./o. A1* u./o. A2 u./o. A3 + B58 (Bensulfuron) + B4 (Pretilachlor);
A1 u./o. A1* u./o. A2 u./o. A3 + B58 (Bensulfuron) + B5 (Mefenacet);
A1 u./o. A1* u./o. A2 u./o. A3 + B58 (Bensulfuron) + B6 (Naproanilid);
A1 u./o. A1* u./o. A2 u./o. A3 + B58 (Bensulfuron) + B7 (Propanil);
A1 u./o. A1* u./o. A2 u./o. A3 + B58 (Bensulfuron) + B8 (Etobenzanid);
A1 u./o. A1* u./o. A2 u./o. A3 + B58 (Bensulfuron) + B9 (Dimepiperate);
A1 u./o. A1* u./o. A2 u./o. A3 + B58 (Bensulfuron) + B10 (Molinate);
A1 u./o. A1* u./o. A2 u./o. A3 + B58 (Bensulfuron) + B11 (Thiobencarb);
A1 u./o. A1* u./o. A2 u./o. A3 + B58 (Bensulfuron) + B12 (Pyributicarb);
A1 u./o. A1* u./o. A2 u./o. A3 + B58 (Bensulfuron) + B13 (Quinclorac);
A1 u./o. A1* u./o. A2 u./o. A3 + B58 (Bensulfuron) + B14a (Sulcotrione);
A1 u./o. A1* u./o. A2 u./o. A3 + B58 (Bensulfuron) + B15 (Cycloxydim);
A1 u./o. A1* u./o. A2 u./o. A3 + B58 (Bensulfuron) + B16 (Sethoxydim);
A1 u./o. A1* u./o. A2 u./o. A3 + B58 (Bensulfuron) + B17 (NBA 061);
A1 u./o. A1* u./o. A2 u./o. A3 + B58 (Bensulfuron) + B18 (Piperophos);
A1 u./o. A1* u./o. A2 u./o. A3 + B58 (Bensulfuron) + B19 (Anilofos);
A1 u./o. A1* u./o. A2 u./o. A3 + B58 (Bensulfuron) + B20 (Fenoxaprop u./o. Fenoxaprop-P);
A1 u./o. A1* u./o. A2 u./o. A3 + B58 (Bensulfuron) + B21 (Haloxyfop);
A1 u./o. A1* u./o. A2 u./o. A3 + B58 (Bensulfuron) + B22 (DEH-112);
A1 u./o. A1* u./o. A2 u./o. A3 + B58 (Bensulfuron) + B23. (JC-940);
A1 u./o. A1* u./o- A2 u./o. A3 + B58 (Bensulfuron) + B24 (Dithiopyr);
A1 u./o. A1* u./o. A2 u./o. A3 + B58 (Bensulfuron) + B25 (Bromobutide);
A1 u./o. A1* u./o. A2 u./o. A3 + B58 (Bensulfuron) + B26 (Cinmethylin);
A1 u./o. A1* u./o. A2 u./o. A3 + B58 (Bensulfuron) + B27 (CH-900);

A1 u./o. A1* u./o. A2 u./o. A3 + B59 (Pyrazosulfuron) + B1 (Butachlor);
A1 u./o. A1* u./o. A2 u./o. A3 + B59 (Pyrazosulfuron) + B2 (Butenachlor);
A1 u./o. A1* u./o. A2 u./o. A3 + B59 (Pyrazosulfuron) + B3 (Thenylchlor) ;
A1 u./o. A1* u./o. A2.u./o. A3 + B59 (Pyrazosulfuron) + B4 (Pretilachlor);
A1 u./o. A1* u./o. A2 u./o. A3 + B59 (Pyrazosulfuron) + B5 Mefenacet);
A1 u./o. A1* u./o. A2 u./o. A3 + B59 (Pyrazosulfuron) + B6 (Naproanilid);
A1 u./o. A1* u./o. A2 u./o. A3 + B59 (Pyrazosulfuron) + B7 (Propanil);
A1 u./o. A1* u/o. A2 u./o. A3 + B59 (Pyrazosulfuron) + B8 (Etobenzanid);

A1 u./o. A1* u./o. A2 u./o. A3 + B59 (Pyrazosulfuron) + B9 (Dimepiperate);
A1 u./o. A1* u./o. A2 u./o. A3 + B59 (Pyrazosulfuron) + B10 (Molinate);
A1 u./o. A1* u./o. A2 u./o. A3 + B59 (Pyrazosulfuron) + B11 (Thiobencarb);
A1 u./o. A1* u./o. A2 u./o. A3 + B59 (Pyrazosulfuron) + B12 (Pyributicarb);
A1 u./o. A1* u./o. A2 u./o. A3 + B59 (Pyrazosulfuron) + B13 (Quinclorac);
A1 u./o. A1* u./o. A2 u./o. A3 + B59 (Pyrazosulfuron) + B14a (Sulcotrione);
A1 u./o. A1* u./o. A2 u./o. A3 + B59 (Pyrazosulfuron) + B15 (Cycloxydim);
A1 u./o. A1* u./o. A2 u./o. A3 + B59 (Pyrazosulfuron) + B16 (Sethoxydim);
A1 u./o. A1* u./o. A2 u./o. A3 + B59 (Pyrazosulfuron) + B17 (NBA 061);
A1 u./o. A1* u./o. A2 u./o. A3 + B59 (Pyrazosulfuron) + B18 (Piperophos);
A1 u./o. A1* u./o. A2 u./o. A3 + B59 (Pyrazosulfuron) + B19 (Anilofos);
A1 u./o. A1* u./o. A2 u./o. A3 + B59 (Pyrazosulfuron) + B20 (Fenoxaprop u./o. Fenoxaprop-P);
A1 u./o. A1* u./o. A2 u./o. A3 + B59 (Pyrazosulfuron) + B21 (Haloxyfop) ;
A1 u./o. A1* u./o. A2 u./o. A3 + B59 (Pyrazosulfuron) + B22 (DEH-112);
A1 u./o. A1* u./o. A2 u./o. A3 + B59 (Pyrazosulfuron) + B23 (JC-940);
A1 u./o. A1* u./o. A2 u./o. A3 + B59 (Pyrazosulfuron) + B24 (Dithiopyr);
A1 u./o. A1* u./o. A2 u./o. A3 + B59 (Pyrazosulfuron) + B25 (Bromobutide);
A1 u./o. A1* u./o. A2 u./o. A3 + B59 (Pyrazosulfuron) + B26 (Cinmethylin);
A1 u./o. A1* u./o. A2 u./o. A3 + B59 (Pyrazosulfuron) + B27 (CH-900);
A1 u./o. A1* u./o. A2 u./o. A3 + B60 (Cinosulfuron) + B1 (Butachlor);
A1 u./o. A1* u./o. A2 u./o. A3 + B60 (Cinosulfuron) + B2 (Butenachlor);
A1 u./o. A1* u./o. A2 u./o. A3 + B60 (Cinosulfuron) + B3 (Thenylchlor);
A1 u./o. A1* u./o. A2 u./o. A3 + B60 (Cinosulfuron) + B4 (Pretilachlor);
A1 u./o. A1* u./o. A2 u./o. A3 + B60. (Cinosulfuron) + B5 (Mefenacet);
A1 u./o. A1* u./o. A2 u./o. A3 + B60 (Cinosulfuron) + B6 (Naproanilid);
A1 u./o. A1* u./o. A2 u./o. A3 + B60 (Cinosulfuron) + B7 (Propanil);
A1 u./o. A1* u./o. A2 u./o. A3 + B60 (Cinosulfuron) + B8 (Etobenzanid);
A1 u./o. A1* u./o. A2 u./o. A3 + B60 (Cinosulfuron) + B9 (Dimepiperate);
A1 u./o. A1* u./o. A2 u./o. A3 + B60 (Cinosulfuron) + B10 (Molinate);
A1 u./o. A1* u./o. A2 u./o. A3 + B60 (Cinosulfuron) + B11 (Thiobencarb);
A1 u./o. A1* u./o. A2 u./o. A3 + B60 (Cinosulfuron) + B12 (Pyributicarb);
A1 u./o. A1* u./o. A2 u./o. A3 + 860 (Cinosulfuron) + B13 (Quinclorac);
A1 u./o. A1* u./o. A2 u./o. A3 + B60 (Cinosulfuron) + B14a (Sulcotrione);
A1 u./o. A1* u./o. A2 u./o. A3 + B60 (Cinosulfuron) + B15 (Cycloxydim);
A1 u./o. A1* u./o. A2 u./o. A3 + B60 (Cinosulfuron) + B16 (Sethoxydim);
A1 u./o. A1* u./o. A2 u./o. A3 + B60 (Cinosulfuron) + B17 (NBA 061);
A1 u./o. A1* u./o. A2 u./o. A3 + B60 (Cinosulfuron) + B18 (Piperophos);
A1 u./o. A1* u./o. A2 u./o. A3 + B60 (Cinosulfuron) + B19 (Anilofos);
A1 u./c. A1* u./o. A2 u./o. A3 + B60 (Cinosulfuron) + B20 (Fenoxaprop u./o. Fenoxaprop-P);
A1 u./o. A1* u./o. A2 u./o. A3 + B60 (Cinosulfuron) + B21 (Haloxyfop);
A1 u./o. A1* u./o. A2 u./o. A3 + B60 (Cinosulfuron) + B22 (DEH-112);
A1 u./o. A1* u./o. A2 u./o. A3 + B60 (Cinosulfuron) + B23 (JC-940);
A1 u./o. A1* u./o. A2 u./o. A3 + B60 (Cinosulfuron) + B24 (Dithiopyr);
A1 u./o. A1* u./o. A2 u./o. A3 + B60 (Cinosulfuron) + B25 (Bromobutide);
A1 u./o. A1* u./o. A2 u./o. A3 + B60 (Cinosulfuron) + B26 (Cinmethylin);
A1 u./o. A1* u./o. A2 u./o. A3 + B60 (Cinosulfuron) + B27 (CH-900);

A1 u./o. A1* u./o. A2 u./o. A3 + B61 (Imazosulfuron) + B1 (Butachlor);
A1 u./o. A1* u./o. A2 u./o. A3 + B61 (Imazosulfuron) + B2 (Butenachlor);
A1 u./o. A1* u./o. A2 u./o. A3 + B61 (Imazosulfuron) + B3 (Thenylchlor);
A1 u./o. A1* u./o. A2 u./o. A3 + B61 (Imazosulfuron) + B4 (Pretilachlor);
A1 u./o. A1* u./o. A2 u./o. A3 + B61 (Imazosulfuron) + B5 (Mefenacet);
A1 u./o. A1* u./o. A2 u./o. A3 + B61 (Imazosulfuron) + B6 (Naproanilid);
A1 u./o. A1* u./o. A2 u./o. A3 + B61 (Imazosulfuron) + B7 (Propanil);
A1 u./o. A1* u./o. A2 u./o. A3 + B61 (Imazosulfuron) + B8 (Etobenzanid);
A1 u./o. A1* u./o. A2 u./o. A3 + B61 (Imazosulfuron) + B9 (Dimepiperate);
A1 u./o. A1* u./o. A2 u./o. A3 + B61 (Imazosulfuron) + B10 (Molinate);
A1 u./o. A1* u./o. A2 u./o. A3 + B61 (Imazosulfuron) + B11 (Thiobencarb);

A1 u./o. A1* u./o. A2 u./o. A3 + B61 (Imazosulfuron) + B12 (Pyributicarb);
A1 u./o. A1* u./o. A2 u./o. A3 + B61 (Imazosulfuron) + B13 (Quinclorac);
A1 u./o. A1* u./o. A2 u./o. A3 + B61 (Imazosulfuron) + B14a (Sulcotrione);
A1 u./o. A1* u./o. A2 u./o. A3 + B61 (Imazosulfuron) + B15 (Cycloxydim);
A1 u./o. A1* u./o. A2 u./o. A3 + B61 (Imazosulfuron) + B16 (Sethoxydim);
A1 u./o. A1* u./o. A2 u./o. A3 + B61 (Imazosulfuron) + B17 (NBA 061) ;
A1 u./o. A1* u./o. A2 u./o. A3 + B61 (Imazosulfuron) + B18 (Piperophos);
A1 u./o. A1* u./o. A2 u./o. A3 + B61 (Imazosulfuron) + B19 (Anilofos);
A1 u./o. A1* u./o. A2 u./o. A3 + B61 (Imazosulfuron) + B20 (Fenoxaprop u./o. Fenoxaprop-P);
A1 u./o. A1* u./o. A2 u./o. A3 + B61 (Imazosulfuron) + B21 (Haloxyfop);
A1 u./o. A1* u./o. A2 u./o. A3 + B61 (Imazosulfuron) + B22 (DEH-112);
A1 u./o. A1* u./o. A2 u./o. A3 + B61 (Imazosulfuron) + B23 (JC-940);
A1 u./o. A1* u./o. A2 u./o. A3 + B61 (Imazosulfuron) + B24 (Dithiopyr);
A1 u./o. A1* u./o. A2 u./o. A3 + B61 (Imazosulfuron) + B25 (Bromobutide);
A1 u./o. A1* u./o. A2 u./o. A3 + B61 (Imazosulfuron) + B26 (Cinmethylin);
A1 u./o. A1* u./o. A2 u./o. A3 + B61 (Inazosulfuron) + B27 (CH-900);

A1 u./o. A1* u./o. A2 u./o. A3 + B62 (Cyclosulfamuron) + B1 (Butachlor);
A1 u./o. A1* u./o. A2 u./o. A3 + B62 (Cyclosulfamuron) + B2 (Butenachlor);
A1 u./o. A1* u./o. A2 u./o. A3 + B62 (Cyclosulfamuron) + B3 (Thenylchlor);
A1 u./o. A1* u./o. A2 u./o. A3 + B62 (Cyclosulfamuron) + B4 (Pretilachlor);
A1 u./o. A1* u./o. A2 u./o. A3 + B62 (Cyclosulfamuron) + B5 (Mefenacet);
A1 u./o. A1* u./o. A2 u./o. A3 + B62 (Cyclosulfamuron) + B6 (Naproanilid);
A1 u./o. A1* u./o. A2 u./o. A3 + B62 (Cyclosulfamuron) + B7 (Propanil);
A1 u./o. A1* u./o. A2 u./o. A3 + B62 (Cyclosulfamuron) + B8 (Etobenzanid);
A1 u./o. A1* u./o. A2 u./o. A3 + B62 (Cyclosulfamuron) + B9 (Dimepiperate);
A1 u./o. A1* u./o. A2 u./o. A3 + B62 (Cyclosulfamuron) + B10 (Molinate);
A1 u./o. A1* u./o. A2 u./o. A3 + B62 (Cyclosulfamuron) + B11 (Thiobencarb);
A1 u./o. A1* u./o. A2 u./o. A3 + B62 (Cyclosulfamuron) + B12 (Pyributicarb);
A1 u./o. A1* u./o. A2 u./o. A3 + B62 (Cyclosulfamuron) + B13 (Quinclorac);
A1 u./o. A1* u./o. A2 u./o. A3 + B62 (Cyclosulfamuron) + B14a (Sulcotrione);
A1 u./o. A1* u./o. A2 u./o. A3 + B62 (Cyclosulfamuron) + B15 (Cycloxydim);
A1 u./o. A1* u./o. A2 u./o. A3 + B62 (Cyclosulfamuron) + B16 (Sethoxydim);
A1 u./o. A1* u./o. A2 u./o. A3 + B62 (Cyclosulfamuron) + B17 (NBA 061);
A1 u./o. A1* u./o. A2 u./o. A3 + B62 (Cyclosulfamuron) + B18 (Piperophos);
A1 u./o. A1* u./o. A2 u./o. A3 + B62 (Cyclosulfamuron) + B19 (Anilofos);
A1 u./o. A1* u./o. A2 u./o. A3 + B62 (Cyclosulfamuron) + B20 (Fenoxaprop u./o. Fenoxaprop-P);
A1 u./o. A1* u./o. A2 u./o. A3 + B62 (Cyclosulfamuron) + B21 (Haloxyfop);
A1 u./o. A1* u./o. A2 u./o. A3 + B62 (Cyclosulfamuron) + B22 (DEH-112);
A1 u./o. A1* u./o. A2 u./o. A3 + B62 (Cyclosulfamuron) + B23 (JC-940);
A1 u./o. A1* u./o. A2 u./o. A3 + B62 (Cyclosulfamuron) + B24 (Dithiopyr);
A1 u./o. A1* u./o. A2 u./o. A3 + B62 (Cyclosulfamuron) + B25 (Bromobutide);
A1 u./o. A1* u./o. A2 u./o. A3 + B62 (Cyclosulfamuron) + B26 (Cinmethylin);
A1 u./o. A1* u./o. A2 u./o. A3 + B62 (Cyclosulfamuron) + B27 (CH-900);

A1 u./o. A1* u./o. A2 u./o. A3 + B64 (Azimsulfuron) + B1 (Butachlor);
A1 u./o. A1* u./o. A2 u./o. A3 + B64 (Azimsulfuron) + B2 (Butenachlor);
A1 u./o. A1* u./o. A2 u./o. A3 + B64 (Azimsulfuron) + B3 (Thenylchlor);
A1 u./o. A1* u./o. A2 u./o. A3 + B64 (Azimsulfuron) + B4 (Pretilachlor);
A1 u./o. A1* u./o. A2 u./o. A3 + B64 (Azimsulfuron) + B5 (Mefenacet);
A1 u./o. A1* u./o. A2 u./o. A3 + B64 (Azimsulfuron) + B6 (Naproanilid);
A1 u./o. A1* u./o. A2 u./o. A3 + B64 (Azimsulfuron) + B7 (Propanil);
A1 u./o. A1* u./o. A2 u./o. A3 + B64 (Azimsulfuron) + 38 (Etobenzanid);
A1 u./o. A1* u./o. A2 u./o. A3 + B64 (Azimsulfuron) + B9 (Dimepiperate);
A1 u./o. A1* u./o. A2 u./o. A3 + B64 (Azimsulfuron) + B10 (Molinate);
A1 u./o. A1* u./o. A2 u./o. A3 + B64 (Azimsulfuron) + B11 (Thiobencarb);
A1 u./o. A1* u./o. A2 u./o. A3 + B64 (Azimsulfuron) + B12 (Pyributicarb);
A1 u./o. A1* u./o. A2 u./o. A3 + B64 (Azimsulfuron) + B13 (Quinclorac);

A1 u./o. A1* u./o. A2 u./o. A3 + B64 (Azimsulfuron) + B14a (Sulcotrione);
A1 u./o. A1* u./o. A2 u./o. A3 + B64 (Azimsulfuron) + B15 (Cycloxydim);
A1 u./o. A1* u./o. A2 u./o. A3 + B64 (Azimsulfuron) + B16 (Sethoxydim);
A1 u./o. A1* u./o. A2 u./o. A3 + B64 (Azimsulfuron) + B17 (NBA 061);
A1 u./o. A1* u./o. A2 u./o. A3 + B64 (Azimsulfuron) + B18 (Piperophos);
A1 u./o. A1* u./o. A2 u./o. A3 + 864 (Azimsulfuron) + B19 (Anilofos);
A1 u./o. A1* u./o. A2 u./o. A3 + B64 (Azimsulfuron) + B20 (Fenoxaprop u./o. Fenoxaprop-P);
A1 u./o. A1* u./o. A2 u./o. A3 + B64 (Azimsulfuron) + B21 (Haloxyfop);
A1 u./o. A1* u./o. A2 u./o. A3 + B64 (Azimsulfuron) + 822 (DEH-112);
A1 u./o. A1* u./o. A2 u./o. A3 + B64 (Azimsulfuron) + B23 (JC-940);
A1 u./o. A1* u./o. A2 u./o. A3 + B64 (Azimsulfuron) + B24 (Dithiopyr);
A1 u./o. A1* u./o. A2 u./o. A3 + B64 (Azimsulfuron) + B25 (Bromobutide);
A1 u./o. A1* u./o. A2 u./o. A3 + B64 (Azimsulfuron) + B26 (Cinmethylin);
A1 u./o. A1* u./o. A2 u./o. A3 + B64 (Azimsulfuron) + B27 (CH-900);

Auch die vorgenannten Kombinationen können optionell durch Addition des Safeners C3-1 verbessert werden.

Zweckmäßig kann auch der Ersatz der Safener-Verbindung C2-1 durch oder kann auch die gemeinsame Anwendung der Safener-Verbindung C2-1 mit ein oder mehreren Herbiziden mit Safener-Wirkung und/oder Safenern sein. Ähnliches gilt für den Safener C3-1

So können Daimuron (B42)) und/oder Quinclorac (B13)) zusätzlich in den oben genannten Kombinationen die herbizide Wirksamkeit gegen Cyperus spp. und Gräser verbessern und/oder den Safener C2-1 ganz oder teilweise ersetzen;

Ferner kann der Safener C2-1 vorteilhaft durch eine oder mehrere Verbindungen der folgenden Gruppe ersetzt oder zusammen mit einer oder mehreren der folgenden Verbindungen eingesetzt werden:

- 1-(2,4-Dichlorphenyl)-5-(ethoxycarbonyl)-5-methyl-2-pyrazolin-3-carbonsäureethylester (C1-1),
- 1-(2,4-Dichlorphenyl)-5-methyl-pyrazol-3-carbonsäureethylester (C1-2),
- 1-(2,4-Dichlorphenyl)-5-isopropyl-pyrazol-3-carbonsäureethylester (C1-3),
- 1-(2,4-Dichlorphenyl)-5-(1,1-dimethyl-ethyl)pyrazol-3-carbonsäureethylester (C1-4),
- 1-(2,4-Dichlorphenyl)-5-phenyl-pyrazol-3-carbonsäureethylester (C1-5),
- 1-(2,4-Dichlorphenyl)-5-trichlormethyl-(1H)-1,2,4-triazol-3-carbonsäureethylester (C1-6, Fenchlorazol)
- 5-(2,4-Dichlorbenzyl)-2-isoxazolin-3-carbonsäureethylester (C1-7),
- 5-Phenyl-2-isoxazolin-3-carbonsäureethylester (C1-8),
- 5-Chlor-8-chinolinoxy)-essigsäure-(1,3-dimethyl-but-1-yl)-ester (C2-2),
- (5-Chlor-8-chinolinoxy)-essigsäure-4-allyl-oxy-butylester (C2-3),
- (5-Chlor-8-chinolinoxy)-essigsäure-1-allyl-oxy-prop-2-ylester (C2-4),
- (5-Chlor-8-chinolinoxy)-essigsäureethylester (C2-5),
- (5-Chlor-8-chinolinoxy)-essigsäuremethylester (C2-6:
- (5-Chlor-8-chinolinoxy)-essigsäureallylester (C2-7),
- (5-Chlor-8-chinolinoxy)-essigsäure-2-(2-propylideniminoxy)-1-ethylester (C2-8),
- (5-Chlor-8-chinolinoxy)-essigsäure-2-oxo-prop-1-ylester (C2-9),

- (5-Chlor-8-chinolinoxy)-malonsäurediethylester,
- (5-Chlor-8-chinolinoxy) -malonsäurediallyester,
- (5-Chlor-8-chinolinoxy)-malonsäuremethylethylester
- 2,4 -Dichlorphenoxyessigsäure (ester) (2,4-D),
- 4-Chlor-2-methyl-phenoxy-propionester (Mecoprop),
- MCPA,
- 3,6-Dichlor-2-methoxy-benzoesäure(ester) (Dicamba) und
- 5,5-Diphenyl-2-isoxazolin-3-carbonsäureethylester (C3-1).

Daneben können in den Mischungen der Erfindung zur Abrundung der Eigenschaften, meist in untergeordneten Mengen, zusätzlich eines, zwei oder mehrere der folgenden Pestizide (Herbizide, Insektizide, Fungizide usw.) enthalten sein:
abamectin, AC94377, AC263222, AC3-103630, acephate, aclonifen, acrinathrin, acypectas, AKH-7088, alachlor, alanycarb, aldicarb, aldoxycarb, allethrin, alloxydim, alpha-cypermethrin, ametryn, amidosulfuron, amitraz, amitrole, ammonium sulfamate, ancymidol, anilazine, anthraquinone, asulam, atrazine, azaconazole, azadirachtin, azamethiphos, azinphos-ethyl, azinphos-methyl, azocyclotin, BAS480F, BAS490F, benalaxyl, benazolin, bendiocarb, benfluralin, benfuracarb, benomyl, benoxacor, bensulide, bensultap, benzoximate, beta-cyfluthrin, beta-cypermethrin, bifenox, bifenthrin, bilanafos, bioallethrin, bioallethrin (S-cyclopentenyl isomer), bioresmethrin, biphenyl, bitertanol, blasticidin-S, borax, Bordeaux mixture, brodifacoum, bromacil, bromadiolone, bromethalin, bromofenoxim, bromopropylate, bromoxynil, bromuconazole, bronopol, bupirimate, buprofezin, butamifos, butocarboxim, butoxycarboxim, butralin, butylamine, butylate, cadusafos, calcium polysulfide, captafol, captan, carbaryl, carbendazim, carbetamide, carbofuran, carbosulfan, carboxin, cartap, CGA50439, CGA183893, CGA219417, chinomethionat, chlomethoxyfen, chloralose, chloramben, chlorbromuron, chlorbufam, chlordane, chlorethoxyfos, chlorfenvinphos, chlorfluazuron, chlorflurenol, chloridazon, chlormephos, chlormequat, chlornitrofen, chloracetic acid, chlorobenzilate, chloroneb, chlorophacinone, chloropicrin, chlorothalonil, chlorotoluron, chlorophonium, chlorpropham, chlorpyrifos, chlorpyrifos-methyl, chlorsulfuron, chlorthal, chlorthiamid, chlozolinate, CL26691, CL304415, clethodim, clodinafop, cloethocarb, clofentezine, clomeprop, cloprop, clopyralid, cloquintocet, cloxyfonac, copper hydroxide, copper oxychloride, copper sulfate, coumaphos, coumatetralyl, 4-CPA, cuprous oxide, cyanamide, cyanazine, cyanophos, cycloate, cycloprothrin, cyfluthrin, betacyfluthrin, cyhalothrin, lambda-cyhalothrin, cyhexatin, cymoxanil, cypermethrin, alpha-cypermethrin, beta-cypermethrin, zeta-cypermethrin, cyphenotrin, cyproconazole, cyromazine, daminozide, dazomet, 2,4-DB, DCIF, debacarb, decan-1-ol, deltamethrin, demeton-S-methyl, desmedipham, desmetryn, diafenthiuron, diazinon, dichlobenil, dichlofluanid, dichlone, dichlormid, dichlorophen, 1,3-dichloropropene, dichlorprop, dichlorprop-P, dichlorvos, diclofop, diclomezine, dicloran, diclofol, dicrotophos, dienochlor, diethofencarb, diethyltoluamide, difenacoum, diefenoconazole, difenzoquat, difethialone, diflubenzuron, diflufenican, dikegulac, dimefuron, dimethachlor, dimethametryn, dimethenamid, dimethipin, dimethirimol, dimethoate, dimethomorph, dimethyl phthalate, dimethylvinphos, diniconazole, dinitramine, dinocap, dinoterb, diofenolan, dioxabenzofos, diphacinone, diphenamid, diphenylamine, dipropyl pyridine-2,5-dicarboxylate, diquat, disulfuton, dithianon, diuron, DKA-24, DNOC, dodemorph, dodine, edifenphos, empenthrin, endosulfan, endothal, ENT8184, EPN, EPTC, ergocalciferol, esfenvalerate, esprocarb, ET751, ethalfluralin, ethametsulfuron-methyl, ethephon, ethiofencarb, ethion, ethirimol, ethofumesate, ethoprophos, ethoxyquin, ethychlozate, ethylene dibromide, ethylene dichloride, etofenprox, etridiazole, F8426, famphur, fenamiphos, fenarimol, fenazaquin, fenbuconazole, fenbutatin oxide, fenchlorazole, fenclorim, fenfuram, fenitrothion, fenobucarb, fenothiocarb, fenoxycarb, fenpiclonil,fenpropathrin, fenpropidin, fenpropimorph, fenpyroximate, fenthion, fentin, fenuron, fenvalerate, ferbam, ferbam, ferimzone, fipronil, flamprop, flamprop-M, flazasulfuron, flocoumafen, fluazifop, fluazifop-P, fluazinam, fluazuron, fluchloralin, flucycloxuron, flucythrinate, fludioxonil, flufenoxuron, flumetralin, flumetsulam, flumiclorac, flumioxazin, fluometuron, flucroacetamide, fluoroglycofen, fluoromide, flupoxam, flupropanate, fluquinconazole, flurazole, flurenol, fluridone, flurochloridone, fluroxypyr, flurprimidol, flurtamone, flusilazole, flusulfamide, flutolanil, flutriafol, taufluvalinate, fluxofenim, folpet, fomesafen, fonofos, forchlorfenuron, formetanate, formothion, fosamine, fosetyl, fosthiazate, fuberidazole, furalaxyl, furathiocarb, furilazole, gibberellic acid, gibberellin $A_4$ gibberellin $A_7$, guazatine, GY-81, halfenprox, halosulfuron, HC-252, gamma-HCH, heptachlor, heptenophos, hexachlorobenzene, hexaconazole, hexaflumuron, hexazinone, hexythiazox, hydramethylnon, 2-hydrazinoethanol, hydroprene, 8-hydroxyquinoline sulfate, hymexazol, ICIA8858, ICIA5504, imazalil, imazamethabenz, imazapyr, imazaquin, imazethapyr, imibenconazole, imidacloprid, iminoctadien, inabenfide, indol-3-ylacetic acid, 4-indol-3-ylbutyric acid, ipconazole, iprobenfos, iprodione, isazofos, isofenphos, isopamphos, isoprocarb, isoprothiolane, isoproturon, isouron, isoxaben, isoxapyrifop, isoxathion, kasugamycin, KIH9201, lactofen, lambda-cyhalothrin, lenacil, linuron, lufenuron, malathion, maleic hydrazide, mancopper, mancozeb, maneb, MCPAthioethyl, MCPB, mecarbam, mefluidide, mepanipyrim, mephosfolan, mepiquat, mepronil, metalaxyl, metaldehyde, metam, metamitron, metazachlor, metconazole, methabenzthiazuron, methacrifos, methamidophos, methasulfocarb, methidathion, methiocarb, methomyl, methoprene, methoxychlor, methylarsonic acid, methyl bromide, methyldymron, methyl isothiocyanate, metiram, metobenzuron, metobromuron, metolcarb, metoxuron, metribuzin, mevinphos, milbemectin, MK-243, monocrotophos, monolinuron, muscalure, myclobutanil, nabam, naled, naphthenic acid, 2-(1-naphthyl)acetamide, (1-naphthyl)acetic acid, (2-naphthoyloxy)acetic acid, napropamide, naptalam, natamycin, NC-330, neburon, NI-25, nickel bis(dimethyldithiocarbamate), niclosamide, nicotine, nitenpyram, nithiazine, nitrapyrin, nitrothal-isopropyl, norflurazon, nuarimol, octhilinone, 2-(octylthio)ethanol, ofurace, omethoate, orbencarb, oryzalin, oxabetrinil, oxadixyl, oxamyl, oxine-copper, oxolinic acid, oxycarboxin, oxydemeton-methyl, paclobutrazol, paraquat, parathion, parathion-methyl, pebulate, pefurazoate, penconazole, pencycuron, pentachlorophenol, pentanochlor, permethrin, phenmedipham, phenothrin, phenthoate, 2-phenylphenol, N-phenylphthalamic acid, phorate, phosalone, phosdiphen, phosmet, phosphamidon, phoxim, phthalide, pindone, piperalin, piperonyl butoxide, pirimicarb, pirimiphosethyl, pirimiphos-methyl, polyoxins, prallethrin, pretilachlor, primisulfuron, probenazole, prochloraz, procymidone, prodiamine, profenofos, prohexadione, prometon, propachlor, propamocarb, propaphos, propaquizafop, propargite, propazine, propetamphos, propham, propiconazole, propineb, propisochlor, propoxur, propyzamide, prosulfocarb, prosulfuron, prothiofos, pymetrozine, pyraclofos, pyrethrins, pyridaben, pyridaphenthion, pyridate, pyrifenox, pyrimethanil, pyrimidifen, pyriproxyfen, pyrithiobac-sodium, pyroquilon, quinalophos, quinmerac, quinoclamine, quintozene, quizalofop, quizalofop-P, resmethrin, rimsulfuron, rotenone, RU15525, S421, siduron, silafluofen, smazine, sodium fluoroacetate, SSF-109, SSI-121, streptomycin, strychnine, sulcofuron, sulfentrazone, sulfluramid, sulfometuron, sulfotep, sulfur, sulprofos, tar oils, 2,3,6-TBA, TCA-sodium, tebuconazole, tebufenozide, tebufenpyrad, tebutam, tebuthiuron, tecloftalam, tecnazene, teflubenzuron, tefluthrin, temephos, terbacil, terbufos, terbumeton, terbuthylazine, terbutryn, tetrachlorvinphos, tetraconazole, tetradifon, tetramethrin, tetramethrin[(1R)-isomers], thiabendazole, thidiazuron, thifensulfuron, thifluzamide, thiocyclam, thiodicarb, thiofanox, thiometon, thiophanate-methyl, thiram, tiocarbazil, tolclofos-methyl, tolylfluanid, tralkoxydim, tralomethrin, transfluthrin, triadimefon, triadimenol, tri-allate, triazamate, triazophos, triazoxide, tribenuron, S,S,S-tributyl phosphorotrithioate, trichlorfen, tricyclazole, tridemorph, trietazine, triflumizole, triflumuron, trifluralin, triflusulfuron, triforine, trimethacarb, trinexapac, triticonazole, uniconazole, validamycin, vamidothion, vernolate, vinclozolin, warfarin, XDE537, XMC, xylylcarb, zineb, ziram;

Damit ergeben sich zahlreiche Möglichkeiten mehrere Wirkstoffe miteinander zu kombinieren und gemeinsam zur Unkrautbekämpfung in Reiskulturen einzusetzen, ohne vom Gedanken der Erfindung abzuweichen.

Die erfindungsgemäßen herbiziden Mittel (Kombinationen) weisen eine ausgezeichnete herbizide Wirksamkeit gegen ein breites Spektrum witrschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffkombinationen gut erfaßt. Dabei ist es gleichgültig, ob die Substanzen im Vorsaat-, Vorauflaufoder Nachauflaufverfahren ausgebracht werden.

Auf der Seite der monokotylen Unkrautarten werden zum Beispiel Echinochloa sowie Cyperusarten aus der annuellen Gruppe auf seiten der perennierenden Spezies ausdauernde Cyperusarten gut erfaßt.

Die unter spezifischen Kulturbedingungen in Reis vorkommenden Unkräuter, wie z.B. Sagittaria, Alisma, Rotala, Monochoria, Eleocharis, Scirpus, Cyperus etc., werden von den erfindungsgemäßen Wirkstoffkombinationen hervorragend bekämpft.

Werden die erfindungsgemäßen herbiziden Mittel vor dem Keimen appliziert, so wird entweder das Auflaufen der Unkrautkeimlinge vollständig verhindert, oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffkombination der Erfindung auf die grünen Pflanzenteile im Nachauflaufverfahren tritt ebenfalls rasch nach der Behandlung ein drastischer Wachstumsstopp ein. Die Unkrautpflanzen bleiben in dem zum Applikationszeitpunkt vorhanden Wachstumsstadium stehen oder sterben nach einer gewissen Zeit mehr oder weniger schnell ab, so daß auf diese Weise eine für Kulturpflanzen schädliche Unkrautkonkurrenz sehr früh und nachhaltig durch den Einsatz der neuen erfindungsgemäßen Mittel.beseitigt werden kann. Obgleich die erfindungsgemäßen Mittel eine ausgezeichnete herbizide Aktivität gegenüber mono- und dikotylen Unkräutern aufweisen, wird die Kulturpflanze nur unwesentlich oder gar nicht geschädigt. Die Mittel eignen sich aus diesem Grund besonders in Reis sehr gut zur selektiven Bekämpfung von unerwünschtem Pflanzenwuchs.

Im speziellen gehören zu den zu bekämpfenden Schadpflanzen wie bereits ausgeführt vor allem Gräser, Dikotyle und/oder ansonsten schwer bekämpfbare Cyperaceen. Zu bevorzugt mit den erfindungsgemäßen Kombinationen aus Typ A- und Typ B-Verbindungen zu bekämpfenden Schadpflanzen gehören unter anderem Echinochloa colonum, Echinochloa chinesis, Echinochloa crus galli, Leptochloa chin./fil., Paspalum dis., Brachiaria platyphylla, Digitaria spp., Ischaemum, Leersia hexandra, Oryza sativa (Red rice), Cenchrus echinatus, Rottboellia exaltata, Leersia und dergleichen auf der Seite der Gräser, Monochoria vag., Potamogeton dis., Rotala indica, Marsilea crenata, Ludwigia ad., Salvina mol., Ipomoea, Sesbania ex., Heteranthera, Commelinia, Butomus, Aeschynomene, Alisma plantago, Eclypta, Murdania, Xanthium, Alteranthera spp., Spenodea zey., Sagittaria, Iuncus spp., Polygonum, Ammania ind. auf der Seite der Unkräuter und Cyperus diff., Cyperus iria, Fimbristylis litt., Cyperus ferax, Cyperus esculentes auf der Seite der annuellen Cyperaceen sowie Eleocharis spp., Scirpus spp., Scirpus mucronatus und Cyperus rotundus auf Seiten der perennierenden Cyperaceen.

Zusammenfassend kann gesagt werden, daß bei gemeinsamer Anwendung von Sulfonylharnstoffen der allgemeinen Formel I und/oder ihren Salzen mit einem oder mehreren Wirkstoffen aus der Gruppe B überadditive (= synergistische) Effekte auftreten. Dabei ist die Wirkung in den Kombinationen stärker als die der eingesetzten Einzelprodukte bei alleiniger Anwendung.

Diese Effekte erlauben

- eine Reduzierung der Aufwandmenge,
- die Bekämpfung eines breiteren Spektrums von Unkräutern und Ungräsern,
- eine schnellere und sicherere Wirkung,
- eine längere Dauerwirkung,
- eine komplette Kontrolle der Schadpflanzen mit nur einer oder wenigen Applikationen, und
- eine Ausweitung des Anwendungszeitraumes der Wirkstoffe in Kombination.

Die genannten Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch die erfindungsgemäßen Kombinationen bezüglich der beschriebenen Eigenschaften deutlich übertroffen.

Darüberhinaus gestatten die erfindungsgemäßen Kombinationen in hervorragender Weise die Bekämpfung ansonsten resistenter Schadpflanzen.

Folgende Beispiele dienen zu Erläuterung der Erfindung:

1. Formulierungsbeispiele

a) Ein Stäubemittel wird erhalten, indem man 10 Gew.-Teile einer erfindungsgemäßen Wirkstoffkombination und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile Wirkstoffe A + B, 64 Gew.-Teile kaolinhaltigen Quarz als Inertstoff, 10 Gew.-Teile ligninsulfonsaures Kalium und 1 Gew. -Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile Wirkstoffe A + B mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z. B. ca. 255 bis 277 °C) mischt und in einer Reibkugelmühle auf eine Feinheit von unter 5 Mikron vermahlt.

d) Ein emulgierbares Konzentrat wird erhalten aus 15 Gew.-Teilen Cyclohexanon als Lösemittel und 10 Gew. -Teilen oxethyliertes Nonylphenol als Emulgator.

e) Ein in Wasser dispergierbares Granulat wird erhalten, indem man

| | |
|---|---|
| 75 | Gew.-Teile Wirkstoffe A + B, |
| 10 | Gew.-Teile ligninsulfonsaures Calcium, |
| 5 | Gew.-Teile Natriumlaurylsulfat, |
| 3 | Gew.-Teile Polyvinylalkohol und |
| 7 | Gew.-Teile Kaolin |

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

| | |
|---|---|
| 25 | Gew.-Teile Wirkstoffe A + B |
| 5 | Gew.-Teile 2,2'-dinaphthylmethan-6,6'-disulfonsaures Natrium, |
| 2 | Gew.-Teile oleoylmethyltaurinsaures Natrium, |
| 1 | Gew.-Teil Polyvinylalkohol, |
| 17 | Gew.-Teile Calciumcarbonat und |
| 50 | Gew.-Teile Wasser |

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

g) Ein Extruder-Granulat erhält man, indem man 20 Gew.-Teile der Wirkstoffe A + B, 3 Gewichtsteile ligninsulfonsaures Natrium, 1 Gewichtsteil Carboxymethylcellulose und 76 Gewichtsteile Kaolin vermischt, vermahlt und mit Wasser anfeuchtet. Dieses Gemisch wird extrudiert und anschließend im Luftstrom getrocknet.

2. Biologische Beispiele

Die nachfolgend genannten Beispiele wurden im Gewächshaus und teilweise in Feldversuchen erarbeitet.

i) Unkrautwirkung im Vorauflauf

Samen bzw. Rhizomenstücke von mono- und dikotylen Unkrautpflanzen werden in Plastiktöpfen von 9 cm Durchmesser in sandiger Lehmerde ausgelegt und mit Erde abgedeckt. Im Reisanbau vorkommende Unkräuter werden im mit Wasser gesättigten Boden kultiviert, wobei soviel Wasser in die Töpfe gefüllt wird, daß das Wasser bis zur Bodenoberfläche oder einige Millimeter darüber steht. Die in Form von benetzbaren Pulvern oder Emulsionskonzentraten formulierten erfindungsgemäßen Wirkstoffkombinationen sowie in parallelen Versuchen die entsprechend formulierten Einzelwirkstoffe werden dann als wäßrige Suspensionen bzw. als Emulsionen mit einer Wasseraufwandmenge von umgerechnet 300 bis 600 1/ha, in unterschiedlichen Dosierungen auf die Oberfläche der Abdeckerde appliziert oder beim Reis ins Bewässerungswasser gegossen.

Nach der Behandlung werden die Töpfe im Gewächshaus aufgestellt und unter guten Wachstumsbedingungen. (Temperatur, Luftfeuchtigkeit, Wasserversorgung) für die Unkräuter gehalten. Die visuelle Bonitur der Pflanzen bzw. der Auflaufschäden erfolgte nach dem Auflaufen der Versuchspflanzen nach einer Versuchszeit von 3 bis 4 Wochen im Vergleich zu unbehandelten Kontrollen. Die Versuche werden statistisch mit mehrfacher, bis zu fünffacher, Wiederholung angelegt. Die erfindungsgemäßen herbiziden Mittel weisen eine gute herbizide Vorauflaufwirksamkeit gegen ein breites Spektrum von Ungräsern und Unkräutern auf.

ii) Unkrautwirkung im Nachauflauf

Samen bzw. Rhizomenstücke von mono- und dikotylen Unkrautpflanzen werden in Plastiktöpfen in sandigem Lehmboden ausgelegt, mit Erde abgedeckt und im Gewächshaus unter guten Wachstumsbedingungen (Temperatur, Luftfeuchtigkeit, Wasserversorgung) angezogen. Im Reisanbau vorkommende Unkräuter werden in Töpfen kultiviert, in denen Wasser bis zu 2 cm über der Bodenoberfläche steht. Drei Wochen nach der Aussaat werden die Versuchspflanzen im Dreiblattstadium behandelt. Die als Spritzpulver oder Emulsionskonzentrate formulierten erfindungsgemäßen Wirkstoffkombinationen sowie in parallelen Versuchen die entsprechend formulierten Einzelwirkstoffe werden in verschiedenen Dosierungen mit einer Wasseraufwandmenge von umgerechnet 300 bis 600 1/ha auf die grünen Pflanzenteile gesprüht und nach ca. 3 bis 4 Wochen der Versuchspflanzen im Gewächshaus unter optimalen Wachstumsbedingungen (Temperatur, Luftfeuchtigkeit, Wasserversorgung) die Wirkung der Präparate visuell im Vergleich zu unbehandelten Kontrollen bonitiert. Bei Reis oder bei Unkräutern, die im Reisanbau vorkommen, werden die Wirkstoffe auch direkt ins Bewässerungswasser gegeben (Applikation in Analogie zur sogenannten Granulatanwendung) oder auf Pflanzen und ins Bewässerungswasser gesprüht. Die Versuche waren mit mehrfacher, bis zu fünffacher, Wiederholung angelegt worden. Die erfindungsgemäßen herbiziden Mittel weisen auch im Nachauflauf eine gute herbizide Wirksamkeit gegen ein breites Spektrum wirtschaftlich wichtiger Ungräser und Unkräuter auf.

iii) Bewertung der Kombinationseffekte in den Beispielen

Bei der Bewertung der Kombinationseffekte wurde die Wirkung der Einzelkomponenten addiert und mit der Wirksamkeit der dosierungsgleichen Mischungen verglichen. Oft zeigte sich, daß die Kombinationen höhere Wirkungsgrade als die Summe der Einzelwirkungen zeigte.

In Fällen mit weniger deutlichen Effekten wurde nach der COLBY-Formel der Erwartungswert errechnet und mit dem empirisch ermittelten Ergebnis verglichen. Der errechnete, theoretisch zu erwartende Wirkungsgrad einer Kombination wird ermittelt nach der Formel von S. R. Colby: "Calculation of synergistic and antagonistic responses of herbicide combinations", Weeds 15 (1967), Seiten 20 bis 22.

Die Formel lautet für Zweierkombinationen:

$$E = X + Y - \frac{X \bullet Y}{100}$$

und für die Kombination von drei herbiziden Wirkstoffen entsprechend:

$$E = X + Y + Z + \frac{X \bullet Y \bullet Z}{10000} - \frac{XY + XZ + YZ}{100}$$

wobei

X = % Schädigung durch Herbizid A bei x kg ai/ha Aufwandmege;
Y = % Schädigung durch Herbizid B bei y kg ai/ha Aufwandmenge;
Z = % Schädigung durch ein weiteres Herbizid C bei z kg ai/ha Aufwandmenge;
E = Erwartungswert, d.h. zu erwartende Schädigung durch die Herbizide A + B (oder A+B+C) bei x + y (oder x + y + z) kg ai/ha.

Dabei konnte von synergistischen Effekten ausgegangen werden, wenn der empirische Wert grösser als der Erwartungswert war. Bei Kombinationen mit wirkstoffgleichen Einzelkomponenten konnten auch Vergleiche über die Summenformel angestellt werden.

In der Mehrzahl der Fälle ist die synergistische Wirkungssteigerung jedoch so hoch, daß auf das Kriterium nach Colby verzichtet werden kann; die Wirkung der Kombination übersteigt dann deutlich die formale (zahlenmäßige) Summe der Wirkungen der Einzelstoffe.

Es sei besonders darauf hingewiesen, daß eine Beurteilung des Synergismus bei den hier eingesetzten Wirkstoffen die stark unterschiedlichen Aufwandmengen der Einzelwirkstoffe berücksichtigen muß. Es ist somit nicht sinnvoll, die Wirkungen der Wirkstoffkombinationen und die Einzelwirkstoffe jeweils bei gleichen Aufwandmengen zu vergleichen. Die erfindungsgemäß einzusparenden Wirkstoffmengen werden nur durch die überadditive Wirkungssteigerung bei Einsatz der kombinierten Aufwandmengen oder durch die Verringerung der Aufwandmengen beider Einzelwirkstoffe in den Kombinationen im Vergleich zu den Einzelwirkstoffen bei jeweils gleicher Wirkung erkennbar.

Tabelle 1

| Wirkstoff(e) | g ai/ha | CUMDI % Bekämpfung | ORYSW % Schäden |
|---|---|---|---|
| A1*) | 1,25 | 60 | 15 |
| | 2,5 | 80 | 15 |
| C3-1) | 15 | 0 | 0 |
| | 30 | 0 | 0 |
| | 60 | 0 | 0 |
| A1*) + C3-1) | 1,25 + 15 | 84 (60+0) | 0 |
| | 2,5 + 30 | 85 (80+0) | 0 |

CUMDI = Cucumis dipsaceus
ORYSW = Oryza sativa (Wasserreis)
A1*) = Natriumsalz des 4-Iodo-2-[3-(4-methoxy-6-methyl-1,3,5-triazin-2-yl)ureidosulfonyl]benzoesäuremethylesters
C3-1) = 5,5-Diphenyl-2-isoxazolin-3-carbonsäureethylester
( ) = % Wirkung der Einzelwirkstoffe

Tabelle 2

| Wirkstoff(e) | g ai/ha | ECHCG | ELEIN | ORYSW*) % Schäden |
|---|---|---|---|---|
| | | % Bekämpfung | | |
| A1*) | 1,25 | 0 | 0 | 10 |
| | 2,5 | 35 | 0 | 25 |
| | 5 | 37 | 0 | 25 |
| B63a) | 45 | 0 | 0 | 10 |
| | 60 | 0 | 0 | 10 |
| A1*) + B63a) | 1,25 + 45 | 82 (0+0) | 90 (0+0) | 15(10+10) |
| | 2,5 + 45 | 88 (35+0) | 90 (0+0) | 13(25+10) |

ECHCG = Echinochloa crus galli
ELEIN = Eleusine indica
ORYSW = Oryza sativa
A1*) = Natriumsalz des 4-Iodo-2-[3-(4-methoxy-6-methyl-1,3,5-triazin-2-yl)ureidosulfonyl)benzoesäuremethylesters
B63a) = Ethoxysulfuron
( ) = % Wirkung der Einzelwirkstoffe
Feldversuch: Behandlung im 1-2 Blattstadium Reis, 2-3 Blattstadium Ungräser
Auswertung: 28 Tage nach Applikation
*) Regionaler Akzeptanzlevel ≤ 30 % Schädigung (Lateinamerika)

Tabelle 2a

| Wirkstoff(e) | g ai/ha | LEFFI % Bekämpfung | ORYSW*) % Schäden |
|---|---|---|---|
| A1*) | 1,25 | 0 | 10 |
| | 2,5 | 73 | 25 |
| | 5 | 72 | 25 |
| B63a) | 45 | 0 | 10 |
| | 60 | 0 | 10 |
| A1*) + B63a) | 1,25 + 45 | 90 ( 0+0) | 15(10+10) |
| | 2,5 + 45 | 90 (73+0) | 13(25+10) |

LEFFI = Leptochloa filiformis
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters
B63a) = Ethoxysulfuron
( ) = % Wirkung der Einzelwirkstoffe
Feldversuch: Behandlung im 1-2 Blattstadium Reis, 2-3 Blattstadium Ungräser
Auswertung: 28 Tage nach Applikation
*) Regionaler Akzeptanzlevel ≤ 30 % Schädigung (Lateinamerika)

Tabelle 3

| Wirkstoff(e) | g ai/ha | CYPIR % Bekämpfung | ORYSW % Schäden |
|---|---|---|---|
| A1*) | 0,75 | 40 | 0 |
| | 1,5 | 67 | 0 |
| | 2,5 | 87 | 0 |
| B63a) | 22,5 | 60 | 0 |
| | 45 | 95 | 0 |
| A1*) + B63a) | 0,75 + 22,5 | 95 (40+0){E=76} | 0 |
| | 1,5 + 22,5 | 96 (67+60){E=87} | 0 |

CYPIR = Cyperus irria
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters
B63a) = Ethoxysulfuron
( ) = % Wirkung der Einzelwirkstoffe
{E= } = Erwartungswert berechnet nach Colby
Feldversuch: Behandlung im 4-5 Blattstadium (Saat-Reis) 2 Blattstadium Ungräser
Auswertung: 28 Tage nach Applikation

Tabelle 4

| Wirkstoff(e) | g ai/ha | ECHCG % Bekämpfung | ORYSW*) % Schäden |
|---|---|---|---|
| A1*) | 1,25 | 0 | 0 |
| | 2,5 | 0 | 0 |
| | 5 | 0 | 1 |
| B20) | 10 | 0 | 0 |
| | 20 | 0 | 0 |
| A1*) + B20) | 1,25 + 20 | 73 (0+0) | 14 |
| | 2,5 + 10 | 43 (0+0) | 1 |
| | 2,5 + 20 | 68 (0+0) | 15 |

ECHCG = Echinochloa crus galli
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters
B20) = Fenoxaprop-P-ethyl
( ) = % Wirkung der Einzelwirkstoffe
*) Feldversuch: Regionaler Akzeptanzlevel = 15% (Südostasien)

Tabelle 5

| Wirkstoff(e) | g ai/ha | ECHCG % Bekämpfung | ORYSW % Schäden |
|---|---|---|---|
| A1*) | 1,25 | 0 | 0 |
| | 2,5 | 0 | 0 |
| | 5 | 0 | 1 |

ECHCG = Echinochloa crus galli
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters
B19) = Anilofos
( ) = % Wirkung der Einzelwirkstoffe
Feldversuch: 2-4-Blattsatdium Reis, Auswertung nach 28 Tagen

Tabelle 5 (fortgesetzt)

| Wirkstoff(e) | g ai/ha | ECHCG % Bekämpfung | ORYSW % Schäden |
|---|---|---|---|
| B19) | 250 | 30 | 2 |
| | 500 | 40 | 10 |
| A1*) + B19) | 1,25 + 250 | 50 (0+0) | 2 |
| | 2,5 + 500 | 83 (50+0) | 13 |

ECHCG = Echinochloa crus galli
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters
B19) = Anilofos
( ) = % Wirkung der Einzelwirkstoffe
Feldversuch: 2-4-Blattsatdium Reis, Auswertung nach 28 Tagen

Tabelle 6

| Wirkstoff(e) | g ai/ha | ECHCG % Bekämpfung | ORYSW % Schäden |
|---|---|---|---|
| A1*) | 2 | 10 | 0 |
| B1) | 300 | 81 | 0 |
| | 600 | 89 | 0 |
| A1*) + B1) | 2 + 300 | 87 {83} | 0 |
| | 2 + 600 | 93 {90} | 0 |

ECHCG = Echinochloa grus galli
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters
B1) = Butachlor
( ) = % Wirkung der Einzelwirkstoffe
{ } = Erwartungswert berechnet nach Colby-Methode
Feldversuch: Behandlung: 1-2-Blattstadium, Auswertung 28 Tage nach Applikation.

Tabelle 7

| Wirkstoff(e) | g ai/ha | ECHCG % Bekämpfung | MASCR % Bekämpfung | ORYSW % Schäden |
|---|---|---|---|---|
| A1*) | 2 | 10 | 33 | 0 |
| B7) | 1000 | 79 | 0 | 0 |
| | 2000 | 88 | 0 | 0 |
| A1*) + B7) | 2 + 1000 | 90 (79+10) | 83 (33+0) | 0 |
| | 2 + 2000 | 95 {90} | 84 (33+0) | 0 |

ECHCG = Echinochloa crus galli
MASCR = Marsilea crenata
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters
B7) = Propanil
( ) = % Wirkung der Einzelwirkstoffe
{ } = Erwartungswert berechnet nach Colby-Methode
Feldversuch: Behandlung: 1-2-Blattstadium, Auswertung 28 Tage nach Applikation.

Tabelle 8

| Wirkstoff(e) | g ai/ha | ECHCG % Bekämpfung | ORYSW % Schäden |
|---|---|---|---|
| A1*) | 1,5 | 40 | 10 |
| | 3 | 60 | 10 |
| B7) | 1250 | 0 | 0 |
| | 2500 | 0 | 0 |
| | 5000 | 10 | 0 |
| A1*) + B7) | 1,5 + 2500 | 65 (40+0) | 12 |
| | 1,5 + 5000 | 75 (40+10) | 14 |
| | 3 + 1250 | 70 (60+0) | 11 |

ECHCG = Echinochloa crus galli
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters
B7) Propanil
( ) = % Wirkung der Einzelwirkstoffe
Gewächshausversuch: Behandlung: 1-2-Blattstadium, Auswertung 22 Tage nach Applikation.

Tabelle 9

| Wirkstoff(e) | g ai/ha | ECHCG % Bekämpfung | ORYSW % Schäden |
|---|---|---|---|
| A1*) | 1,5 | 40 | 10 |
| | 3 | 60 | 10 |
| B48) | 19 | 15 | 0 |
| | 38 | 30 | 0 |
| | 75 | 40 | 5 |
| A1*) + B48) | 1,5 + 38 | 85 (40+30) | 10 |
| | 3 + 19 | 75 {66} | 11 |

ECHCG = Echinochloa crus galli
ORYSW = Oryza sativa_
A1*) = Natriumsalz des 4-Iodo-2-[3-(4-methoxy-6-methyl-1,3,5-triazin-2-yl)ureidosulfonyl]benzoesäuremethylesters
B22) = KIH 2023 = Bispyribuc
( ) = % Wirkung der Einzelwirkstoffe
{ } = Erwartungswert berechnet nach Colby-Methode
Gewächshausversuch: Behandlung 1-2-Blattstadium, Auswertung 22 Tage nach Applikation.

Tabelle 10

| Wirkstoff(e) | g ai/ha | SCIJU % Bekämpfung | ORYSW % Schäden |
|---|---|---|---|
| A1*) | 1,5 | 40 | 10 |
| | 3 | 40 | 10 |

SCIJU = Scirpus juncoides
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B58) = Bensulfuron
B59) = Pyrazosulfuron
{ } = Erwartungswert nach Colby
( ) = % Wirkung der Einzelwirkstoffe
Gewächshausversuch: Behandlung 1-2-Blattstadium, Auswertung 20 Tage nach Applikation.

Tabelle 10 (fortgesetzt)

| Wirkstoff(e) | g ai/ha | SCIJU<br>% Bekämpfung | ORYSW<br>% Schäden |
|---|---|---|---|
| B58) | 7,5 | 35 | 0 |
| | 15 | 40 | 0 |
| | 30 | 55 | 2 |
| | 60 | 60 | 5 |
| B59) | 7,5 | 50 | 0 |
| | 15 | 55 | 0 |
| | 30 | 60 | 2 |
| A1*) + B58) | 3 + 7,5 | 85 (40+35) | 8 |
| | 1,5 + 30 | 97 (40+55) | 12 |
| A1*) + B59) | 3 + 7,5 | 93 {70} | 8 |
| | 1,5 + 15 | 96 {73} | 10 |

SCIJU = Scirpus juncoides
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B58) = Bensulfuron
B59) = Pyrazosulfuron
{ } = Erwartungswert nach Colby
( ) = % Wirkung der Einzelwirkstoffe
Gewächshausversuch: Behandlung 1-2-Blattstadium, Auswertung 20 Tage nach Applikation.

Tabelle 11

| Wirkstoff(e) | g ai/ha | ECHCG<br>% Bekämpfung | ORYSW<br>% Schäden |
|---|---|---|---|
| A1*) | 1,5 | 40 | 10 |
| | 3 | 60 | 10 |
| B61) | 8 | 0 | 0 |
| | 15 | 25 | 0 |
| | 30 | 50 | 0 |
| | 60 | 60 | 0 |
| A1*) + B61) | 1,5 + 8 | 76 (40+0) | 9 |
| | 1,5 + 15 | 83 (40+25) | 10 |
| | 1,5 + 60 | 96 {76} | 12 |
| | 3 + 30 | 93 {80} | 8 |

ECHCG = Echinochloa crus galli
ORYSW = Oryza sativa
A1*) = Natriumsalz des 4-Iodo-2-[3-(4-methoxy-6-methyl-1,3,5-triazin-2-yl)ureidosulfonyl)benzoesäuremethylesters = Iodosulfuron
B61) = Imazosulfuron
( ) = % Wirkung der Einzelwirkstoffe
{ } = Erwartungswert berechnet nach Colby-Methode
Gewächshausversuch: Behandlung 1-2-Blattstadium, Auswertung 20 Tage nach Applikation.

Tabelle 12

| Wirkstoff(e) | g ai/ha | CYPSE % Bekämpfung | ORYSW % Schäden |
|---|---|---|---|
| A1*) | 1,5 | 10 | 10 |
| | 3 | 30 | 10 |
| B60) | 15 | 0 | 0 |
| | 30 | 15 | 0 |
| | 60 | 15 | 5 |
| A1*) + B60) | 1,5 + 60 | 63 (10+15) | 10 |
| | 3 + 15 | 65 (30+0) | 12 |

CYPSE = Cyperus serotinus
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B60) = Cinosulfuron
( ) = % Wirkung der Einzelwirkstoffe
Gewächshausversuch: Behandlung 1-2-Blattstadium, Auswertung 20 Tage nach Applikation.

Tabelle 13

| Wirkstoff(e) | g ai/ha | SAGPY % Bekämpfung | ORYSW % Schäden |
|---|---|---|---|
| A1*) | 1,5 | 30 | 10 |
| | 3 | 50 | 10 |
| B17) | 50 | 0 | 0 |
| | 100 | 40 | 0 |
| | 200 | 80 | 0 |
| A1*) + B17) | 1,5 +100 | 85 (30+40) | 11 |
| | 3 + 50 | 65 (50+0) | 9 |

SAGPY = Sagittaria pygmaea
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B17) = Fentrazamid
( ) = Wirkung der Einzelwirkstoffe
Gewächshausversuch: Behandlung 5-6-Blattstadium, Auswertung 20 Tage nach Applikation.

Tabelle 14

| Wirkstoff(e) | g ai/ha | SAGPY % Bekämpfung | ORYSW % Schäden |
|---|---|---|---|
| A1*) | 1,5 | 30 | 10 |
| | 3 | 50 | 10 |

SAGPY = Sagittaria pygmaea
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B73) = MY 100
B13) = Quinchlorac
B4) = Pretilachlor
( ) = % Wirkung der Einzelwirkstoffe
{ } = Erwartungswert nach Colby
Gewächshausversuch: Behandlung 3-4-Blattstadium, Auswertung 21 Tage nach Applikation.

Tabelle 14 (fortgesetzt)

| Wirkstoff(e) | g ai/ha | SAGPY % Bekämpfung | ORYSW % Schäden |
|---|---|---|---|
| B73) | 50 | 10 | 0 |
| | 100 | 15 | 0 |
| | 200 | 20 | 5 |
| B13) | 250 | 30 | 0 |
| | 500 | 30 | 0 |
| | 1000 | 30 | 0 |
| B4) | 125 | 65 | 15 |
| | 250 | 70 | 15 |
| | 500 | 75 | 35 |
| A1*) + B73) | 1,5 + 200 | 75 (30+20) | 10 |
| | 3 + 50 | 85 (50+10) | 11 |
| A1*) + B13) | 1,5 +1000 | 75 (30+30) | 10 |
| | 3 + 250 | 85 (50+30) | 11 |
| A1*) + B4) | 1,5 + 500 | 93 {83} | 10 |
| | 3 + 125 | 97 {75} | 11 |

SAGPY = Sagittaria pygmaea
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B73) = MY 100
B13) = Quinchlorac
B4) = Pretilachlor
( ) = % Wirkung der Einzelwirkstoffe
{ } = Erwartungswert nach Colby
Gewächshausversuch: Behandlung 3-4-Blattstadium, Auswertung 21 Tage nach Applikation.

Tabelle 15

| Wirkstoff(e) | g ai/ha | SCIMA % Bekämpfung | ORYSW % Schäden |
|---|---|---|---|
| A1*) | 1,25 | 35 | 5 |
| | 2,5 | 40 | 10 |
| | 5 | 45 | 10 |
| B64) | 5 | 78 | 3 |
| | 9 | 80 | 8 |
| | 18 | 83 | 10 |
| | 37 | 85 | 10 |

SCIMA = Scirpus maritimus
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B64) = Azimsulfuron
( ) = % Wirkung der Einzelwirkstoffe
{ } = Erwartungswert nach Colby
Gewächshausversuch: Behandlung 2-3-Blattstadium, Auswertung 20 Tage nach Applikation.

Tabelle 15 (fortgesetzt)

| Wirkstoff(e) | g ai/ha | SCIMA % Bekämpfung | ORYSW % Schäden |
|---|---|---|---|
| A1*) + B64) | 1,25 + 5 | 90 {86} | 11 |
| | 1,25 + 37 | 95 {90} | 15 |
| | 2,5 + 37 | 93 {89} | 14 |
| | 5 + 5 | 90 {88} | . 12 |

SCIMA = Scirpus maritimus
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B64) = Azimsulfuron
( ) = % Wirkung der Einzelwirkstoffe
{ } = Erwartungswert nach Colby
Gewächshausversuch: Behandlung 2-3-Blattstadium, Auswertung 20 Tage nach Applikation.

Tabelle 16

| Wirkstoff(e) | g ai/ha | CYPSE % Bekämpfung | ORYSW % Schäden |
|---|---|---|---|
| A1*) | 1,25 | 10 | 5 |
| | 2,5 | 30 | 10 |
| | 5 | 50 | 10 |
| B72) | 18,75 | 25 | 3 |
| | 37,5 | 35 | 8 |
| | 75 | 60 | 8 |
| A1*) + B72) | 1,25 + 75 | 80 (10+60) | 13 |
| | 2,5 + 18,75 | 75 (30+25) | 12 |

CYPSE = Cyperus serotinus
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B72) = LGC40863 = Pyribenzoxim
( ) = % Wirkung der Einzelwirkstoffe
Gewächshausversuch: Behandlung 2-3-Blattstadium, Auswertung 20 Tage nach Applikation.

Tabelle 17

| Wirkstoff(e) | g ai/ha | ECHCG % Bekämpfung | ORYSW % Schäden |
|---|---|---|---|
| A1*) | 1 | 5 | 7 |
| | 2 | 25 | 12 |
| | 4 | 45 | 18 |

ECHCG = Echinochloa crus galli
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B51) = Oxadiargyl
B38) = Carfentrazone
( ) = % Wirkung der Einzelwirkstoffe
{ } = Erwartungswert berechnet nach Colby-Methode
Feldversuch: Behandlung 2-Blattstadium, Auswertung 14 Tage nach Applikation.

Tabelle 17 (fortgesetzt)

| Wirkstoff(e) | g ai/ha | ECHCG % Bekämpfung | ORYSW % Schäden |
|---|---|---|---|
| B51) | 25 | 37 | 0 |
| | 50 | 63 | 3 |
| | 100 | 63 | 6 |
| | 200 | 80 | 10 |
| B38) | 7,5 | 50 | 0 |
| | 15 | 52 | 0 |
| | 30 | 52 | 0 |
| A1*) + B51) | 2 + 25 | 75 (25+37) | 8 |
| | 1 + 200 | 88 {81} | 14 |
| A1*) + B38) | 2 + 7,5 | 85 (25+50) | 12 |
| | 1 +30 | 75 (5 +52) | 6 |

ECHCG = Echinochloa crus galli
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B51) = Oxadiargyl
B38) = Carfentrazone
( ) = % Wirkung der Einzelwirkstoffe
{ } = Erwartungswert berechnet nach Colby-Methode
Feldversuch: Behandlung 2-Blattstadium, Auswertung 14 Tage nach Applikation.

Tabelle 18

| Wirkstoff(e) | g ai/ha | ECHCG % Bekämpfung | ORYSW % Schäden |
|---|---|---|---|
| A1*) | 1 | 5 | 7 |
| | 2 | 25 | 12 |
| B63a) | 5 | 7 | 7 |
| | 10 | 7 | 7 |
| B20) | 30 | 75 | 0 |
| C3-1) | 30 | | |
| A1*) + B63a) | 1 + 5 | 33 (5+7) | |
| A1*) + B63a) + B20) + C3-1) | 1 + 5 + 30 + 30 | 98 (5+7+75) | |

ECHCG = Echinochloa crus galli
ORYSW = Oryza sativa.
A1*) = Natriumsalz des 4-Iodo-2-[3-(4-methoxy-6-methyl-1,3,5-triazin-2-yl)ureidosulfonyl]benzoesäuremethylesters = Iodosulfuron
B63a) = Ethoxysulfuron
B20) = Fenoxaprop-P
C3-1) = 5,5-Diphenyl-2-isoxazolin-3-carbonsäureethylester
( ) = % Wirkung der Einzelwirkstoffe
Feldversuch: Behandlung 1-2-Blattstadium, Auswertung 14 Tage nach Applikation.

Tabelle 19

| Wirkstoff (e) | g ai/ha | CYPSE % Bekämpfung | ORYSW % Schäden |
|---|---|---|---|
| A1*) | 1,5 | 10 | 8 |
| | 3 | 30 | 12 |
| B70) | 150 | 50 | 0 |
| | 450 | 65 | 0 |
| B33b) | 100 | 40 | 6 |
| | 200 | 50 | 8 |
| | 400 | 80 | 12 |
| A1*) + B70) | 3 + 150 | 85 (30+50) | 10 |
| | 1,5+ 450 | 80 (10+65) | 8 |
| A1*) + B33) | 3 + 100 | 85 (30+40) | 14 |
| | 1,5+ 200 | 80 (10+50) | 10 |

CYPSE = Cyperus serotinus
ORYSW = Oryza sativa
A1*) = Natriumsalz des 4-Iodo-2-[3-(4-methoxy-6-methyl-1,3,5-triazin-2-yl)ureidosulfonyl)benzoesäuremethylesters = Iodosulfuron
B70) = KP314 (Pentoxazone)
B33b) = Azol der Formel B33b)
( ) = % Wirkung der Einzelwirkstoffe
Feldversuch: Behandlung 2-Blattstadium, Auswertung 14 Tage nach Applikation.

Tabelle 20

| Wirkstoff(e) | g ai/ha | IPOHE % Bekämpfung | ORYSW % Schäden |
|---|---|---|---|
| A1*) | 2,5 | 30 | 8 |
| B40) | 420 | 65 | 20 |
| B11) | 3300 | 43 | 3 |
| B10) | 4480 | 55 | 0 |
| A1*) + B40) | 2,5+ 420 | 85 {75} | 18 |
| A1*) + B11) | 2,5+3300 | 75 {60} | 5 |
| A1*) + B10) | 2,5+4480 | 100 (30+55) | 7 |

IPOHE = Ipomoea hederacea
ORYSW = Oryza sativa
A1*) = Natriumsalz des 4-Iodo-2-[3-(4-methoxy-6-methyl-1,3,5-triazin-2-yl-)ureidosulfonyl]benzoesäuremethylesters = Iodosulfuron
B40) = Triclopyr
B11) = Thiobencarb als Handelsprodukt ™Bolero
B10) = Molinate als Handelsprodukt ™Ordram
( ) = % Wirkung der Einzelwirkstoffe
{ } = Erwartungswert nach Colby
Feldversuch: Behandlung 4-6-Blattstadium, Auswertung 28 Tage nach Applikation.

Tabelle 21

| Vlirkstoff(e) | g ai/ha | CYPSE % Bekämpfung | ORYSW % Schäden |
|---|---|---|---|
| A1*) | 2,5 | 25 | 8 |
| B12) | 600 | 65 | 3 |
| B9) | 3000 | 45 | 5 |
| B24) | 60 | 60 | 6 |
| B71) | 150 | 55 | 4 |
| A1*) + B12) | 2,5+ 600 | 93 (25+65) | 9 |
| A1*) + B9) | 2,5+3000 | 83 (25+45) | 8 |
| A1*) + B24) | 2,5+ 60 | 88 {70} | 6 |
| A1*) + B71) | 2,5+ 150 | 87 {66} | 7 |

CYPSE = Cyperus serotinus
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B12) = Pyributicarb
B9) = Dimepiperate
B24) = Dithiopyr
B71) = Indanofan
( ) = % Wirkung der Einzelwirkstoffe
{ } = Erwartungswert nach Colby
Feldversuch: Behandlung 2-Blattstadium, Auswertung 28 Tage nach Applikation.

Tabelle 22

| Wirkstoff(e) | g ai/ha | SAGPY % Bekämpfung | ORYSW % Schäden |
|---|---|---|---|
| A1*) | 2,5 | 20 | 6 |
| | 5 | 40 | 12 |
| B5) | 600 | 0 | 0 |
| | 1200 | 0 | 3 |
| | 2400 | 0 | 10 |
| A1*) + B5) | 2,5 +2400 | 55 (20+0) | 8 |
| | 5 + 600 | 65 (40+0) | 10 |

SAGPY = Sagittaria pygmaea
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B5) = Mefenacet
( ) = % Wirkung der Einzelwirkstoffe
Feldversuch: Behandlung 1-2-Blattstadium, Auswertung 28 Tage nach Applikation.

Tabelle 23

| Wirkstoff(e) | g ai/ha | CYPIR % Bekämpfung | ORYSW % Schäden |
|---|---|---|---|
| A1*) | 0,62 | 53 | 3 |
| | 1,25 | 85 | 8 |
| | 2,5 | 98 | 12 |
| B39) | 250 | 42 | 0 |
| | 400 | 78 | 0 |
| | 800 | 97 | 3 |
| A1*) + B39) | 0,62 + 250 | 99 (53+42) | 0 |

CYPIR = Cyperus iria
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B39) = Bentazon
( ) = % Wirkung der Einzelwirkstoffe
Feldversuch: Behandlung 4-6-Blattstadium, Auswertung 36 Tage nach Applikation.

Tabelle 24

| Wirkstoff(e) | g ai/ha | CYPIR % Bekämpfung | ORYSW % Schäden |
|---|---|---|---|
| A1*) | 2,5 | 17 | 0 |
| | 5 | 27 | 0 |
| B44) | 400 | 30 | 0 |
| A1*) + B44) | 2,5 + 400 | 67 (17+30) | 0 |
| | 5 + 400 | 78 (27+30) | 0 |

CYPIR = Cyperus iria
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B44) = Clomazone
( ) = % Wirkung der Einzelwirkstoffe
Feldversuch: Behandlung im Vorauflaufverfahren, Auswertung 53 Tage nach Applikation.

Tabelle 25

| Wirkstoff(e) | g ai/ha | POLCO % Bekämpfung | ORYSW % Schäden |
|---|---|---|---|
| A1*) | 1,25 | 35 | 6 |
| | 2,5 | 80 | 12 |
| B31) | 240 | 45 | 8 |
| | 480 | 80 | 10 |
| A1*) + B31) | 1,25 + 240 | 84 (35+45) | 11 |

POLCO = Polygonum convolvulus
ORYSW = Oryza sativa
A1*) = Natriumsalz des 4-Iodo-2-[3-(4-methoxy-6-methyl-1,3,5-triazin-2-yl)ureidosulfonyl]benzoesäuremethylesters = Iodosulfuron
B31) = Dicamba
( ) = % Wirkung der Einzelwirkstoffe
Feldversuch: Behandlung 3-Blattstadium, Auswertung 33 Tage nach Applikation.

Tabelle 26

| Wirkstoff(e) | g ai/ha | COMBE % Bekämpfung | ORYSW % Schäden |
|---|---|---|---|
| A1*) | 2,5 | 47 | 0 |
| | 5 | 67 | 0 |
| B57) | 1 | 20 | 0 |
| | 2 | 68 | 0 |
| A1*) + B57) | 2,5 + 1 | 73 (47+20) | 0 |

COMBE = Commelina benghalensis
ORYSW = Oryza sativa
A1*) = Natriumsalz des 4-Iodo-2-[3-(4-methoxy-6-methyl-1, 3, 5-triazin-2-yl) ureidosulfonyl)benzoesäuremethylesters = Iodosulfuron
B57) = Metsulfuron
(   ) = % Wirkung der Einzelwirkstoffe
Feldversuch: Behandlung im 3-Blattstadium, Auswertung 33 Tage nach Applikation.

Die Beispiele zeigen, daß durch die Einzelwirkstoffe einzelne Unkräuter nur in hohen Dosierungen gut bekämpft werden. Die Kombinationspartner in niedrigen Dosierungen appliziert, zeigen in der Regel nur geringe, bei weitem nicht die in der Praxis geforderte Wirksamkeit. Nur durch die gemeinsame Anwendung der Wirkstoffe lassen sich gute Effekte gegen alle geprüften Unkrautarten erzielen. Dabei wurde die additive Wirkung aus den Einzelkomponenten deutlich übertroffen, d. h., daß das geforderte Bekämpfungsniveau durch deutlich niedrigere Aufwandmengen erzielt wird. Durch diese Effekte wird das Wirkungsspektrum deutlich breiter.

Die Kulturverträglichkeit, in Form von Schädigungen bewertet, wird nicht negativ beeinflußt, d. h. daß die Kombinationen als voll selektiv bewertet werden können.

## Patentansprüche

**1.** Herbizide Mittel, enthaltend in einer synergistisch wirksamen Menge

A) mindestens einen herbiziden Wirkstoff aus der Gruppe der substituierten Phenylsulfonylharnstoffe der allgemeinen Formel I und deren landwirtschaftlich akzeptierten, d.h. annehmbaren und verträglichen, Salze

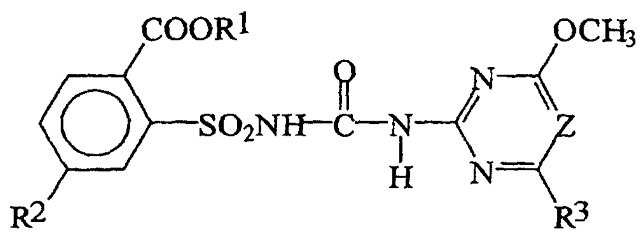

(I),

worin

$R^1$ $(C_1\text{-}C_8)$-Alkyl, $(C_3\text{-}C_4)$-Alkenyl, $(C_3\text{-}C_4)$-Alkinyl oder $(C_1\text{-}C_4)$-Alkyl, das ein- bis vierfach durch Reste aus der Gruppe Halogen und/oder $(C_1\text{-}C_2)$-Alkoxy substituiert ist, bedeutet;
$R^2$ I oder $CH_2NHSO_2CH_3$ bedeutet;
$R^3$ Methyl oder Methoxy bedeutet; und
Z N oder CH ist;

und

B) mindestens eine herbizid wirksame Verbindung aus der Gruppe der Verbindungen, welche aus

Ba) selektiv in Reis vorwiegend gegen Gräser wirksamen Herbiziden, ausgewählt aus der Gruppe beste-

hend aus

B1) Butachlor

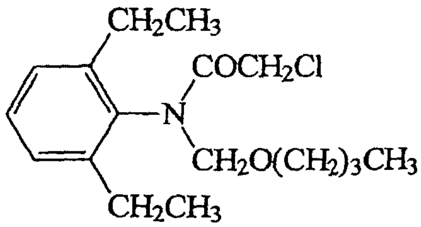

,

B2) Butenachlor

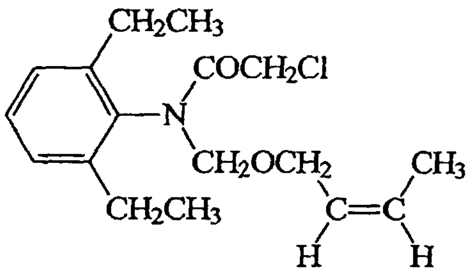

,

B3) Thenylchlor

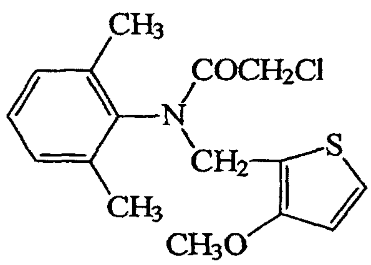

,

B4) Pretilachlor

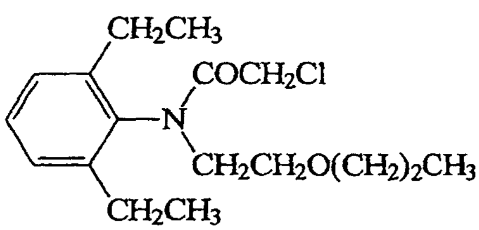

,

B5) Mefenacet

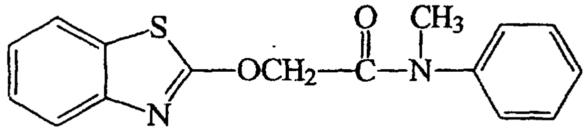

,

B5a) BAY FOE 5043

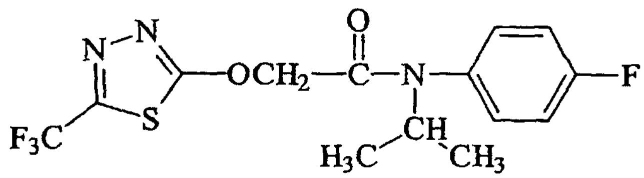

B6) Naproanilid

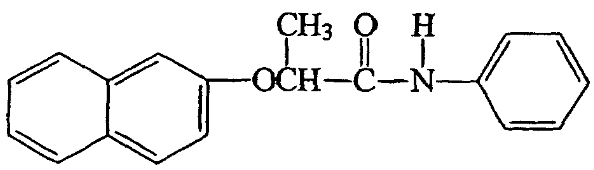

,

B7) Propanil

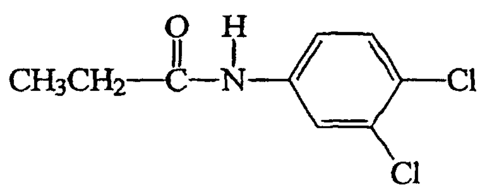

,

B8) Etobenzanid

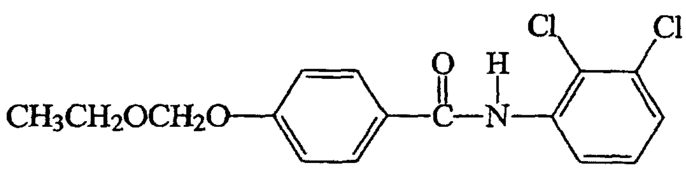

,

B9) Dimepiperate

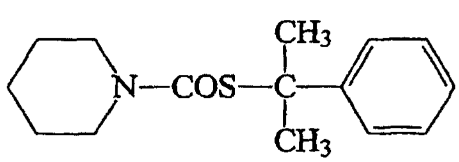

,

B10) Molinate

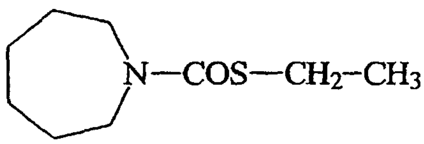

,

B11) Thiobencarb

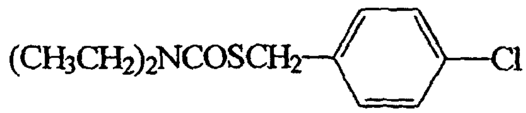

,

B12) Pyributicarb

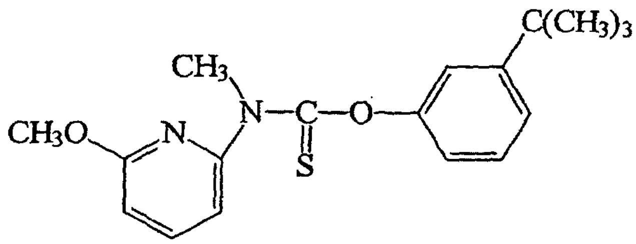

,

B13) Quinclorac

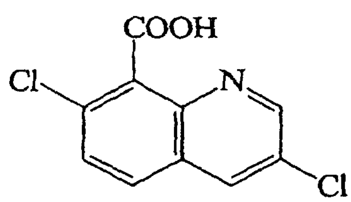

,

B14) Cyclohexandionen der allgemeinen Formel II

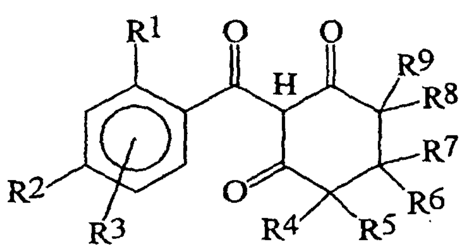

(II),

,

worin

$R^1$ Halogen, $(C_1-C_4)$-Alkoxy, $(C_1-C_4)$-Alkyl, $(C_1-C_4)$-Haloalkyl, $-NO_2$, -CN oder $S(O)_nR^{10}$;
$R^2$ und $R^3$ unabhängig voneinander Wasserstoff, Halogen, $(C_1-C_4)$-Alkyl, $(C_1-C_4)$-Alkoxy, $(C_1-C_4)$

-Haloalkoxy, $(C_1-C_4)$-Haloalkyl, $-NO_2$, -CN oder $S(O)_mR^{11}$, $-NR^{12}R^{13}$, $-NR^{14}-COR^{15}$;
$R^4$ Wasserstoff, $(C_1-C_4)$-Alkyl oder -CO-O-$(C_1-C_4)$-Alkyl;
$R^5$, $R^6$, $R^7$, $R^8$ $R^9$ unabhängig voneinander Wasserstoff oder $(C_1-C_4)$-Alkyl oder $-CO-R^{16}$;
$R^{10}$ $(C_1-C_4)$-Alkyl, $(C_1-C_4)$-Haloalkyl oder $(C_1-C_4)$-Alkoxy;
$R^{11}$ $(C_1-C_4)$-Alkyl, $(C_1-C_4)$-Haloalkyl, Phenyl, Benzyl oder $-NR^{17}R^{18}$;
$R^{12}$ und $R^{13}$ unabhängig voneinander Wasserstoff oder $(C_1-C_4)$-Alkyl;
$R^{14}$ Wasserstoff oder $(C_1-C_4)$-Alkyl;
$R^{15}$ $(C_1-C_4)$-Alkyl;
$R^{16}$ Wasserstoff, $(C_1-C_4)$-Alkyl, $(C_1-C_4)$-Haloalkyl oder $(C_1-C_4)$-Alkoxy;
$R^{17}$ und $R^{18}$ unabhängig voneinander Wasserstoff oder $(C_1-C_4)$-Alkyl; und
n und m unabhängig voneinander 0, 1 oder 2 bedeuten,

wobei besonders bevorzugt ist

B14a) ICIA0051 = Sulcotrione

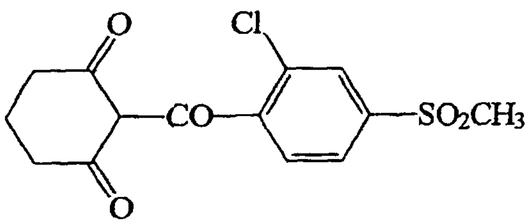

,

B15) Cycloxydim

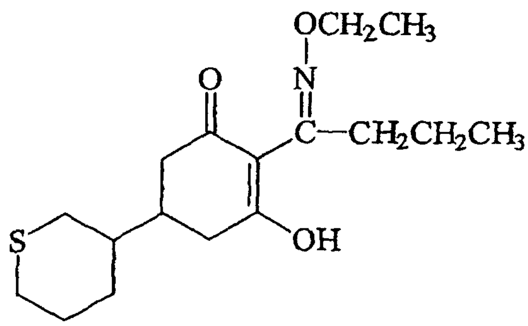

,

B16) Sethoxydim

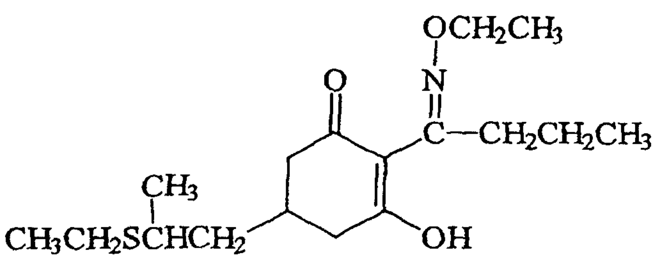

,

B17) Bayer NBA 061

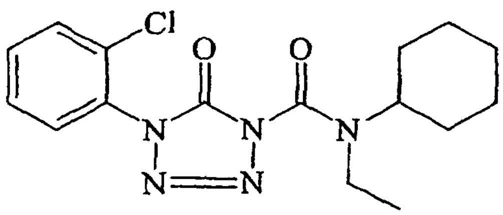

,

B18) Piperophos

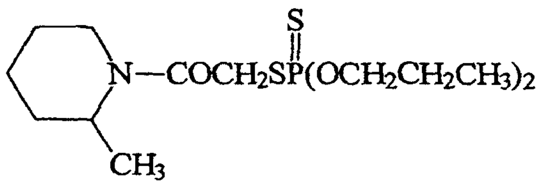

,

B19) Anilofos

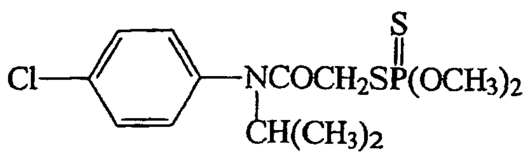

,

B20) Fenoxaprop, Fenoxaprop-P

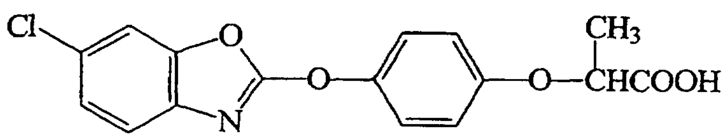

,

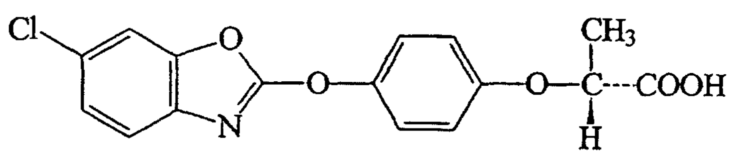

,

B21) Haloxyfop

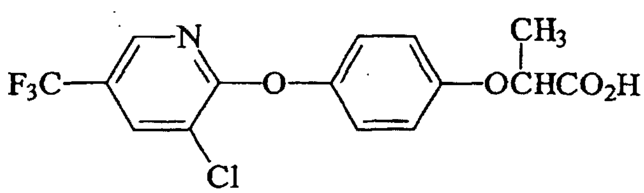

,

B22) Cyhalofop

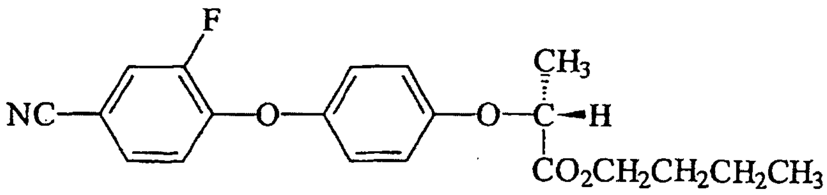

,

B23) JC-940

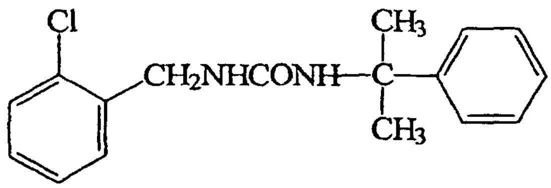

,

B24) Dithiopyr

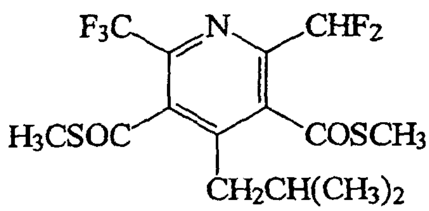

,

B25) Bromobutide

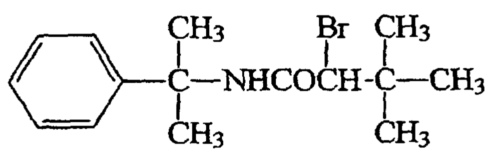

,

B26) Cinmethylin

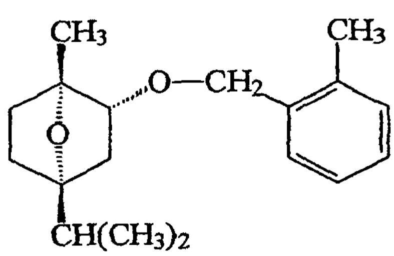

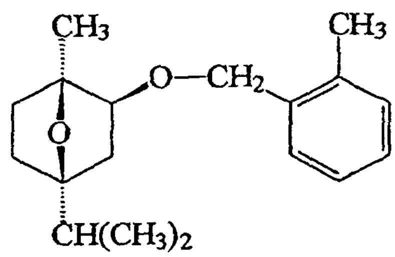

und

B27) CH-900

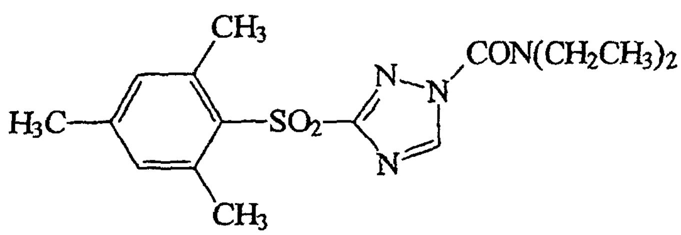

,

Bb) selektiv in Reis vorwiegend gegen dikotyle Schadpflanzen und Cyperaceen wirksamen Herbiziden aus der Gruppe bestehend aus

B28) 2,4-D

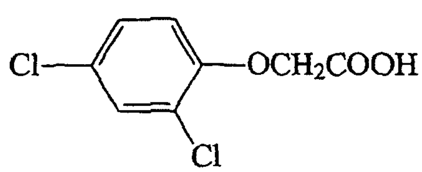

,

B29) Mecoprop, Mecoprop-P

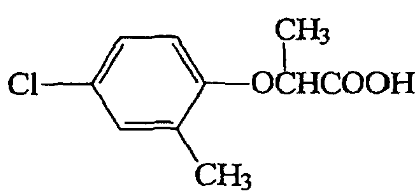

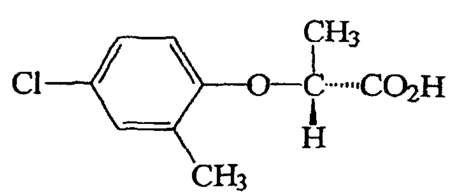

,

B30) MCPA

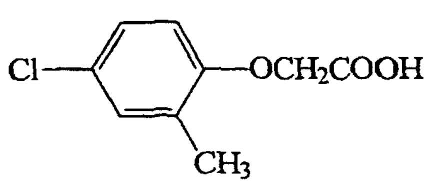

,

B31) Dicamba

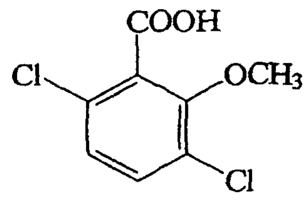

,

B32) Acifluorfen

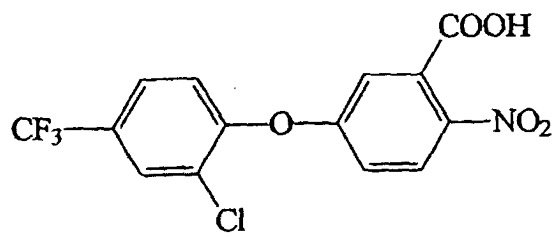

B33) Azolen der allgemeinen Formel III

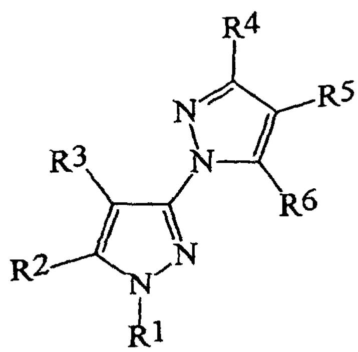

(III),

,

worin

| | |
|---|---|
| $R^1$ | $(C_1\text{-}C_4)$-Alkyl ist, |
| $R^2$ | $(C_1\text{-}C_4)$-Alkyl, $(C_1\text{-}C_4)$-Alkylthio oder $(C_1\text{-}C_4)$-Alkoxy ist, von denen jeder Rest durch ein oder mehrere Halogenatome substituiert sein kann, oder |
| $R^1$ und $R^2$ | zusammen die Gruppe $(CH_2)_m$ bilden mit m = 3 oder 4, |
| $R^3$ | Wasserstoff oder Halogen ist, |
| $R^4$ | Wasserstoff oder $(C_1\text{-}C_4)$-Alkyl ist, |
| $R^5$ | Wasserstoff, Nitro, Cyano oder eine der Gruppen $-COOR^7$, $-C(=X)NR^7R^8$ oder $-C(=X)R^{10}$ ist, |
| $R^6$ | Wasserstoff, Halogen, Cyano, $(C_1\text{-}C_4)$-Alkyl, $(C_1\text{-}C_4)$-Alkylthio oder $-NR^{11}R^{12}$ ist, |
| $R^7$ und $R^8$ | gleich oder verschieden Wasserstoff oder $(C_1\text{-}C_4)$-Alkyl sind, oder |
| $R^7$ und $R^8$ | zusammen mit dem Stickstoff, an den sie gebunden sind einen gesättigten 5 oder 6 gliedrigen carbozyklischen Ring bilden, |
| $R^{10}$ | Wasserstoff oder $(C_1\text{-}C_4)$-Alkyl ist, wobei letztere gegebenenfalls mit einem oder mehreren Halogenatomen substituiert sein können, und |
| $R^{11}$ u. $R^{12}$ | gleich oder verschieden Wasserstoff, $(C_1\text{-}C_4)$-Alkyl oder $(C_1\text{-}C_4)$-Alkoxycarbonyl sind, wobei |
| $R^{11}$ u. $R^{12}$ | zusammen mit dem Stickstoff, an den sie gebunden sind, einen 3, 5 oder 6 gliedrigen |

carbozyklischen oder aromatischen Ring bilden können, in welchem ein C-Atom optionell durch ein O-Atom ersetzt sein kann;

wobei besonders bevorzugt sind

B33a) eine Verbindung der allgemeinen Formel III, worin $R^1$ und $R^2$ zusammen die Gruppe $(CH_2)_m$ bilden mit m = 4, $R^3$ Chlor ist, R4 Wasserstoff bedeutet, $R^5$ Cyano ist, $R^6$ die Bedeutung $-NR^{11}R^{12}$ annimmt, $R^{11}$ für Wasserstoff und $R^{12}$ für Isopropyl stehen,

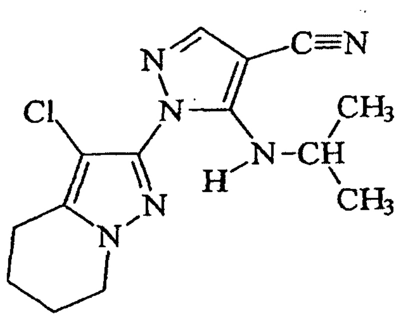

,

und

B33b) eine Verbindung der allgemeinen Formel III, worin $R^1$ und $R^2$ zusammen die Gruppe $(CH_2)_m$ bilden mit m = 4, $R^3$ Chlor ist, R4 Wasserstoff bedeutet, $R^5$ Cyano ist, $R^6$ die Bedeutung $-NR^{11}R^{12}$ annimmt, $R^{11}$ Methyl und $R^{12}$ $-CH_2-C{\equiv}CH$ ist,

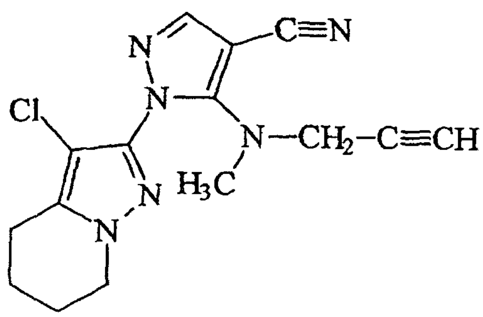

,

B34) Chlorimuron

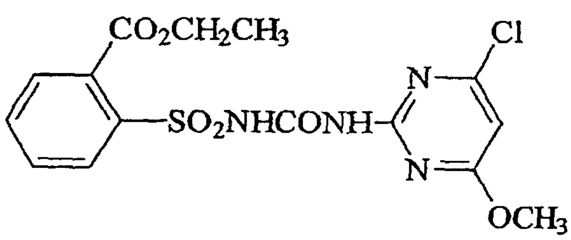

,

B35) Triasulfuron

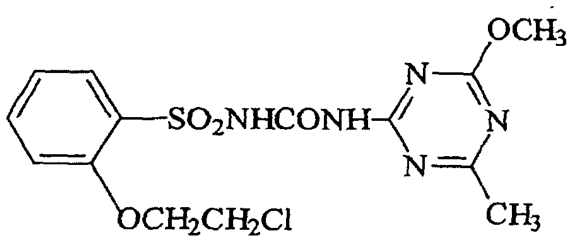

,

B36) Ioxynil

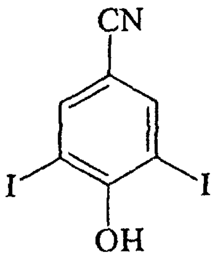

,

B37) Picloram

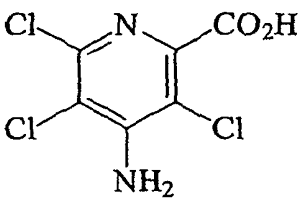

und

B38) Carfentrazon

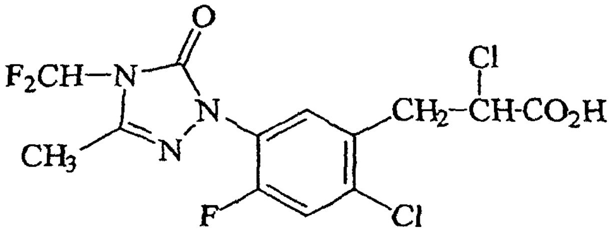

Bc) selektiv in Reis vornehmlich gegen Cyperaceen wirksamen Herbiziden aus der Gruppe bestehend aus,

B39) Bentazon

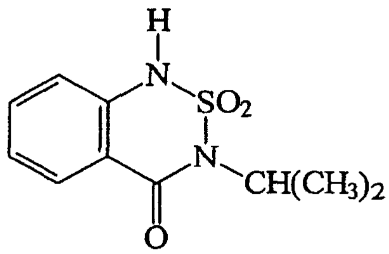

,

B40) Triclopyr

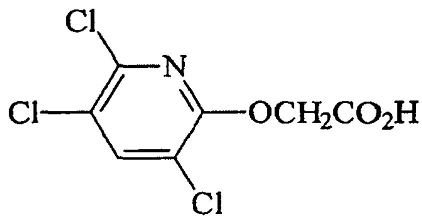

,

B41) Benfuresate

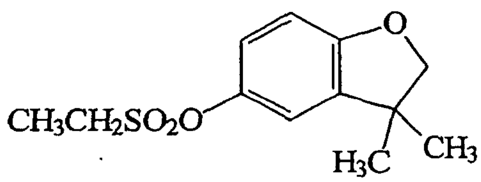

und

B42) Daimuron

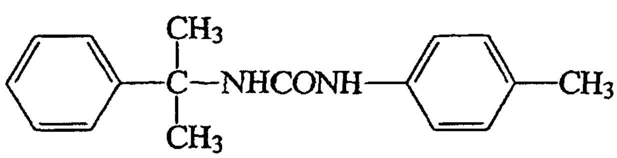

und
Bd) selektiv in Reis vorwiegend gegen Gräser und dikotyle sowie Cyperaceen- Schadpflanzen wirksamen Herbiziden aus der Gruppe bestehend aus

B43) Pendimethalin

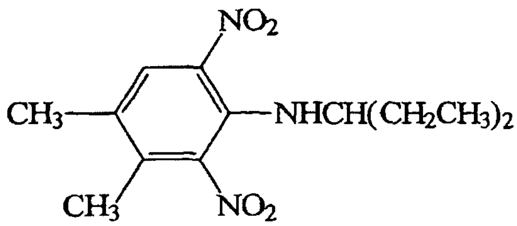

,

B44) Clomazon

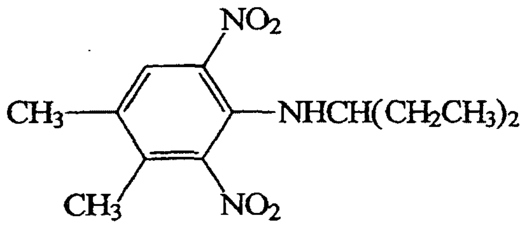

,

B45) Benzofenap

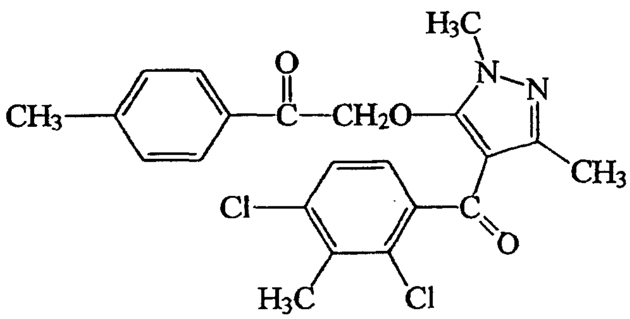

,

B46) Pyrazolynate

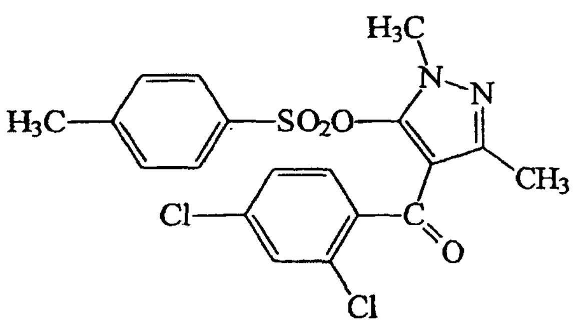

,

B47) Pyrazoxyfen

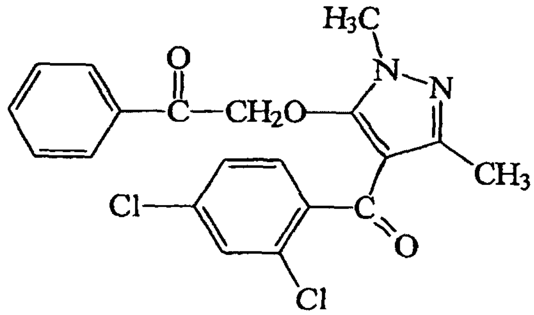

,

B48) KIH 2023

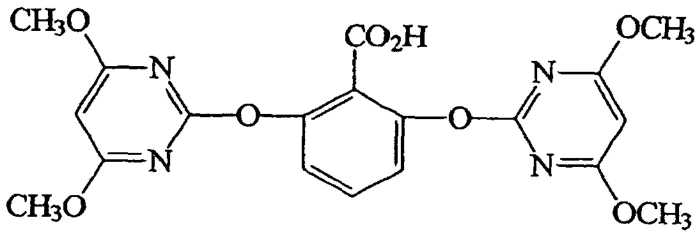

,

B49) KIH 6127

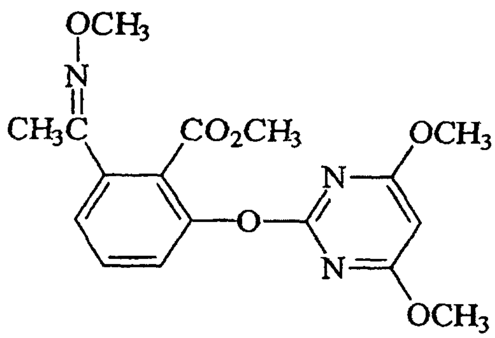

,

B50) Oxadiazon

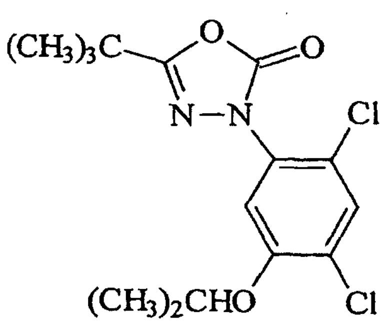

,

B51) Oxadiargyl

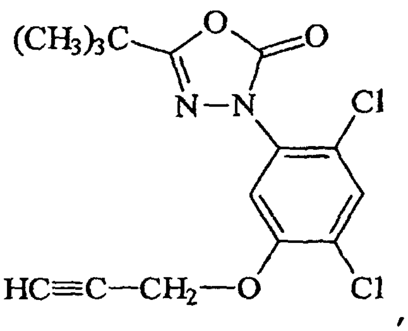

B52) Acetochlor

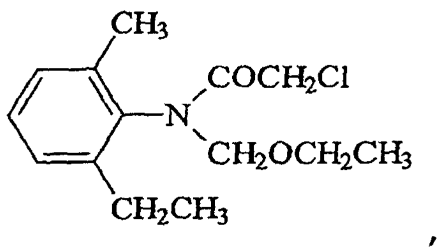

B53) Metolachlor

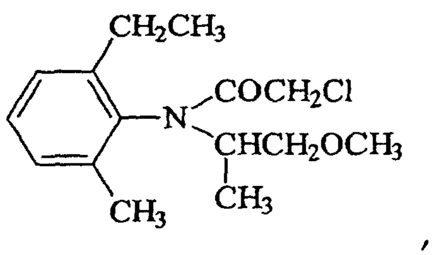

B54) Metosulam

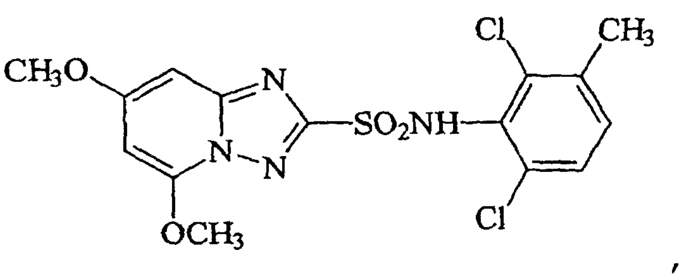

B55) Oxyfluorfen

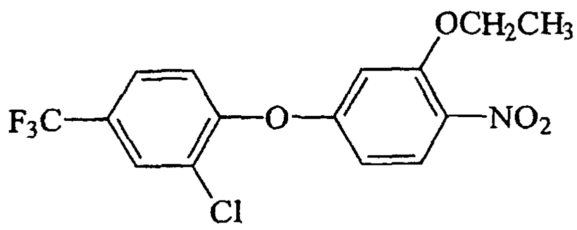

,

B56) Dalapon

$CH_3CCl_2CO_2H$

B57) Metsulfuron

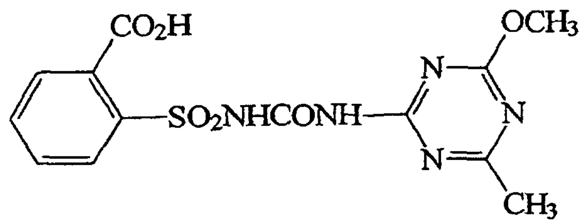

,

B58) Bensulfuron

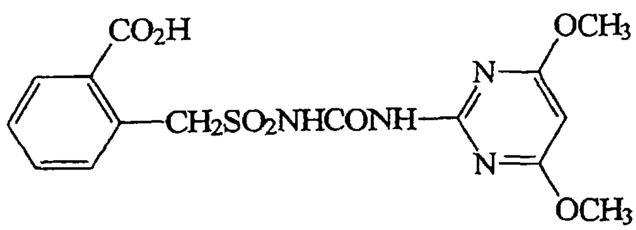

,

B59) Pyrazosulfuron

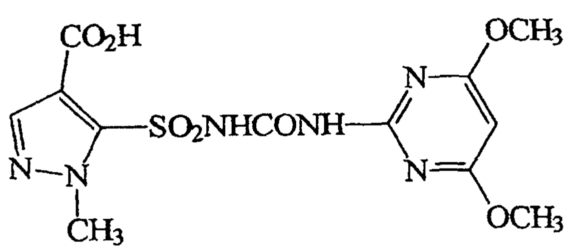

,

B60) Cinosulfuron

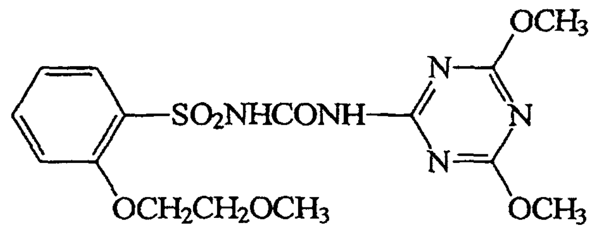

,

B61) Imazosulfuron

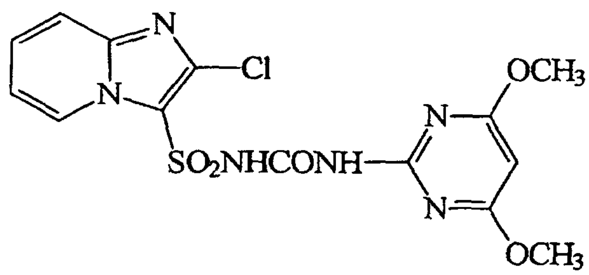

,

B62) AC 322,140 (Cyclosulfamuron)

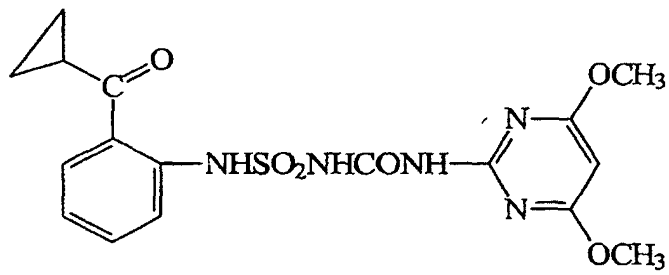

,

B63) Sulfonylharnstoffe der allgemeinen Formel IV

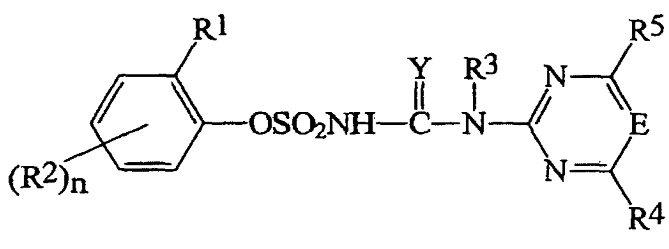

(IV),

,

worin

a) $R^1$ Ethoxy, Propoxy oder Isopropoxy und
$R^2$ Halogen, $NO_2$, $CF_3$, CN, $(C_1\text{-}C_4)$-Alkyl, $(C_1\text{-}C_4)$-Alkoxy, $(C_1\text{-}C_4)$-Alkylthio oder $((C_1\text{-}C_4)$-Alkoxy)-carbonyl und
n 0, 1, 2 oder 3 oder
b) $R^1$ gegebenenfalls ungesättigtes $(C_1\text{-}C_8)$-Alkoxy, das substituiert ist durch Halogen, gegebenenfalls ungesättigtes $(C_1\text{-}C_6)$-Alkoxy, einen Rest der Formel $((C_1\text{-}C_6)$-Alkyl)-S-, $((C_1\text{-}C_6)$-Alkyl)-SO-, $((C_1\text{-}C_6)$-Alkyl)-$SO_2$-, $((C_1\text{-}C_6)$-Alkyl)-O-CO-, $NO_2$, CN oder Phenyl; ferner $(C_2\text{-}C_8)$

-Alkenyloxy oder -Alkinyloxy und
$R^2$ gesättigtes oder ungesättigtes ($C_1$-$C_8$)-Alkyl, Phenyl, Phenoxy, ($C_1$-$C_4$)-Alkoxy, ($C_1$-$C_4$)-Alkylthio, (($C_1$-$C_4$)-Alkoxy)-carbonyl, wobei alle vorstehenden Reste $R^2$ durch Halogen, ($C_1$-$C_4$)-Alkoxy oder ($C_1$-$C_4$)-Alkylthio substituiert sein können, oder Halogen, $NO_2$, ($C_1$-$C_4$)-Alkylsulfonyl oder -sulfinyl und
n 0, 1, 2 oder 3 oder
c) $R^1$ ($C_1$-$C_8$)-Alkoxy und
$R^2$ ($C_2$-$C_8$)-Alkenyl oder -Alkinyl, Phenyl, Phenoxy, wobei die genannten Reste für $R^2$ unsubstituiert oder durch Halogen, ($C_1$-$C_4$)-Alkoxy oder ($C_1$-$C_4$)-Alkylthio substituiert sind, oder ($C_1$-$C_4$)-Alkylsulfonyl oder -sulfinyl und
n 1, 2 oder 3 oder
d) $R^1$ jeweils in 2-Stellung am Phenylrest Halogen, Methoxy, Ethyl oder Propyl,
$R^2$ (($C_1$-$C_4$)-Alkoxy)-carbonyl in 6-Stellung am Phenylrest und
n = 1

sowie in allen Fällen a) bis d)

| | |
|---|---|
| $R^3$ | Wasserstoff, gesättigtes oder ungesättigtes ($C_1$-$C_8$)-Alkyl oder ($C_1$-$C_4$)-Alkoxy, |
| $R^4$, $R^5$ | unabhängig voneinander Wasserstoff, Halogen, ($C_1$-$C_4$)-Alkyl, ($C_1$-$C_4$)-Alkoxy, ($C_1$-$C_4$)-Alkylthio ist, wobei die letztgenannten drei Reste unsubstituiert oder durch Halogen, ($C_1$-$C_4$)-Alkoxy oder ($C_1$-$C_4$)-Alkylthio substituiert sind, |
| Y | O oder S und |
| E | CH oder N |

bedeuten,
wobei besonders bevorzugt unter den Verbindungen der allgemeinen Formel IV

B63a) Ethoxysulfuron (HOE 095404)

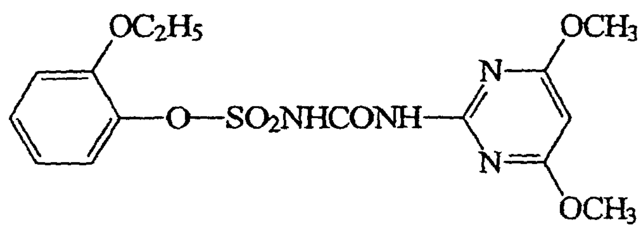

ist,

B64) Azimsulfuron (DPX-A8947)

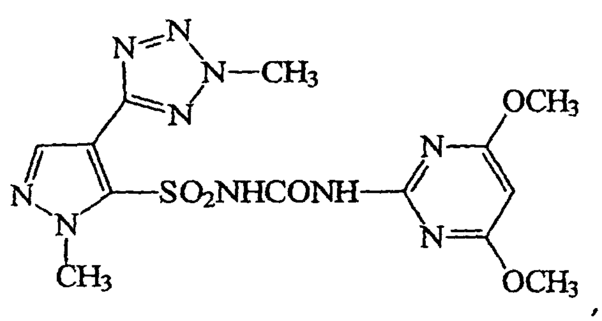

B65) Nicosulfuron

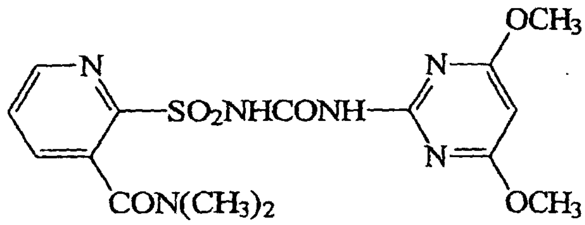

,

B66) Prometryn

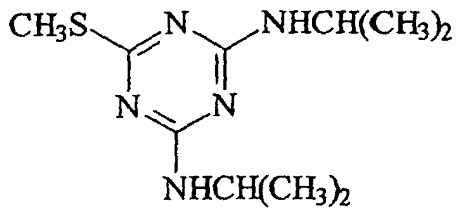

,

B67) Simetryn

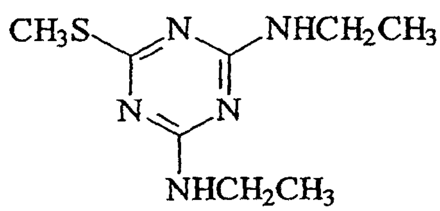

,

B68) Thiazopyr

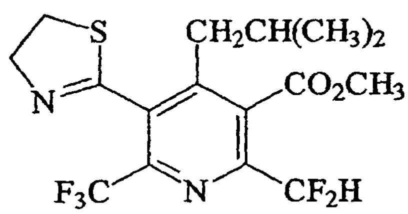

,

B69) Pyrazophos

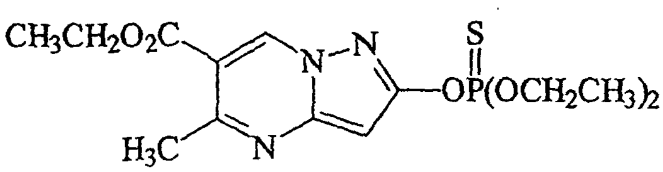

,

B70) Pentoxazone

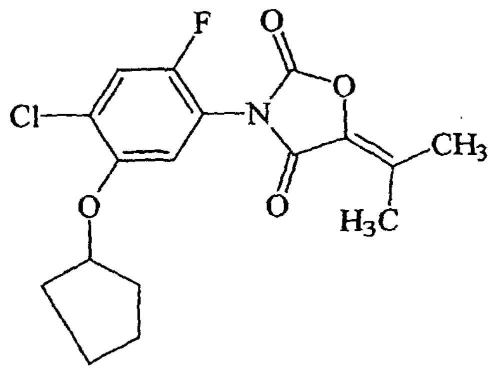

,

B71) Indanofan

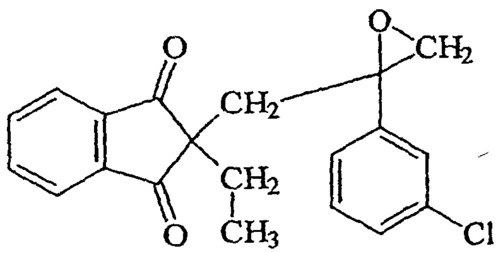

,

B72) LGC40863

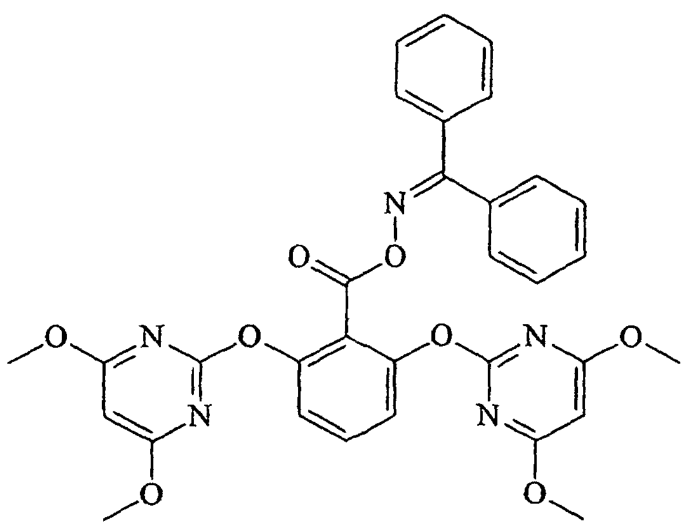

und

B73) MY 100

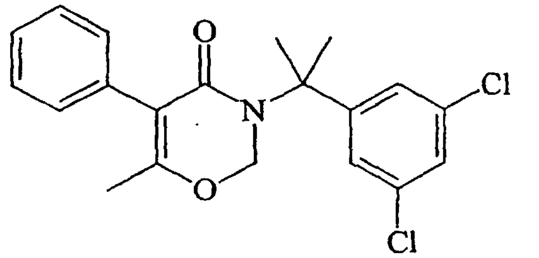

besteht,
mit den Bedingungen, daß

i) Mittel, die aus

A') mindestens einer Verbindung aus der Gruppe der substituierten Phenylsulfonylharnstoffe der allgemeinen Formel I' und deren landwirtschaftlich akzeptierten Salze

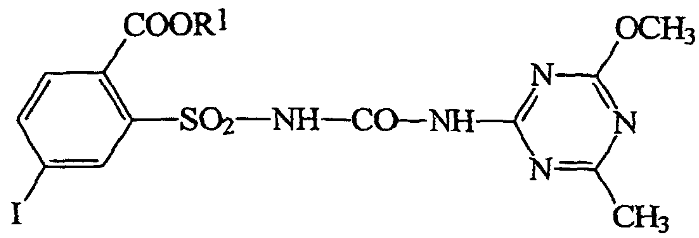

(I´),

worin

$R^1$ $(C_1-C_8)$-Alkyl, $(C_3-C_4)$-Alkenyl, $(C_3-C_4)$-Alkinyl oder $(C_1-C_4)$-Alkyl, das ein- bis vierfach durch Reste aus der Gruppe Halogen und $(C_1-C_2)$-Alkoxy substituiert ist, bedeutet,

in Kombination mit
B') Fenoxaprop, Pendimethalin, Nicosulfuron, Mecoprop, MCPA, 2.4-D, Dicamba, Acifluorfen, Azolen der allgemeinen Formel III

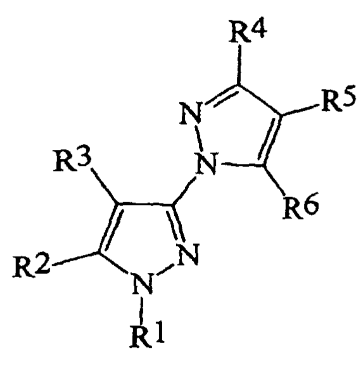

(III),

,

worin

$R^1$ $(C_1-C_4)$-Alkyl ist,
$R^2$ $(C_1-C_4)$-Alkyl, $(C_1-C_4)$-Alkylthio oder $(C_1-C_4)$-Alkoxy ist, von denen jeder Rest durch ein oder mehrere Halogenatome substituiert sein kann, oder

$R^1$ und $R^2$ zusammen die Gruppe $(CH_2)_m$ bilden mit m = 3 oder 4,
$R^3$ Wasserstoff oder Halogen ist,
$R^4$ Wasserstoff oder $(C_1-C_4)$-Alkyl ist,
$R^5$ Wasserstoff, Nitro, Cyano oder eine der Gruppen $-COOR^7$, $-C(=X)NR^7R^8$ oder $-C(=X)R^{10}$ ist,
$R^6$ Wasserstoff, Halogen, Cyano, $(C_1-C_4)$-Alkyl, $(C_1-C_4)$-Alkylthio oder $-NR^{11}R^{12}$ ist,
$R^7$ und $R^8$ gleich oder verschieden Wasserstoff oder $(C_1-C_4)$-Alkyl sind, oder
$R^7$ und $R^8$ zusammen mit dem Stickstoff, an den sie gebunden sind einen gesättigten 5 oder 6 gliedrigen carbozyklischen Ring bilden,
$R^{10}$ Wasserstoff oder $(C_1-C_4)$-Alkyl ist, wobei letztere gegebenenfalls mit einem oder mehreren Halogenatomen substituiert sein können, und
$R^{11}$ u. $R^{12}$ gleich oder verschieden Wasserstoff, $(C_1-C_4)$-Alkyl oder $(C_1-C_4)$-Alkoxycarbonyl sind, wobei
$R^{11}$ u. $R^{12}$ zusammen mit dem Stickstoff, an den sie gebunden sind, einen 3, 5 oder 6 gliedrigen carbozyklischen oder aromatischen Ring bilden können, in welchem ein C-Atom optionell durch ein O-Atom ersetzt sein kann,

Bentazon, Metsulfuron, Ioxynil, Acetochlor, Metolachlor, KIH-2023, Triasulfuron oder Oxyfluorfen als einzigen herbiziden Wirkstoffen bestehen
und
ii) Mittel, die aus

A") mindestens einer Verbindung aus der Gruppe der substituierten Phenylsulfonylharnstoffe der allgemeine Formel I" und deren landwirtschaftlich akzeptierten Salze

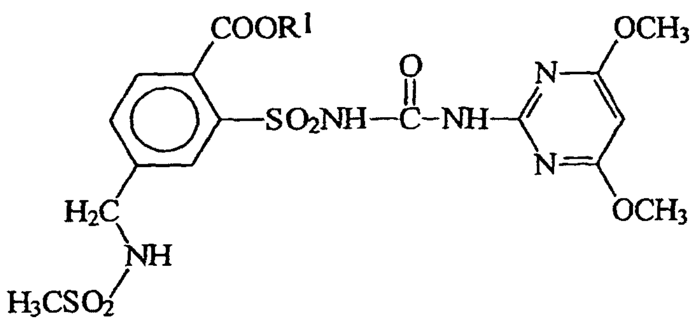

(I´´),

worin

$R^1$ $(C_1-C_8)$-Alkyl, $(C_3-C_4)$-Alkenyl, $(C_3-C_4)$-Alkinyl oder $(C_1-C_4)$-Alkyl, das ein- bis vierfach durch Reste aus der Gruppe Halogen und $(C_1-C_2)$-Alkoxy substituiert ist, bedeutet,

in Kombination mit
B") Fenoxaprop, Pendimethalin, Mecoprop, MCPA, 2.4-D, Dicamba, einer Verbindung der oben angegebenen Formel III, Bentazon, Ioxynil, Metosulam, Metsulfuron, Oxyfluorfen oder Triasulfuron

als einzigen herbiziden Wirkstoffen bestehen, ausgenommen sind.

**2.** Mittel nach Anspruch 1,
**dadurch gekennzeichnet,**
**daß** im Herbizid der Formel (I) oder dessen Salz

$R^1$ Methyl, Ethyl, n- oder Isopropyl, n-, tert.-, 2-Butyl oder Isobutyl, n-Pentyl, Isopentyl, n-Hexyl, Isohexyl, 1,3-Dimethylbutyl, n-Heptyl, 1-Methylhexyl oder 1,4-Dimethylpentyl bedeutet;
$R^2$ I bedeutet;
$R^3$ Methyl bedeutet; und
Z N ist.

3. Mittel nach Anspruch 1 oder 2,
**dadurch gekennzeichnet,**
**daß** im Herbizid der Formel (I) oder dessen Salz $R^1$ Methyl bedeutet.

4. Mittel nach einem oder mehreren der vorhergehenden Ansprüche,
**gekennzeichnet durch**,
einen Gehalt an Verbindung

A1) 4-Iodo-2-[3-(4-methoxy-6-methyl-1,3,5-triazin-2-yl)ureidosulfonyl]-benzoesäuremethylester

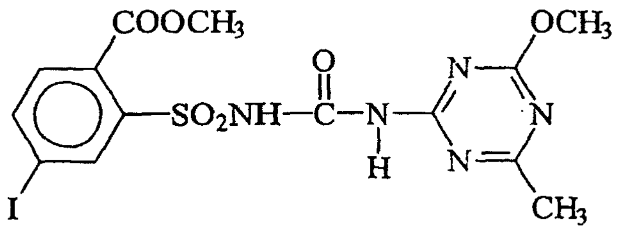

und/oder **durch** einen Gehalt des Natriumsalzes von A1*).

5. Mittel nach Anspruch 1,
**dadurch gekennzeichnet,**
**daß** im Herbizid der Formel (I) oder dessen Salz

- $R^1$ Methyl, Ethyl, n- oder Isopropyl, n-, tert.-, 2-Butyl oder Isobutyl, n-Pentyl, Isopentyl, n-Hexyl, Isohexyl, 1,3-Dimethylbutyl, n-Heptyl, 1-Methylhexyl oder 1,4-Dimethylpentyl bedeutet;
- $R^2$ $CH_2NHSO_2CH_3$ bedeutet;
- $R^3$ Methoxy bedeutet; und
- Z CH ist.

6. Mittel nach Anspruch 1 oder 5,
**dadurch gekennzeichnet,**
**daß** im Herbizid der Formel (I) oder dessen Salz $R^1$ Methyl bedeutet.

7. Mittel nach einem oder mehreren der vorhergehenden Ansprüche 1, 5 oder 6,
**gekennzeichnet durch**,
einen Gehalt an Verbindung A2)

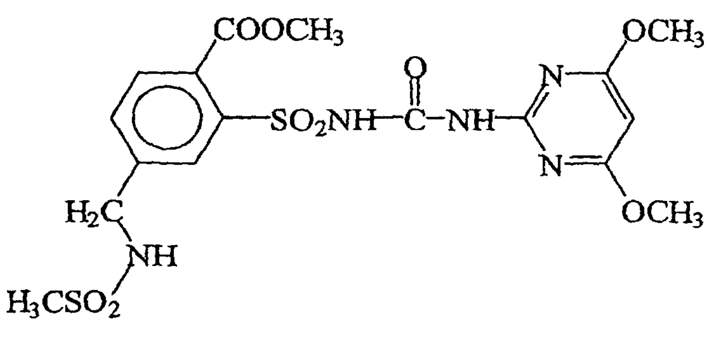

und/oder A3)

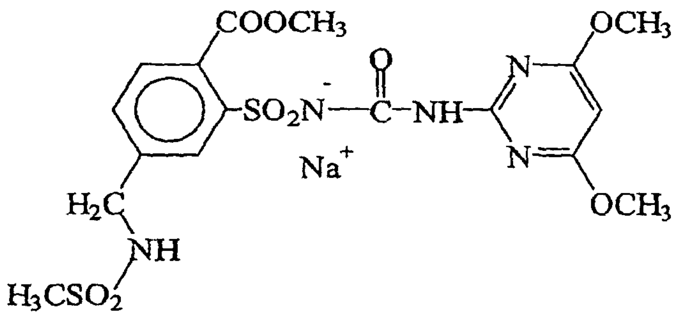

**8.** Mittel nach einem oder mehreren der vorhergehenden Ansprüche,
**dadurch gekennzeichnet,**
**daß** das Salz des Herbizids der Formel (I) durch Ersatz des Wasserstoffs der -$SO_2$-NH-Gruppe durch ein Kation aus der Gruppe der Alkalimetalle, Erdalkalimetalle und Ammonium, bevorzugt Natrium, gebildet wird.

**9.** Mittel nach einem oder mehreren der vorhergehenden Ansprüche,
**dadurch gekennzeichnet,**
**daß** es als Herbizide vom Typ B die synergistisch wirkenden Kombinationspartner aus der Gruppe Ba) Anilofos, Fenoxaprop, Fenoxaprop-P, Butachlor und/oder Propanil enthält.

**10.** Mittel nach einem oder mehreren der vorhergehenden Ansprüche 1 bis 8,
**dadurch gekennzeichnet,**
**daß** es als Herbizide vom Typ B die synergistisch wirkenden Kombinationspartner 2,4-D, MCPA, Mecoprop und/oder Dicamba aus der Gruppe Bb) enthält.

**11.** Mittel nach einem oder mehreren der vorhergehenden Ansprüche 1 bis 8,
**dadurch gekennzeichnet,**
**daß** es als Herbizide vom Typ B die synergistisch wirkenden Kombinationspartner Bentazon und/oder Daimuron aus der Gruppe Bc) enthält.

**12.** Mittel nach einem oder mehreren der vorhergehenden Ansprüche,
**dadurch gekennzeichnet,**
**daß** sie die Verbindungen der Formel I oder deren Salze (Typ-A-Verbindungen) und die Verbindungen aus der Gruppe B in einem Gewichtsverhältnis von 1:20000 bis 200:1, bevorzugt 1:8000 bis 100:1, besonders bevorzugt 1:4000 bis 50:1, enthalten.

**13.** Mittel nach einem oder mehreren der vorhergehenden Ansprüche,
**dadurch gekennzeichnet,**
**daß** sie 0,1 bis 99 Gew.-% der Wirkstoffe A und B neben üblichen Formulierungshilfsmitteln enthalten.

**14.** Herbizides Mittel, aufweisend in einer synergistisch wirksamen Menge

A) mindestens einen herbiziden Wirkstoff aus der Gruppe der substituierten Phenylsulfonylharnstoffe der allgemeinen Formel I und deren landwirtschaftlich akzeptierten, d.h. annehmbaren und verträglichen, Salze

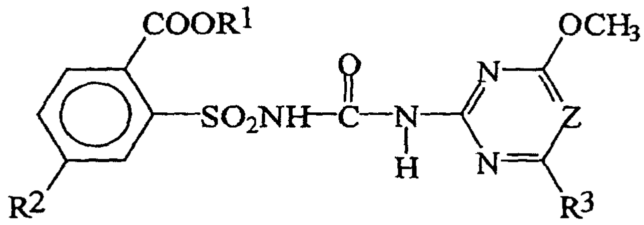

(I),

worin

$R^1$ $(C_1-C_8)$-Alkyl, $(C_3-C_4)$-Alkenyl, $(C_3-C_4)$-Alkinyl oder $(C_1-C_4)$-Alkyl, das ein- bis vierfach durch Reste aus der Gruppe Halogen und/oder $(C_1-C_2)$-Alkoxy substituiert ist, bedeutet;
$R^2$ I oder $CH_2NHSO_2CH_3$ bedeutet;
$R^3$ Methyl oder Methoxy bedeutet; und
Z N oder CH ist;

in Kombination mit
mindestens einer herbizid wirksamen Verbindung aus der Gruppe der Verbindungen B', welche aus

B1) Butachlor,
B2) Butenachlor,
B3) Thenylchlor,
B4) Pretilachlor,
B5) Mefenacet,
B5a) Bay FOE 5043,
B6) Naproanilid,
B7) Propanil,
B8) Etobenzanid,
B9) Dimepiperate,
B10) Molinate,
B11) Thiobencarb,
B12) Pyributicarb,
B13) Quinclorac,
B14a) Sulcotrione,
B15) Cycloxydim
B16) Sethoxydim
B17) NBA 061,
B18) Piperophos,
B19) Anilofos,
B21) Haloxyfop,
B22) Cyhalofop,
B23) JC-940,
B24) Dithiopyr,
B25) Bromobutide,
B26) Cinmethylin,
B27) CH-900,
B32) Acifluorfen,
B34) Chlorimuron,
B37) Picloram,
B38) Carfentrazon
B40) Triclopyr,
B41) Benfuresate,
B42) Daimuron,
844) Clomazon,
B45) Benzofenap,
B46) Pyrazolynate,

B47) Pyrazoxyfen,
B49) KIH 6127,
B50) Oxadiazon,
B51) Oxadiargyl,
B56) Dalapon,
B58) Bensulfuron,
B59) Pyrazosulfuron,
B60) Cinosulfuron,
B61) Imazosulfuron,
B62) AC 322,140 (Cyclosulfamuron),
B63a) Ethoxysulfuron (HOE 095404),
B64) Azimsulfuron (DPX-A8947),
B66) Prometryn,
B67) Simetryn,
B68) Thiazopyr,
B69) Pyrazophos,
B70) Pentoxazone,
B71) Indanofan,
B72) LGC 40863
und
B73) MY 100

besteht
oder in Kombination mit
zwei oder mehr herbizid wirksamen Verbindungen aus der Gruppe der Verbindungen B", welche aus

B1) Butachlor,
B2) Butenachlor,
B3) Thenylchlor,
B4) Pretilachlor,
B5) Mefenacet,
B5a) Bay FOE 5043,
B6) Naproanilid,
B7) Propanil,
B8) Etobenzanid,
B9) Dimepiperate,
B10) Molinate,
B11) Thiobencarb,
B12) Pyributicarb,
B13) Quinclorac,
B14a) Sulcotrione,
B15) Cycloxydim
B16) Sethoxydim
B17) NBA 061,
B18) Piperophos,
B19) Anilofos,
B20) Fenoxaprop, Fenoxaprop-P,
B21) Haloxyfop,
B22) Cyhalofop,
B23) JC-940,
B24) Dithiopyr,
B25) Bromobutide,
B26) Cinmethylin,
B27) CH-900,
B28) 2,4-D,
B29) Mecoprop, Mecoprop-P,
B30) MCPA,
B31) Dicamba,

B32) Acifluorfen,
B33a)

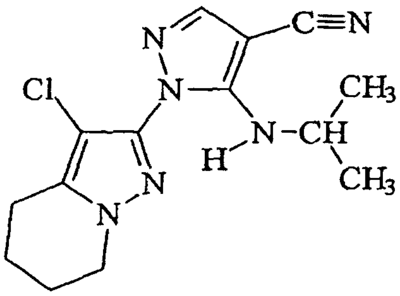

,

und
B33b)

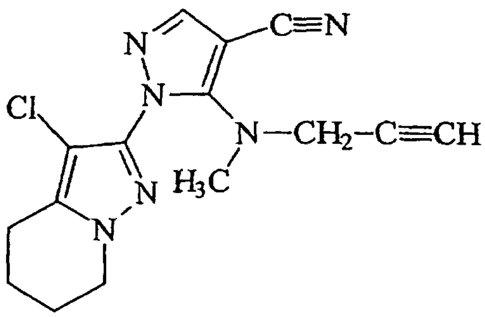

,

B34) Chlorimuron,
B35) Triasulfuron,
B36) Ioxynil,
B37) Picloram,
B38) Carfentrazon,
B39) Bentazon,
B40) Triclopyr,
B41) Benfuresate,
B42) Daimuron,
B43) Pendimethalin,
B44) Clomazon,
B45) Benzofenap,
B46) Pyrazolynate,
B47) Pyrazoxyfen,
B48) KIH 2023,
B49) KIH 6127,
B50) Oxadiazon,
B51) Oxadiargyl,
B52) Acetochlor,
B53) Metolachlor,
B54) Metosulam,
B55) Oxyfluorfen
B56) Dalapon,
B57) Metsulfuron,
B58) Bensulfuron,
B59) Pyrazosulfuron,
B60) Cinosulfuron,

B61) Imazosulfuron,
B62) AC 322,140 (Cyclosulfamuron),
B63a) Ethoxysulfuron (HOE 095404),
B64) Azimsulfuron (DPX-A8947),
B65) Nicosulfuron,
B66) Prometryn,
B67) Simetryn,
B68) Thiazopyr,
B69) Pyrazophos,
B70) Pentoxazone,
B71) Indanofan,
B72) LGC 40863 und
B73) MY 100

besteht, wobei im Falle B'' wenigstens eine der Verbindungen aus der Gruppe B'' auch zu Gruppe B' gehören muß.

**15.** Verfahren zur Herstellung eines Mittels nach einem oder mehreren der vorhergehenden Ansprüche,
**dadurch gekennzeichnet,**
**daß** man die Verbindungen der Formel I oder deren Salze (Typ-A-Verbindungen) mit einer oder mehreren Verbindungen des Typs B analog einer üblichen Pflanzenschutzformulierung aus der Gruppe enthaltend Spritzpulver, emulgierbare Konzentrate, wäßrige Lösungen, Emulsionen, versprühbare Lösungen (tank-mix), Dispersionen auf Öl- oder Wasserbasis, Suspoemulsionen, Stäubemittel, Beizmittel, Granulate zur Boden- oder Streuapplikation, wasserdispergierbare Granulate, ULV-Formulierungen, Mikrokapseln und Wachse, formuliert.

**16.** Verfahren zur Bekämpfung von unerwünschten Pflanzen,
**dadurch gekennzeichnet,**
**daß** man auf diese oder die Anbaufläche eine herbizid wirksame Menge einer der in einem oder mehreren der Ansprüche 1 bis 15 definierten Kombinationen von Wirkstoffen A + B appliziert.

**17.** Verfahren nach Anspruch 16,
**dadurch gekennzeichnet,**
**daß** die Aufwandmenge für die Verbindungen der Formel (I) oder deren Salze (Typ-A-Verbindungen) von 0,1 bis 100 g ai/ha, bevorzugt von 0,5 bis 60 g ai/ha, ganz besonders bevorzugt von 2 bis 40 g ai/ha, und die Aufwandmengen für die Verbindungen vom Typ B von 1 bis 5000 g ai/ha betragen.

**18.** Verfahren nach Anspruch 16 oder 17,
**dadurch gekennzeichnet,**
**daß** die Wirkstoffe der Typen A und B gleichzeitig oder zeitlich getrennt im Gewichtsverhältnis 1:20000 bis 200:1 appliziert werden.

**19.** Verfahren nach einem der Ansprüche 16 bis 18,
**dadurch gekennzeichnet,**
**daß** die Kombinationen zur selektiven Bekämpfung unerwünschter Pflanzen eingesetzt werden.

**20.** Verfahren nach Anspruch 19,
**dadurch gekennzeichnet,**
**daß** die Kombinationen in transgenen Kulturen eingesetzt werden.

**21.** Verfahren nach Anspruch 19,
**dadurch gekennzeichnet,**
**daß** die Kombinationen in Reis eingesetzt werden.

**22.** Verwendung von herbiziden Mitteln, enthaltend

A) mindestens einen herbiziden Wirkstoff aus der Gruppe der substituierten Phenylsulfonylharnstoffe der allgemeinen Formel I und deren landwirtschaftlich akzeptierten, d.h. annehmbaren und verträglichen, Salze

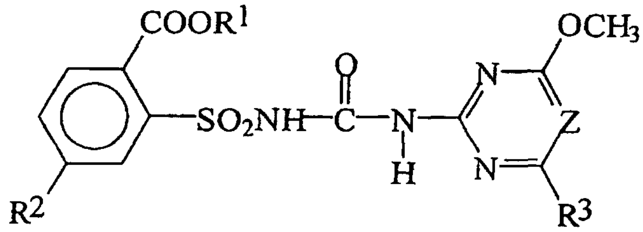

(I),

worin

$R^1$ $(C_1-C_8)$-Alkyl, $(C_3-C_4)$-Alkenyl, $(C_3-C_4)$-Alkinyl oder $(C_1-C_4)$-Alkyl, das ein- bis vierfach durch Reste aus der Gruppe Halogen und/oder $(C_1-C_2)$-Alkoxy substituiert ist, bedeutet;
$R^2$ I oder $CH_2NHSO_2CH_3$ bedeutet;
$R^3$ Methyl oder Methoxy bedeutet; und
Z N oder CH ist;

und

B) mindestens eine herbizid wirksame Verbindung aus der Gruppe der Verbindungen, welche aus

Ba) selektiv in Reis vorwiegend gegen Gräser wirksamen Herbiziden ausgewählt aus der Gruppe, welche aus

B1) Butachlor,
B2) Butenachlor,
B3) Thenylchlor,
B4) Pretilachlor,
B5) Mefenacet,
B5a) Bay FOE 5043,
B6) Naproanilid,
B7) Propanil,
B8) Etobenzanid,
B9) Dimepiperate,
B10) Molinate,
B11) Thiobencarb,
B12) Pyributicarb,
B13) Quinclorac,
B14a) Sulcotrione,
B15) Cycloxydim
B16) Sethoxydim
B17) NBA 061,
B18) Piperophos,
B19) Anilofos,
B20) Fenoxaprop, Fenoxaprop-P,
B21) Haloxyfop,
B22) Cyhalofop,
B23) JC-940,
B24) Dithiopyr,
B25) Bromobutide,
B26) Cinmethylin und
B27) CH-900

besteht,
Bb) selektiv in Reis vorwiegend gegen dikotyle Schadpflanzen und Cyperaceen wirksamen Herbiziden ausgewählt aus der Gruppe, welche aus

B28) 2,4-D,
B29) Mecoprop, Mecoprop-P,
B30) MCPA,
B31) Dicamba,
B32) Acifluorfen,
B33a)

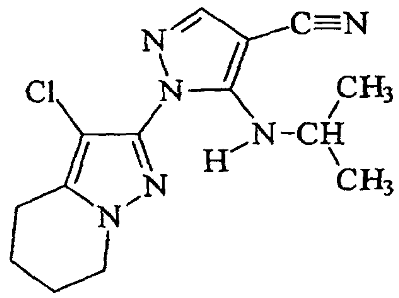

,

und
B33b)

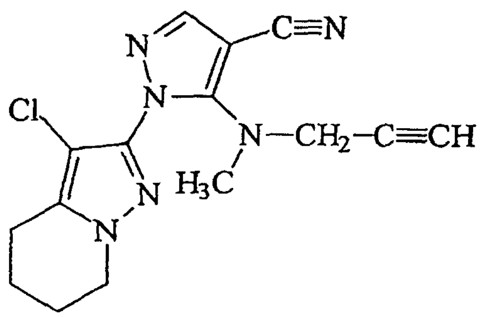

,

B34) Chlorimuron,
B35) Triasulfuron,
B36) Ioxynil,
B37) Picloram
und
B38) Carfentrazon

besteht,
Bc) selektiv in Reis vornehmlich gegen Cyperaceen wirksamen Herbiziden ausgewählt aus der Gruppe, welche aus

B39) Bentazon,
B40) Triclopyr,
B41) Benfuresate
und
B42) Daimuron

besteht,
und
Bd) selektiv in Reis vorwiegend gegen Gräser und dikotyle sowie Cyperaceen- Schadpflanzen wirksamen Herbiziden ausgewählt aus der Gruppe, welche aus

B43) Pendimethalin,

B44) Clomazon,
B45) Benzofenap,
B46) Pyrazolynate,
B47) Pyrazoxyfen,
B48) KIH 2023,
B49) KIH 6127,
B50) Oxadiazon,
B51) Oxadiargyl,
B52) Acetochlor,
B53) Metolachlor,
B54) Metosulam,
B55) Oxyfluorfen
B56) Dalapon,
B57) Metsulfuron,
B58) Bensulfuron,
B59) Pyrazosulfuron,
B60) Cinosulfuron,
B61) Imazosulfuron,
B62) AC 322,140 (Cyclosulfamuron),
B63a) Ethoxysulfuron (HOE 095404),
B64) Azimsulfuron (DPX-A8947),
B65) Nicosulfuron,
B66) Prometryn,
B67) Simetryn,
B68) Thiazopyr,
B69) Pyrazophos,
B70) Pentoxazone,
B71) Indanofan,
B72) LGC 40863
und
B73) MY 100

besteht,

besteht,
in einem Gewichtsverhältnis A : B im Bereich von 1:20000 bis 200:1 zur Bekämpfung unerwünschter Schadpflanzen in Reiskulturen.

**23.** Verwendung nach Anspruch 22 in einer synergistisch wirksamen Menge.

**24.** Verwendung nach Anspruch 22 oder 23 von Mischungen mit Kombinationen aus A) und Ba) zur selektiven Bekämpfung von Gräsern in Reis.

**25.** Verwendung nach Anspruch 22 oder 23 von Mischungen mit Kombinationen aus A) und Bb) zur selektiven Bekämpfung von Dikotylen und Cyperaceen in Reis.

**26.** Verwendung nach Anspruch 22 oder 23 von Mischungen mit Kombinationen aus A) und Bc) zur selektiven Bekämpfung von Cyperaceen in Reis.

**27.** Verwendung nach Anspruch 22 oder 23 von Mischungen mit Kombinationen aus A) und Bd) zur selektiven Bekämpfung von Gräsern, Dikotylen und Cyperaceen in Reis.

**Claims**

**1.** A herbicidal composition, comprising a synergistic amount of

A) at least one herbicidally active compound from the group of the substituted phenylsulfonylureas of the

formula I and their agriculturally accepted, i.e. acceptable and compatible, salts

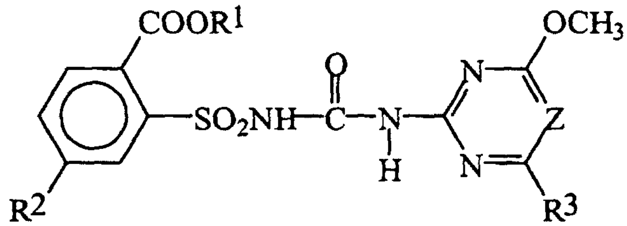

(I),

in which

- $R^1$ is ($C_1$-$C_8$)-alkyl, ($C_3$-$C_4$)-alkenyl, ($C_3$-$C_4$)-alkynyl or ($C_1$-$C_4$)-alkyl, which is mono- to tetrasubstituted by radicals from the group consisting of halogen and/or ($C_1$-$C_2$)-alkoxy;
- $R^2$ is I or $CH_2NHSO_2CH_3$;
- $R^3$ is methyl or methoxy; and
- Z is N or CH;

and

B) at least one herbicidally active compound from the group of the compounds consisting of

Ba) herbicides which are selective in rice, mainly against grasses, selected from the group consisting of

B1) butachlor

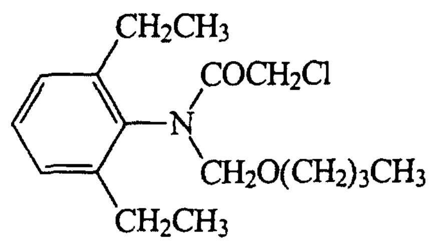

,

B2) butenachlor

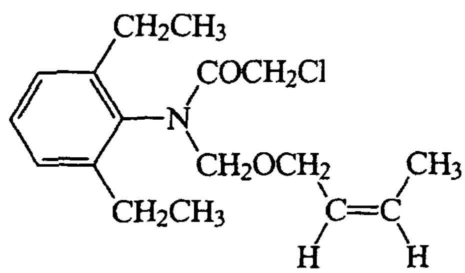

,

B3) thenylchlor

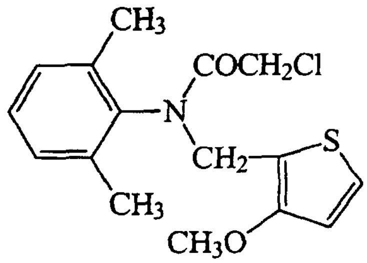

,

B4) pretilachlor

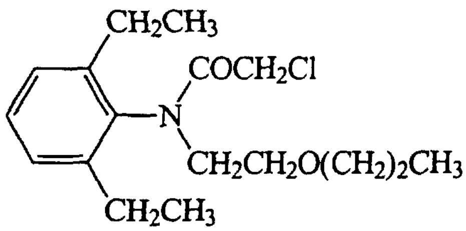

,

B5) mefenacet

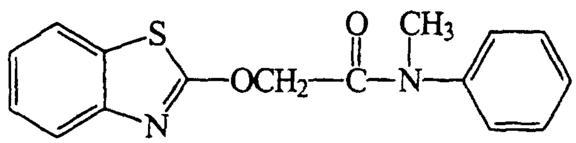

,

B5a) BAY FOE 5043

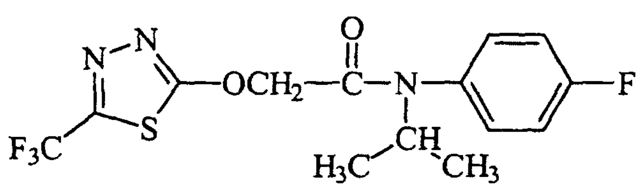

B6) naproanilid

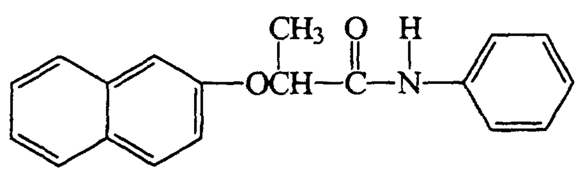

,

B7) propanil

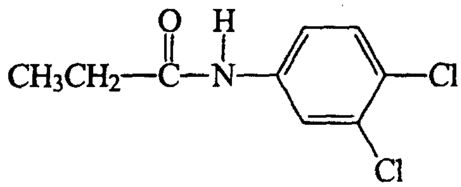

,

B8) etobenzanid

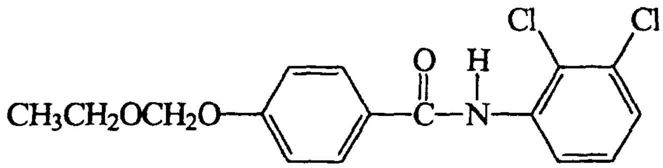

,

B9) dimepiperate

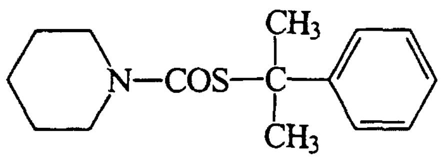

,

B10) molinate

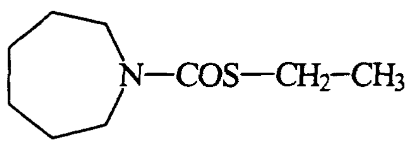

,

B11) thiobencarb

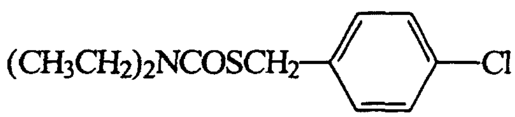

,

B12) pyributicarb

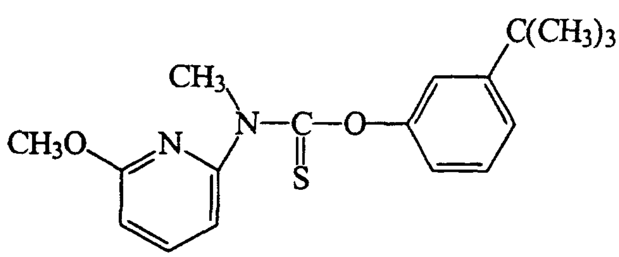

,

B13) quinclorac

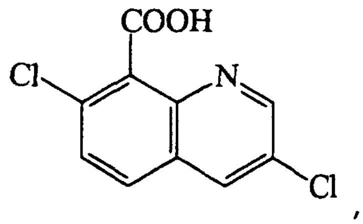

B14) cyclohexandiones of the formula II

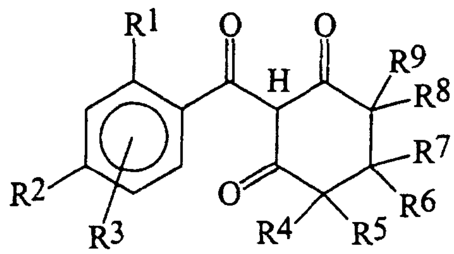

(II),

in which

$R^1$ is halogen, $(C_1-C_4)$-alkoxy, $(C_1-C_4)$-alkyl, $(C_1-C_4)$-haloalkyl, $-NO_2$, -CN or $S(O)_nR^{10}$;

$R^2$ and $R^3$ independently of one another are hydrogen, halogen, $(C_1-C_4)$-alkyl, $(C_1-C_4)$-alkoxy, $(C_1-C_4)$-haloalkoxy, $(C_1-C_4)$-haloalkyl, $-NO_2$, -CN or $S(O)_mR^{11}$, $-NR^{12}R^{13}$, $-NR^{14}-CO-R^{15}$ + (C2-1) + (C2-1);

$R^4$ is hydrogen, $(C_1-C_4)$-alkyl or $-CO-O-(C_1-C_4)$-alkyl;

$R^5$, $R^6$, $R^7$, $R^8$, $R^9$ independently of one another are hydrogen or $(C_1-C_4)$-alkyl or $-CO-R^{16}$ + (C2-1) + (C2-1) ;

$R^{10}$ is $(C_1-C_4)$-alkyl, $(C_1-C_4)$-haloalkyl or $(C_1-C_4)$-alkoxy;

$R^{11}$ is $(C_1-C_4)$-alkyl, $(C_1-C_4)$-haloalkyl, phenyl, benzyl or $-NR^{17}R^{18}$;

$R^{12}$ and $R^{13}$ independently of one another are hydrogen or $(C_1-C_4)$-alkyl;

$R^{14}$ is hydrogen or $(C_1-C_4)$-alkyl;

$R^{15}$ is $(C_1-C_4)$-alkyl;

$R^{16}$ is hydrogen, $(C_1-C_4)$-alkyl, $(C_1-C_4)$-haloalkyl or $(C_1-C_4)$-alkoxy;

$R^{17}$ and $R^{18}$ independently of one another are hydrogen or $(C_1-C_4)$-alkyl; and

n and m independently of one another are 0, 1 or 2,

particular preference being given to

B14a) ICIA0051 = sulcotrione

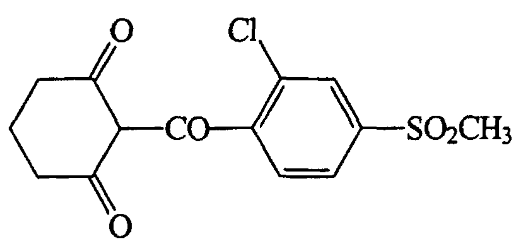

B15) cycloxydim

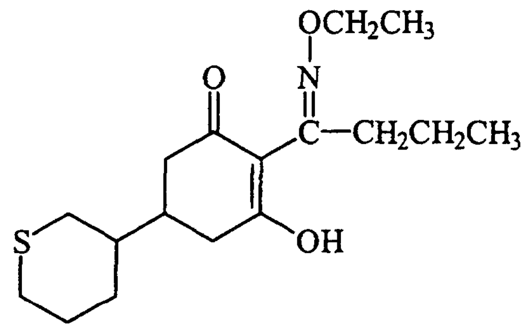

,

B16) sethoxydim

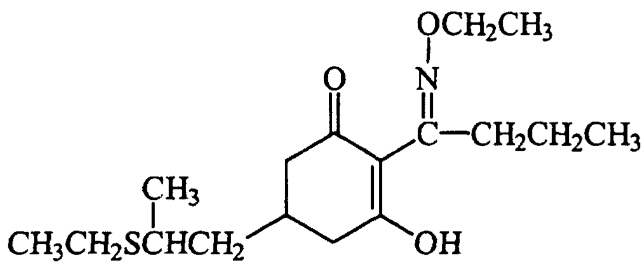

,

B17) Bayer NBA 061

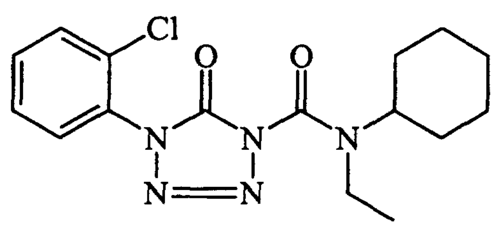

,

B18) piperophos

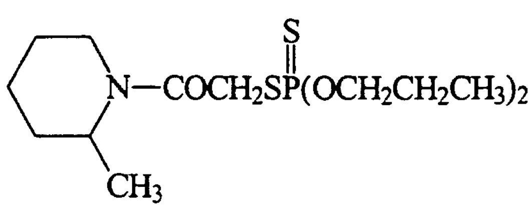

,

B19) anilofos

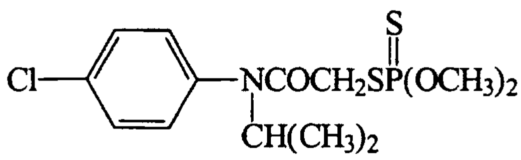

,

B20) fenoxaprop, fenoxaprop-P

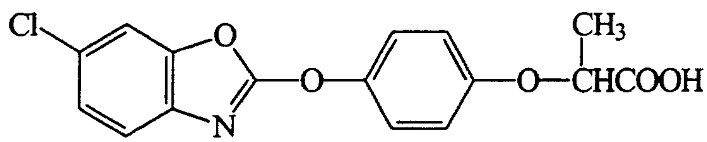

,

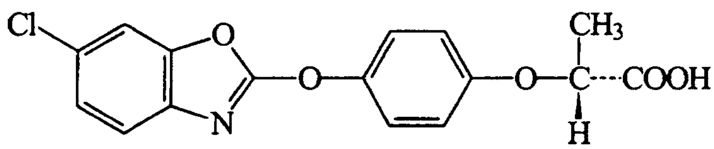

,

B21) haloxyfop

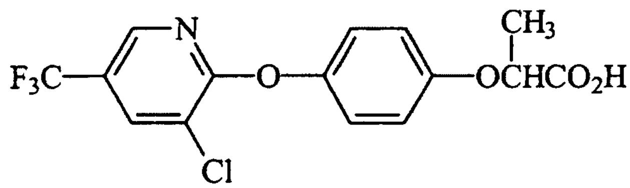

,

B22) cyhalofop

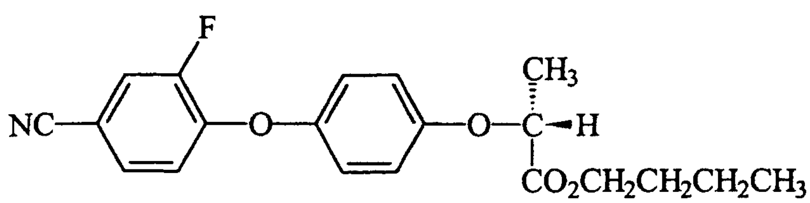

,

B23) JC-940

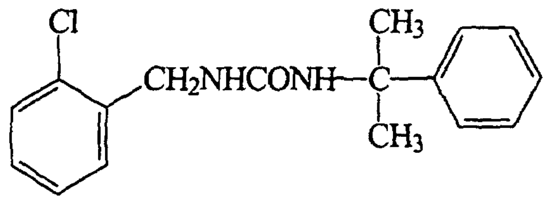

,

B24) dithiopyr

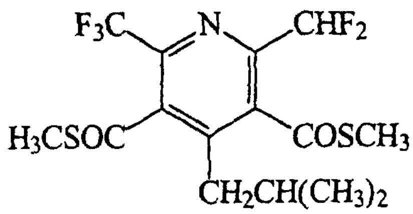

,

B25) bromobutide

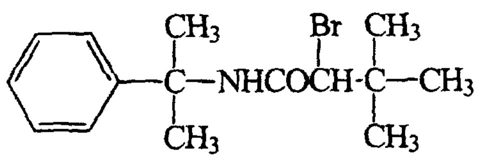

,

B26) cinmethylin

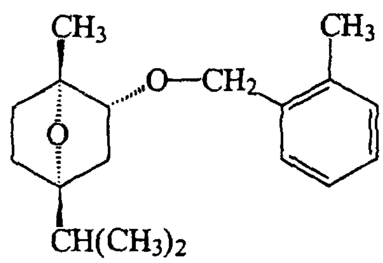

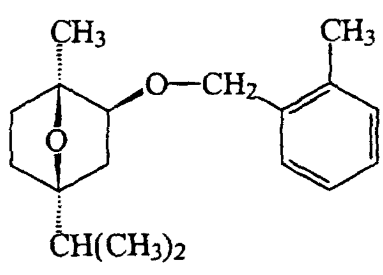

and

B27) CH-900

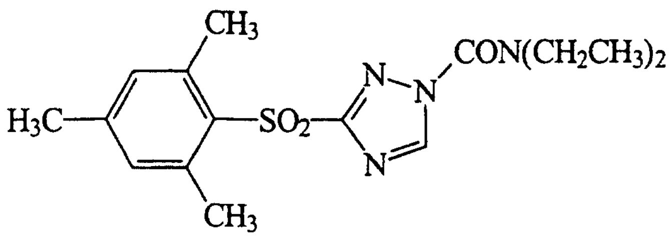

Bb) herbicides which are selective in rice, mainly against dicotyledonous harmful plants and Cyperaceae, from the group consisting of

B28)2,4-D

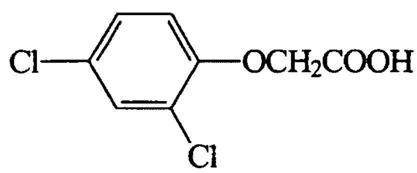

,

B29) mecoprop, mecoprop-P

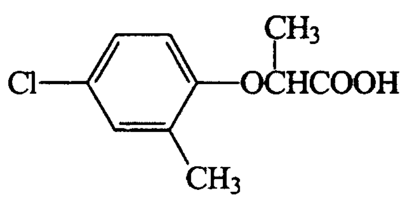

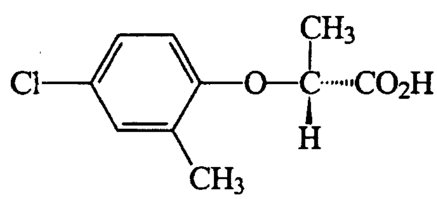

,

B30) MCPA

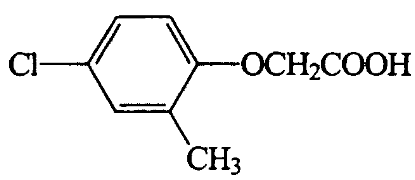

,

B31) dicamba

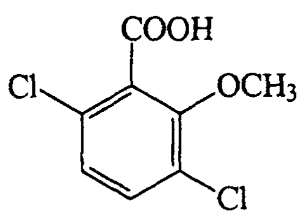

,

B32) acifluorfen

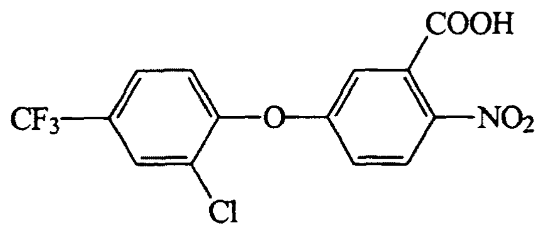

B33) azoles of the formula III

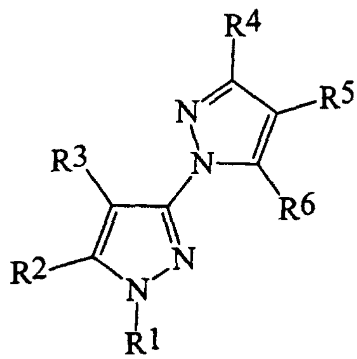

(III),

,

in which

| | |
|---|---|
| $R^1$ | is ($C_1$-$C_4$)-alkyl, |
| $R^2$ | is ($C_1$-$C_4$)-alkyl, ($C_1$-$C_4$)-alkylthio or ($C_1$-$C_4$)-alkoxy, each radical of which may be substituted by one or more halogen atoms, or |
| $R^1$ and $R^2$ | together form the group $(CH_2)_m$ where m = 3 or 4, |
| $R^3$ | is hydrogen or halogen, |
| $R^4$ | is hydrogen or ($C_1$-$C_4$)-alkyl, |
| $R^5$ | is hydrogen, nitro, cyano or one of the groups $-COOR^7$, $-C(=X)NR^7R^8$ or $-C(=X)R^{10}$, |
| $R^6$ | is hydrogen, halogen, cyano, ($C_1$-$C_4$)-alkyl, ($C_1$-$C_4$)-alkylthio or $-NR^{11}R^{12}$, |
| $R^7$ and $R^8$ | are identical or different and are hydrogen or ($C_1$-$C_4$)-alkyl, or |
| $R^7$ and $R^8$ | together with the nitrogen to which they are attached form a saturated 5- or 6-membered carbocyclic ring, |
| $R^{10}$ | is hydrogen or ($C_1$-$C_4$)-alkyl, where the latter may be unsubstituted or substituted by one or more halogen atoms, and |
| $R^{11}$ and $R^{12}$ | are identical or different and are hydrogen, ($C_1$-$C_4$)-alkyl or ($C_1$-$C_4$)-alkoxycarbonyl, where |
| $R^{11}$ and $R^{12}$ | together with the nitrogen to which they are attached may form a 3-, 5- or 6-membered carbocyclic or aromatic ring in which one carbon atom may optionally be replaced by an oxygen atom, |

particular preference being given to

B33a) a compound of the formula III in which $R^1$ and $R^2$ together form the group $(CH_2)_m$ where m = 4, $R^3$ is chlorine, $R^4$ is hydrogen, $R^5$ is cyano, $R^6$ is $-NR^{11}R^{12}$, $R^{11}$ is hydrogen and $R^{12}$ is isopropyl

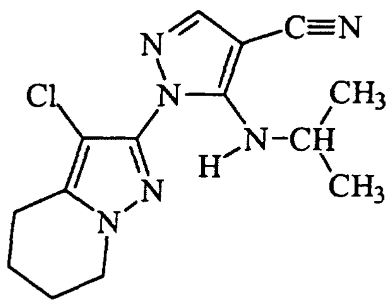

and

B33b) a compound of the formula III in which $R^1$ and $R^2$ together form the group $(CH_2)_m$ where m = 4, $R^3$ is chlorine, $R^4$ is hydrogen, $R^5$ is cyano, $R^6$ is $-NR^{11}R^{12}$, $R^{11}$ is methyl and $R^{12}$ $-CH_2-C\equiv CH$,

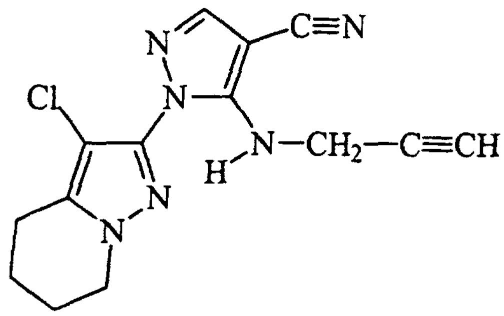

B34) chlorimuron

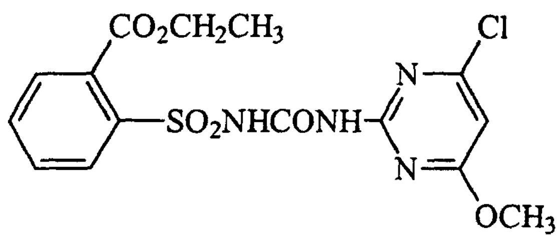

B35) triasulfuron

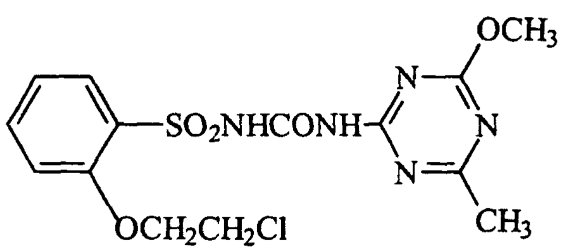

B36) ioxynil

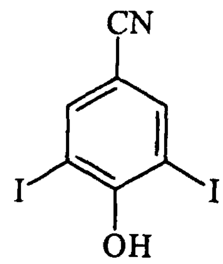

,

B37) picloram

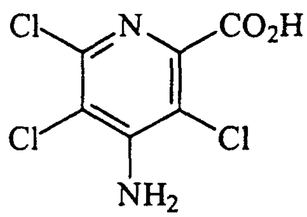

and

B38) carfentrazone

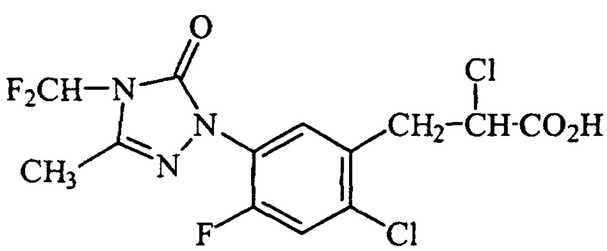

.

Bc) herbicides which are selective in rice, mainly against Cyperaceae, from the group consisting of

B39) bentazone

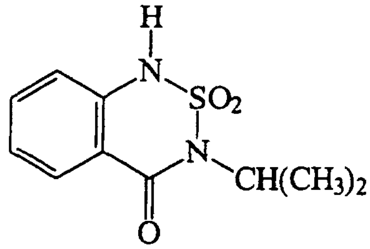

,

B40) triclopyr

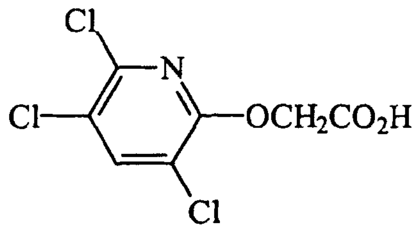

,

B41) benfuresate

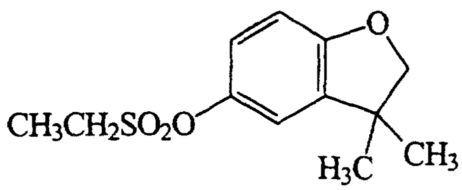

and

B42) daimuron

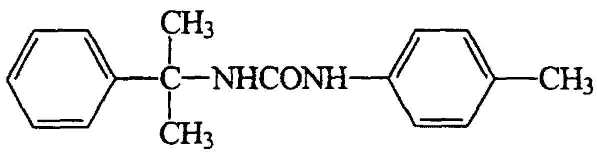

and

Bd) herbicides which are selective in rice, mainly against grasses and dicotyledonous and harmful plants and harmful Cyperaceae plants, from the group consisting of

B43) pendimethalin

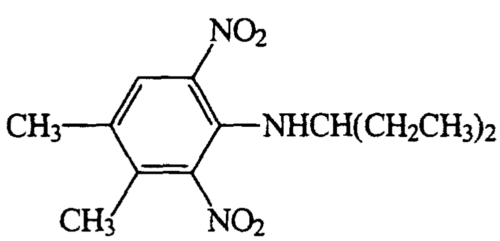

,

B44) clomazone

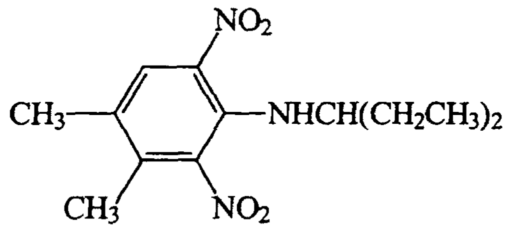

,

B45) benzofenap

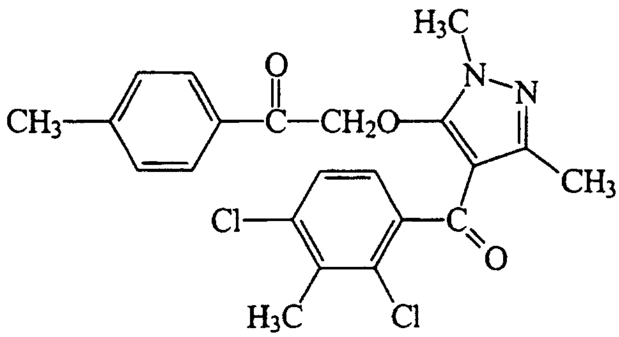

,

B46) pyrazolynate

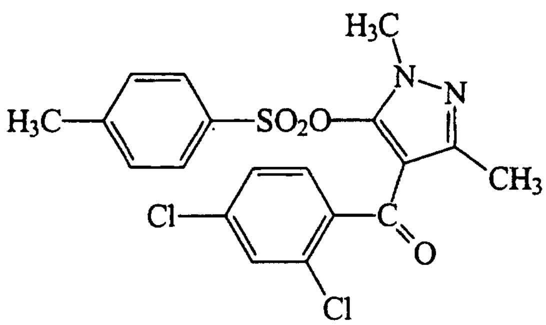

,

B47) pyrazoxyfen

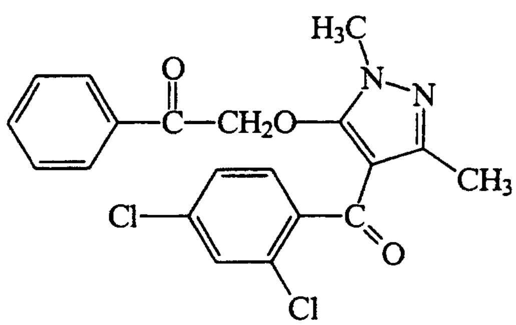

,

B48) KIH 2023

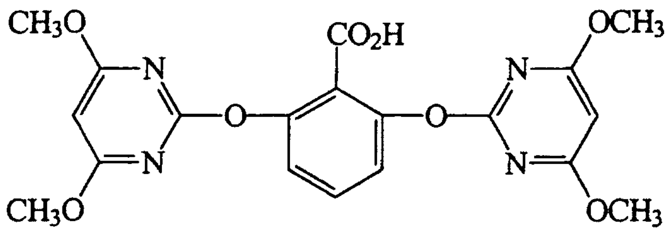

,

B49) KIH 6127

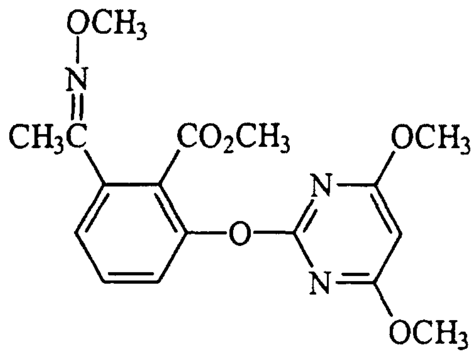

,

B50) oxadiazon

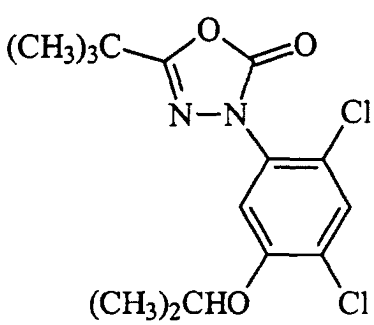

,

B51) oxadiargyl

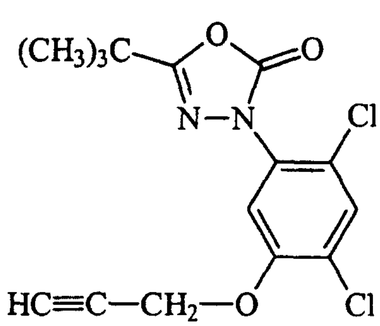

,

B52) acetochlor

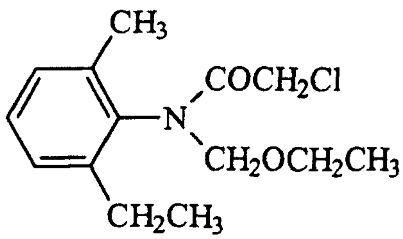

,

B53) metolachlor

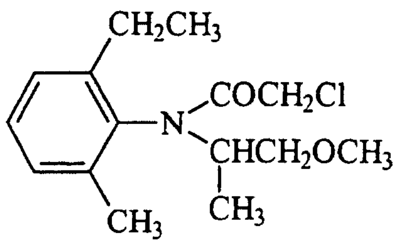

,

B54) metosulam

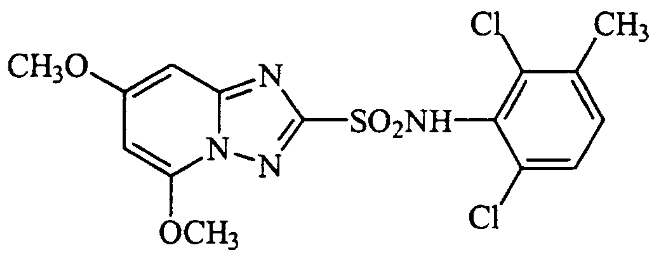

,

B55) oxyfluorfen

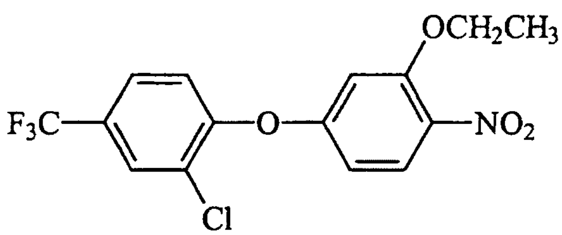

,

B56) dalapon

$CH_3CCl_2CO_2H$

B57) metsulfuron

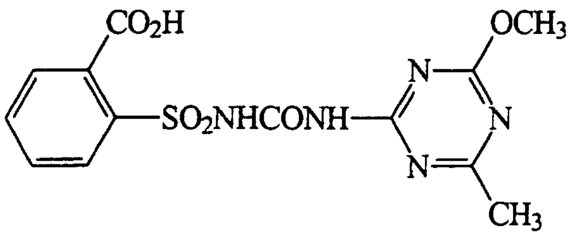

,

B58) bensulfuron

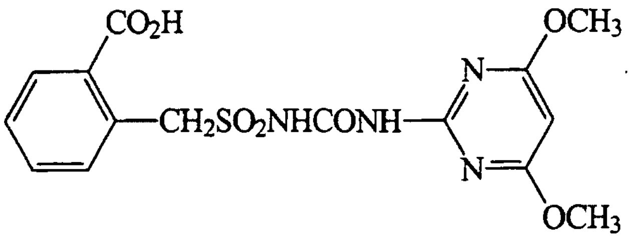

,

B59) pyrazosulfuron

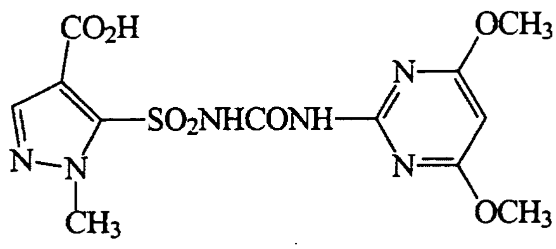

,

B60) cinosulfuron

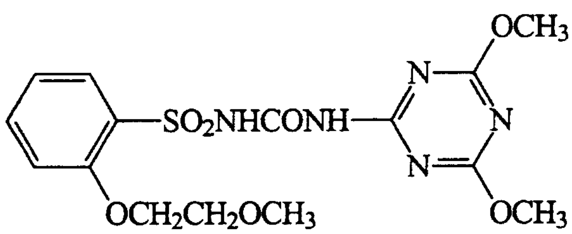

,

B61) imazosulfuron

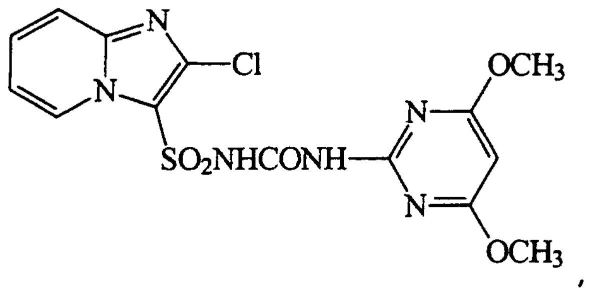

B62) AC 322,140 (cyclosulfamuron)

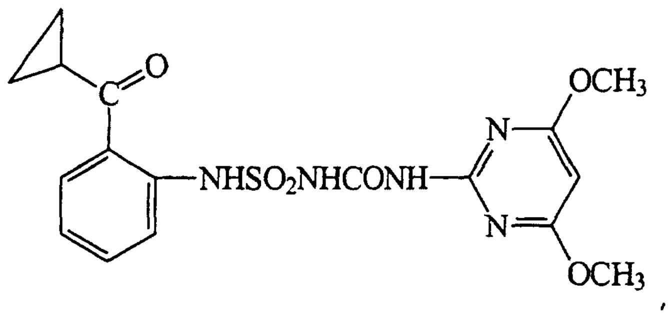

B63) sulfonylureas of the formula IV

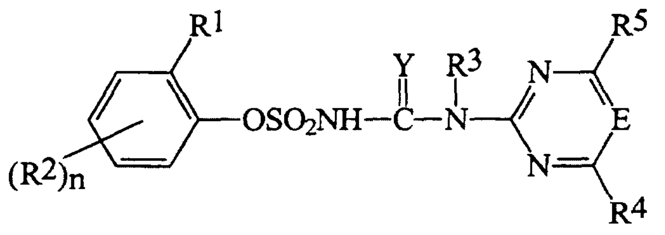

(IV),

in which

a) $R^1$ is ethoxy, propoxy or isopropoxy and
$R^2$ is halogen, $NO_2$, $CF_3$, CN, $(C_1\text{-}C_4)$-alkyl, $(C_1\text{-}C_4)$-alkoxy, $(C_1\text{-}C_4)$-alkylthio or $((C_1\text{-}C_4)$-alkoxy) carbonyl and
n is 0, 1, 2 or 3 or
b) $R^1$ is saturated or unsaturated $(C_1\text{-}C_8)$-alkoxy, which is substituted by halogen, saturated or unsaturated $(C_1\text{-}C_6)$-alkoxy, a radical of the formula $((C_1\text{-}C_6)$-alkyl)-S-, $((C_1\text{-}C_6)$-alkyl)-SO-, $((C_1\text{-}C_6)$-alkyl)-$SO_2$-, $((C_2\text{-}C_6)$-alkyl)-O-CO-, $NO_2$, CN or phenyl; furthermore $(C_2\text{-}C_8)$-alkenyloxy or -alkynyloxy and
$R^2$ is saturated or unsaturated $(C_1\text{-}C_8)$-alkyl, phenyl, phenoxy, $(C_1\text{-}C_4)$-alkoxy, $(C_1\text{-}C_4)$-alkylthio, $((C_1\text{-}C_4)$-alkoxy)carbonyl, where all of the abovementioned radicals $R^2$ may be substituted by halogen, $(C_1\text{-}C_4)$-alkoxy or $(C_1\text{-}C_4)$-alkylthio, or halogen, $NO_2$, $(C_1\text{-}C_4)$-alkylsulfonyl or -sulfinyl and
n is 0, 1, 2 or 3 or
c) $R^1$ is $(C_1\text{-}C_8)$-alkoxy and
$R^2$ is $(C_2\text{-}C_8)$-alkenyl or -alkynyl, phenyl, phenoxy, where the radicals mentioned for $R^2$ are unsubstituted or substituted by halogen, $(C_1\text{-}C_4)$-alkoxy or $(C_1\text{-}C_4)$-alkylthio, or $(C_1\text{-}C_4)$-alkylsulfonyl or -sulfinyl and

n is 1, 2 or 3 or
d) $R^1$ is, in each case in the 2-position on the phenyl radical, halogen, methoxy, ethyl or propyl,
$R^2$ is (($C_1$-$C_4$)-alkoxy)carbonyl in the 6-position on the phenyl radical and
n = 1

and in all cases a) to d)

$R^3$ is hydrogen, saturated or unsaturated ($C_1$-$C_8$)-alkyl or ($C_1$-$C_4$)-alkoxy,
$R^4$, $R^5$ independently of one another are hydrogen, halogen, ($C_1$-$C_4$)-alkyl, ($C_1$-$C_4$)-alkoxy, ($C_1$-$C_4$)-alkylthio, where the three last-mentioned radicals are unsubstituted or substituted by halogen, ($C_1$-$C_4$)-alkoxy or ($C_1$-$C_4$)-alkylthio,
Y is O or S and
E is CH or N,

particular preference from among the compounds of the formula IV being given to
B63a) ethoxysulfuron (HOE 095404)

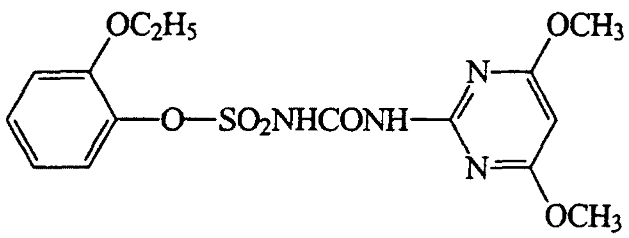

,

B64) azimsulfuron (DPX-A8947)

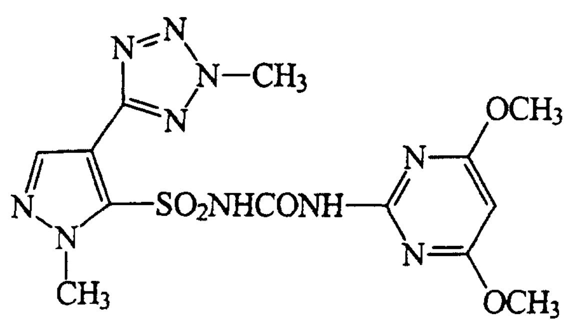

,

B65) nicosulfuron

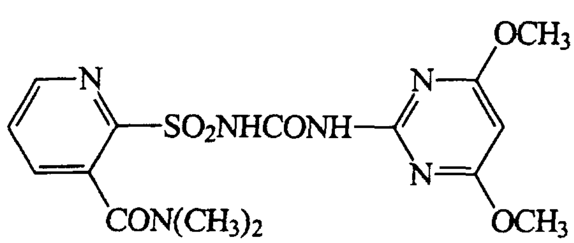

,

B66) prometryn

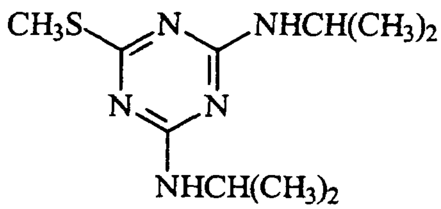

,

B67) simetryn

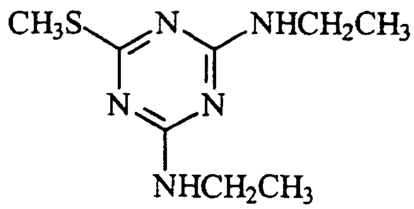

,

B68) thiazopyr

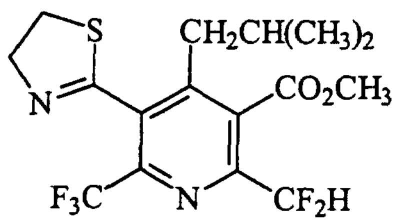

,

B69) pyrazophos

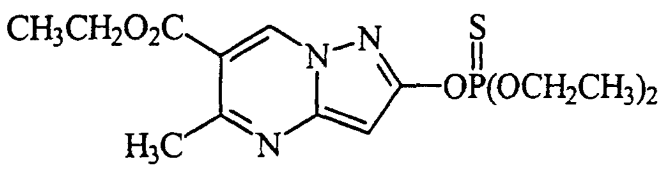

,

B70) pentoxazone

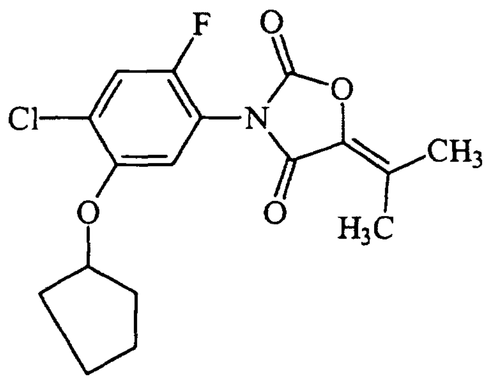

,

B71) indanofan

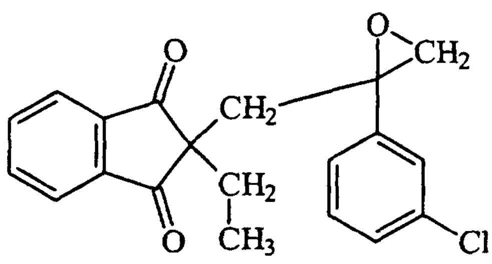

,

B72) LGC40863

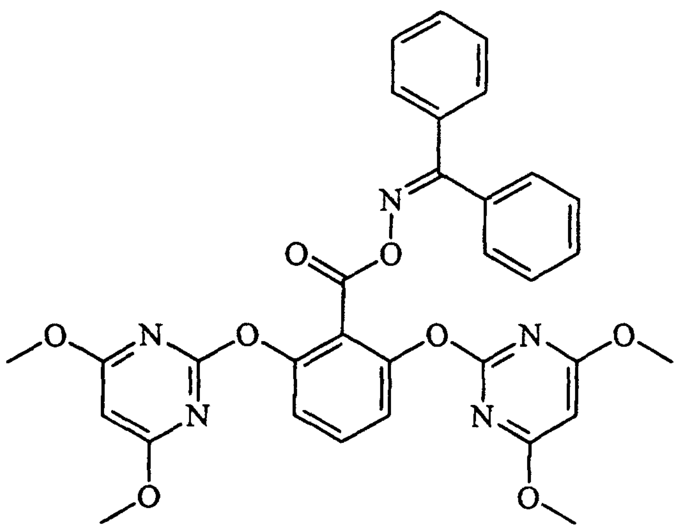

and

B73) MY 100

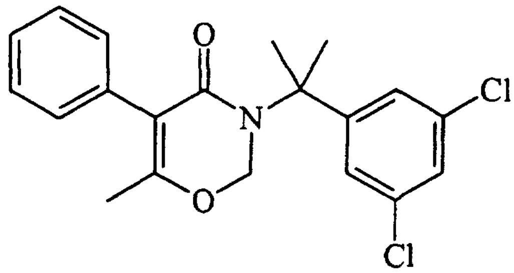

,

with the provisos that

i) compositions comprising

A') at least one compound from the group of the substituted phenylsulfonylureas of the general formula I' and their agriculturally acceptable salts

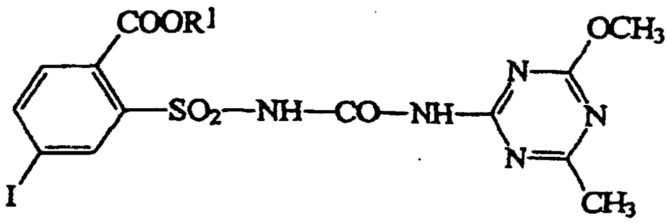

(I'),

in which

$R^1$ is $(C_1\text{-}C_8)$-alkyl, $(C_3\text{-}C_4)$-alkenyl, $(C_3\text{-}C_4)$-alkynyl or $(C_1\text{-}C_4)$-alkyl which is mono- to tetrasubstituted by radicals from the group consisting of halogen and $(C_1\text{-}C_2)$-alkoxy

in combination with

B') fenoxaprop, pendimethalin, nicosulfuron, mecoprop, MCPA, 2,4-D, dicamba, acifluorfen, azoles of the general formula III

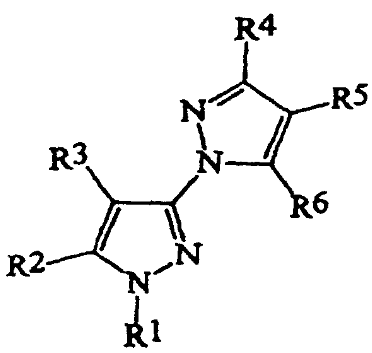

(III),

,

in which

$R^1$ is $(C_1\text{-}C_4)$-alkyl,

$R^2$ is $(C_1\text{-}C_4)$-alkyl, $(C_1\text{-}C_4)$-alkylthio or $(C_1\text{-}C_4)$-alkoxy, where each radical may be substituted by one or more halogen atoms, or

| | |
|---|---|
| $R^1$ and $R^2$ | together form the group $(CH_2)_m$ where m = 3 or 4, |
| $R^3$ | is hydrogen or halogen, |
| $R^4$ | is hydrogen or $(C_1-C_4)$-alkyl, |
| $R^5$ | is hydrogen, nitro, cyano or one of the groups $-COOR^7$, $-C(=X)NR^7R^8$ or $-C(=X)R^{10}$, |
| $R^6$ | is hydrogen, halogen, cyano, $(C_{1-4})$-alkyl, $(C_1-C_4)$-alkylthio or $-NR^{11}R^{12}$, |
| $R^7$ and $R^8$ | are identical or different and are hydrogen or $(C_1-C_4)$-alkyl, or |
| $R^7$ and $R^8$ | together with the nitrogen to which they are attached form a saturated 5- or 6-membered carbocyclic ring, |
| $R^{10}$ | is hydrogen or $(C_1-C_4)$-alkyl, where the latter may optionally be substituted by one or more halogen atoms, and |
| $R^{11}$ and $R^{12}$ | are identical or different and are hydrogen, $(C_1-C_4)$-alkyl or $(C_1-C_4)$-alkoxycarbonyl, where |
| $R^{11}$ and $R^{12}$ | together with the nitrogen to which they are attached may form a 3-, 5- or 6-membered carbocyclic or aromatic ring in which one carbon atom may optionally be replaced by an oxygen atom, |

bentazone, metsulfuron, ioxynil, acetochlor, metolachlor, KIH-2023, triasulfuron or oxyfluorfen as the only herbicidally active compounds
and
ii) compositions comprising

A") at least one compound from the group of the substituted phenylsulfonylureas of the general formula I" and their agriculturally acceptable salts

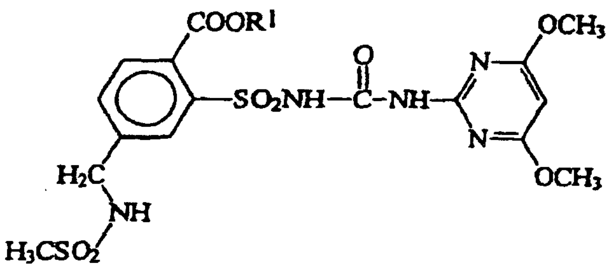

(I''),

in which

$R^1$ is $(C_1-C_8)$alkyl, $(C_3-C_4)$-alkenyl, $(C_3-C_4)$-alkynyl, or $(C_1-C_4)$-alkyl which is mono- to tetrasubstituted by radicals from the group consisting of halogen and $(C_1-C_2)$-alkoxy

in combination with
B") fenoxaprop, pendimethalin, mecoprop, MCPA, 2,4-D, dicamba, a compound of the formula III given above, bentazone, ioxynil, metasulam, metsulfuron, oxyfluorfen or triasulfuron

as the only herbicidally active compounds
are excluded.

**2.** The composition as claimed in claim 1,
wherein,
in the herbicide of the formula (I) or its salt

- $R^1$ is methyl, ethyl, n- or isopropyl, n-, tert-, 2-butyl or isobutyl, n-pentyl, isopentyl, n-hexyl, isohexyl, 1,3-dimethylbutyl, n-heptyl, 1-methylhexyl or 1,4-dimethylpentyl;
- $R^2$ is I;
- $R^3$ is methyl; and
- Z is N.

**3.** The composition as claimed in claim 1 or 2,

wherein, in the herbicide of the formula (I) or its salt $R^1$ is methyl.

**4.** The composition as claimed in one or more of the preceding claims, wherein, the composition comprises an amount of the compound A1) methyl 4-iodo-2-[3-(4-methoxy-6-methyl-1,3,5-triazine-2-yl)ureidosulfonyl]benzoate

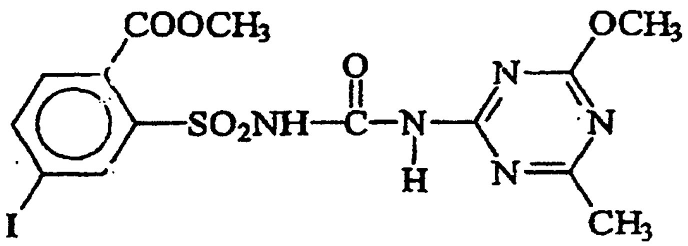

and/or an amount of the sodium salt of A1*).

**5.** The composition as claimed in claim 1, wherein, in the herbicide of the formula (I) or its salt

| | |
|---|---|
| $R^1$ | is methyl, ethyl, n- or isopropyl, n-, tert-, 2-butyl or isobutyl, n-pentyl, isopentyl, n-hexyl, isohexyl, 1,3-dimethylbutyl, n-heptyl, 1-methylhexyl or 1,4-dimethylpentyl; |
| $R^2$ | is $CH_2NHSO_2CH_3$; |
| $R^3$ | is methoxy; and |
| Z | is CH. |

**6.** The composition as claimed in claim 1 or 5, wherein, in the herbicide of the formula (I) or its salt $R^1$ is methyl.

**7.** The composition as claimed in one or more of the preceding claims 1, 5 or 6, wherein, the composition comprises an amount of compound A2)

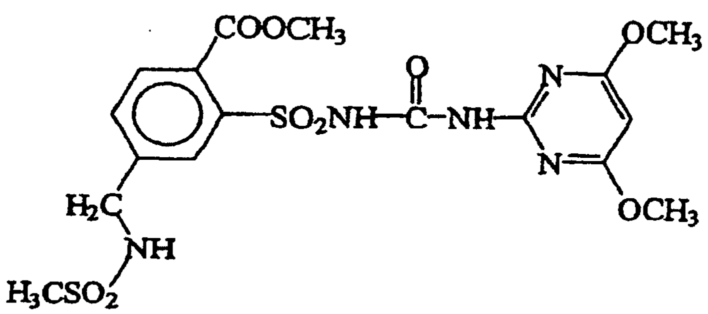

and/or A3)

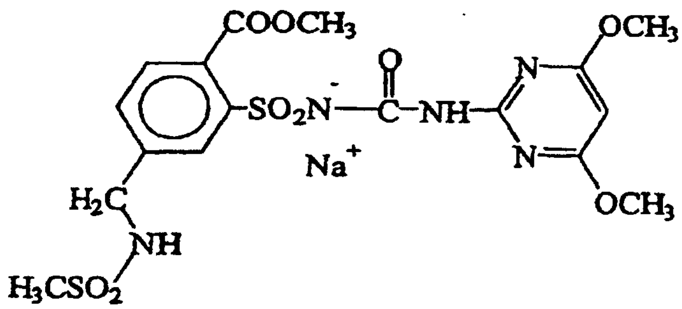

**8.** The composition as claimed in one or more of the preceding claims, wherein, the salt of the herbicide of the fomrula (I) is formed by replacing the hydrogen of the $-SO_2$-NH-group by a cation from the group consisting of the alkali metals, alkaline earth metals and ammonium, preferably sodium.

**9.** The composition as claimed in one or more of the preceding claims, wherein, the composition comprises, as herbicide of type B, the synergistically acting combination partners of group Ba) anilofose, fenoxaprop, fenoxaprop-P, butachlor and/or propanil.

**10.** The composition as claimed in one or more of the preceding claims 1 to 8, wherein, the composition comprises, as herbicides of type B, the synergistically acting combination partners 2,4-D, MCPA, mecoprop and/or dicamba from group Bb).

**11.** The composition as claimed in one or more of the preceding claims 1 to 8, wherein, the composition comprises, as herbicides of type B, the synergistically acting combination partners bentazone and/or daimuron from group Bc).

**12.** The composition as claimed in one or more of the preceding claims, wherein, the composition comprises the compounds of the formula I or their salts (type A compounds) and the compounds from group B in a weight ratio of from 1:20,000 to 200:1, preferably from 1:8000 to 100:1, particularly preferably from 1:4000 to 50:1.

**13.** The composition as claimed in one or more of the preceding claims, wherein, the composition comprises from 0.1 to 99% by weight of the active compounds A and B, in addition to customary formulation auxiliaries.

**14.** A herbicidal composition, comprising a synergistic amount of

A) at least one herbicidally active compound from the group of the substituted phenylsulfonylureas of the formula I and their agriculturally accepted, i.e. acceptable and compatible, salts

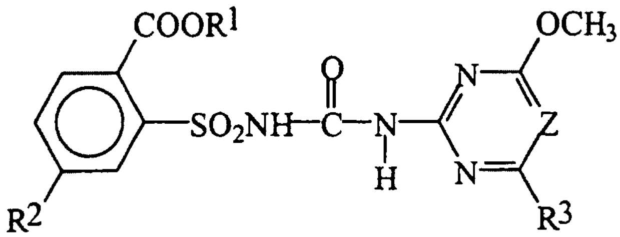

(I),

in which

$R^1$ is $(C_1-C_8)$-alkyl, $(C_3-C_4)$-alkenyl, $(C_3-C_4)$-alkynyl or $(C_1-C_4)$-alkyl, which is mono- to tetrasubstituted by radicals from the group consisting of halogen and/or $(C_1-C_2)$-alkoxy;
$R^2$ is I or $CH_2NHSO_2CH_3$;
$R^3$ is methyl or methoxy; and
Z is N or CH;

in combination with
at least one herbicidally active compound from the group of the compounds B' consisting of

B1) butachlor,
B2) butenachlor,
B3) thenylchlor,
B4) pretilachlor,
B5) mefenacet,
B5a) Bay FOE 5043,
B6) naproanilid,
B7) propanil,
B8) etobenzanid,
B9) dimepiperate,
B10) molinate,
B11) thiobencarb,
B12) pyributicarb,
B13) quinclorac,
B14a) sulcotrione,
B15) cycloxydim
B16) sethoxydim
B17) NBA 061,
B18) piperophos,
B19) anilofos,
B21) haloxyfop,
B22) cyhalofop,
B23) JC-940,
B24) dithiopyr,
B25) bromobutide,
B26) cinmethylin,
B27) CH-900,
B32) acifluorfen,
B34) chlorimuron,
B37) picloram,
B38) carfentrazone
B40) triclopyr,
B41) benfuresate,
B42) daimuron,
B44) clomazone,
B45) benzofenap,
B46) pyrazolynate,

B47) pyrazoxyfen,
B49) KIH 6127,
B50) oxadiazon,
B51) oxadiargyl,
B56) dalapon,
B58) bensulfuron,
B59) pyrazosulfuron,
B60) cinosulfuron,
B61) imazosulfuron,
B62) AC 322,140 (cyclosulfamuron),
B63a) ethoxysulfuron (HOE 095404),
B64) azimsulfuron (DPX-A8947),
B66) prometryn,
B67) simetryn,
B68) thiazopyr,
B69) pyrazophos,
B70) pentoxazone,
B71) indanofan,
B72) LGC 40863
and
B73) MY 100

or in combination with
two or more herbicidally active compounds from the group of the compounds B" consisting of

B1) butachlor,
B2) butenachlor,
B3) thenylchlor,
B4) pretilachlor,
B5) mefenacet,
B5a) Bay FOE 5043,
B6) naproanilid,
B7) propanil,
B8) etobenzanid,
B9) dimepiperate,
B10) molinate,
B11) thiobencarb,
B12) pyributicarb,
B13) quinclorac,
B14a) sulcotrione,
B15) cycloxydim
B16) sethoxydim
B17) NBA 061,
B18) piperophos,
B19) anilofos,
B20) fenoxaprop, fenoxaprop-P,
B21) haloxyfop,
B22) cyhalofop,
B23) JC-940,
B24) dithiopyr,
B25) bromobutide,
B26) cinmethylin,
B27) CH-900,
B28) 2,4-D,
B29) mecoprop, mecoprop-P,
B30) MCPA,
B31) dicamba,
B32) acifluorfen,

B33a)

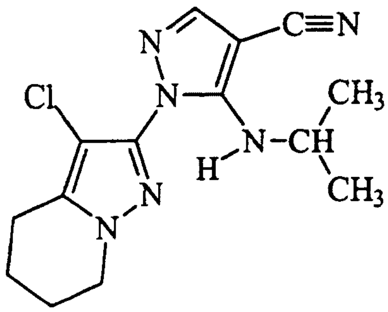

,

and

B33b)

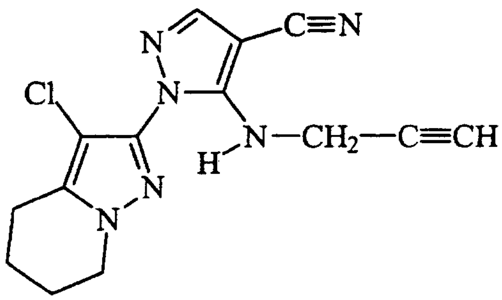

,

B34) chlorimuron,
B35) triasulfuron,
B36) ioxynil,
B37) picloram,
B38) carfentrazone,
B39) bentazone,
B40) triclopyr,
B41) benfuresate,
B42) daimuron,
B43) pendimethalin,
B44) clomazone,
B45) benzofenap,
B46) pyrazolynate,
B47) pyrazoxyfen,
B48) KIH 2023,
B49) KIH 6127,
B50) oxadiazon,
B51) oxadiargyl,
B52) acetochlor,
B53) metolachlor,
B54) metosulam,
B55) oxyfluorfen
B56) dalapon,
B57) metsulfuron,
B58) bensulfuron,
B59) pyrazosulfuron,
B60) cinosulfuron,
B61) imazosulfuron,

B62) AC 322,140 (cyclosulfamuron),
B63a) ethoxysulfuron (HOE 095404),
B64) azimsulfuron (DPX-A8947),
B65) nicosulfuron,
B66) prometryn,
B67) simetryn,
B68) thiazopyr,
B69) pyrazophos,
B70) pentoxazone,
B71) indanofan,
B72) LGC 40863 and
B73) MY 100

where in the case B'' at least one of the compounds from the group B'' also has to belong to group B'.

**15.** A process for preparing a composition as claimed in one or more of the preceding claims, which comprises, formulating the compounds of the formula I or their salts (type A compounds) with one or more compounds of type B analogously to a customary crop protection formulation from the group consisting of wettable powders, emulsifiable concentrates, aqueous solutions, emulsions, sprayable solutions (tank mix), oil- or water-based dispersions, suspoemulsions, dusting agents, seed dressings, granules for soil application or application by broadcasting, water-dispersible granules, ULV formulations, microcapsules and waxes.

**16.** A method for controlling undesirable plants, which comprises, applying a herbicidally effective amount of one of the combinations of active compounds A + B defined in one or more of claims 1 to 15 to the undesirable plants or to the area under cultivation.

**17.** The method as claimed in claim 16, wherein, the application rate for the compounds of the formula I) or their salts (type A compounds) is from 0.1 to 100 g of ai/ha, preferably from 0.5 to 60 g of ai/ha, very particularly preferably from 2 to 40 g of ai/ha, and the application rates for the compounds of type B are from 1 to 5000 g of ai/ha.

**18.** The method as claimed in claim 16 or 17, wherein, the active compounds of types A and B are applied simultaneously or at different times in a weight ratio of from 1:20,000 to 200:1.

**19.** The method as claimed in any of claims 16 to 18, wherein, the combinations are employed for the selective control of undesirable plants.

**20.** The method as claimed in claim 19, wherein, the combinations are employed in transgenic crops.

**21.** The method as claimed in claim 19, wherein, the combinations are employed in rice.

**22.** The use of herbicidal compositions, comprising

A) at least one herbicidally active compound from the group of the substituted phenylsulfonylureas of the formula I and their agriculturally accepted, i.e. acceptable and compatible, salts

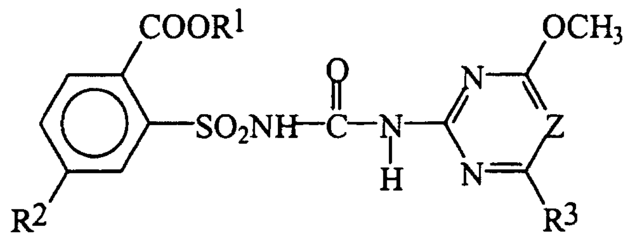

(I),

in which

$R^1$ is $(C_1-C_8)$-alkyl, (C3-1-$C_4$)-alkenyl, (C3-1-$C_4$)-alkynyl or $(C_1-C_4)$-alkyl, which is mono- to tetrasubstituted by radicals from the group consisting of halogen and/or $(C_1-C_2)$-alkoxy;
$R^2$ is I or $CH_2NHSO_2CH_3$;
$R^3$ is methyl or methoxy; and
Z is N or CH;

and

B) at least one herbicidally active compound from the group of the compounds consisting of

Ba) herbicides which are selective in rice, mainly against grasses, selected from the group consisting of

B1) butachlor,
B2) butenachlor,
B3) thenylchlor,
B4) pretilachlor,
B5) mefenacet,
B5a) Bay FOE 5043,
B6) naproanilid,
B7) propanil,
B8) etobenzanid,
B9) dimepiperate,
B10) molinate,
B11) thiobencarb,
B12) pyributicarb,
B13) quinclorac,
B14a) sulcotrione,
B15) cycloxydim
B16) sethoxydim
B17) NBA 061,
B18) piperophos,
B19) anilofos,
B20) fenoxaprop, fenoxaprop-P,
B21) haloxyfop,
B22) cyhalofop,
B23) JC-940,
B24) dithiopyr,
B25) bromobutide,
B26) cinmethylin and
B27) CH-900,

Bb) herbicides which are selective in rice, mainly against dicotyledonous harmful plants and Cyperaceae, selected from the group consisting of

B28) 2,4-D,

B29) mecoprop, mecoprop-P,
B30) MCPA,
B31) dicamba,
B32) acifluorfen,
B33a)

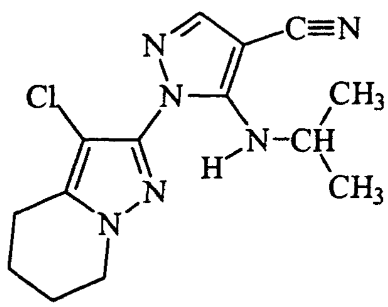

,

and
B33b)

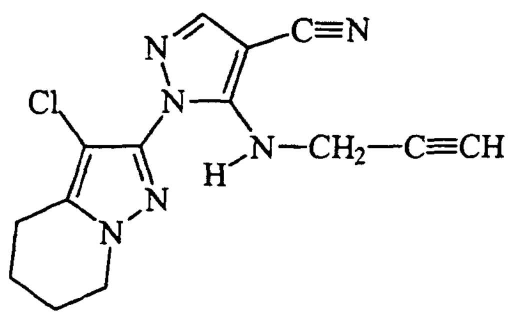

,

B34) chlorimuron,
B35) triasulfuron,
B36) ioxynil,
B37) picloram
and
B38) carfentrazon,

Bc) herbicides which are selective in rice, mainly against Cyperaceae selected from the group consisting of

B39) bentazone,
B40) triclopyr,
B41) benfuresate
and
B42) daimuron,

and
Bd) herbicides which are selective in rice, mainly against grasses and dicotyledonous harmful plants and harmful Cyperaceae plants, selected from the group consisting of

B43) pendimethalin,
B44) clomazone,
B45) benzofenap,
B46) pyrazolynate,
B47) pyrazoxyfen,

B48) KIH 2023,
B49) KIH 6127,
B50) oxadiazon,
B51) oxadiargyl,
B52) acetochlor,
B53) metolachlor,
B54) metosulam,
B55) oxyfluorfen
B56) dalapon,
B57) metsulfuron,
B58) bensulfuron,
B59) pyrazosulfuron,
B60) cinosulfuron,
B61) imazosulfuron,
B62) AC 322,140 (cyclosulfamuron),
B63a) ethoxysulfuron (HOE 095404),
B64) azimsulfuron (DPX-A8947),
B65) nicosulfuron,
B66) prometryn,
B67) simetryn,
B68) thiazopyr,
B69) pyrazophos,
B70) pentoxazone,
B71) indanofan,
B72) LGC 40863
and
B73) MY 100,

in a weight ratio A:B in the range from 1:20,000 to 200:1 for controlling undesirable harmful plants in rice crops.

**23.** The use as claimed in claim 22 in a synergistic amount.

**24.** The use as claimed in claim 22 or 23 of mixtures with combinations of A) and Ba) for the selective control of grasses in rice.

**25.** The use as claimed in claim 22 or 23 of mixtures with combinations of A) and Bb) for the selective control of dicotyledonous plants and Cyperaceae in rice.

**26.** The use as claimed in claim 22 or 23 of mixtures with combinations of A) and Bc) for the selective control of Cyperaceae in rice.

**27.** The use as claimed in claim 22 or 23 of mixtures with combinations of A) and Bd) for the selective control of grasses, dicotyledonous plants and Cyperaceae in rice.

## Revendications

**1.** Herbicides, contenant en une quantité synergiquement active

A) au moins un agent actif herbicide du groupe des phénylsulfonylurées substituées de la formule générale I et de leurs sels acceptés dans le domaine agricole, c'est-à-dire acceptables et compatibles,

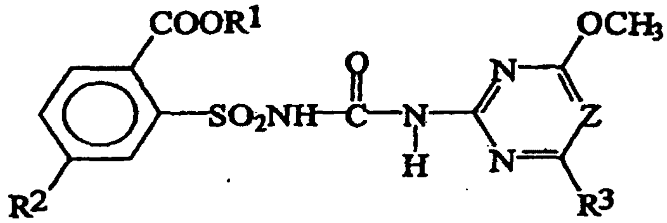

(I),

où

$R^1$ représente un radical alkyle en $C_1$ à $C_8$, alcényle en $C_3$ à $C_4$, alcynyle en $C_3$ à $C_4$ ou alkyle en $C_1$ à $C_4$, qui peut être substitué de une à quatre fois par des restes du groupe formé par de l'halogène ou un radical alcoxy en $C_1$ à $C_4$,

$R^2$ représente I ou $CH_2NHSO_2CH_3$,

$R^3$ représente un radical méthyle ou méthoxy, et

Z représente N ou CH,

et

B) au moins un composé à action herbicide du groupe formé par les composés consistant en

Ba) herbicides à action sélective dans le riz, principalement contre les graminées, choisis dans le groupe formé par

B1 ) le butachlor,

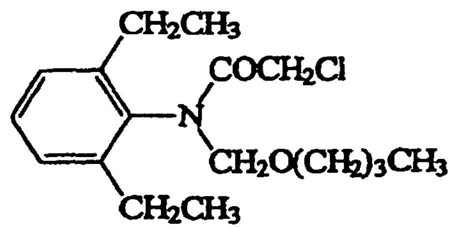

,

B2) le butenachlor,

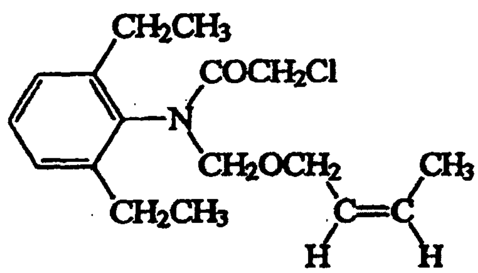

,

B3) le thenylchlor,

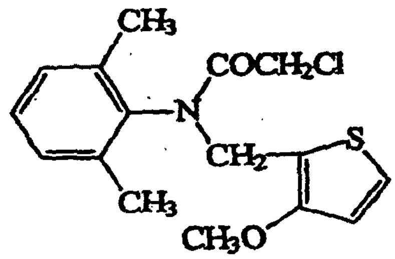

,

4) le pretylachlor

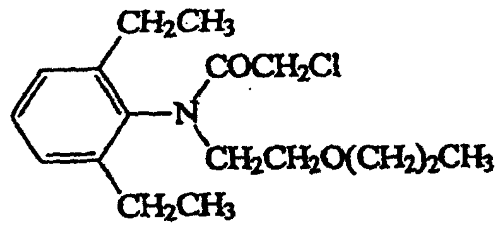

,

B5) le mefenacet,

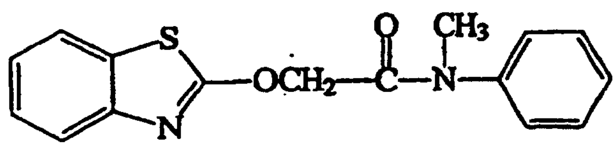

,

B5a) le BAY FOE 5043,

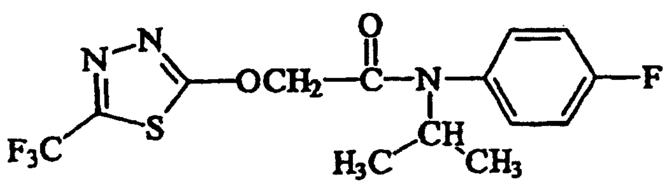

B6) le naproanilide,

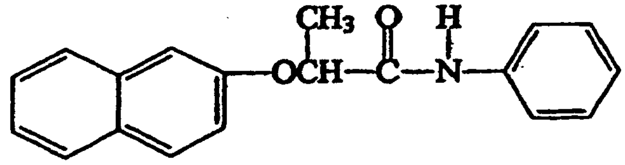

,

B7) le propanil,

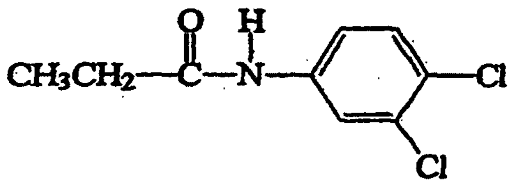

,

B8) l'étobenzanide,

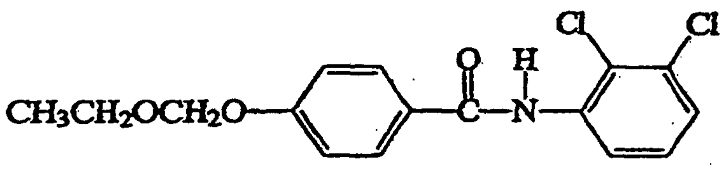

,

B9) le dimépipérate,

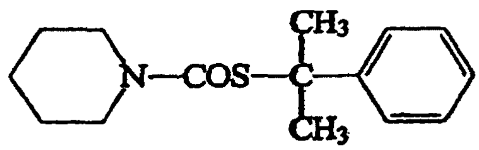

,

B10) le molinate,

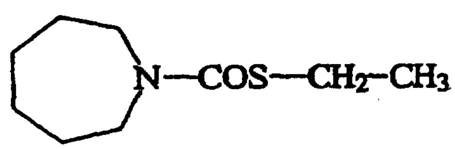

,

B11 ) le thiobencarb,

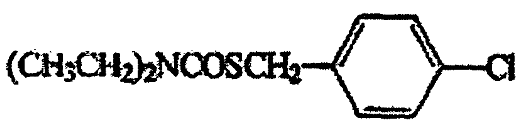

,

B12) le pyributicarb,

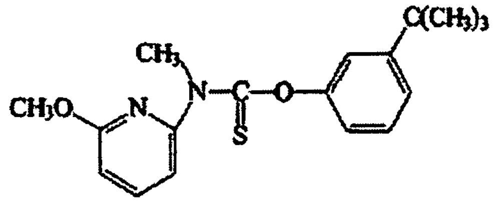

B13) le quinclorac,

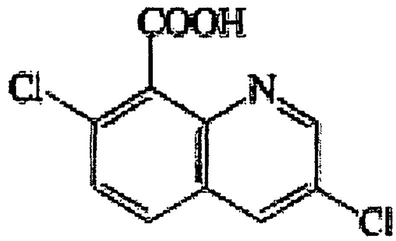

B14) des cyclohexanediones de la formule générale II

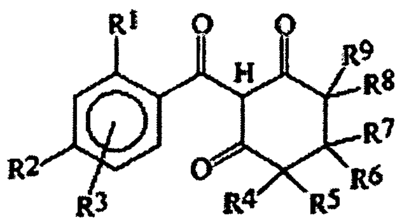

(II),

dans laquelle
$R^1$ représente un halogène ou un radical alcoxy en $C_1$ à $C_4$, alkyle en $C_1$ à $C_4$, $-NO_2$, -CN ou S $(O)_nR^{10}$,
$R^2$ et $R^3$ représentent indépendamment l'un de l'autre de l'hydrogène, un halogène ou un radical alkyle en $C_1$ à $C_4$, alcoxy en $C_1$ à $C_4$, haloalcoxy, haloalkyle en $C_1$ à $C_4$, $-NO_2$,-CN ou S $(O)_mR^{11}$, $-NR^{12}R^{13}$, $-NR^{14}-CO-R^{15}$,
$R^4$ représente de l'hydrogène ou un radical alkyle en $C_1$ à $C_4$ ou $-CO-O-(C_1-C_4)$alkyle,
$R^5$, $5^6$, $R^7$, $R^8$ et $R^9$ représentent indépendamment les uns des autres de l'hydrogène, un radical alkyle en $C_1$ à $C_4$ ou $-CO-R^{16}$,
$R^{10}$ représente un radical alkyle en $C_1$ à $C_4$, haloalkyle en $C_1$ à $C_4$ ou alcoxy en $C_1$ à $C_4$,
$R^{11}$ représente un radical alkyle en $C_1$ à $C_4$, haloalkyle en $C_1$ à $C_4$, phényle, benzyle ou $-NR^{17}R^{18}$,
$R^{12}$ et $R^{13}$ représentent indépendamment l'un de l'autre de l'hydrogène ou un radical alkyle en $C_1$ à $C_4$,
$R^{14}$ représente de l'hydrogène ou un radical alkyle en $C_1$ à $C_4$,
$R^{15}$ représente un radical alkyle en $C_1$ à $C_4$,
$R^{16}$ représente de l'hydrogène ou un radical alkyle en $C_1$ à $C_4$, haloalkyle en $C_1$ à $C_4$ ou alcoxy en $C_1$ à $C_4$,
$R^{16}$ et $R^{17}$ représentent indépendamment l'un de l'autre de l'hydrogène ou un radical alkyle en $C_1$ à $C_4$, et
n et m ont indépendamment l'un de l'autre une valeur de 0, 1 ou 2,
avec plus préférentiellement
B14a) ICIA0051 = sulcotrione

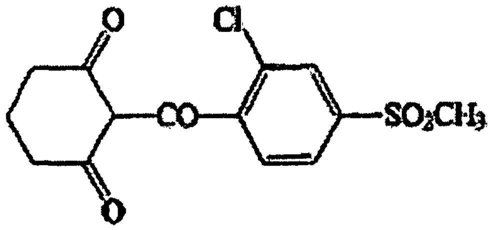

,

B15) cycloxydime

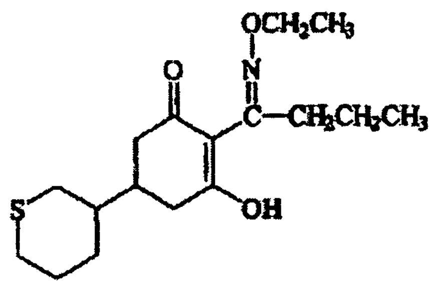

,

B16) séthoxydime

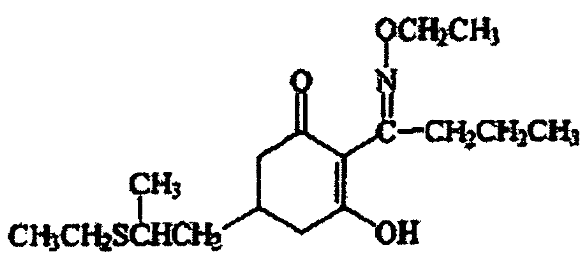

,

B17) Bayer NBA 061

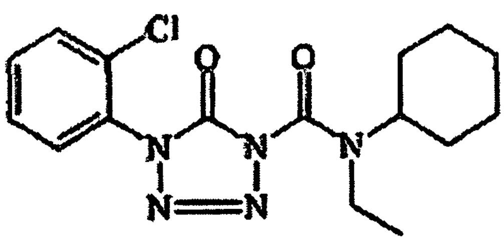

,

B18) piperophos

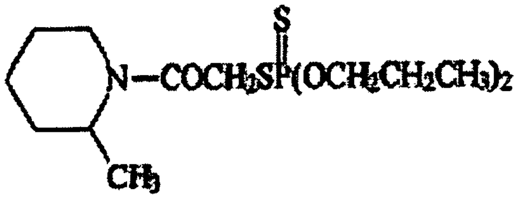

,

B19) anilofos

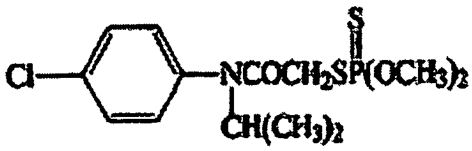

,

B20) Fenoxaprop, Fenoxaprop-P

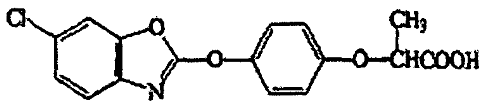

,

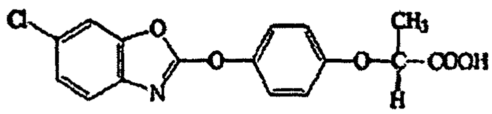

,

B21) Haloxyfop

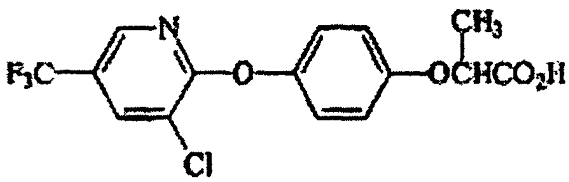

,

B22) Cyhalofop

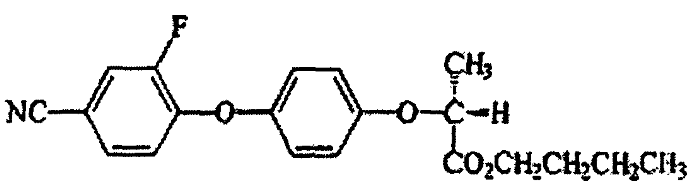

,

B23) JC-940

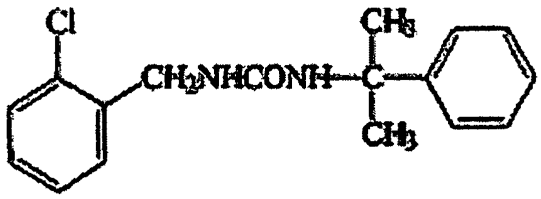

B24) Dithiopyr

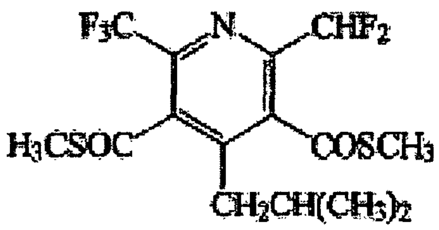

B25) Bromobutide

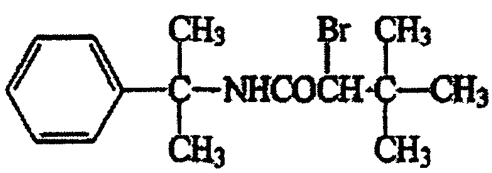

B26) Cinméthyline

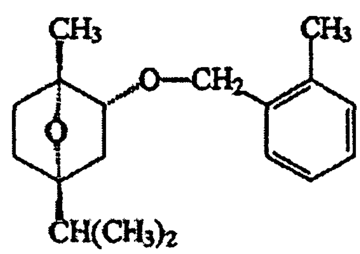

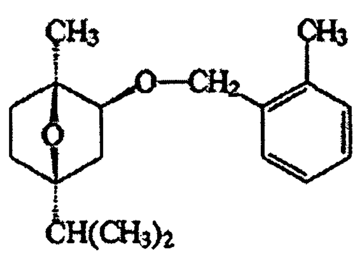

et

B27) CH-900

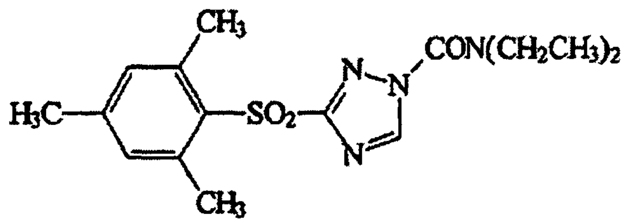

,

Bb) des herbicides à action sélective dans le riz, principalement contre les cypéracées et les mauvaises herbes dicotylédones, du groupe formé par

B28)2,4-D

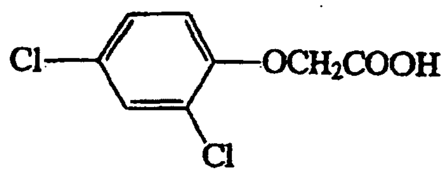

,

B29) Mecoprop, Mecoprop-P

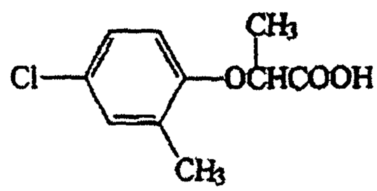

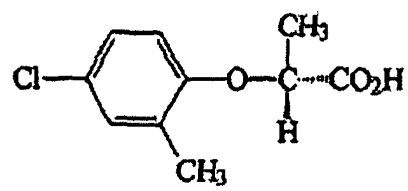

,

B30) MCPA

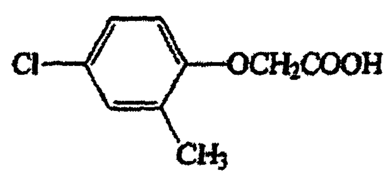

,

B31) Dicamba

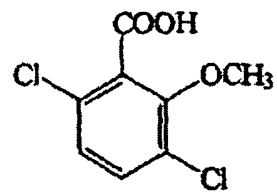

,

B32) Acifluorfène

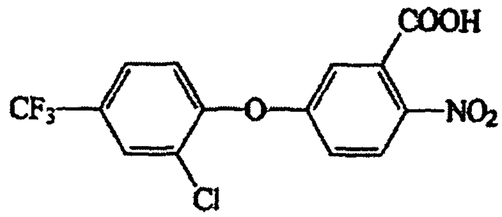

B33) des azoles de la formule générale III

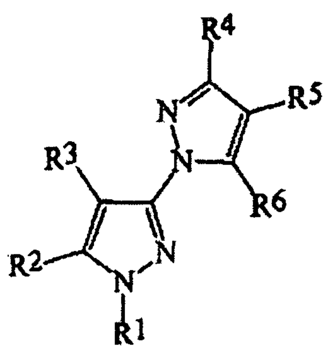

(III),

,

dans laquelle

- $R^1$ représente un radical alkyle en $C_1$ à $C_4$,
- $R^2$ représente un radical alkyle en $C_1$ à $C_4$, alkylthio en $C_1$ à $C_4$ ou alcoxy en $C_1$ à $C_4$, dont chaque reste peut être substitué par un ou plusieurs atomes d'halogène, ou
- $R^1$ et $R^2$ forment ensemble le groupe $(CH_2)_m$ avec m = 3 ou 4,
- $R^3$ représente de l'hydrogène ou un halogène,
- $R^4$ représente de hydrogène ou un radical nitro, cyano ou l'un des groupes $-COOR^7$, $-C(=X)NR^7R^8$ ou $-C(=X)R^{10}$,
- $R^6$ représente de l'hydrogène, un halogène ou un radical cyano, alkyle en $C_1$ à $C_4$, alkylthio en $C_1$ à $C_4$ ou $-NR^{11}R^{12}$,
- $R^7$ et $R^8$ sont identiques ou différents et représentent de l'hydrogène ou un radical alkyle en $C_1$ à $C_4$, ou bien
- $R^7$ et $R^8$ représentent ensemble, avec l'azote auquel ils sont liés, un noyau carbocyclique à 5 ou 6 chaînons,
- $R^{10}$ représente de l'hydrogène ou un radical alkyle en $C_1$ à $C_4$, ce dernier pouvant éventuellement être substitué par un ou plusieurs atomes d'halogène, et
- $R^{11}$ et $R^{12}$ sont identiques ou différents et représentent de l'hydrogène ou un radical alkyle en $C_1$ à $C_4$, alcoxycarbonyle en $C_1$ à $C_4$, avec
- $R^{11}$ et $R^{12}$ pouvant former ensemble, avec l'azote auquel ils sont liés, un noyau carbocyclique ou aromatique à 3, 5 ou 6 chaînons, dans lequel un atome de C peut éventuellement être remplacé par un atome de O,

et de manière particulièrement préférentielle

B33a) un composé de la formule générale III, dans lequel $R^1$ et $R^2$ forment ensemble le groupe $(CH_2)_m$ avec m = 4, $R^3$ représente du chlore, $R^4$ de l'hydrogène, $R^5$ un radical cyano, $R^6$ prend la signification $-NR^{11}R^{12}$, $R^{11}$ est de l'hydrogène et $R^{12}$ représente un radical isopropyle,

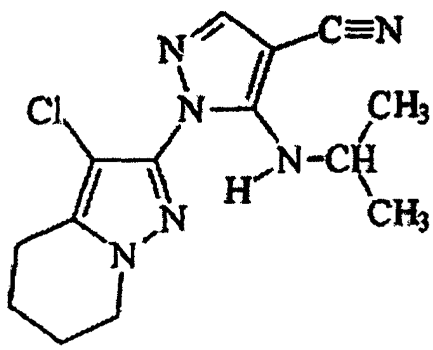

,

et

B33b) un composé de la formule générale III, dans laquelle $R^1$ et $R^2$ forment ensemble le groupe $(CH_2)m$ avec m = 4, $R^3$ représente du chlore, $R^4$ de l'hydrogène, $R^5$ un radical cyano, $R^6$ signifie $-NR^{11}R^{12}$, $R^{11}$ représente un radical méthyle et $R^{12}$ $-CH_2C{\equiv}CH$,

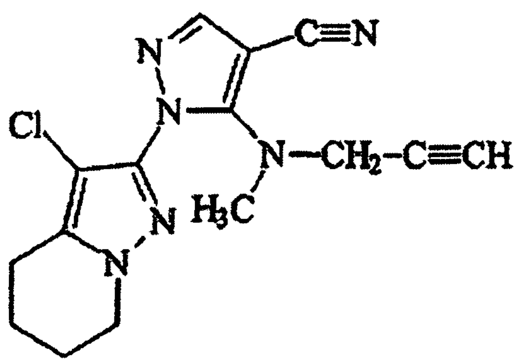

,

B34) du chlorimuron

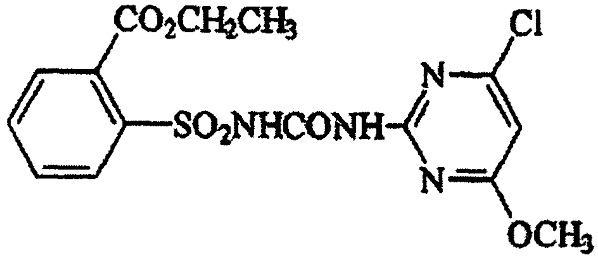

,

B35) du triasulfuron

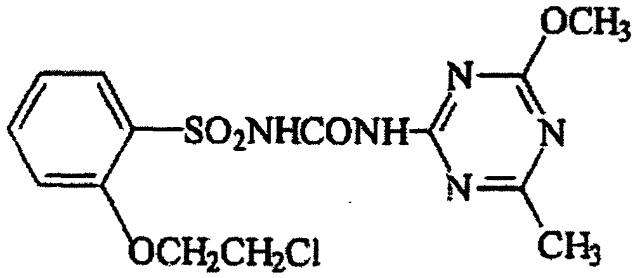

,

B36) de l'ioxynil

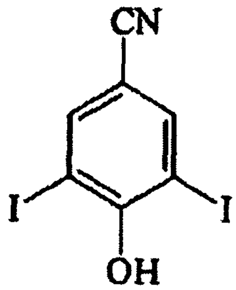

,

B37) du picloram

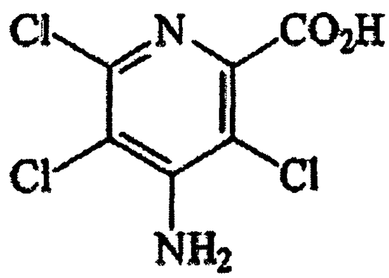

et

B38) de la carfentrazone

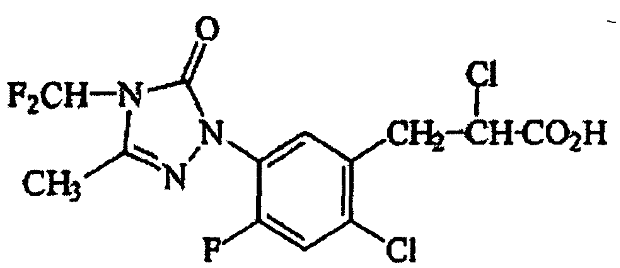

Bc) des herbicides à action sélective dans le riz, principalement contre les cypéracées, du groupe formé par

B39) la bentazone

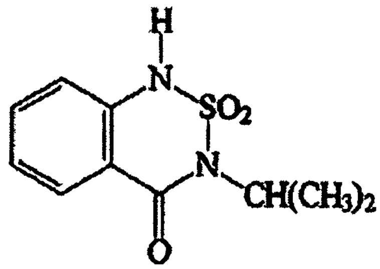

,

B40) le tricyclopyr

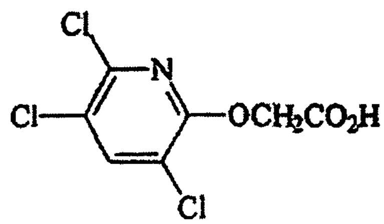

,

B41) le benfuresate

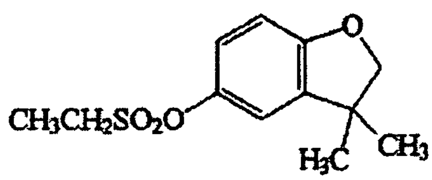

et

B42) le daimuron

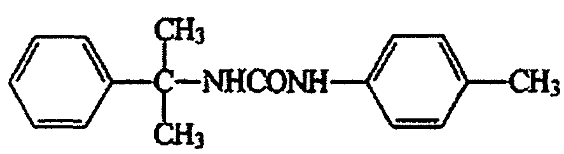

et

Bd) des herbicides à action sélective dans le riz, principalement contre les mauvaises herbes graminées et dicotylédones ainsi que les cypéracées, du groupe formé par

B43) la pendiméthaline

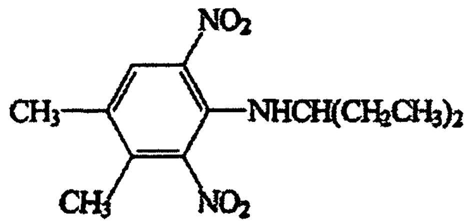

,

B44) la clomazone,

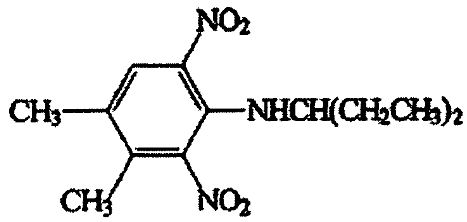

,

B45) le benzofenap

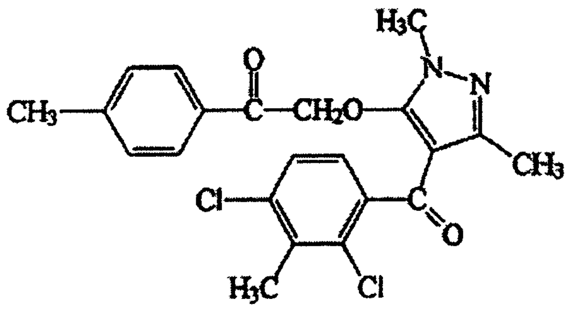

,

B46) du pyrazolynate

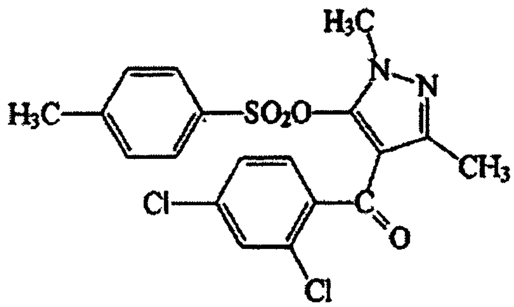

,

B47) le pyrazoxyfène

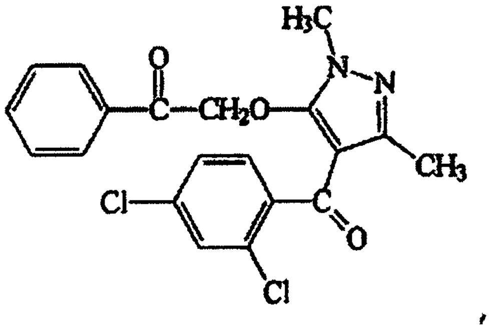

B48) le KIH 2023

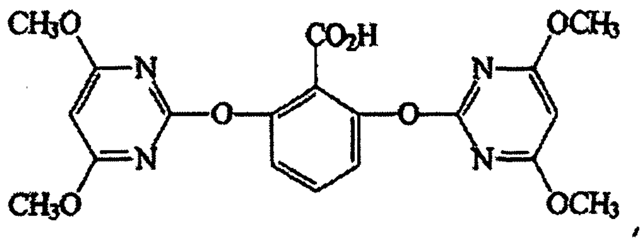

B49) le KIH 6127

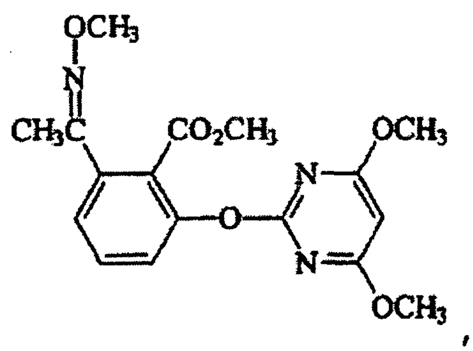

B50) l'oxadiazone

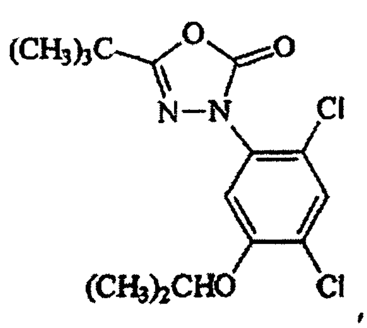

B51) l'oxadiargyl

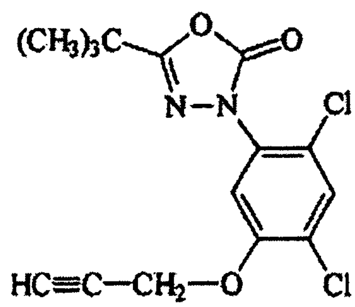

,

B52) l'acétochlore

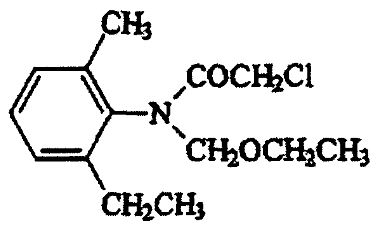

,

B53) le métholachlore

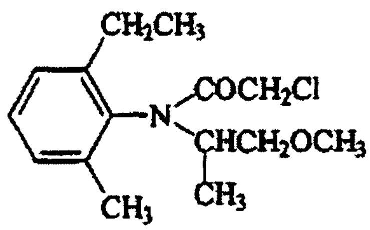

,

B54) le métosulame,

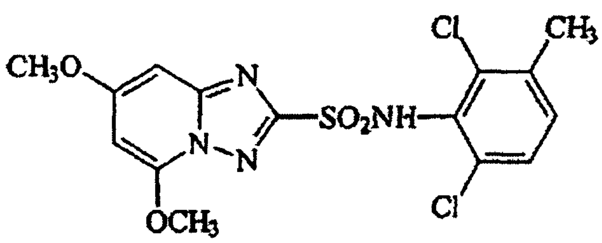

,

B55) l'oxyfluorfène

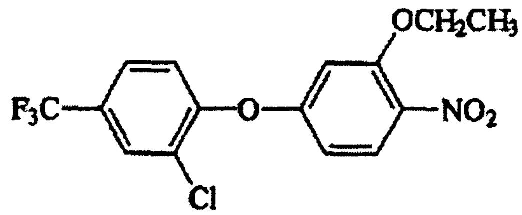

,

B56) le dalapon

$CH_3CCl_2CO_2H$

B57) le metsulfuron

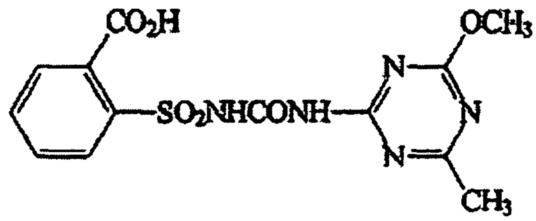

,

B58) le bensulfuron,

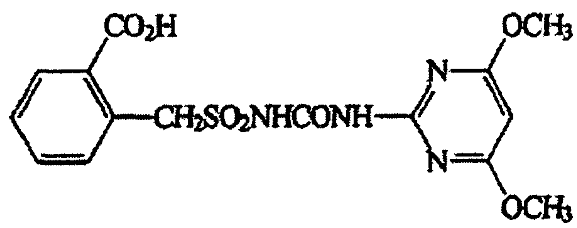

,

B59) le pyrazosulfuron

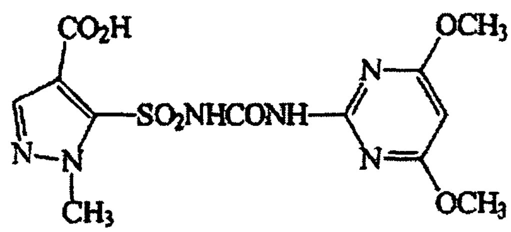

,

B60) le cinosulfuron

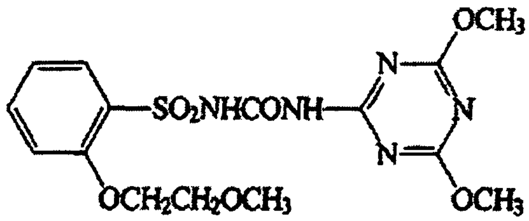

,

B61) l'imazosulfuron

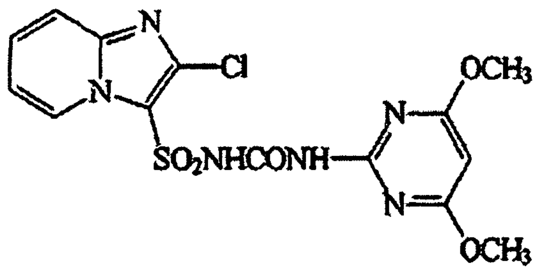

,

B62) l'AC 322, 140 (cyclosulfamuron)

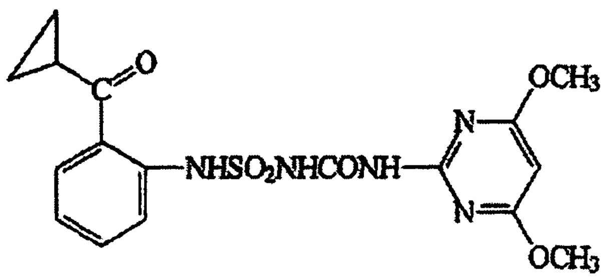

,

B63) des sulfonylurées de la formule générale IV

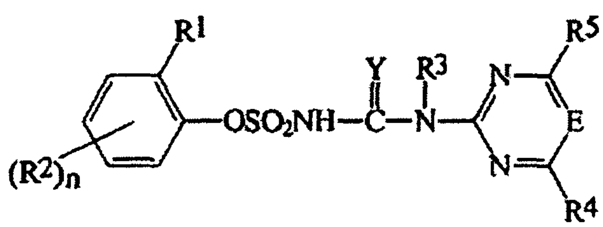

(IV),

,

dans laquelle

a) $R^1$ est un radical éthoxy, propoxy ou isopropoxy et
$R^2$ est un halogène, $NO_2$ $CF_3$, CN, alkyle en $C_1$ à $C_4$, alcoxy en $C_1$ à $C_4$, alkylthio en $C_1$ à $C_4$ ou ($C_1$-$C_4$)alcoxycarbonyle, et
n a une valeur de 0, 1, 2 ou 3, ou bien
b) $R^1$ est un radical alcoxy en $C_1$ à $C_8$ éventuellement insaturé, qui est substitué par de l'halogène, un reste de formule (($C_1$-$C_6$)-alcoxy)-S, (($C_1$-$C_6$)-alkyl)-SO-, (($C_1$-$C_6$)-alkyl)-$SO_2$-, (($C_1$-$C_6$)-alkyl) -O-CO-, $NO_2$ ou phényle, ainsi que oxy($C_2$-$C_8$)alkylène ou -alcynyle, et $R^2$ est un radical alkyle en $C_1$ à $C_8$ saturé ou insaturé, phényle, phénoxy, alcoxy en $C_1$ à $C_4$, ($C_1$-$C_4$)alcoxycarbonyle, tous les restes $R^2$ présents pouvant être substitués par de l'halogène, un alcoxy en $C_1$ à $C_4$ ou

un alkylthio $C_1$ à $C_4$, ou un halogène, $NO_2$, $(C_1\text{-}C_4)$alkylsulfonyle ou -sulfinyle, et
n a une valeur de 0, 1, 2 ou 3, ou bien,
c) $R^1$ est un alcoxy $C_1$ à $C_4$ et
$R^2$ est un alcényle ou alcynyle en $C_2$ à $C_8$, phényle, phénoxy, les restes mentionnés pour $R^2$ étant non substitués ou substitués par de l'halogène, un alcoxy $C_1$ à $C_4$ ou un alkylthio $C_1$ à $C_4$, ou un $(C_1\text{-}C_4)$alkylsulfonyle ou -sulfinyle, et
n a une valeur de 0, 1, 2 ou 3, ou bien
d) $R^1$ est à chaque fois en position 2 sur le reste phényle un halogène ou un radical méthoxy, éthoxy, éthyle ou propyle,
$R^2$ est un $((C_1\text{-}C_4)$-alcoxy)-carbonyle en position 6 sur le reste phényle et
n=1

ainsi que, dans tous les cas a) à d),

| | |
|---|---|
| $R^3$ | représente de l'hydrogène, un alkyle en $C_1$ à $C_8$ saturé ou insaturé ou alcoxy en $C_1$ à $C_4$, |
| $R^4$, $R^5$ | représentent indépendamment l'un de l'autre de l'hydrogène, un halogène ou des radicaux alkyle en $C_1$ à $C_4$, alcoxy en $C_1$ à $C_4$, alkylthio en $C_1$ à $C_4$, les trois derniers restes cités étant non substitués ou substitués par de l'halogène, un alcoxy en $C_1$ à $C_4$, ou un alkylthio en $C_1$ à $C_4$, |
| Y | représente O ou S et |
| E | représente CH ou N, |

et plus préférentiellement parmi les composés de la formule générale IV
B63a) l'éthoxysulfuron (HOE 095404)

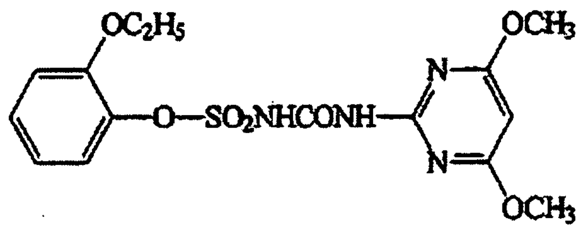

ist ,
B64) l'azimsulfuron (DPX - A8947)

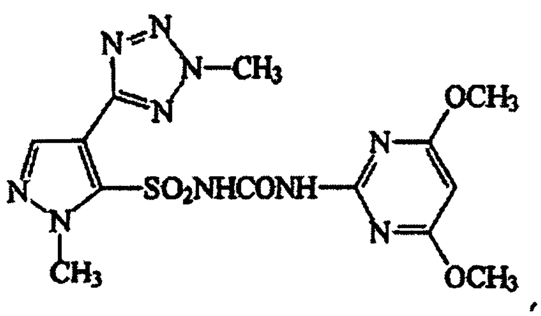

B65) le nicosulfuron

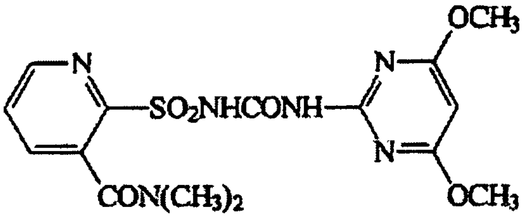

,

B66) le prometryn

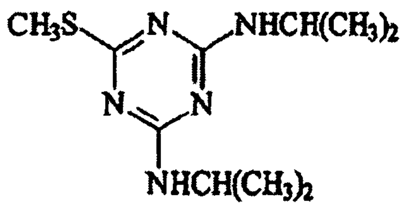

,

B67) le simetryn

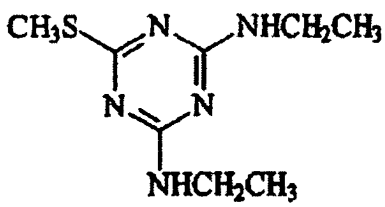

,

B68) le thiazopyr

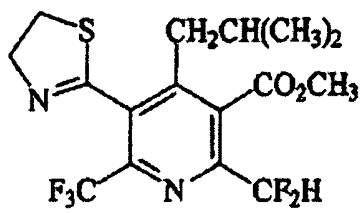

,

B69) le pyrazophos

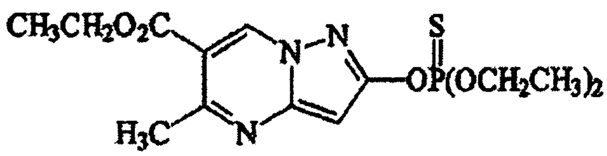

,

B70) la pentoxazone

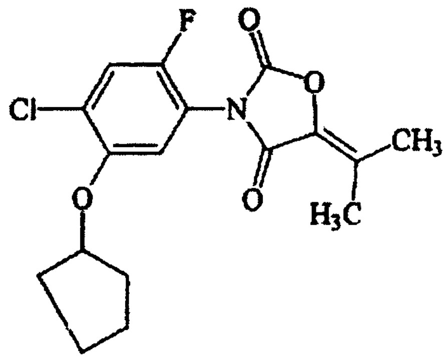

,

B71) l'indanofan

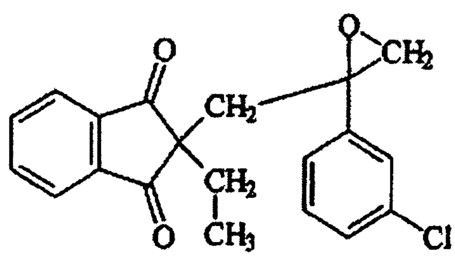

,

B72) le LGC40863

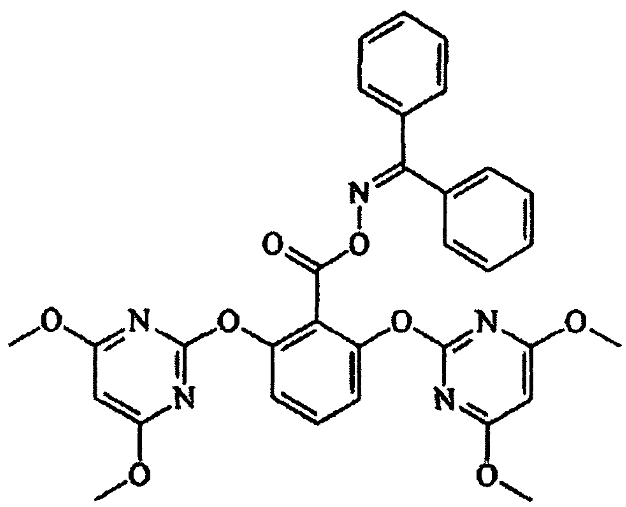

et

B73) le MY 100

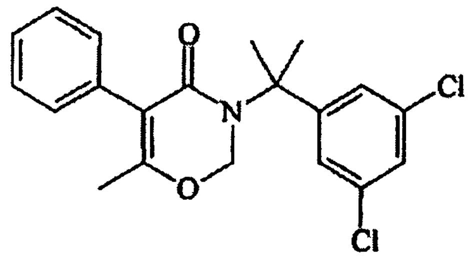

avec les conditions que soient exclus

i) des agent constitués de

A') au moins un composé du groupe des phénylsulfonylurées de la formule générale l'et leur sels acceptés en agriculture

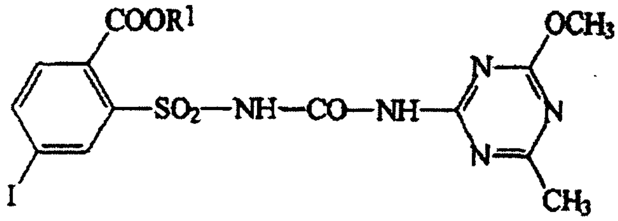

(I´),

où

$R^1$ représente un radical alkyle en Ci à $C_8$, alcényle en $C_3$ à $C_4$, alcynyle en $C_3$ à $C_4$ ou alkyle en $C_1$ à $C_4$, qui est substitué de une à quatre fois par des restes du groupe forme par les halogènes et des radicaux alcoxy en $C_1$ à $C_2$,

en combinaison avec
B') le fenoxaprop, la pendiméthaline, le nicosulfuron, le mecoprop, le MCPA, le 2,4-D, le dicamba, l'acifluorfène, des azoles de la formule générale III

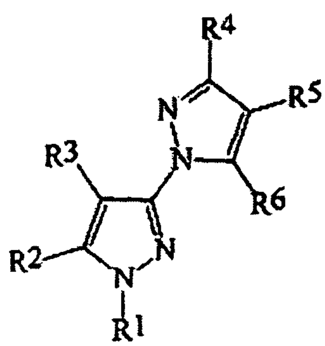

(III),

,

dans laquelle

$R^1$ est un radical alkyle en $C_1$ à $C_4$,
$R^2$ est un radical alkyle en $C_1$ à $C_4$, alkylthio en $C_1$ à $C_4$ ou alcoxy en $C_1$ à $C_4$, dont chaque reste peut être substitué par un ou plusieurs atomes d'halogène, ou bien
$R^1$ et $R^2$ forment ensemble le groupe $(CH_2)_m$ avec m = 3 ou 4,
$R^3$ est de l'hydrogène ou un halogène,

$R^4$ est de l'hydrogène ou un radical alkyle en $C_1$ à $C_4$,
$R^5$ est de l'hydrogène ou un radical nitro, cyano ou l'un des groupes $-COOR^7$, $-C(=X)NR^7R^8$ ou $-C(=X)R^{10}$,
$R^6$ représente de l'hydrogène, un halogène ou un radical cyano, alkyle en $C_1$ à $C_4$, alkylthio en $C_1$ à $C_4$ ou $-NR^{11}R^{12}$,
$R^7$ et $R^8$ sont identiques ou différents et représentent de l'hydrogène ou un radical alkyle en $C_1$ à $C_4$, ou bien
$R^7$ et $R^8$ représentent ensemble, avec l'azote auquel ils sont liés, un noyau carbocyclique saturé à 5 ou 6 chaînons,
$R^{10}$ représente de l'hydrogène ou un radical alkyle en $C_1$ à $C_4$, ce dernier pouvant éventuellement être substitué par un ou plusieurs atomes d'halogène, et
$R^{11}$ et $R^{12}$ sont identiques ou différents et représentent de l'hydrogène ou un radical alkyle en $C_1$ à $C_4$ ou alcoxycarbonyle en $C_1$ à $C_4$, avec
$R^{11}$ et $R^{12}$ pouvant former ensemble, avec l'azote auquel ils sont liés, un noyau carbocyclique ou aromatique à 3, 5 ou 6 chaînons, dans lequel un atome de C peut éventuellement être remplacé par un atome de O,

la bentazone, le metsulfuron, l'ioxynil, l'acétochlore, le métolachlore, le KIH-2023, le triasulfuron ou l'oxyfluorfène en tant qu'uniques agents actifs herbicides, et
ii) des agent constitués de

A") au moins un composé du groupe formé par les phénylsulfonylurées de la formule générale I" et leurs sels acceptés en agriculture,

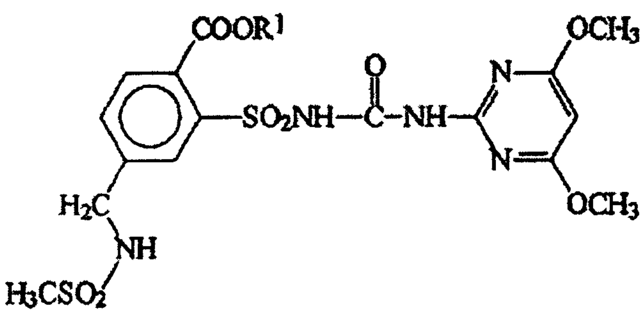

(I´´),

dans laquelle

$R^1$ représente un radical alkyle en $C_1$ à $C_8$, alcényle en $C_3$ à $C_4$, alcynyle en $C_3$ à $C_4$ ou alkyle en $C_1$ à $C_4$, qui est substitué de une à quatre fois par des restes du groupe formé par les halogènes et des radicaux alcoxy en $C_1$ à $C_2$,

en combinaison avec
B") du fenoxaprop, de la pendiméthaline, du mecoprop, du MCPA, du 2,4-D, du dicamba, un composé de la formule III ci-avant, de la bentazone, de l'ioxynil, du métosulame, du metsulfuron, de l'oxyfluorfen ou du triasulfuron,

en tant qu'uniques agent herbicides.

**2.** Agent selon la revendication 1, **caractérisé en ce que**, dans l'herbicide de la formule (I) ou son sel,

$R^1$ représente un radical méthyle, éthyle, n- ou isopropyle, n-, tert.-, 2-butyle ou isobutyle, n-pentyle, isopentyle, n-hexyle, isohexyle, 1,3-diméthylbutyle, n-heptyle, 1-méthylhexyle ou 1,4-diméthylpentyle,
$R^2$ représente I,
$R^3$ représente un méthyle, et
Z représente N.

3. Agent selon la revendication 1 ou 2, **caractérisé en ce que**, dans l'herbicide de formule (I) ou son sel, $R^1$ représente un radical méthyle.

4. Agent selon une ou plusieurs des revendications qui précèdent, **caractérisé par** une teneur en composé A1) méthylester d'acide 4-iodo-2-[3-(4-méthoxy-6)-méthyl-1,3,5-triazin-2-yl)uréidosulfonyl]-benzoïque

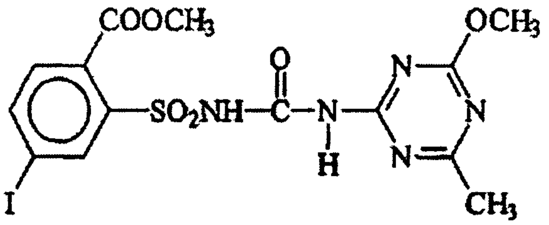

et/ou par une teneur en sel de sodium de A1*).

5. Agent selon la revendication 1, **caractérisé en ce que**, dans l'herbicide de formule (I) ou son sel:

- $R^1$ représente un radical méthyle, éthyle, n- ou isopropyle, n-, tert.-, 2-butyle ou isobutyle, n-pentyle, isopentyle, n-hexyle, isohexyle, 1,3-diméthylbutyle, n-heptyle, 1-méthylhexyle ou 1,4-diméthylpentyle,
- $R^2$ représente $CH_2NHSO_2CH_3I$,
- $R^3$ représente un méthoxy, et
- Z représente CH.

6. Agent selon la revendication 1 ou 5, **caractérisé en ce que**, dans l'herbicide de formule (I) ou son sel, $R^1$ représente un radical méthyle.

7. Agent selon une ou plusieurs des revendications qui précèdent, **caractérisé par** une teneur en composé A2)

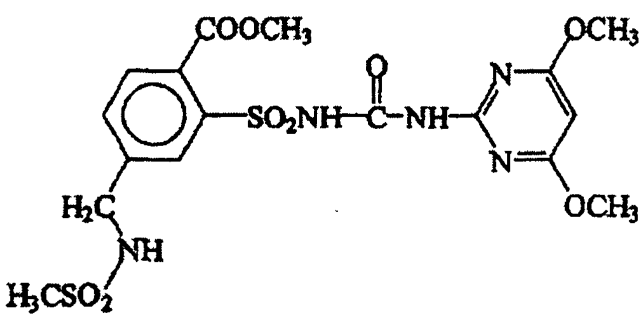

et/ou A3)

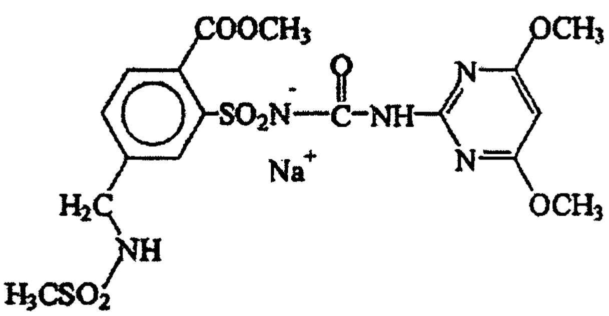

**8.** Agent selon une ou plusieurs des revendications qui précèdent, **caractérisé en ce que** le sel de l'herbicide de formule (I) est obtenu par remplacement de l'hydrogène du groupe $-SO_2-NH$ par un cation du groupe des métaux alcalins, des métaux alcalino-terreux et de l'ammonium, de préférence le sodium.

**9.** Agent selon une ou plusieurs des revendications qui précèdent, **caractérisé en ce qu'**il contient comme herbicide du type B les partenaires de combinaison à action synergique Ba) anilofos, fenoxaprop, fenoxaprop-P, butachlore et/ou propanil.

**10.** Agent selon une ou plusieurs des revendications qui précèdent, **caractérisé en ce qu'**il contient comme herbicide du type B les partenaires de combinaison à action synergique 2,4-D, MCPA, mecoprop et/ou dicamba du groupe Bb).

**11.** Agent selon une ou plusieurs des revendications qui précèdent, **caractérisé en ce qu'**il contient comme herbicide du type B les partenaires de combinaison à action synergique bentazone et/ou daimuron du groupe Bc).

**12.** Agents selon une ou plusieurs des revendications qui précèdent, **caractérisés en ce qu'**ils contiennent les composés de formule I ou leurs sels (composés de type A) et les composés du groupe B en une proportion pondérale de 1 : 20000 à 200 : 1, de préférence de 1 : 8000 à 100 : 1, plus préférentiellement de 1 : 4000 à 50 : 1.

**13.** Agents selon une ou plusieurs des revendications qui précèdent, **caractérisés en ce qu'**ils contiennent de 0,1 à 99% en poids des agents actifs A et B, outre des adjuvants de formulation usuels.

**14.** Agent herbicide présentant, dans une quantité synergiquement active,

A) au moins un agent actif herbicide du groupe des phénylsulfonylurées substituées de la formule générale I et de leurs sels acceptés dans le domaine agricole, c'est-à-dire acceptables et compatibles,

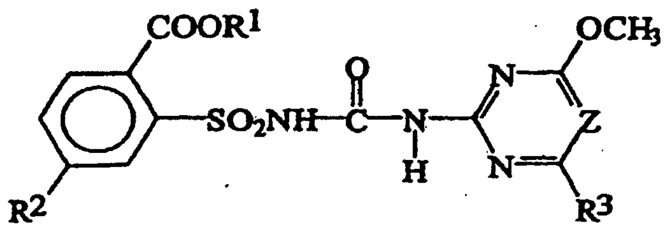

(I),

où

- $R^1$ représente un radical alkyle en $C_1$ à $C_8$, alcényle en $C_3$ à $C_4$, alcynyle en $C_3$ à $C_4$ ou alkyle en $C_1$ à $C_4$, qui peut être substitué de une à quatre fois par des restes du groupe formé par de l'halogène ou un radical alcoxy en $C_1$ à $C_4$,
- $R^2$ représente I ou $CH_2NHSO_2CH_3$,
- $R^3$ représente un radical méthyle ou méthoxy, et
- Z représente N ou CH,

en combinaison avec
au moins un composé à activité herbicide du groupe des composants B', constitué de

B1) Butachlore,
B2) Butenachlor,
B3) Thénylchlore,
B4) Pretilachlore,
B5) Mefenacet,
B5a) Bay FOE 5043,
B6) Naproanilide,
B7) Propanil,

B8) Etobenzanide,
B9) Dimépipérate,
B10) Molinate,
B11 ) Thiobencarb,
B12) Pyributicarb,
B13) Quinclorac,
B14a) Sulcotrione,
B15) Cycloxydime
B16) Séthoxydime
B17) NBA 061,
B18) Piperophos
819) Anilofos,
821) Haloxyfop,
B22) Cyhalofop,
B23) JC-940,
B24) Dithiopyr
B25) Bromobutide,
B26) Cinméthyline,
B27)CH-900,
B32) Acifluorfène,
B34) Chlorimuron,
B37) Piclorame,
B38) Carfentrazone
B40) Triclopyr,
B41) Benfuresate
B42) Daimuron,
B44)Clomazon,
B45)Benzofenap,
B46)Pyrazolynate,
B47)Pyrazoxyfen,
B49)KIH 6127,
B50) Oxadiazone,
B51) Oxadiargyl,
B56) Dalapon,
B58) Bensulfuron,
B59) Pyrazosulfuron,
B60) Cinosulfuron,
B61) Imazosulfuron,
B62) AC 322,140 (Cyclosulfamuron),
B63a) Ethoxysulfuron (HOE 095404),
B64) Azimsulfuron (DPX-A8947),
B66) Prometryn,
B67) Simetryn,
B68) Thiazopyr,
B69) Pyrazophos,
B70) Pentoxazone,
B71) Indanofan,
B72) LGC.40863
et
B73) MY 100

ou en combinaison avec deux ou plus de deux composés actifs du groupe des composés B3, qui consiste en

B1) Butachlore
B2) Buténachlore,
B3) Thenylchlore,
B4) Pretilachlore,
B5) Mefenacet,

B5a) Bay FOE 5043,
B6) Naproanilide,
B7) Propanil,
B8) Etobenzanid,
B9) Dimépipérate,
B10) Molinate,
B11) Thiobencarb,
B12 )Pyributicarb,
B13) Quinclorac,
B14a) Sulcotrione,
B15)Cycloxydime
B16) Séthoxydime
B17) NBA 061,
B18)Pipérophos,
B19)Anilofos,
B20) Fenoxaprop, Fenoxaprop-P,
B21) Haloxyfop,
B22) Cyhalofop,
B23) JC-940,
B24) Dithiopyr,
B25) Bromobutide,
B26) Cinméthyline,
B27) CH-900,
B28) 2,4-D,
B29) Mecoprop, Mecoprop-P,
B30) MCPA,
B31) Dicamba,
B32) Acifluorfène,
B33a)

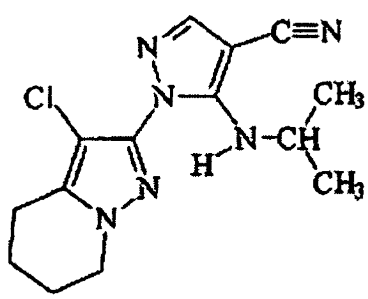

,

et B33b)

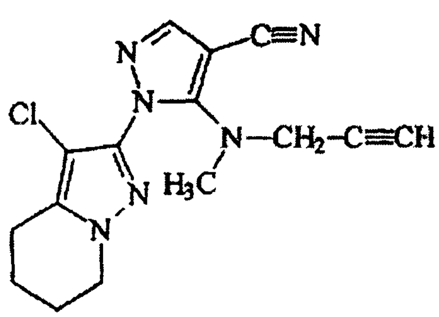

,

B34) Chlorimuron,

B35) Triasulfuron,
B36) loxynil,
B37) Picloram,
B38) Carfentrazone,
B39) Bentazone,
B40) Triclopyr,
B41) Benfuresate,
B42) Daimuron,
B43) Pendiméthaline,
B44) Clomazon,
B45) Benzofenap,
B46) Pyrazolynate
B47) Pyrazoxyfène,
B48) KIH 2023,
B49) KIH 6127,
B50) Oxadiazone,
B51 ) Oxadiargyl
B52) Acétochlore,
B53) Métolachlore,
B54) Métosulame,
855) Oxyfluorfène
B56) Dalapon,
B57) Metsulfuron,
B58) Bensulfuron,
B59) Pyrazosulfuron,
B60) Cinosulfuron,
B61) Imazosulfuron,
B62) AC 322,140 (Cyclosulfamuron),
B63a) Ethoxysulfuron (HOE 095404),
B64) Azimsulfuron (DPX-A8947),
B65) Nicosulfuron,
B66) Prometryn,
B67) Simetryn,
B68) Thiazopyr,
B69) Pyrazophos,
B70) Pentoxazone,
B71) Indanofan,
B72) LGC 40863 et
B73) MY 100,

où, dans le cas B", au moins l'un des composés du groupe B" doit aussi appartenir au groupe B'.

**15.** Procédé de préparation d'un agent selon une ou plusieurs des revendications qui précèdent, **caractérisé en ce que** l'on formule les composés de la formule I ou leurs sels (composés de type A) avec un ou plusieurs composés du type B, de manière analogue à une formulation phytopharmaceutique usuelle, du groupe comprenant des poudres à pulvériser, des concentrés émulsionnables, des solutions aqueuses, des émulsions, des solutions pulvérisables (tank - mix), des dispersions à base huileuse ou aqueuse, des suspoémulsions, des agents de poudrage, des agents de désinfection, des granulés pour application au sol ou épandage, des granulés dispersibles dans l'eau, des formulations ULV, des microcapsules et des cires.

**16.** Procédé de lutte contre des plantes indésirables, **caractérisé en ce que**, sur celles-ci ou sur la surface de culture, on applique une quantité d'herbicide efficace d'une des combinaisons d'agents actifs A = B définies dans une ou plusieurs des revendications 1 à 15.

**17.** Procédé selon le revendication 16, **caractérisé en ce que** les quantités d'application pour les composés de la formule (I) ou leurs sels (composés de type A) sont de 0,1 à 100 g ai/ha, de préférence de 0,5 à 60 g ai/ha, plus préférentiellement de 2 à 40 g ai/ha, et que les quantités d'application pour les composés de type B sont de 1 à 5000 g ai/ha.

**18.** Procédé selon la revendication 16 ou 17, **caractérisé en ce que** les agents actifs des types A et B sont appliqués en même temps ou séparément dans le temps, en proportion pondérale de 1 : 20000 à 200 : 1.

**19.** Procédé selon l'une quelconque des revendications 16 à 18, **caractérisé en ce que** les combinaisons sont mises en oeuvre pour la lutte sélective contre des plantes indésirables.

**20.** Procédé selon la revendication 19, **caractérisé en ce que** les combinaisons sont mises en oeuvre dans des cultures transgéniques.

**21.** Procédé selon la revendication 19, **caractérisé en ce que** les combinaisons sont mises en oeuvre dans la culture de riz.

**22.** Utilisation d'agents herbicides, contenant

A) au moins un agent actif herbicide du groupe des phénylsulfonylurées substituées de la formule générale I et de leurs sels acceptés dans le domaine agricole, c'est-à-dire acceptables et compatibles,

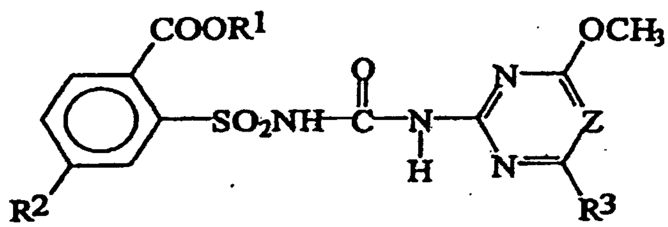

(I),

où

$R^1$ représente un radical alkyle en $C_1$ à $C_8$, alcényle en $C_3$ à $C_4$, alcynyle en $C_3$ à $C_4$ ou alkyle en $C_1$ à $C_4$, qui peut être substitué de une à quatre fois par des restes du groupe formé par de l'halogène ou un radical alcoxy en $C_1$ à $C_4$,
$R^2$ représente I ou $CH_2NHSO_2CH_3$,
$R^3$ représente un radical méthyle ou méthoxy, et
Z représente N ou CH,

et
B) au moins un composé à action herbicide du groupe formé par les composés consistant en

Ba) herbicides à action sélective dans le riz, principalement contre les graminées, choisis dans le groupe formé par

B1) le butachlore,
B2) le buténachlore,
B3) le thénylchlore,
B4) le pretilachlor,
B5) le mefenacet,
B5a) le Bay FOE 5043,
B6) Naproanilid,
B7) le propanil,
B8) l'étobenzanide,
B9) le dimépipérate,
B10) le molinate,
B11) thiobencarb,
B12) le pyributicarb,
B 13) le quinclorac,
B14a) le sulcotrione,
B15) le cycloxydime

B16) le séthoxydime
B17) le NBA 061,
B18) le piperophos,
B19) l'anilofos,
B20) le Fenoxaprop, le Fenoxaprop-P,
B21) l'haloxyfop,
B22) le cyhalofop,
B23) le JC-940,
B24) le dithiopyr
B25) le bromobutide,
B26) la cinméthyline et
B27) le CH-900

Bb) des herbicides sélectivement actif dans le rie, principalement contre des cypéracées et des mauvaises herbes dicotylédones, choisis dans le groupe formé par

B28) le 2,4-D,
B29) le mecoprop, le mecoprop-P,
B30 ) le MCPA,
B31) le dicamba,
B32) l'acifluorfène,
B33a}

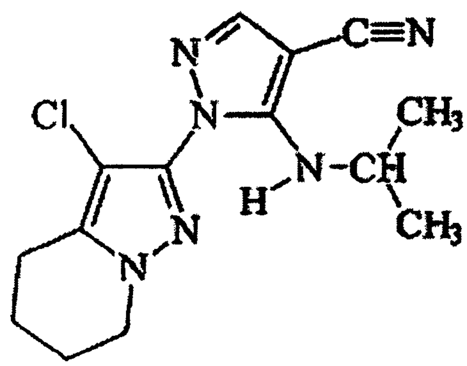

,

et B33b)

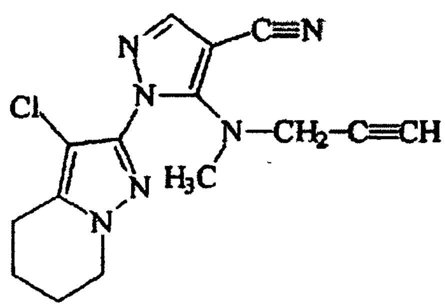

,

B34) le chlorimuron,
B35) le triasulfuron,
B36) l'ioxynil,
B37)le piclorame et
B38) le carfentrazone

Bc) des herbicides sélectivement actif dans le riz, principalement contre les cypéracées, choisis dans le groupe formé par

B39) le bentazone,
B40) le triclopyr,
B41) le benfuresate et
B42) le daimuron

et
Bd) des herbicides sélectivement actif dans le riz, principalement contre les graminées et dicotylédones ainsi que les cypéracées, choisis dans le groupe formé par

B43)la pendiméthaline,
B44) le clomazon,
B45) le benzofenap,
B46) le pyrazolynate,
B47) le pyrazoxyfène,
B48) le KIH 2023,
B49) le KIH 6127,
B50) l'oxadiazone,
B51) l'oxadiargyl,
B52) l'acétochlore,
B53) le métolachlore,
B54) le métosulame,
B55) l'oxyfluorfène
B56) le dalapon,
B57) le metsulfuron,
B58) le bensulfuron,
B59) le pyrazosulfuron,
B60) le cinosulfuron,
B61) l'imazosulfuron,
B62) l'AC 322,140 (Cyclosulfamuron),
B63a) l(éthoxysulfuron (HOE 095404),
B64) l'azimsulfuron (DPX-A8947),
B65) le nicosulfuron,
B66) le prometryn,
B67) le simetryn,
B68) le thiazopyr,
B69) le pyrazophos,
B70) la pentoxazone,
B71) l'indanofan,
B72) le LGC 40863 et
B73) le MY 100,

en une proportion pondérale A : B de l'ordre de 1 : 2000 à 200 : 1, pour la lutte contre des mauvaises herbes indésirables dans des cultures de riz.

**23.** Utilisation selon la revendication 22 en une quantité synergiquement active.

**24.** Utilisation selon la revendication 22 ou 23 de mélanges avec des combinaisons de A) et Ba) pour la lutte sélective contre les graminées dans le riz.

**25.** Utilisation selon la revendication 22 ou 23 de mélanges avec des combinaisons de A) et Bb) pour la lutte sélective contre les dicotylédones et les cypéracées dans le riz.

**26.** Utilisation selon la revendication 22 ou 23 de mélanges avec des combinaisons de A) et Bc) pour la lutte sélective contre les cypéracées dans le riz.

**27.** Utilisation selon la revendication 22 ou 23 de mélanges avec des combinaisons de A) et Bd) pour la lutte sélective contre les graminées, les dicotylédones et les cypéracées dans le riz.